Europäisches Patentamt

European Patent Office

Office européen des brevets

(19)

(11) **EP 1 465 165 A2**

(12) **EUROPEAN PATENT APPLICATION**

(43) Date of publication:
06.10.2004 Bulletin 2004/41

(51) Int Cl.⁷: **G11B 7/00**

(21) Application number: **04006856.1**

(22) Date of filing: **22.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **31.03.2003 JP 2003095403**

(71) Applicant: **Kabushiki Kaisha Toshiba
Tokyo 105-8001 (JP)**

(72) Inventors:
• **Ando, Hideo, c/o Toshiba Corporation
Minato-ku Tokyo 105-8801 (JP)**

• **Noda, Chosaku, c/o Toshiba Corporation
Minato-ku Tokyo 105-8801 (JP)**
• **Kojima, Tadashi, c/o Toshiba Corporation
Minato-ku Tokyo 105-8801 (JP)**
• **Maruyama, Sumitaka, c/o Toshiba Corporation
Minato-ku Tokyo 105-8801 (JP)**

(74) Representative: **Henkel, Feiler & Hänzel
Möhlstrasse 37
81675 München (DE)**

(54) **Information recording medium, information reproducing apparatus, and information recording and reproducing apparatus**

(57)  A basic data structure in a lead-in area is made coincident with each other in all of a read only type, write once type, and a rewritable type. The lead-in area is divided into a system lead-in area and a data lead-in area. A track pit and a pit pitch of pits in the system lead-in area are made longer than those in the data lead-in area. In the system lead-in area, a reproduction signal from a bit is detected in accordance with a Level Slice technique, and, in the data lead-in area and data area, a signal is detected in accordance with a PRML technique. In this manner, in any of the read only type, write once type, and rewritable type, there can be provided an information recording medium and an information reproducing apparatus or information recording and reproducing apparatus therefor, capable of a stable reproduction signal from a lead-in area of the write once type recording medium while maintaining format compatibility.

Data structure in lead-in area in rewritable
information recording medium

| | | Physical sector number | |
|---|---|---|---|
| System lead-in area | Initial zone | 02 2640h | |
| | Buffer zone | 02 4B00h | |
| | Control data zone | 02 4F00h | |
| | Buffer zone | 02 6700h | |
| Connection area | Connection zone | 02 6AFFh | |
| Data lead-in area | Guard track zone | 02 9A00h | 82 9A00h |
| | Disc test zone | 02 A400h | 82 A400h |
| | Drive test zone | 02 B400h | 82 B400h |
| | Guard track zone | 02 CA00h | 82 CA00h |
| | Disc identification zone | 02 CD00h | 82 CD00h |
| | DMA1 & DMA2 | 02 CE00h | 82 CE00h |
| | Data zone | 03 0000h | 83 0000h |
| | | Land | Groove |

FIG. 102

EP 1 465 165 A2

**Description**

The present invention relates to an information recording medium, an information reproducing apparatus, and an information recording and reproducing apparatus.

Such an information recording medium, an optical disk called a DVD (digital versatile disk) is exemplified. Current DVD standards include a read only type DVD-ROM standard, a write once type DVD-R standard, and a rewritable (about 1,000 times) type DVD-RW standard, and a rewritable (10,000 times or more) type DVD-RAM standard.

In an information recording medium of any standard, a reference code is recorded in a lead-in area (for example, refer to US Patent No. 5,696,756 or Japanese Patent No. 2,810,028).

An emboss (concave and convex) shaped pit is recorded in a lead-in area for recording a reference code. In a current DVD-ROM, with respect to a depth of this pit, when a laser wavelength is defined as $\lambda$, and a refraction index of a substrate is defined as "n," $\lambda/(4n)$ is considered to be an optimal depth. In contrast, in a current DVD-RAM, a depth of pit of a lead-in area is equal to that of groove in a recording area (data area). A condition in which a cross-talk in a recording area is minimal is generated such that $\lambda/(5n)$ to $\lambda/(6n)$ is considered to be an optimal depth. In the current DVD-ROM and current DVD-RAM as well, the depth of pit in the lead-in area is sufficiently large, and thus, a large reproduction signal amplitude can be obtained from the pit in the lead-in area.

In contrast, in a current DVD-R, the depth of groove in a recording area is very small, and thus, a large reproduction signal amplitude cannot be obtained. Thus, there has been a problem that lead-in information which can be constantly reproduced cannot be recorded in this area.

As described above, in a write once type information recording medium, there has been a problem that a signal from a lead-in area cannot be constantly reproduced.

The present invention is directed to an information recording medium, an information reproducing apparatus, and an information recording and reproducing apparatus that substantially obviates one or more of the problems due to limitations and disadvantages of the related art.

According to the present invention, a signal from a lead-in area of a write once type information recording medium is stably reproduced while maintaining format compatibility in any of the read only type, write once type, and rewritable type.

According to an embodiment of the present invention, an information recording medium comprises a system lead-in area, a data lead-in area, and a data area, wherein information is recorded in the system lead-in area in the form of embossed pits; and a track pitch and a shortest pit pitch of embossed pits in the system lead-in area are greater than a track pitch and a shortest pit pitch in the data lead-in area and data area.

According to another embodiment of the present invention, an information reproducing apparatus which reproduces an information from an information recording medium comprising a system lead-in area, a data lead-in area, and a data area, wherein information is recorded in the system lead-in area in the form of embossed pits and a track pitch and a shortest pit pitch of embossed pits in the system lead-in area are greater than a track pitch and a shortest pit pitch in the data lead-in area and data area, the apparatus comprises a level slice unit which detects a signal from the system lead-in area of the information recording medium in accordance with a level slice technique, and a partial response likelihood technique unit which detects a signal from at least one of the data lead-in area and data area in accordance with a partial response likelihood technique.

According to still another embodiment of the present invention, an information recording and/or reproducing apparatus which records and/or reproduces a signal using an information recording medium comprising a system lead-in area, a data lead-in area, and a data area, wherein information is recorded in the system lead-in area in the form of embossed pits, and a track pitch and a shortest pit pitch of embossed pits in the system lead-in area are greater than a track pitch and a shortest pit pitch in the data lead-in area and data area, the apparatus comprises a level slice unit which detects a signal from the system lead-in area of the information recording medium in accordance with a level slice technique, and a partial response likelihood technique unit which detects a signal from at least one of the data lead-in area and data area in accordance with a partial response likelihood technique.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a view showing a variety of points and advantageous effect according to an embodiment of the present invention;

FIG. 2 is a view showing a variety of other points and advantageous effect according to the embodiment of the present invention;

FIG. 3 is a view showing an example of video information file allocation on an information recording medium;

FIG. 4 is a view showing another example of video information file allocation on an information recording medium;

FIG. 5 is a program stream to be recorded on an information recording medium;

FIG. 6 is a view illustrating compression rules of a sub-picture;

FIG. 7 is a view showing allocation of pixel data and pixel names;

FIG. 8 is a view showing allocation examples of pixel data;

FIG. 9 is a view showing a relationship between a sub-picture unit SPU and a sub-picture pack SP_PCK;

FIG. 10 is a view showing the contents of a sub-picture unit header SPUH;

FIG. 11 is a view showing a configuration of a sub-picture category SP_CAT;

FIG. 12 is a view showing a configuration of pixel data for compressed bit map data;

FIG. 13 is a view showing compressed data provided as a unit;

FIG. 14 is a view showing run length compression rules (in units of rows) of 3 bit and 8 color expression in 3 bit data;

FIG. 15 is a view showing run length compression rules (in units of rows) of 4 bit and 16 color expression in 4 bit data;

FIG. 16 is a view showing an example of practical data structure according to a run length compression rule according to the present embodiment;

FIG. 17 is a view showing an example when the data structure of FIG. 16 is provided as a unit;

FIG. 18 is a view showing another example when the data structure of FIG. 16 is provided as a unit;

FIG. 19 is a view showing still other example when the data structure of FIG. 16 is provided as a unit;

FIG. 20 is a view showing still other example of run length compression rule (in units of rows) of 4 bit and 16 color expression in 4 bit data;

FIG. 21 illustrates a sub-picture header and a display control sequence;

FIG. 22 is a diagram showing an example of disk drive which performs recording and reproducing processing;

FIG. 23 is a diagram showing a player reference model which shows a signal processing system of the disk drive of FIG. 22 in detail;

FIG. 24 is a view illustrating a sub-picture unit formed of sub-picture data of a plurality of sub-picture packets;

FIG. 25 is a diagram showing signal processing of data recorded in a data area of an information recording medium;

FIG. 26 is a view showing a data frame;

FIG. 27 is a view showing a data structure in data ID;

FIG. 28 is a view showing the contents of a data frame number in a rewritable type information recording medium;

FIG. 29 is a view showing a definition of recording type in the rewritable type information recording medium;

FIG. 30 is a view showing generation of a scrambled frame;

FIG. 31 is a view showing an ECC block;

FIG. 32 is a view showing allocation of the scrambled frame;

FIG. 33 is a view showing interleaving of a parity row;

FIG. 34 is a view showing recording data fields;

FIG. 35 is a view showing the contents of a sync code;

FIG. 36 is a view showing a comparison between combination patterns in a continuous sync code in the case of shift between sectors;

FIG. 37 is a view showing a comparison between combination patterns in a continuous sync code in the case of shift between guard regions; '

FIG. 38 is a view showing a relationship between error phenomena where an unpredicted sync code combination pattern has been detected;

FIG. 39 is a view showing a hierarchical structure of identical recording data recorded on an information recording medium regardless of type (read only, write once, or rewritable type);

FIG. 40 is a view showing a first embodiment and a second embodiment of recording system of a read only type information recording medium;

FIG. 41 is a view showing a detailed structure in a guard area in the recording system of FIG. 40;

FIG. 42 is a view showing an embodiment of allocation of a secret information signal allocated in an extra-area;

FIG. 43 is a view showing another embodiment of allocation of a secret information signal allocated in an extra-area;

FIG. 44 is a view showing a modified embodiment of data structure in an extra-area;

FIG. 45 is a view showing an example of guard area in a ROM medium;

FIG. 46 is a view showing another example of guard area in a ROM medium;

FIG. 47 is a view illustrating a relationship in a recording form (format) between a recordable type recording medium and a read only type information recording medium;

FIG. 48 is a view showing a zone structure in a rewritable type information recording medium;

FIG. 49 is a view illustrating a wobble modulation system;

FIG. 50 is a view illustrating a wobble modulation system in land/groove recording for illustrating generation of an uncertain bit;

FIG. 51 is a view showing a gray code for reducing a frequency of generating an uncertain bit;

FIG. 52 is a view showing a specific track code for reducing a frequency of generating an uncertain bit;

FIG. 53 is a view illustrating a wobble address format on a rewritable type information recording medium;

FIG. 54 is a view showing a bit modulator rule;

FIG. 55 is a view showing a layout of periodic wobble address position information (WAP);

FIG. 56 is a view showing a layout of an address field in the WAP;

FIG. 57 is a view showing binary/gray code conversion;

FIG. 58 is a view showing a wobble data unit (WDU) in a synchronizing field;

FIG. 59 is a view showing a WDU in the address field;

FIG. 60 is a view showing a WDU in a unity field;

FIG. 61 is a view showing a WDU of an outside mark;

FIG. 62 is a view showing a WDU of an inside mark;

FIG. 63 is a view showing a signal from a servo calibration mark 1 (SCM 1);

FIG. 64 is a view showing a signal from a servo calibration mark 2 (SCM 2);

FIG. 65 is a view showing an output signal of a servo calibration mark;

FIG. 66 is a view showing an SCD which is a difference between normalized SCM 1 and SCM 2;

FIG. 67 is a view showing a physical segment layout of a first physical segment of a track;

FIG. 68 is a view illustrating a data recording method for rewritable data recorded on a rewritable type information recording medium;

FIG. 69 is a view showing a layout of a recording cluster;

FIG. 70 is a view showing a linking layout;

FIG. 71 is a view showing an example of address information embedding of a land track;

FIG. 72 is a view showing an embodiment when a land address has been formed by changing a groove width;

FIG. 73 is a view showing odd number/even number detection of a land track by changing a groove width;

FIG. 74 is a view showing another example of allocating uncertain bits in a groove area in land/groove recording;

FIG. 75 is a view showing a method for setting track number information recorded in a rewritable type information recording medium;

FIG. 76 is a view showing wobble detection in a land track;

FIG. 77 is a view showing a relationship between address detection values in a land track in groove wobbling;

FIG. 78 is a view showing a relationship between a track number obtained by groove wobbling and detection data in a land track;

FIG. 79 is an addressing format example in a rewritable type information recording medium;

FIG. 80 is a view showing an example of odd number land/even number land identification mark system in land address detection;

FIG. 81 is a view showing another example of odd number land/even number land identification mark system in land address detection;

FIG. 82 is a view showing still another example of odd number land/even number land identification mark system in land address detection;

FIG. 83 is a view showing still another example of odd number land/even number land identification mark system in land address detection;

FIG. 84 is a view showing an example of method for setting land odd number/even number identification information in land/groove recording;

FIG. 85 is a view showing another example of method for setting land odd number/even number identification information in land/groove recording;

FIG. 86 is a view comparatively showing dimensions between a system lead-in area and a current DVD-ROM;

FIG. 87 is a view illustrating a data structure of a lead-in area in a read only type information recording medium;

FIG. 88 is a view illustrating a system lead-in area of a read only type dual-layer information recording medium;

FIG. 89 is a view showing mechanical dimensions of read only, write once, and rewritable type disks according to the present embodiment coincident with a current DVD disk;

FIG. 90 is a view showing recording data density of each area in the read only type information recording medium;

FIG. 91 is a diagram showing an example of data lead-in area utilization;

FIG. 92 is a diagram showing another example of data lead-in area utilization;

FIG. 93 is a view showing data allocation in a control data zone in read only, write once, and rewritable type information storage media;

FIG. 94 is a view showing the contents of information in a physical format in the read only type information recording medium;

FIG. 95 is a view showing a standard type and a format of part version (BP 0) in physical format information;

FIG. 96 is a view showing a disk size and a format of a disk maximum transfer rate (BP 1) in physical format information;

FIG. 97 is a view showing a format of disk structure (BP 2) in physical format information;

FIG. 98 is a view showing a format of recording density (BP 3) in physical format information;

FIG. 99 is a view showing the contents of data allocation information;

FIG. 100 is a view showing a format of BCA descriptor (BP 16) in physical format information;

FIG. 101 is a view illustrating data density of each area in a rewritable type information recording medium;

FIG. 102 is a view illustrating a data structure of a lead-in area in a rewritable type information recording medium;

FIG. 103 is a view illustrating a structure in a connection zone;

FIG. 104 is a view illustrating a structure of a disk ID zone in a data lead-in area;

FIG. 105 is a view showing a structure of a drive information block;

FIG. 106 is a view illustrating the contents of drive description;

FIG. 107 is a view showing a data structure in a lead-in area in a rewritable type information recording medium;

FIG. 108 is a view showing a data layout in a rewritable type information recording medium;

FIG. 109 is a view illustrating a method for setting an address number in a data area in a rewritable type information recording medium;

FIG. 110 is a view showing a data structure in a lead-in area of a write once type recording medium;

FIG. 111 is a view showing a configuration of a modulation block;

FIG. 112 is a view showing a concatenation rule for a code word;

FIG. 113 is a view showing a concatenation between a code word and a sync code;

FIG. 114 is a view showing a separation rule for reproduction of a code word;

FIG. 115 is a view showing a conversion table in a modulation system;

FIG. 116 is a view showing a conversion table in a modulation system;

FIG. 117 is a view showing a conversion table in a modulation system;

FIG. 118 is a view showing a conversion table in a modulation system;

FIG. 119 is a view showing a conversion table in a modulation system;

FIG. 120 is a view showing a conversion table in a modulation system;

FIG. 121 is a view showing a demodulation table;

FIG. 122 is a view showing a demodulation table;

FIG. 123 is a view showing a demodulation table;

FIG. 124 is a view showing a demodulation table;

FIG. 125 is a view showing a demodulation table;

FIG. 126 is a view showing a demodulation table;

FIG. 127 is a view showing a demodulation table;

FIG. 128 is a view showing a demodulation table;

FIG. 129 is a view showing a demodulation table;

FIG. 130 is a view showing a demodulation table;

FIG. 131 is a diagram showing a structure of optical head for use in an information reproducing apparatus or an information recording and reproducing apparatus;

FIG. 132 is a diagram showing a structure of an information recording and reproducing apparatus;

FIG. 133 is a diagram illustrating a detailed structure of a periphery of a synchronizing code position detecting unit;

FIG. 134 is a flow chart showing a method for identifying a sync frame position in a sector from a sync code arrangement order;

FIG. 135 is an illustrative view showing a method for identifying a sync frame position in a sector from a sync code arrangement order;

FIG. 136 is a view illustrating error phenomenon determination and adaptive processing method where a detection result of combination pattern of sync codes is different from an expectation;

FIG. 137 is a diagram showing a signal detector/signal evaluator circuit for use in signal reproduction in a system lead-in area;

FIG. 138 is a diagram showing a slicer circuit for use in signal reproduction in a system lead-in area;

FIG. 139 is a diagram showing a detector circuit for use in signal reproduction in a data lead-in area, a data area, and a data lead-out area;

FIG. 140 is a diagram illustrating a structure of a Viterbi decoder;

FIG. 141 is a diagram illustrating a state transition of PR (1, 2, 2, 2, 1) channels combined with an ETM code;

FIG. 142 is a view illustrating a path memory;

FIG. 143 is a view illustrating an I/O of a path memory cell; and

FIG. 144 is a view illustrating a configuration of a path memory cell.

An embodiment of an information recording medium, an information reproducing apparatus, and an information recording and reproducing apparatus according to the present invention will now be described with reference to the accompanying drawings.

<Summary of Embodiments>

[1] A basic data structure in a lead-in area is made coincident with all of read only, a write once, and a rewritable type.

[2] A lead-in area is divided into a system lead-in area and a data lead-in area.

[3] A track pitch and a pit pitch in a system lead-in area are made more coarse than those in a data lead-in area.

[4] In a system lead-in area, a reproduction signal from a pit is detected in accordance with a level slice technique, and in a data lead-in area and a data area, a signal is detected in accordance with PRML (Partial Response Maximum Likelihood) technique.

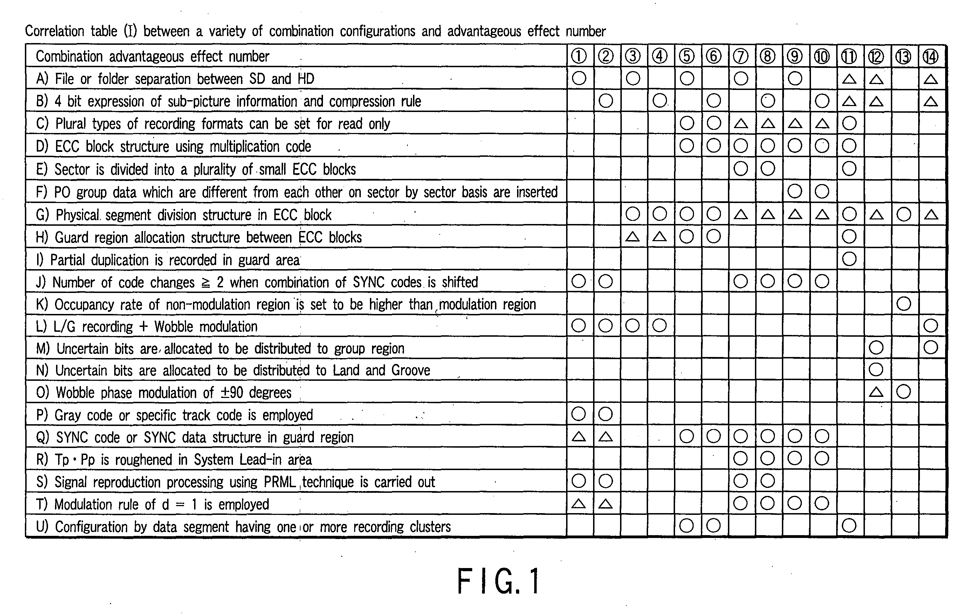

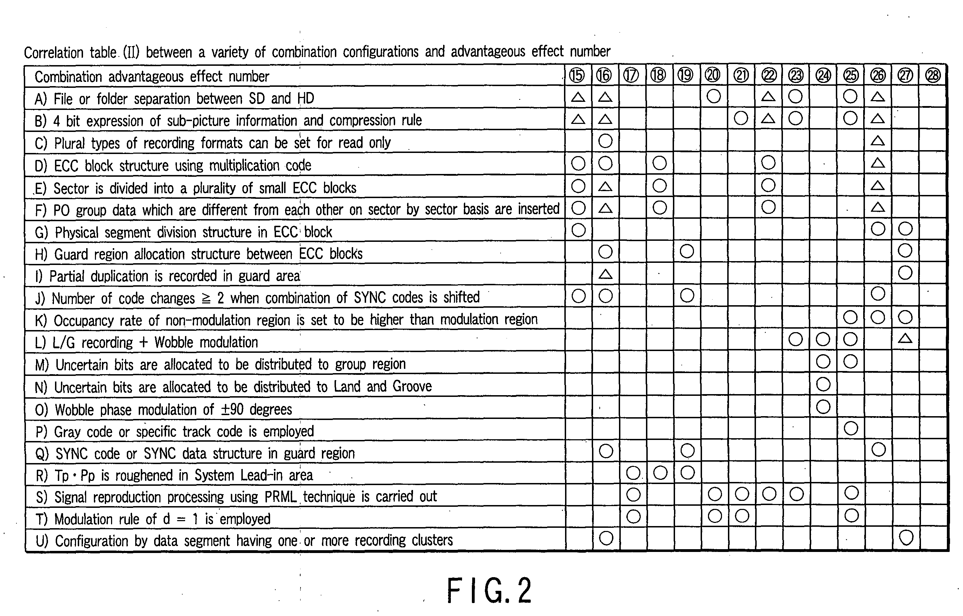

Prior to a description of embodiments, a variety of matters of the embodiments will be described with reference to FIGS. 1 and 2. In FIGS. 1 and 2, the contents of points of generic concept are classified by alphabetical letters (such as A); and the contents of modification (points of middle concept) for executing the points of each generic concept are marked with circles "○." Further, the detailed contents required for implementing its concepts (points of subsidiary concept) are marked with stars "☆" In this manner, the points of embodiments are described in a hierarchical structure manner.

Point (A)

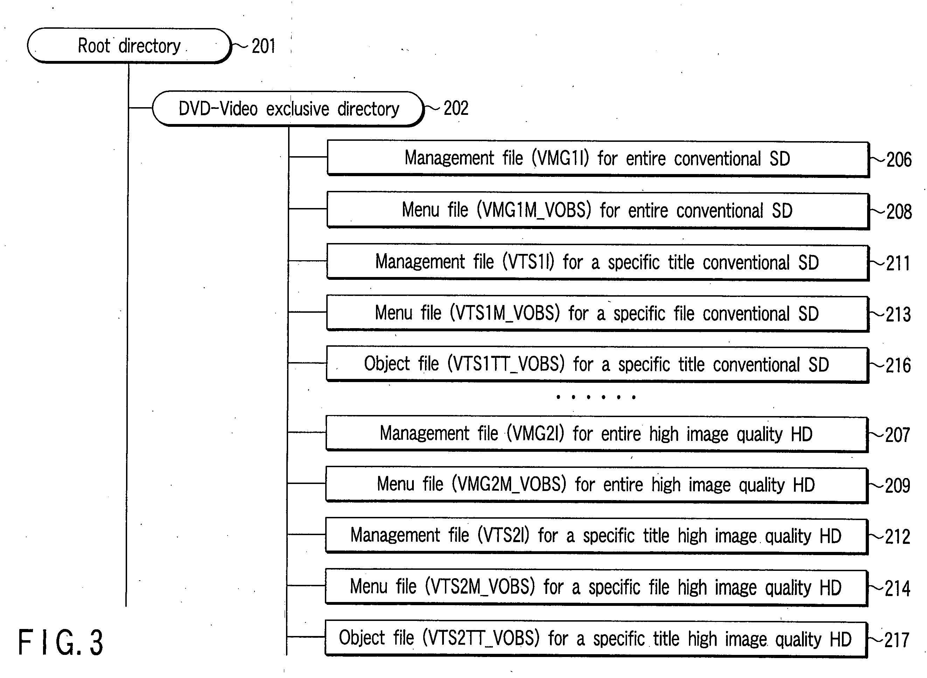

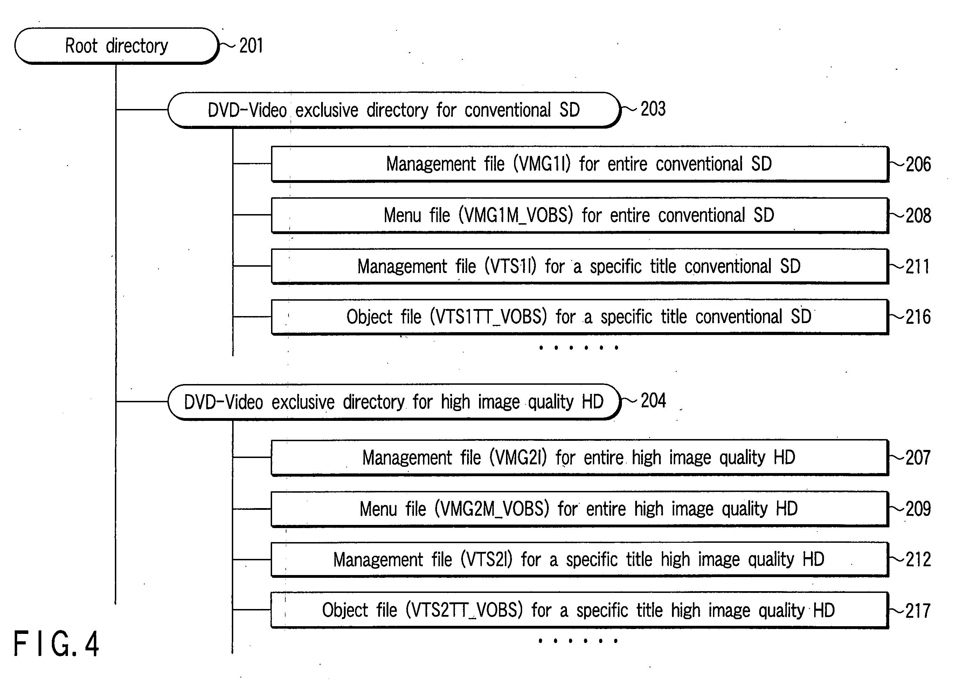

File separation or directory (folder) separation enables separation management on an information recording medium for a current SD (Standard Definition) object file and a management file and an HD (High Definition) object file and a management file corresponding to high image quality video (FIGS. 3 and 4) .

Point (B)

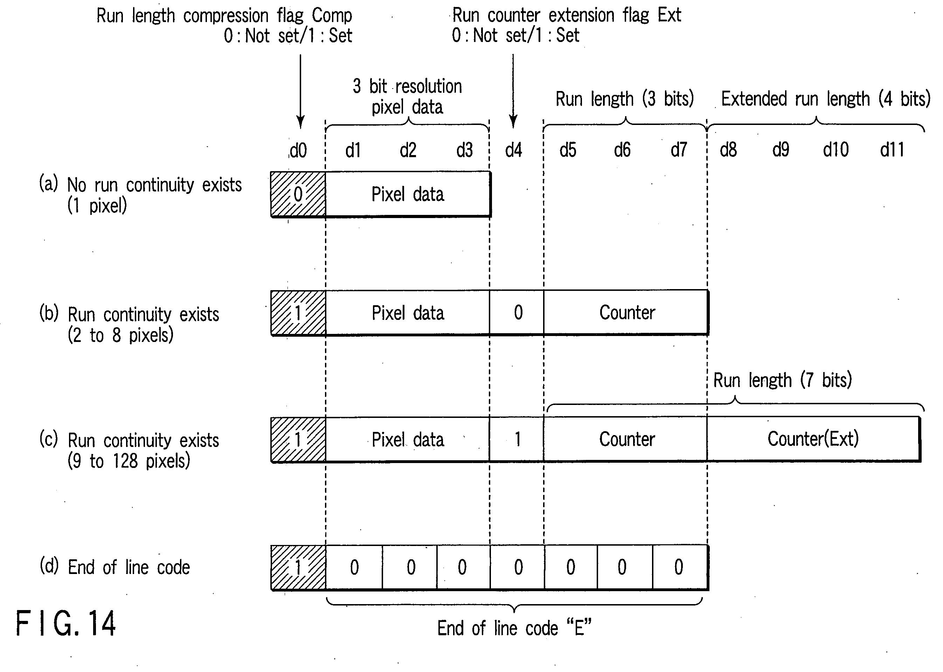

4 bit expression and compression rule of sub-picture information (FIGS. 14 to 20)

Point (C)

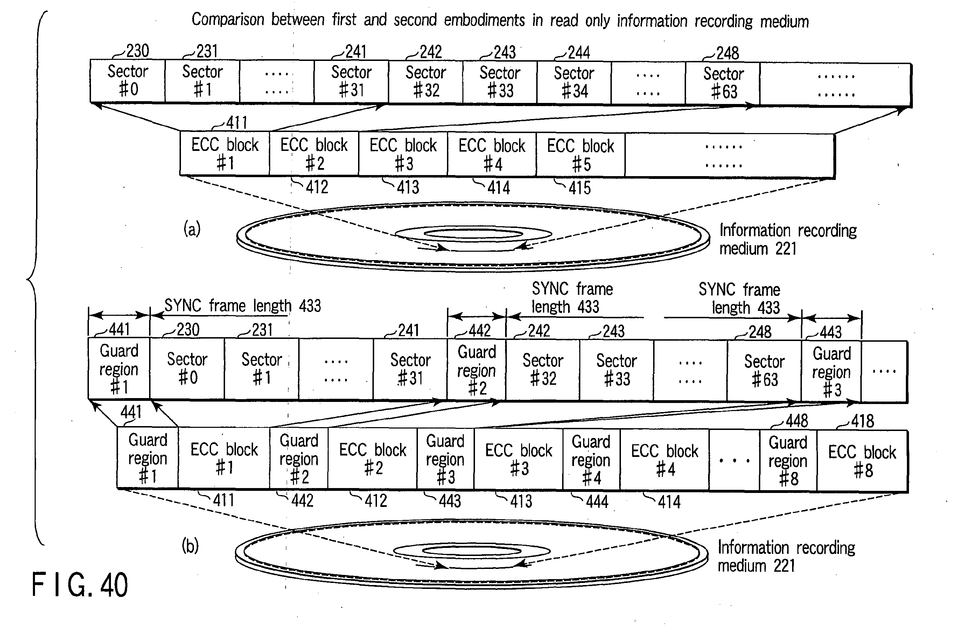

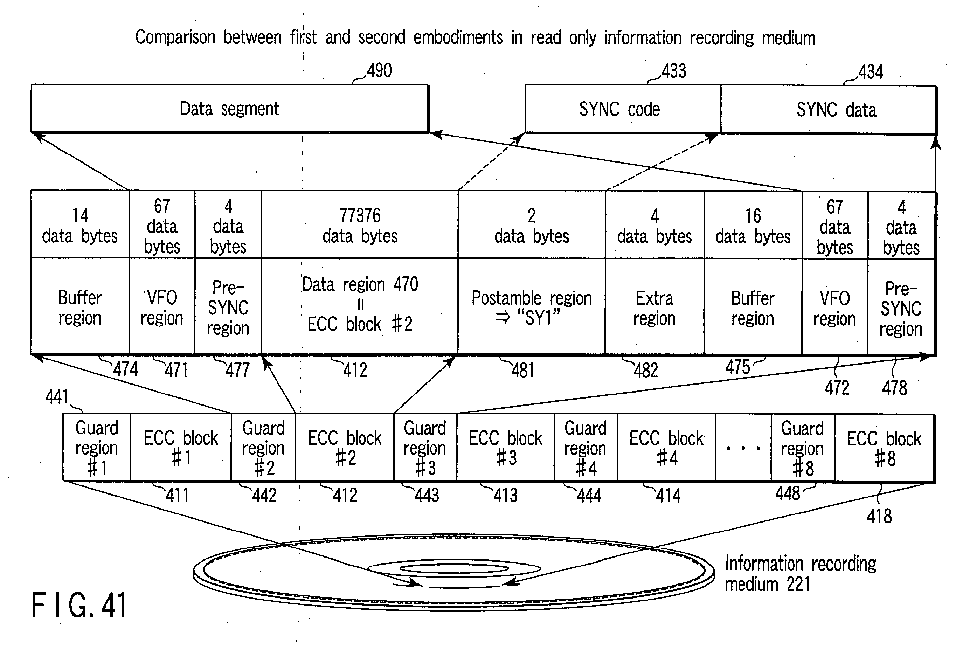

Plural types of recording formats can be set in a read only type information recording medium (FIGS. 40 and 41).

◊ In the case of contents which can be freely copied any time (which is not so important), as is in a current case, a structure for recording data serially to be connected (padded) for each segment is provided.

◊ In the case of important contents targeted for copy restriction, it is possible to separately allocate such contents for each segment on an information recording medium, to record identification information, copy control information, encryption key associated information, address information, and the like for a read only type information recording medium in gaps between the preceding and succeeding segments. Protection of contents in the information recording medium and speedy access can be guaranteed.

○ A common format is used in the same disk. A format cannot be changed in the middle of a disk.

○ Coexistence of two formats is permitted in the same disk according to the contents to be recorded.

Point (D)

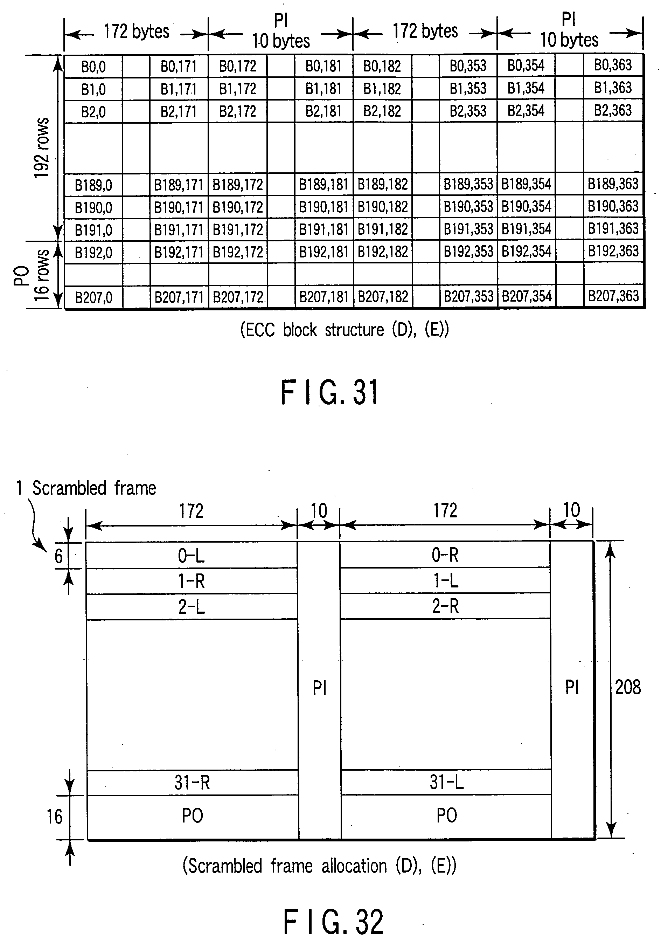

ECC (Error Correction Code) block structure using a multiplication code (FIGS. 31 and 32)

As shown in FIGS. 31 and 32, in the present embodiment, data recorded in an information recording medium is allocated in a two-dimensional manner, PI (Inner Parity) is added to a row direction as an error correction addition bit, and a PO (Outer Parity) is added to a column direction.

○ One error correction unit (ECC block) comprises 32 sectors.

As shown in FIG. 32, in the present embodiment, an ECC block is formed by sequentially arranging 32 sectors from sector 0 to sector 31 in a longitudinal manner.

Point (E)

The sector is divided into a plurality of portions, and different multiplication codes (small ECC blocks) are recorded for the respective portions.

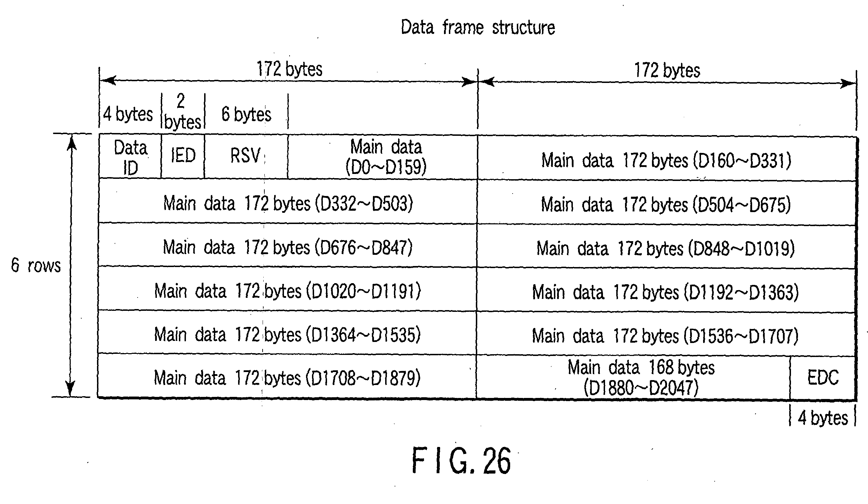

As shown in FIG. 26, data in sector is alternately allocated at the right and left on a 172 byte by 172 byte basis, and are separately grouped at the right and left. Data belonging to the right and left groups are interleaved in'a nest shape, respectively. These separated right and left groups each are collected by 32 sectors, as shown in FIG. 32, to configure small ECC blocks at the right and left. "2-R" in FIG. 32 denotes a sector number and a left or right group identification sign (for example, a second right data). L in FIG. 32 denotes a left.

○ Data in the same sector are interleaved (alternately included in another group with equal intervals), and are grouped into small ECC blocks which are different from each other for each group.

Point (F)

Plural types of synchronizing frame structures are specified by sectors forming ECC blocks.

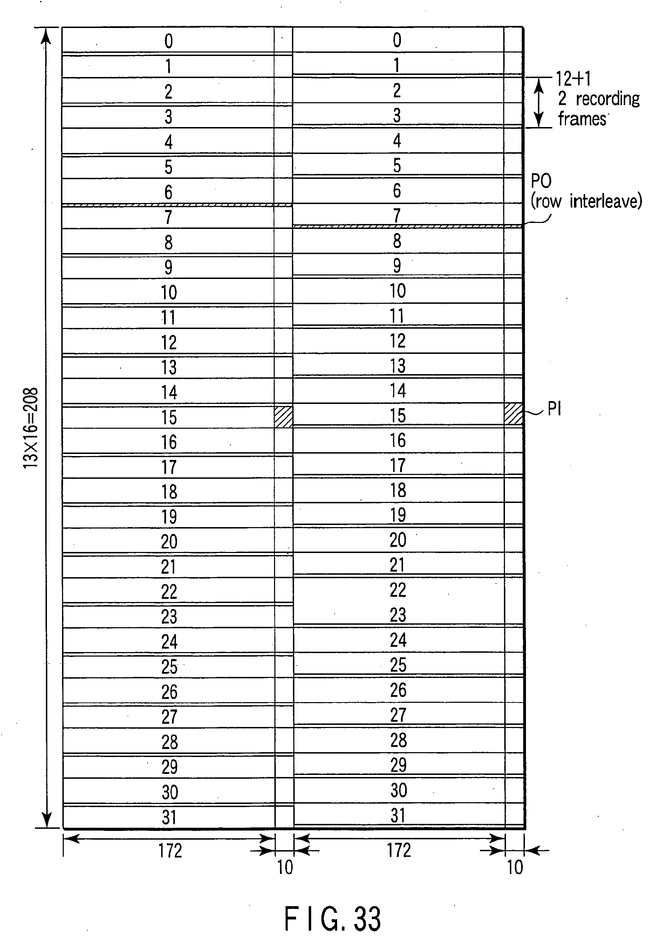

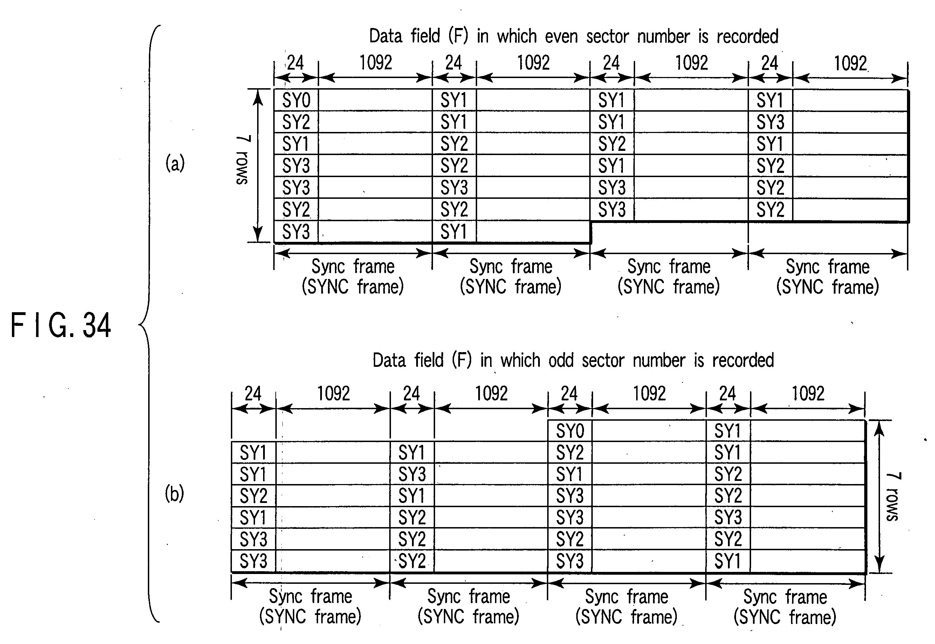

According to this embodiment, a synchronizing frame structure is changed, as shown in FIG. 34, depending on whether a sector number of sector forming one ECC block is an even number or an odd number. That is, data on PO groups which are alternately different from each other on a sector-by-sector basis is inserted (FIG. 33).

○ PO interleaving and inserting positions are different from each other at the right and left (FIG. 33).

Point (G)

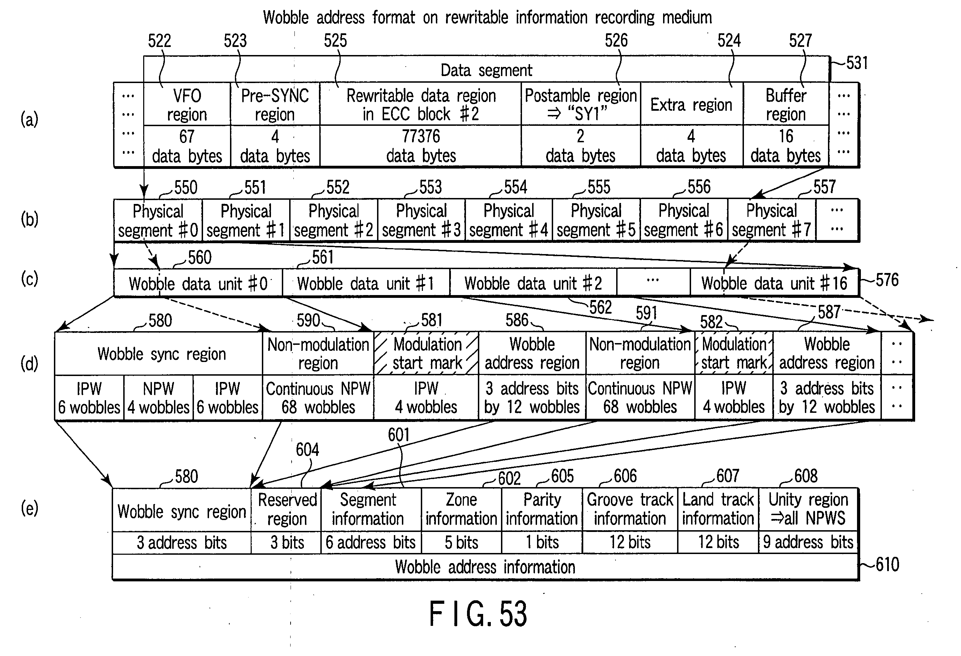

Separation structure of physical segment in ECC block (FIG. 53)

Point (H)

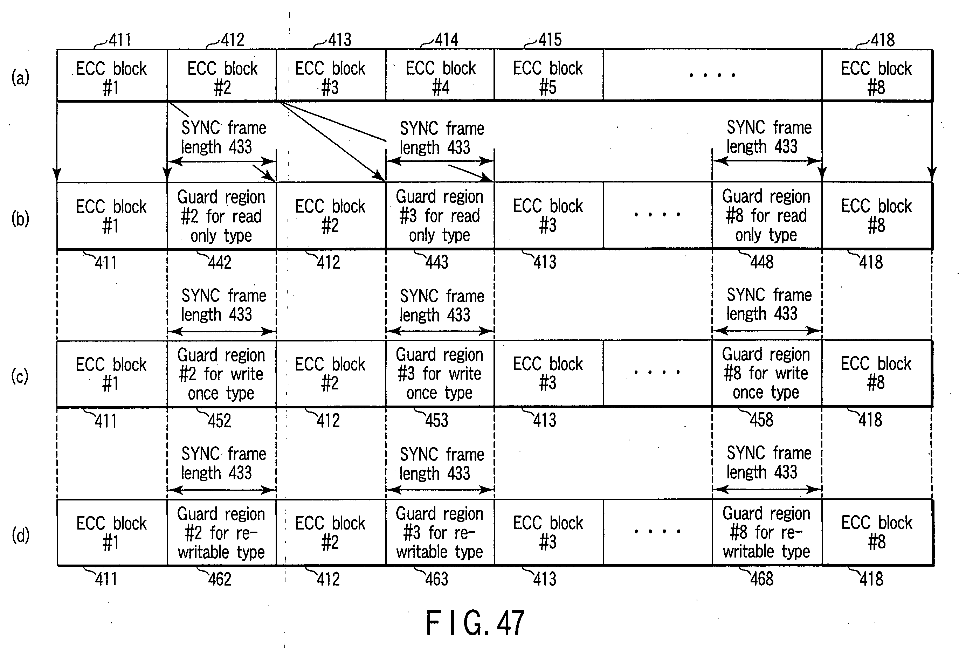

Guard area allocation structure between ECC blocks (FIG. 47).

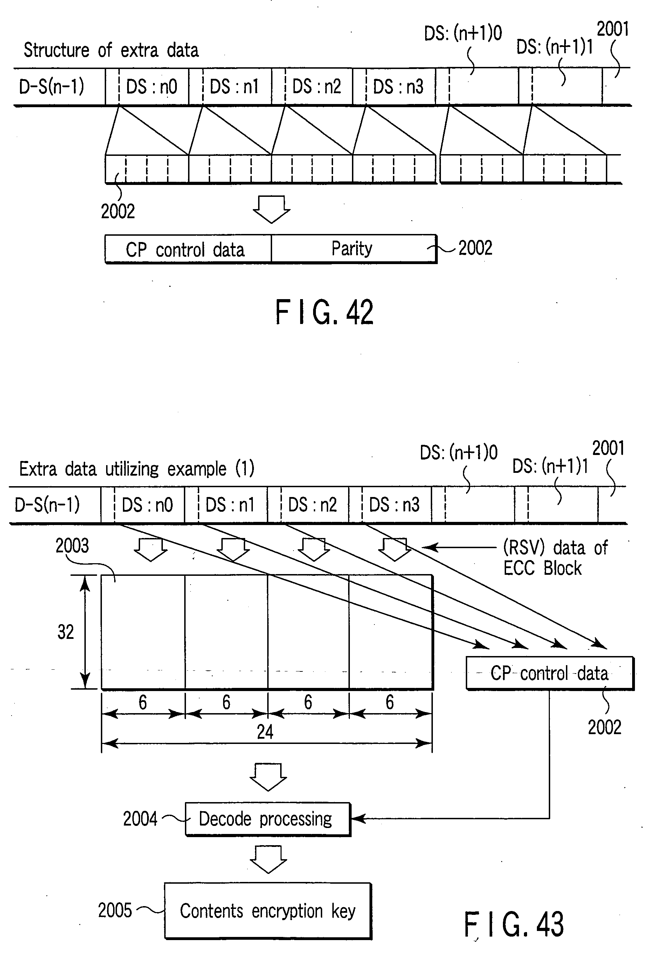

○ The contents of data are changed among read only, write once, and rewritable type (to be used for identification).
○ A random signal is utilized for a DVD-ROM header.
○ Copy control associated information or illegal copy protection associated information is recorded in an extra-area of a guard area (FIGS. 42 to 44).

Point (I)

A guard area is recorded to be partially overlapped in a recording format for a recordable information recording medium.

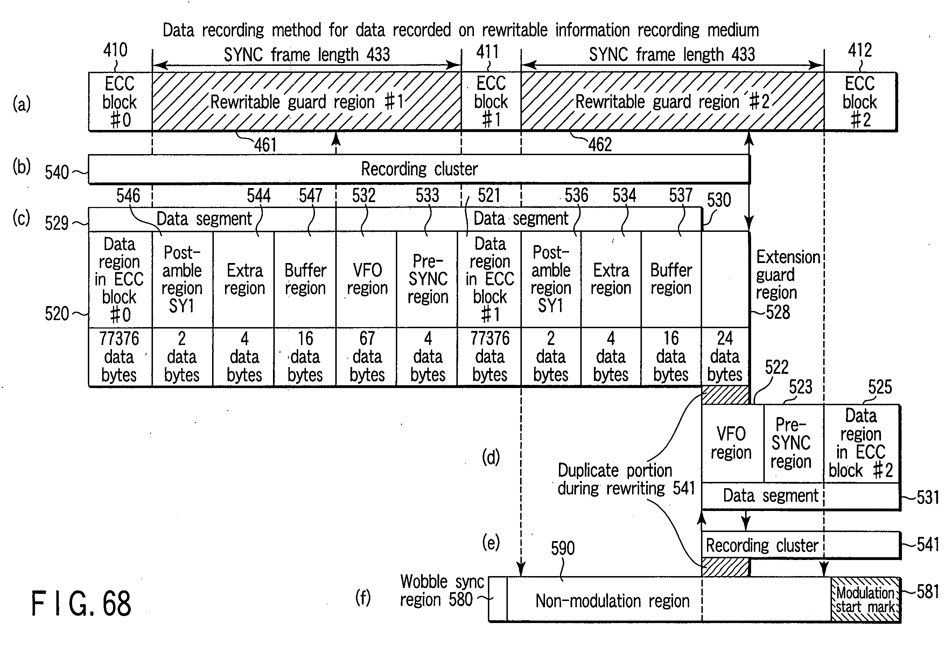

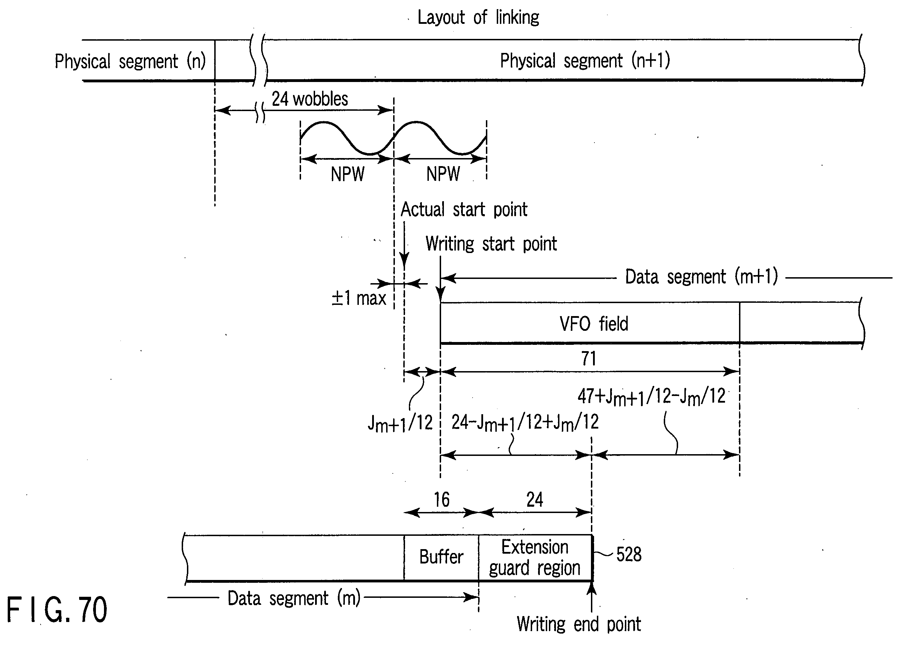

As shown in FIG. 68, an extended guard area 528 and a rear VFO area 522 are overlapped, and an overlapped portion 541 during rewrite occurs (FIGS. 68 and 70).

○ The overlapped portion 541 during rewrite is set so as to be recorded in a non-modulation area 590.

☆ A VFO area in a data segment starts at and after 24 wobbles from the beginning of physical segment.

○ An extended guard area 528 is formed at the last of a recording cluster representing a rewrite unit.

☆ The dimensions of the extended guard area 528 are defined as 15 data bytes or more.
☆ The dimensions of the extended guard area 528 are defined as 24 bytes.

○ A random shift quantity is defined to be beyond the range of Jm/12 ($0 \leq Jm \leq 154$).
○ The size of buffer area is set to 15 data bytes or more.

Point (J)

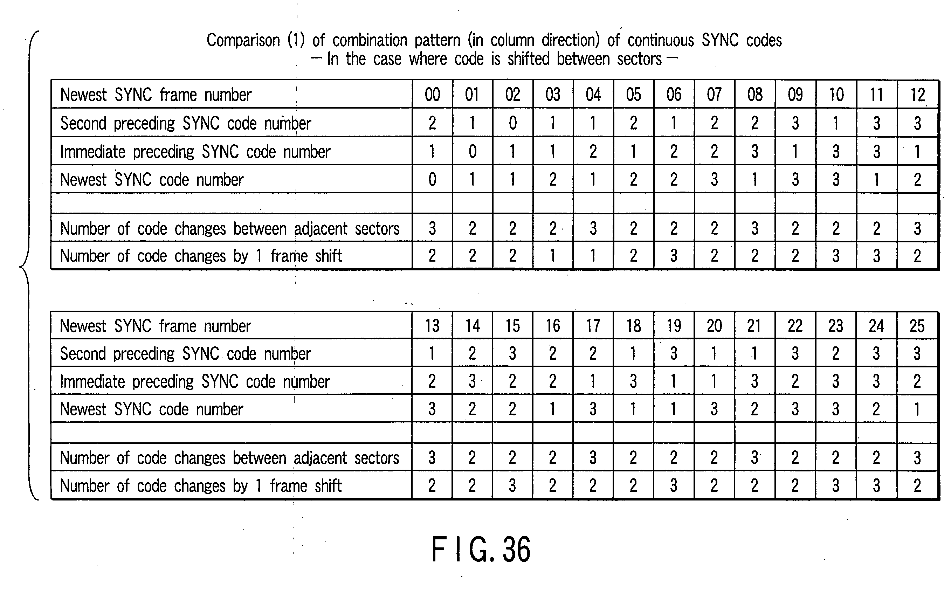

When combinations of continuous 3 sync codes are shifted by one, the number of changes of code is defined as 2 or more by contriving of an allocation (FIGS. 36 to 38).

○ Improvement is made so that the number of code changes is equal to or greater than 2 even in an allocation in which a sector structure not including a guard area is repeated.

○ Improvement is made so that, even where a sector structure is allocated by sandwiching a guard area, the number of changes of code is defined as 2 or more.

Point (K)

The occupancy ratio of wobble non-modulation area is set to be higher than that of wobble modulation area (FIGS. 53, 58 and 59).

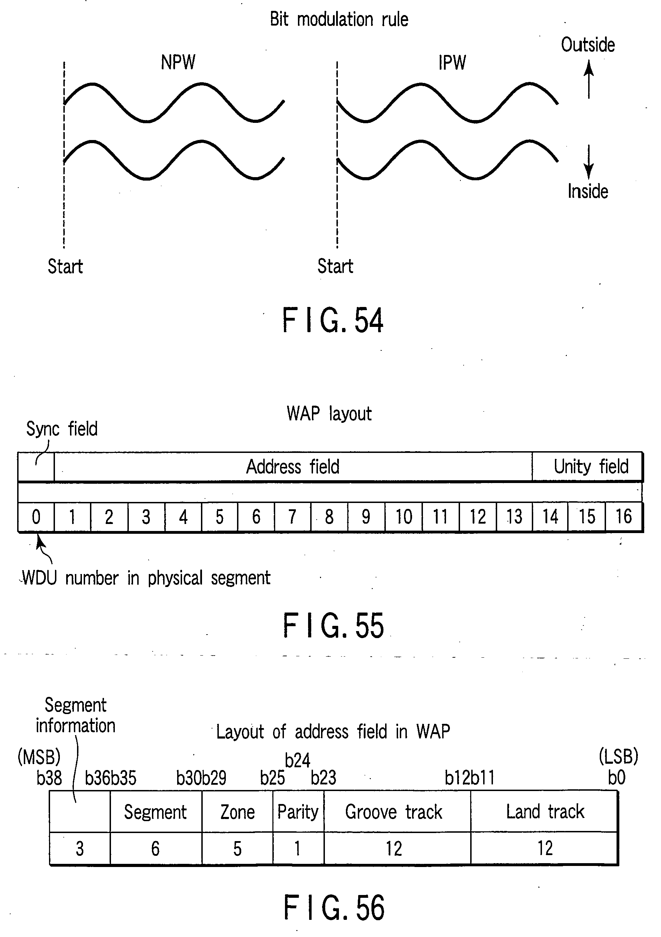

○ A modulation area is allocated to be distributed, and wobble address information is recorded to be distributed (FIGS. 53 and 55).

☆ Wobble sync information 580 comprises 12 wobbles (format (d) of FIG. 53).
☆ Zone information and parity information 605 are allocated so as to be adjacent to each other (format (e) of FIG. 53)
☆ A unity area 608 is expressed by 9 address bits (format (e) of FIG. 53).

Point (L)

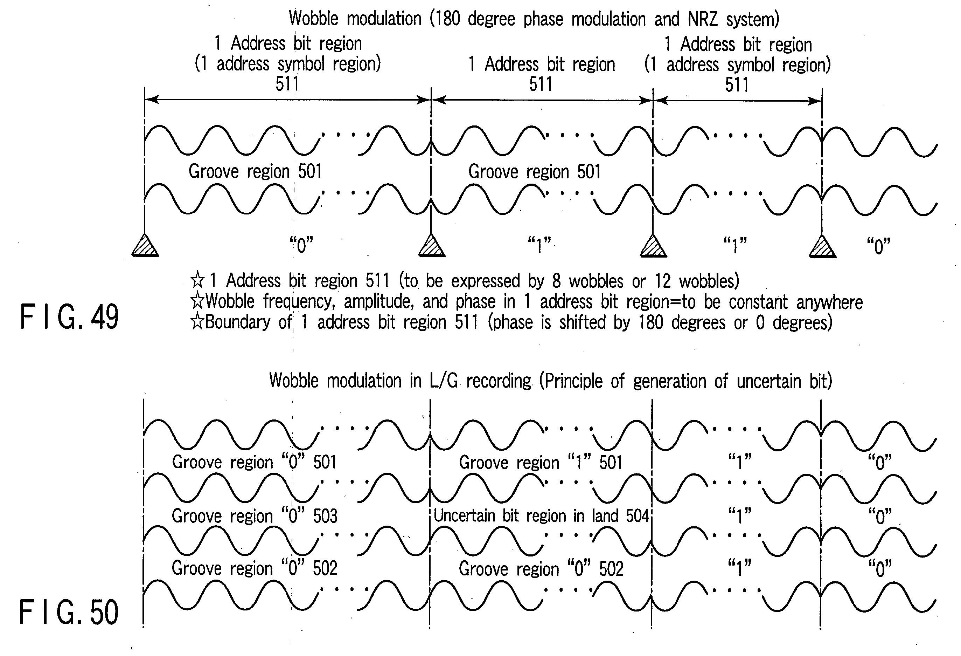

Address information is recorded by land/groove recording plus wobble modulation (FIG. 50).

Point (M)

An uncertain bit is allocated to be distributed in a groove area as well.

○ A groove width is locally changed during groove formation, and a predetermined area of a constant land width is formed.

☆ An exposure quantity is locally changed during groove area formation, and a groove width is changed.
☆ During groove area formation, 2 exposure focusing spots are used, and an interval between these spots is changed to change a groove width.

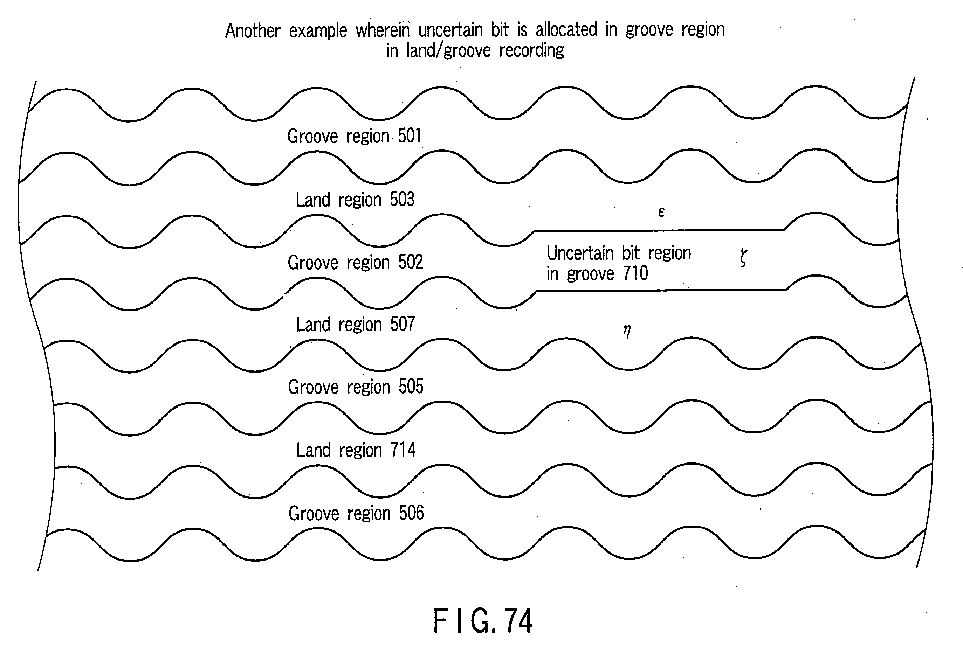

○ A wobble width amplitude in a groove is changed, and an uncertain bit is allocated in a groove area (FIG. 74).

Point (N)

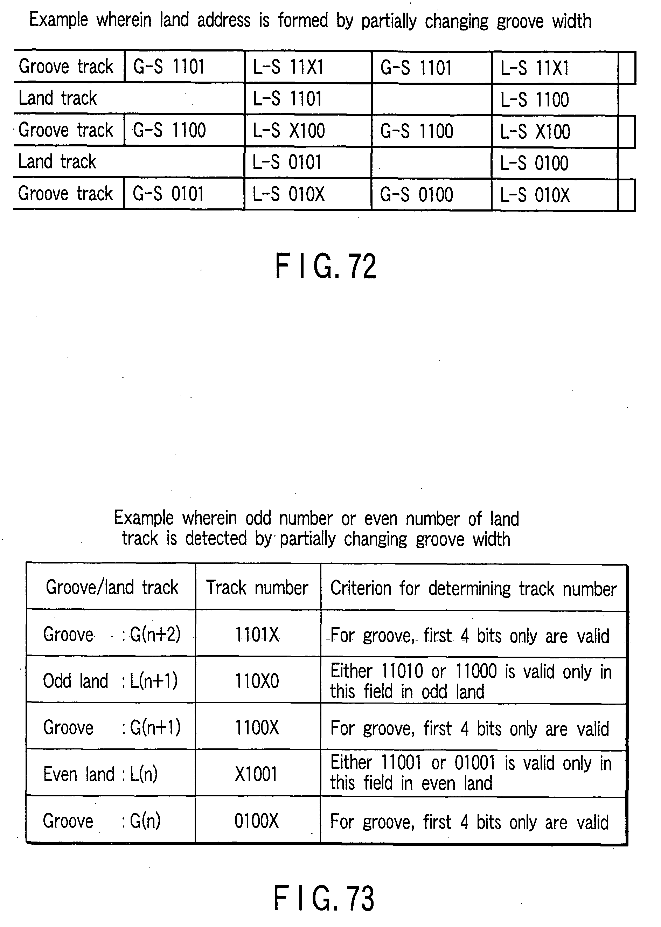

By land/groove recording plus wobble modulation, uncertain bits are allocated to be distributed to both of land and groove (track information 606 and 607 of FIGS. 53 and 71).

○ A groove width is controlled when the groove width is locally changed, so that the land width of the adjacent unit is constant.

Point (O)

In land/groove recording, wobble phase modulation of 180 degrees (±90 degrees) is used (FIG. 49)

Point (P)

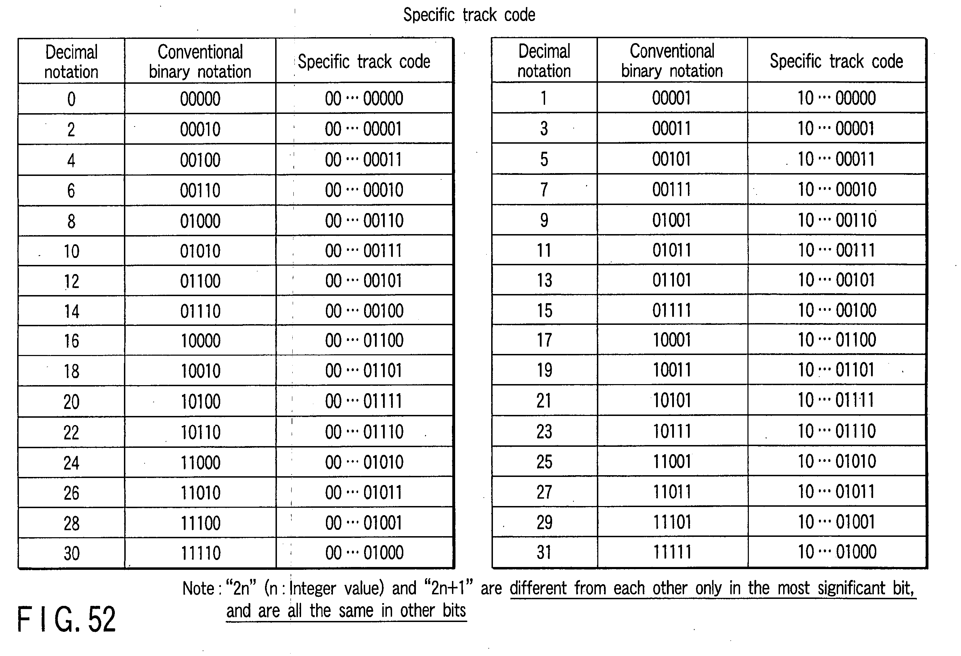

A gray code or a specific track code is used for a track address (FIGS. 51 and 52).

Point (Q)

Data according to a modulation rule is recorded in a sync data area in a guard area (FIG. 41).

○ A sync code identical to that in a sector is recorded in a post-amble area allocated at the start position in a guard area.

○ An extra area is allocated after a data area.

○ An extra area is allocated immediately after a post-amble area.

Point (R)

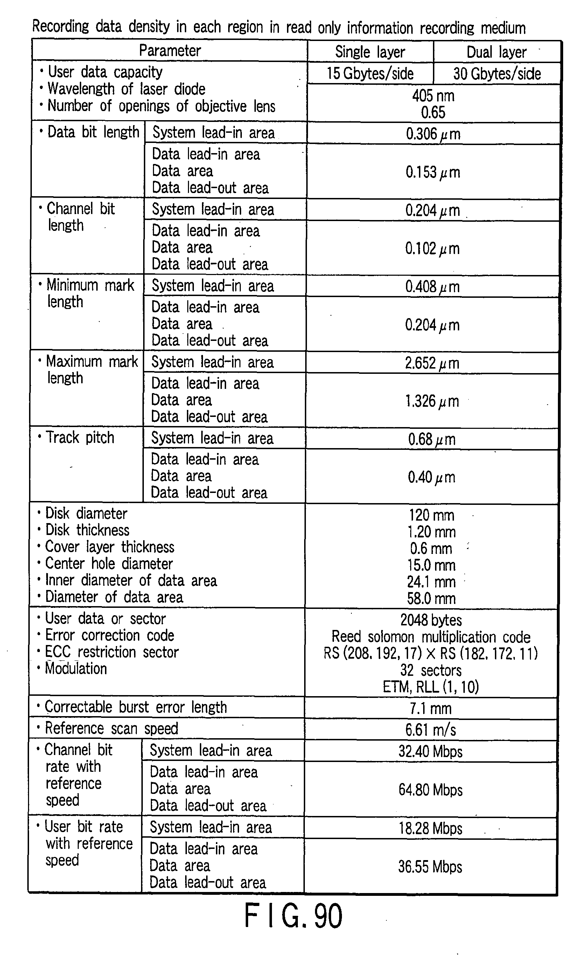

A track pitch and a minimum mark length (minimum pit pitch) in a system lead-in area are made more coarse (FIG. 90).

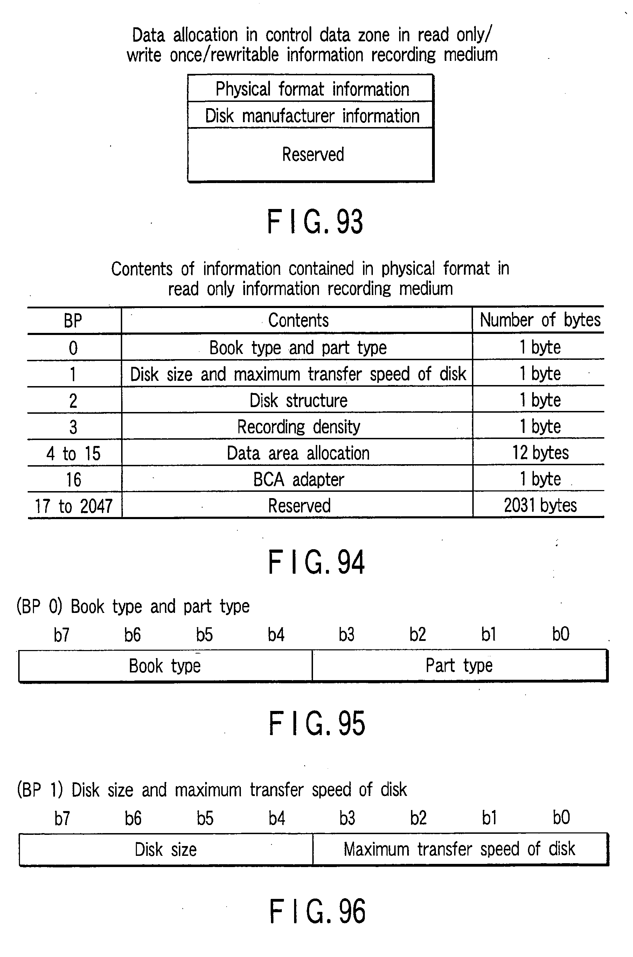

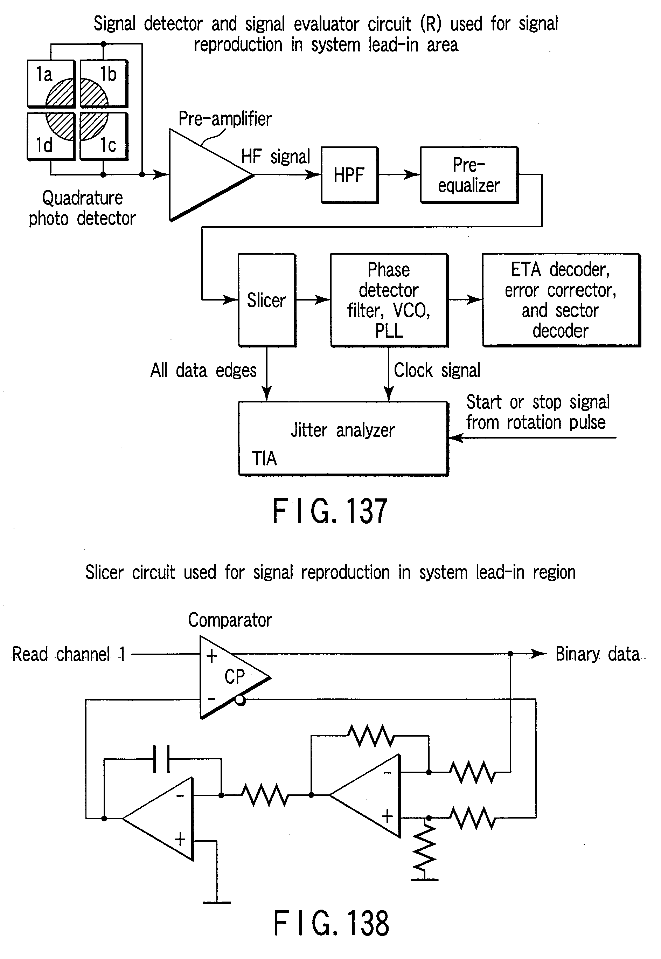

○ In a system lead-in area, a signal reproduction (binarization) is carried out in accordance with a level slice technique (FIG. 138).
○ A medium identification information is recorded in a system lead-in area of an embossed area (FIG. 94).

A book type and a part version are recorded in a control data zone shown in FIG. 94. As the book type, "0100b" (HD-DVD standard for a read only disk) is set in a read only type information recording medium according to the present embodiment, and "0101b" (HD-DVD standard for a rewritable type disk) is set in a rewritable type information recording medium according to the present embodiment.
A layer type recorded in a disk structure in the control data zone shown in FIG. 94 includes (1) identification information on a read only medium (b2 = 0, b1 = 0, b0 = 1), write once medium (b2 = 0, b1 = 1, b0 = 1), and rewritable medium (b2 = 1, b1 = 0, b0 = 1) and (2) recording format (b3 = 0, b2 = 0, b1 = 0, b0 = 1 in the case of a first example (a) shown in FIG. 40, and b3 = 1, b2 = 0, b1 = 0, b0 = 1 in the case of a second example (b) shown in FIG. 40) where a medium is read only type.

○ Identification information for identifying a current DVD disk or a high density compatible disk according to the present embodiment and linear density and track pitch information associated therewith are recorded in a system lead-in area. In addition, the linear density and track pitch in the system lead-in area are set so that a difference from a current DVD lead-in area is equal to or lower than ±30% (FIGS. 94 and 90).

Point (S)

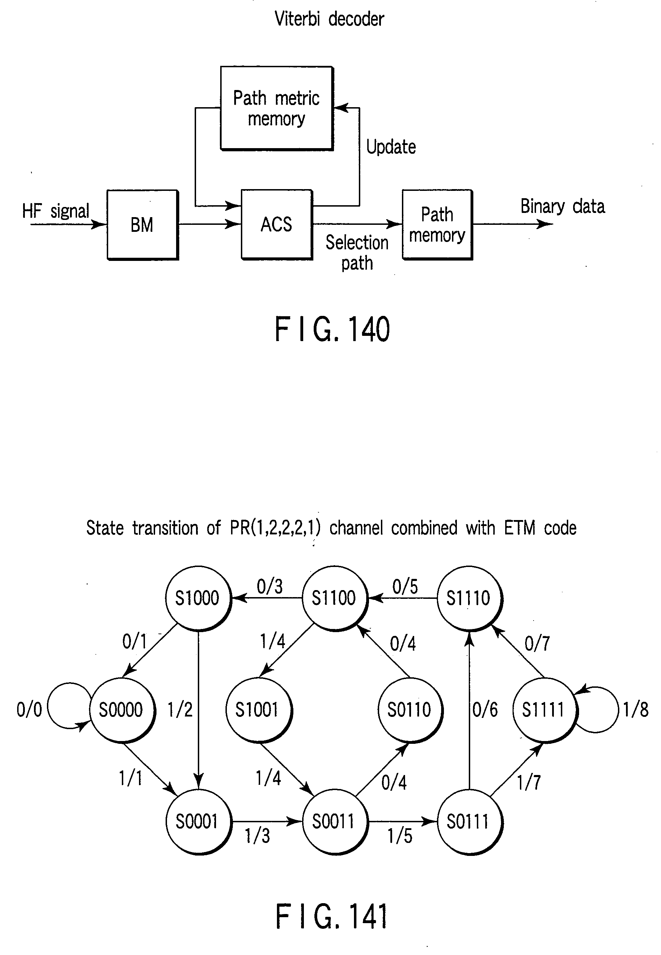

A signal reproducing process in accordance with a PRML (partial response maximum likelihood) technique is carried out in a data lead-in area, a data area, and a data lead-out area (FIG. 140).

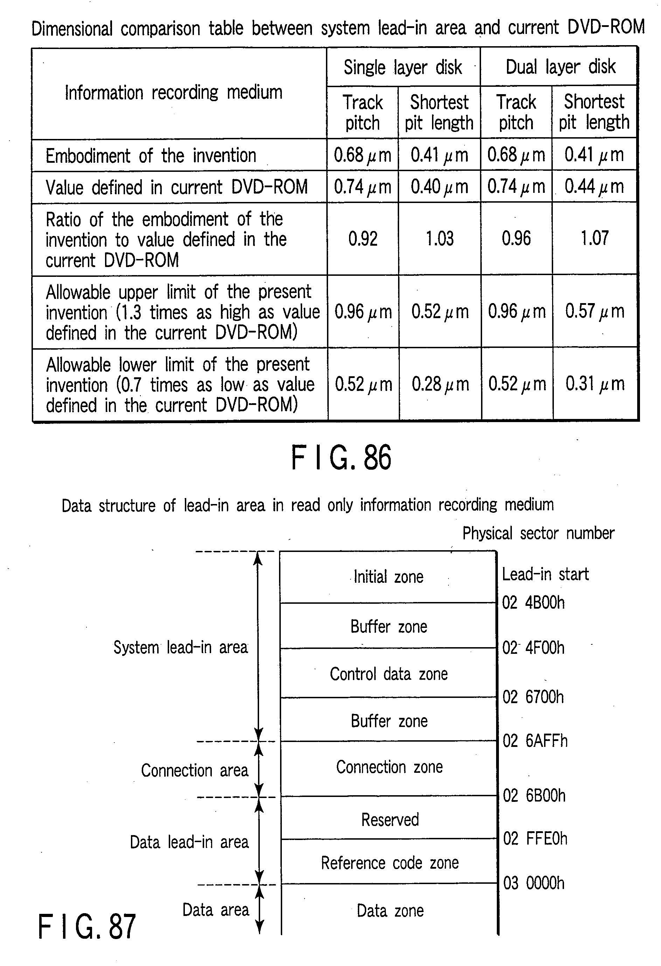

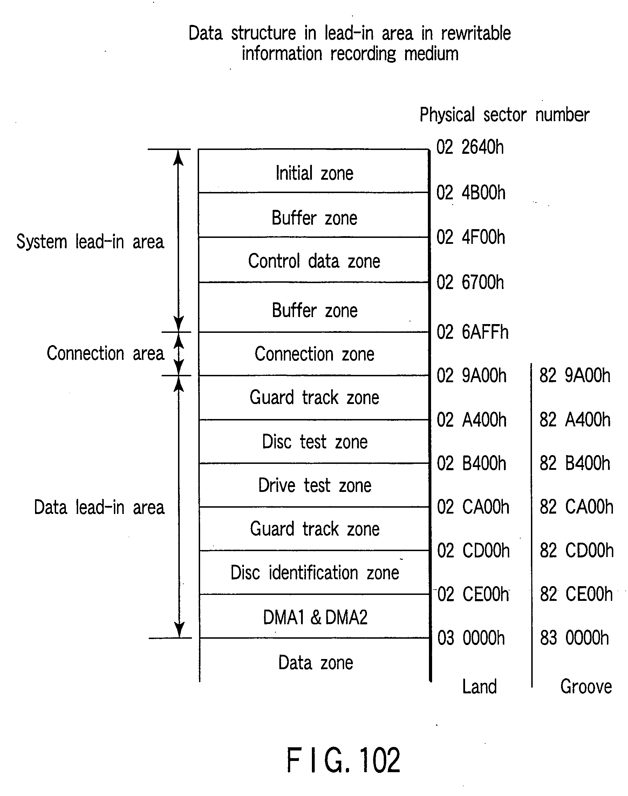

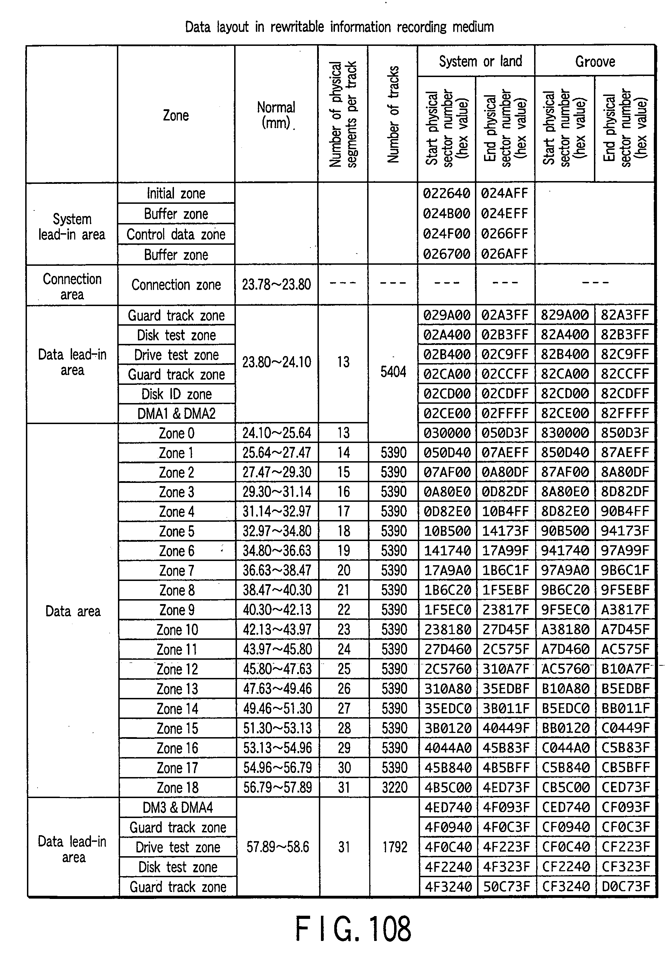

○ In a read only type information recording medium, a reference code zone is allocated in a data lead-in area (FIG. 87).
○ In a rewritable type information recording medium, a connection zone (connection area) is allocated between a data lead-in area and a system lead-in area (FIGS. 102 and 108).

Point (T)

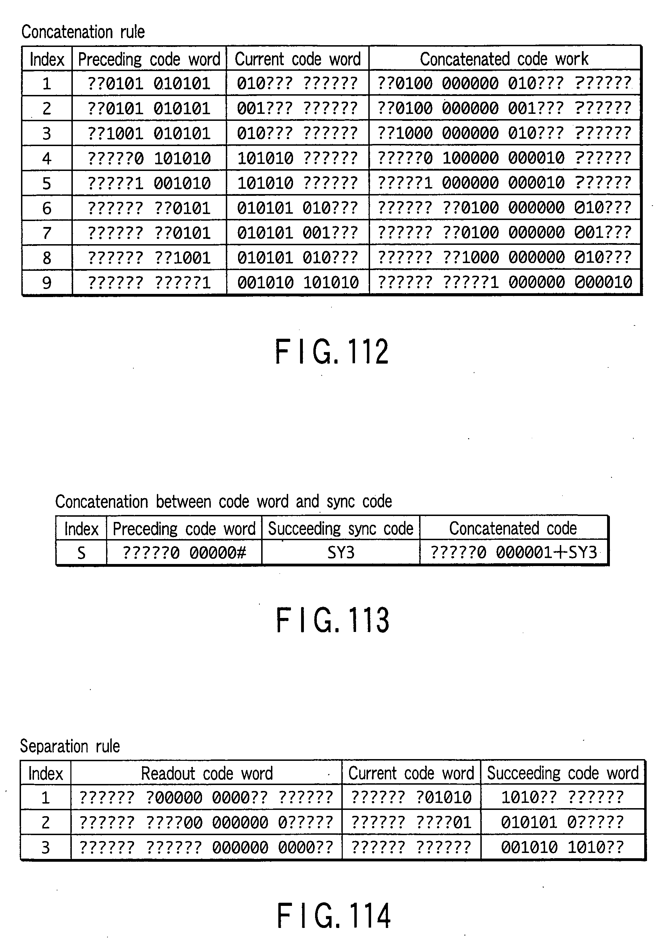

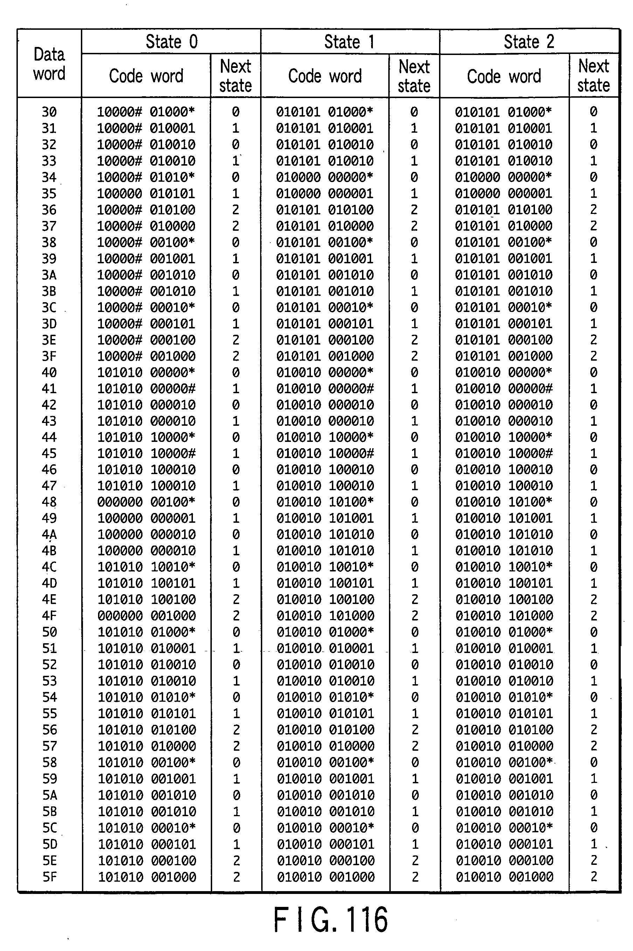

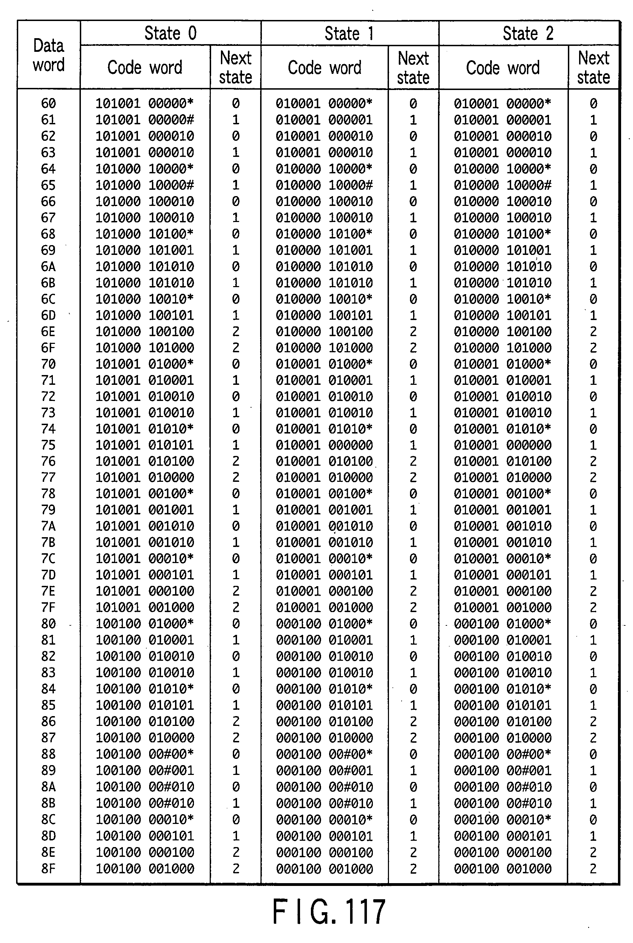

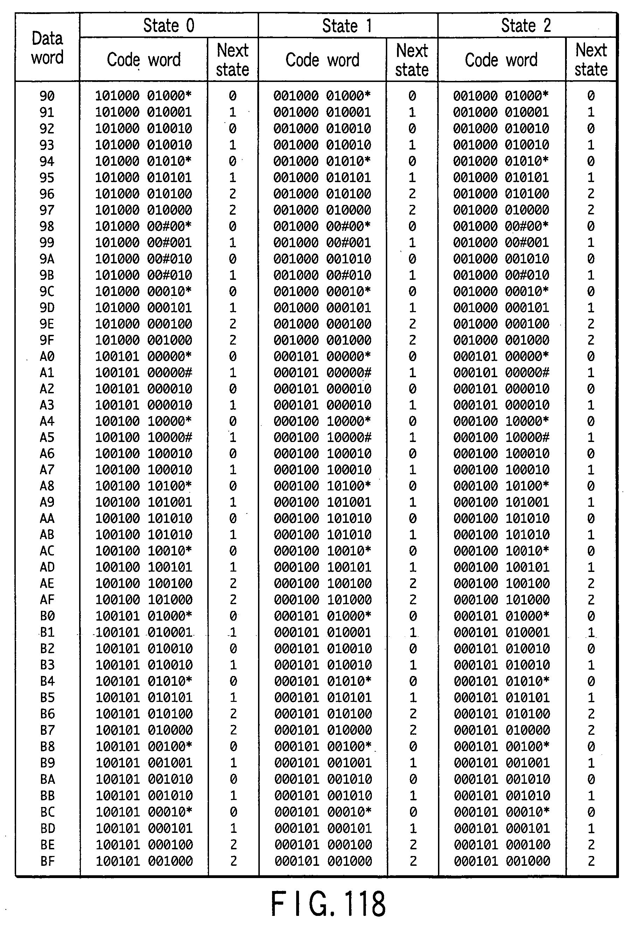

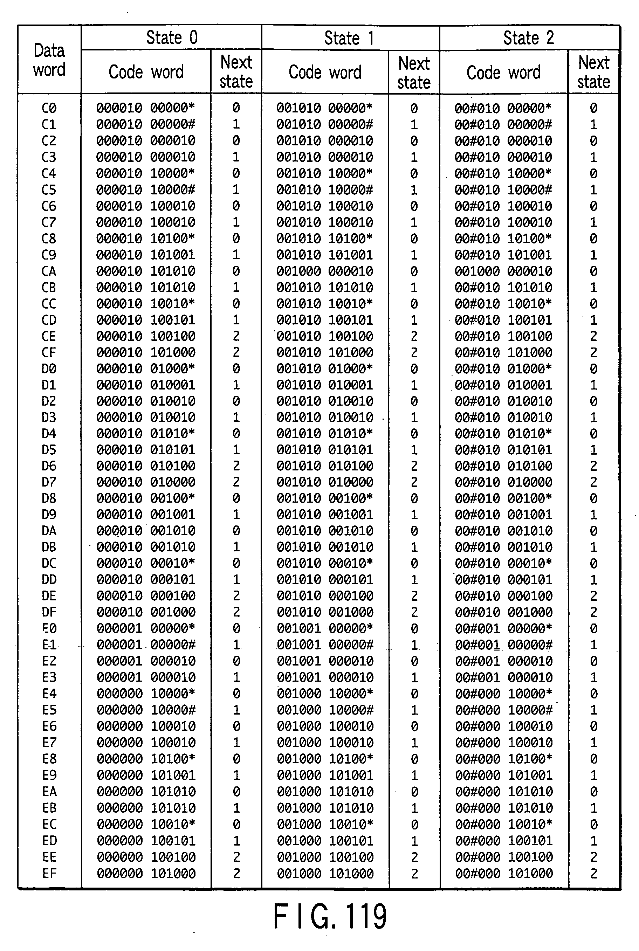

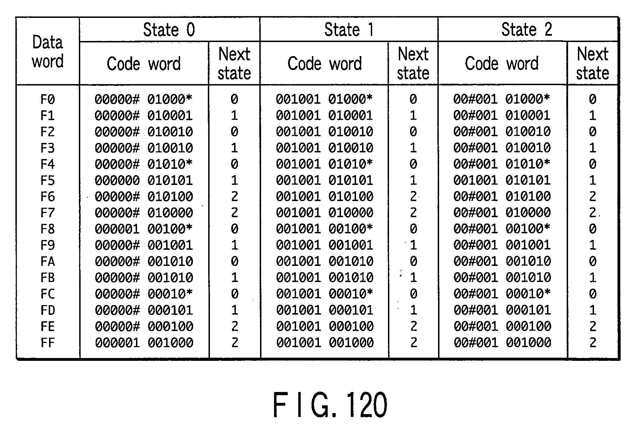

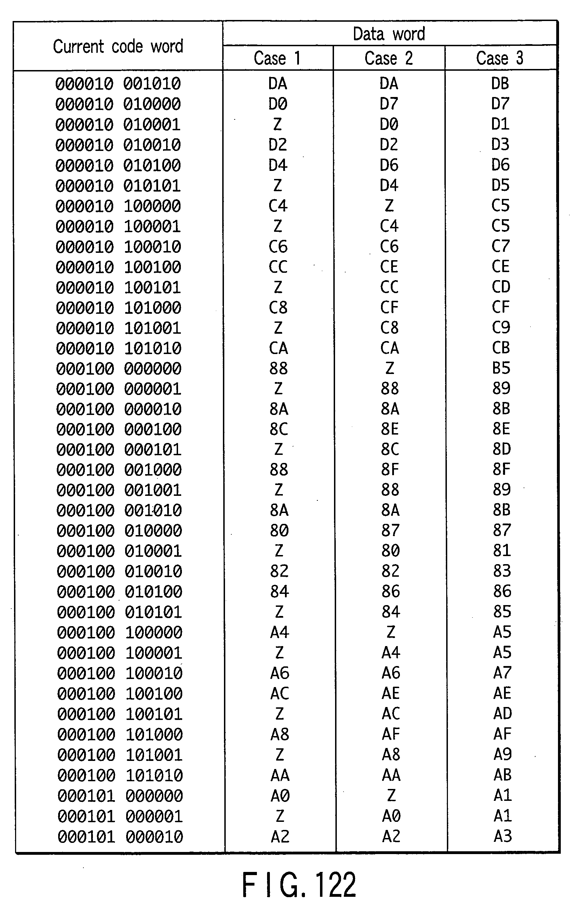

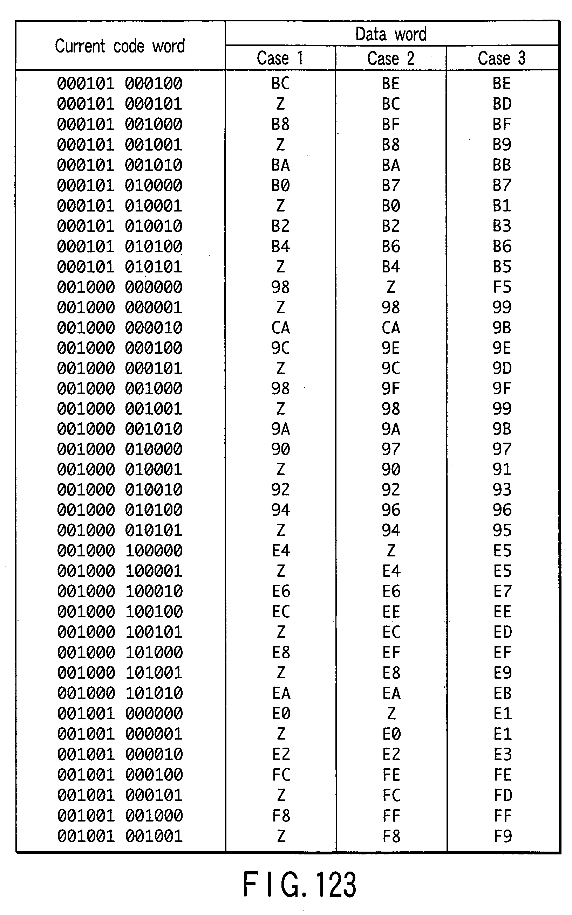

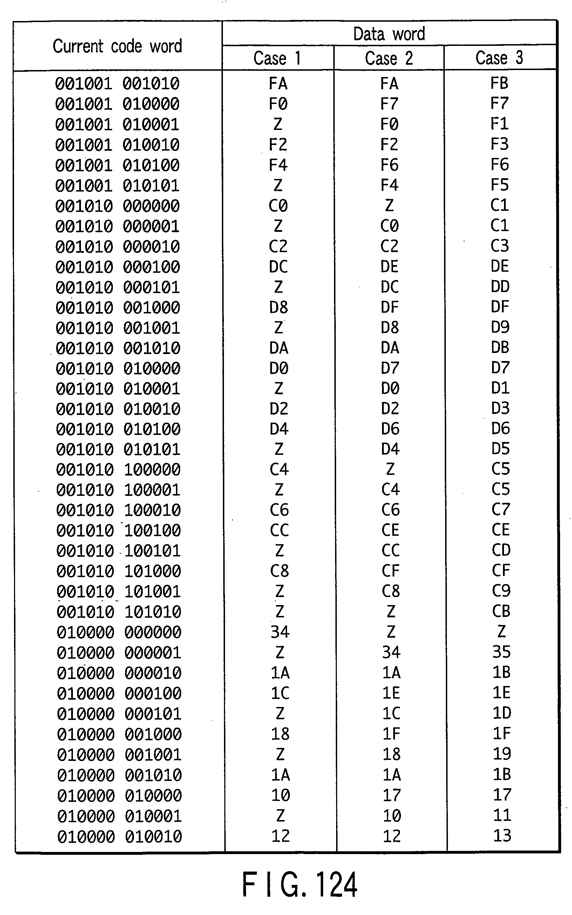

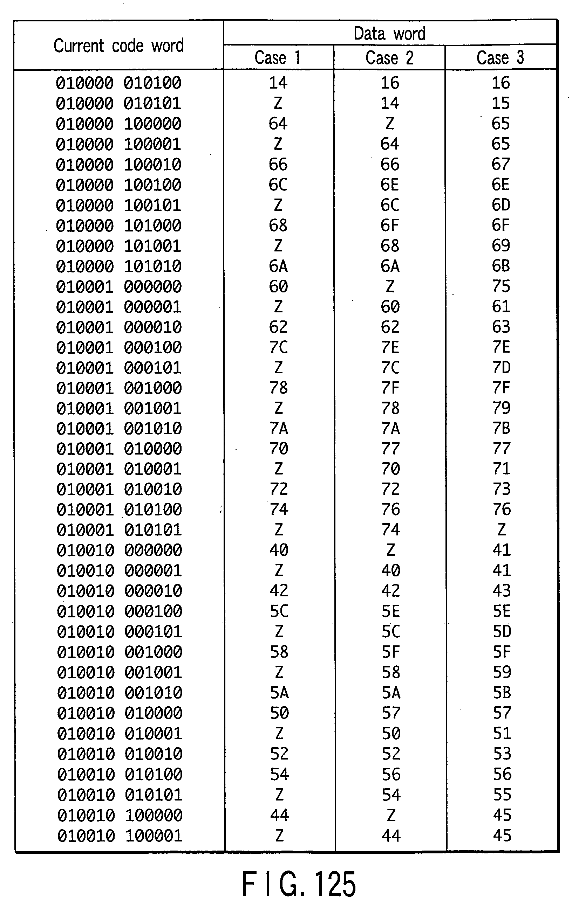

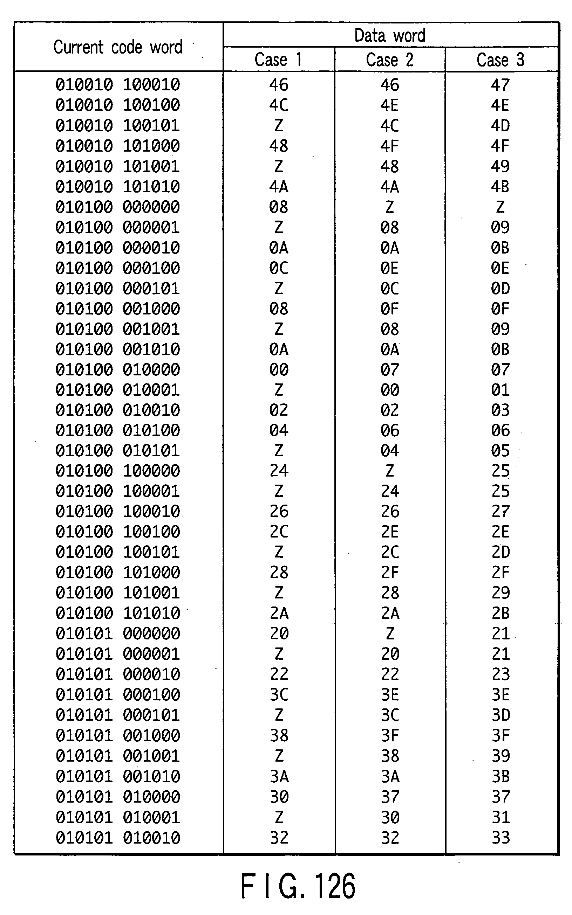

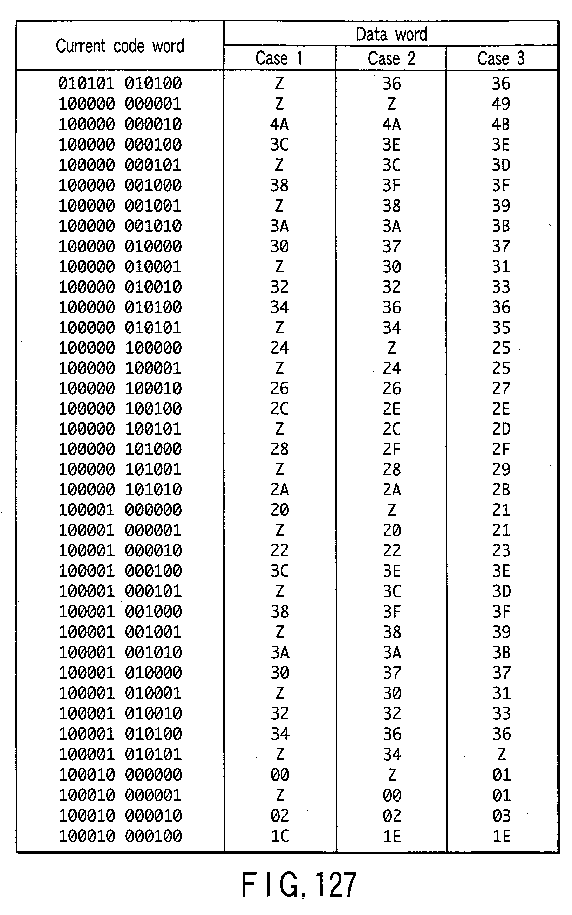

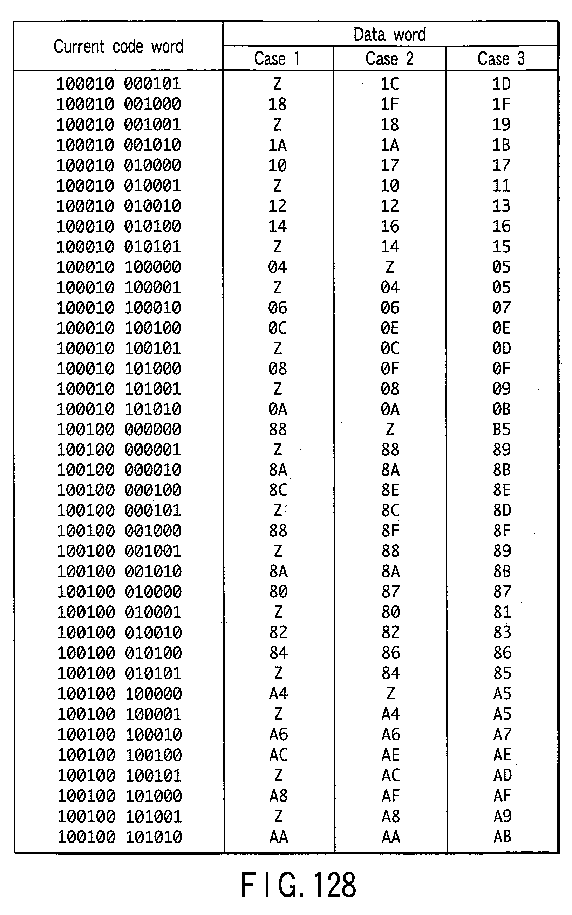

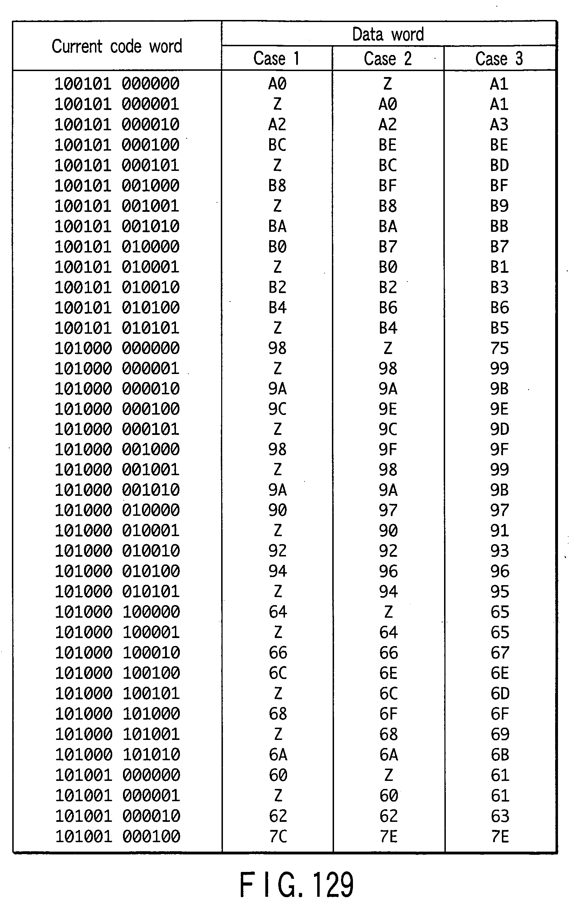

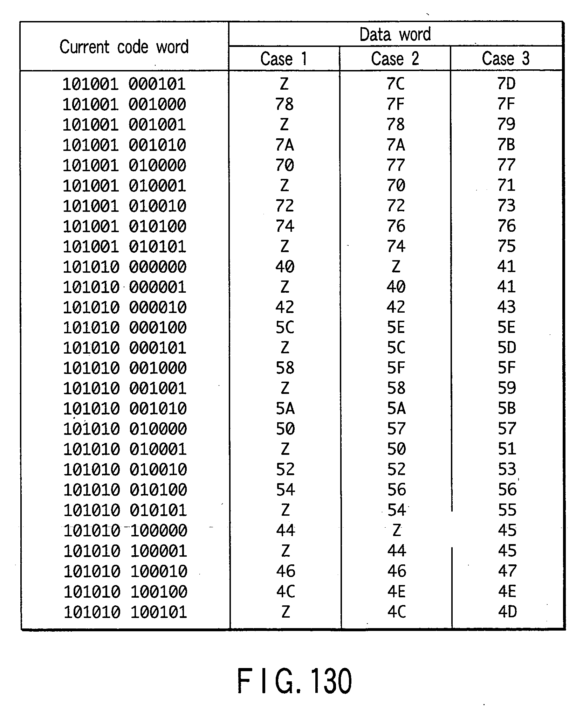

A modulation system in which the minimum continuous repetition count of "0" after modulation is 1 (d = 1) is employed (FIGS. 112 to 130).

Point (U)

A recording cluster representing a rewrite unit comprises 1 or more data segments (FIGS. 68 and 69).

○ In the same recording cluster, random shift quantities of all data segments coincides with each other.
○ Adjusting is carried out in a guard area between ECC blocks, and correction of a recording timing is carried out.
○ A recording cluster start position is recorded from a non-modulation area immediately after a wobble sink area.

☆ Recording is started at a location shifted by 24 wobbles or more from a switching position of a physical segment.

Advantageous effects <1> to <28> according to the above described points (A) to (U) are shown in FIGS. 1 and 2. The contents of points which are essential in having unique advantageous effect in a list are marked with circles "○," and the contents of points which are associated with the contents of the unique advantageous effect, but which are additional and are not always necessary, are marked with triangles "Δ."

[Description of Advantageous Effect on respective Advantageous Effect Numbers corresponding to FIGS. 1 and 2]

<A large capacity according to high image quality video is guaranteed. In addition, access reliability for high image quality video is enhanced>

Advantageous Effect <1>

As compared with a current SD video, where an HD video is recorded in an information recording medium by file or folder separation, the HD video has high resolution. Thus, it is necessary to increase recording capacity of an information recording medium. The recording capacity during land/groove recording can be increased more significantly than that during groove recording. A recording mark cannot be formed on a pre-pit address, and thus, address information recording by wobble modulation has higher recording efficiency than pre-pit address. Therefore, land/groove recording plus wobble' modulation increases the recording capacity most significantly. In this case, a track pitch becomes dense, and thus, there is a need for improving address detection capability more remarkably to enhance access reliability.
In the present embodiment, a gray code or a specific track code is employed for generation of an uncertain bit which becomes a problem in land/groove recording plus wobble modulation, thereby making it possible to reduce the frequency of generating uncertain bits and to significantly increase the address detection precision. Automatic correction can be carried out for incorrect detection of a sync code by making best use of combinations of sync codes. Thus, the position detection precision in a sector using a sync code is remarkably improved. As a result, the reliability and speed of access control can be enhanced.
Land/groove recording increases the adjacent track cross-talk where a track pitch has been shortened and an entry of a noise component for a reproduction signal from a recording mark by the above uncertain bit, and the reliability of reproduction signal detection is reduced. In contrast, when a PRML technique is used for reproduction, an error correction function for a reproduction signal is provided during ML demodulation. Therefore, the reliability of reproduction signal detection can be improved, and thus, even if recording density is increased to ensure an increase of recording capacity, stable signal detection can be guaranteed.

Advantageous Effect <2>

A high image quality sub-picture is required in accordance with a high image quality video recorded in an information recording medium. However, when a sub-picture is changed from current 2 bit expression to 4 bit expression, an amount of data to be recorded is increased. A large capacity of an information recording medium for recording the sub-picture is required. Land/groove recording can increase the recording capacity more significantly than groove recording. A recording mark cannot be formed on a pre-pit address, and thus, address information recording in accordance with wobble modulation has higher recording efficiency than the pre-pit address. Therefore, the recording capacity is increased most significantly in land/groove recording plus wobble modulation. In this case, there is a need for improving address detection performance more remarkably and enhancing access reliability.
In the present embodiment, a grey code or a specific track code is employed for generation of an uncertain bit which becomes a problem in land/groove recording plus wobble modulation system, making it possible to significantly increase the frequency of generating uncertain bits and the address detection precision. The position detection precision in a sector using a sync code has been remarkably improved. As a result, reliability and speed of access control can be enhanced.
The adjacent track cross-talk and entry of a noise component from a recording mark to a reproduction signal due to a cross-talk and uncertain bits are increased if a track pitch is shortened by land/groove recording, and the reliability of reproduction signal detection is reduced. In contrast, when the PRML technique is employed during reproduction, an error correction function for a reproduction signal during ML demodulation is provided, and thus, the reliability of reproduction signal detection can be improved. Therefore, even if recording density is increased to ensure an increase of recording capacity, stable signal detection can be guaranteed.

Advantageous Effect <20>

As compared with a current SD video, where an HD video is recorded on an information recording medium by file or folder separation, the HD video has high resolution, and thus, it is necessary to increase the recording capacity of an information recording medium. In the present embodiment, a modulation system in which "d = 1" is established (run length modulation system: RLL (1, 10)) is employed, and the recording density of embossed pit or recording mark is increased, whereby a large capacity has been achieved.
In comparison with a modulation system of "d = 2" employed in the current DVD, a window margin width (jitter margin width or ΔT) representing an allowable displacement quantity for a sampling timing in response to a detection signal is large (when a physical window margin width is identical to a current width, the recording density is improved concurrently). However, a most dense embossed pit or a most dense recording mark pitch becomes narrowed, the reproduction signal amplitude is remarkably reduced. Therefore, there has been a problem that signal detection (stable binarizing) cannot be carried out in the conventional level slice technique.

In contrast, in the present embodiment, a modulation system in which "d = 1" is established is employed, and signal detection using the PRML technique is employed, whereby the reliability of reproduction signal detection is improved, and high recording density can be achieved.

Advantageous Effect <21>

High image quality sub-picture is required in accordance with high image quality sub-picture recorded in an information recording medium. However, when a sub-picture is changed from the conventional 2 bit expression into 4 bit expression, an amount of data to be recorded is increased. Thus, a large capacity of information recording medium for recording the data is required. In the present embodiment, a modulation 'system in which "d = 1" is established is employed, and the recording density of embossed pit or recording mark is enhanced, and a large capacity is achieved.

As compared with a modulation system in which "d = 2" is established, the modulation system employed in the current DVD, a window margin width (jitter margin width or ΔT) representing an allowable displacement quantity for a sampling timing in response to a detection signal is large (when a physical window margin width is identical to a conventional width, the recording density is improved concurrently). However, a dense embossed pit or a dense recording mark pitch becomes narrowed, the reproduction signal amplitude is remarkably reduced. Therefore, there has been a problem that signal detection (stable binarizing) cannot be carried out in the conventional level slice technique.

In contrast, in the present embodiment, a modulation system in which "d = 1" is established is employed and signal detection using the PRML technique is employed, whereby the reliability of reproduction signal detection is improved, and high density can be achieved.

<Recording efficiency is enhanced by enabling efficient zone division, and a large capacity according to high image quality video is guaranteed>

Advantageous Effect <3>

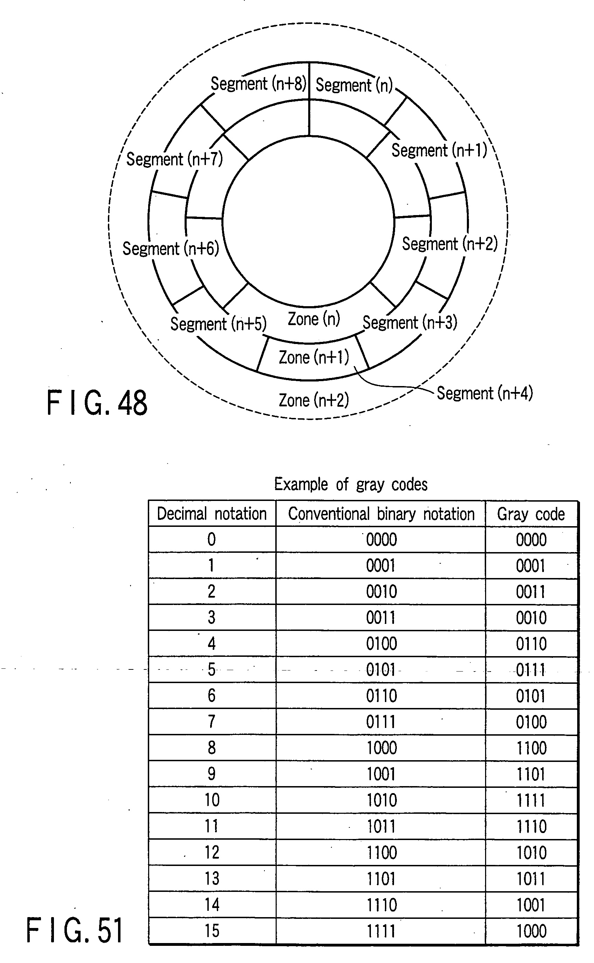

As compared with a current SD video, where an HD video is recorded on an information recording medium by file or folder separation, the HD video has high resolution, and thus, it is necessary to increase the recording capacity of an information recording medium. The recording capacity for land/groove recording can be increased more significantly than that for groove recording, and a recording mark cannot be formed on a pre-pit address. Thus, address information recording by wobble modulation has higher recording efficiency than pre-pit address. Therefore, land/groove recording plus wobble modulation system increases recording capacity most significantly. In the case of land/groove recording, the zone structure of FIG. 48 is used. However, if zone allocation is made so that one round becomes an integer multiple of ECC block, recording efficiency becomes very low.

In contrast, as in the present embodiment, after one ECC block has been divided into a plurality of physical segments (7 segments in the present embodiment), when a zone is set to be allocated so that one round on an information recording medium becomes an integer multiple of physical segment, recording efficiency becomes very high.

Advantageous Effect <4>

A high image quality sub-picture is also required in accordance with a high image quality video recorded in an information recording medium. However, if a sub-picture is changed from a conventional 2 bit expression into 4 bit expression, an amount of data to be recorded is increased. Thus, a large capacity of an information recording medium for recording the data is required. The recording capacity for land/groove recording can be increased more significantly than that for groove recording, and a recording mark cannot be formed on a pre-pit address. Thus, address information recording by wobble modulation has higher recording efficiency than pre-pit address. Therefore, land/groove recording plus wobble modulation system increases recording capacity most significantly. In the case of land/groove recording, the zone structure of FIG. 48 is used. However, if zone allocation is made so that one round becomes an integer multiple of ECC block, recording efficiency becomes very low.

In contrast, as in the present embodiment, after one ECC block has been divided into a plurality of physical segments (7 segments in the present embodiment), if a zohe is set to be allocated so that one round on an information recording medium becomes an integer multiple of physical segment, recording efficiency becomes very high.

<Even if recording density is increased in accordance with a high image quality video, up to a scratch of a surface with a length identical to a length defined in the current DVD standard can be corrected>

Advantageous Effect <7>

As compared with a current SD video, where an HD video is recorded in an information recording medium by file or folder separation, an HD video has high resolution, and thus, it is necessary to increase a recording capacity of an information recording medium. In the present embodiment, a modulation system in which "d = 1" is established is employed, whereby recording density is increased more significantly as compared with a current DVD. When recording density is increased, a range of effect on recording data caused by a scratch of the same length adhering to the surface of the information recording medium becomes relatively increased.

In a current DVD, one ECC block comprises 16 sectors. In contrast, in the present embodiment, one ECC block comprises 32 sectors which are twice as many as the number of conventional sectors. In this manner, even if recording density is increased in accordance with a high image quality video, it is possible that up to a scratch of a surface with the same length as a length defined in the current DVD standard can be corrected. Further, the ECC block comprises two small ECC blocks and the one sector is allocated to be distributed into two ECC blocks, whereby the data in the same sector is substantially interleaved, making it possible to reduce a longer scratch or an effect on a burst error more remarkably. During reproduction, by employing the PRML technique, an error correction process is carried out during ML demodulation, and thus, an effect on reproduction signal degradation caused by the dust or scratch on a surface is minimized.

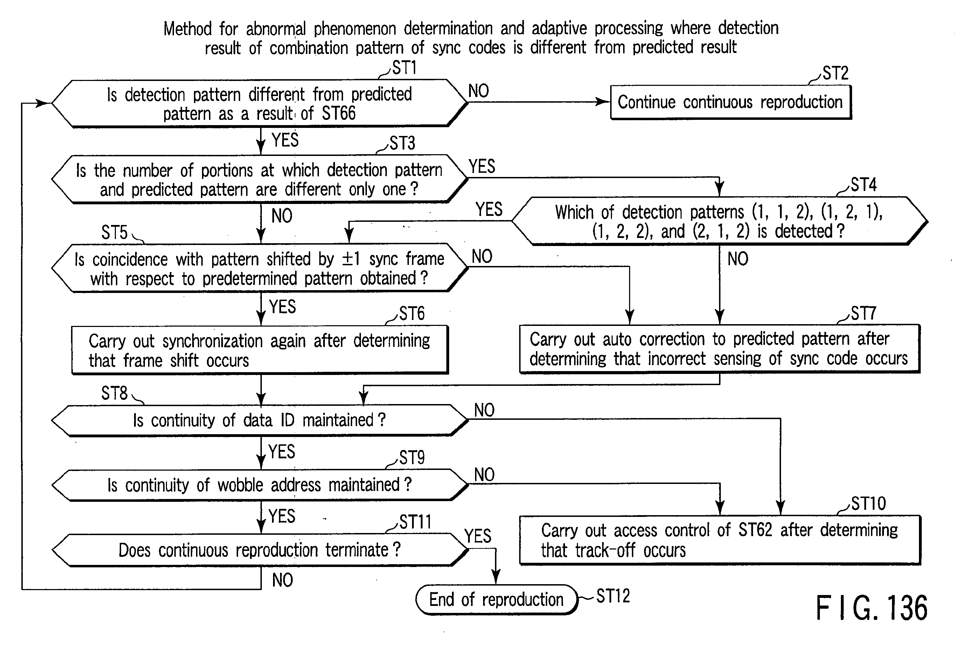

In a current DVD standard, where incorrect detection occurs with a sync code due to the scratch adhering on the surface of the information recording medium, a frame shift occurs. Thus, the error correction capability in an ECC block has been significantly degraded. In contrast, in the present embodiment, where incorrect detection occurs with a sync code due to the scratch adhering to the surface of the information recording medium, the incorrect detection can be discriminated from a frame shift. Therefore, in addition to preventing a frame shift, incorrect detection of a sync code can be automatically corrected as shown in step ST7 shown in FIG. 136. Thus, the detection precision and detection stability of a sync code are remarkably improved.

As shown in FIG. 41, in a guard area, sync code 433 and sync data 434 are combined with each other. Thus, even if a sync code is incorrectly detected due to the scratch or dust before and after the guard area, such sync code can be automatically corrected in the same manner as that in a sector. As a result, the degradation of the error correction capability of ECC block is prevented, enabling error correction with high precision and high reliability. In particular, in a system lead-in area, recording density is significantly reduced. Thus, even if a scratch or dust with the same physical length is made in this area, an error propagation distance is reduced (the number of data bits resulting in an error in the same ECC block becomes relatively reduced). Thus, advantageous effect of error correction by an ECC becomes greater. In addition, in the system lead-in area, a physical interval between sync codes is increased. Thus, even if a scratch or dust with the same physical length is made in this area, a probability that both of two sync codes are erroneously detected is remarkably reduced. Therefore, the detection precision of a sync code is remarkably improved.

Advantageous Effect <8>

A high image quality sub-picture is required in accordance with a high image quality video for recording an information recording medium. However, if a sub-picture is changed from conventional 2 bit expression to 4 bit expression, an amount of data to be recorded is increased. Thus, a large capacity of an information recording medium for recording the data is required. In the present embodiment, a modulation system in which "d = 1" is established is employed, whereby recording density is increased more significantly as compared with a current DVD. When recording density is high, the range of effect on recording data caused by a scratch with the same length adhering to the surface of the information recording medium becomes relatively large.

In a current DVD, one ECC block comprises 16 sectors. In contrast, in the present embodiment, one ECC block comprises 32 sectors which are twice as many as the number of the conventional sectors. Even if recording density is increased in accordance with a high image quality video, it is possible that a surface scratch with a length identical to a length defined in the current DVD standard can be corrected. Further, the ECC block comprises two small ECC blocks, and the data in the same sectors are substantially interleaved, and an effect on a longer scratch or a burst error can be reduced. In addition, by employing the PRML technique for reproduction, an error correction process is carried out during ML demodulation, and thus, an effect on degradation of a reproduction signal due to the surface dust or scratch is minimized. In addition, in a current DVD standard, where incorrect detection occurs with a sync code due to a scratch adhering to the surface of the information recording medium, a frame shift occurs. Thus, the error correction capability in an ECC block has been remarkably reduced. In contrast, in the present embodiment, where incorrect detection occurs with a sync code due to a scratch adhering to the surface of the information recording medium, the incorrect detection can be discriminated from a frame shift. Thus, in addition to preventing a frame shift, as shown in step ST7 shown in FIG. 136, incorrect detection of a sync code can be automatically corrected. Thus, the detection precision and detection stability of a sync code are remarkably improved.

In addition, as shown in FIG. 41, in a guard area, the sync code 433 and the sync data 434 are combined with each other. Thus, after a scratch or dust has adhered before or after the guard area, even if a sync code is incorrectly detected, such sync code can be automatically corrected in the same manner as that in a sector. As a result, the degradation of error correction capability of ECC block is prevented, enabling error correction with high precision and high reliability. In particular, in the system lead-in area, recording density is remarkably reduced. Thus, if a scratch or dust with a physical length is made in this area, an error propagation distance is reduced (the number of data bits resulting in an error in the same ECC block is relatively reduced). Therefore, advantageous effect of error correction by the ECC block becomes greater. In addition, in the system lead-in area, a physical interval between sync codes becomes large. Thus, even if a scratch or dust of the same physical length adheres, a probability that both of two sync codes are erroneously detected is remarkably reduced. Therefore, the detection precision of a sync code is remarkably improved.

Advantageous Effect <9>

In response to a current SD video, where an HD video is recorded on an information recording medium by file or folder separation, the HD video has high resolution, and thus, it is necessary to increase a recording capacity of an information recording medium. In the present embodiment, by employing a modulation system in which "d = 1" is established, recording density is increased more significantly as compared with a current DVD. When recording density is high, the range of effect on recording data caused by a scratch of the same length adhering to the surface of the information recording medium becomes relatively large.

In a current DVD, one ECC block comprises 16 sectors. In contrast, in the present embodiment, one ECC block comprises 32 sectors which are twice as many as the number of conventional sectors. Even if recording density is increased in accordance with a high image quality video, it is possible that a surface scratch adheres up to the same length as a current scratch. Further, in the present embodiment, the ECC block comprises two small ECC blocks, and PO data belonging to small ECC blocks which are different from each other on a sector-by-sector basis is inserted. Thus, the PO data recorded in small ECC blocks is allocated to be interleaved (distributed) in alternate sectors. Therefore, the reliability against a scratch on PO data is increased, and error correction processing with good precision is enabled.

In a current DVD standard, where incorrect detection occurs with a sync code due to a scratch adhering to the surface of the information recording medium, a frame shift occurs. Thus, the error correction capability in the ECC block has been remarkably reduced. In contrast, in the present embodiment, where incorrect detection occurs with a sync code due to a scratch adhering to the surface of the information recording medium, the incorrect detection can be discriminated from a frame shift. In addition to preventing a frame shift, as shown in ST7 of FIG. 136, incorrect detection of a sync code can be automatically corrected. Thus, the detection precision and detection stability of a sync code is remarkably improved.

As shown in FIG. 41, in a guard area, the sync code 433 and sync data 434 are combined with each other. Thus, after a scratch or dust has adhered before and after the guard area, even if a sync code is incorrectly detected, such sync code can be automatically corrected in the same manner as that in a sector. As a result, the degradation of error correction capability of ECC block is prevented, and error correction with high precision and high reliability is enabled. In particular, in the system lead-in area, the recording density is remarkably reduced. Thus, even if a scratch or dust with the same physical length is made in this area, an error propagation distance is reduced. The number of data bits resulting in an error in the same ECC block is relatively reduced. Therefore, advantageous effect of error correction by the ECC block becomes greater. In addition, in the system lead-in area, the physical interval between sync codes is increased. Thus, even if a scratch or dust of the same physical length is made in this area, a probability that both of two sync codes are erroneously detected is remarkably reduced. Therefore, the detection precision of a sync code is remarkably improved.

Advantageous Effect <10>

A high image quality sub-picture is required in accordance with a high image quality video recorded in an information recording medium. However, if a sub-picture is changed from conventional 2 bit expression to 4 bit expression, the number of data to be recorded is increased. Thus, a large capacity of an information recording medium for recording the data is required. In the present embodiment, by employing a modulation system in which "d = 1" is established, recording density is increased more significantly as compared with a current DVD. When recording density is high, the range of effect on recording data caused by a scratch of the same length adhering to the surface of the information recording medium is relatively large. In a current DVD, one ECC block comprises 16 sectors. In contrast, in the present'embodiment, one ECC block comprises 32 sectors which are twice as many as the number of conventional sectors. Even if recording density is increased in accordance with a high image quality video, it is possible that a surface scratch up to the same length as a conventional scratch can be corrected. Further, in the present embodiment, the ECC block comprises two small ECC blocks. In addition, PO data belonging to small ECC blocks which are different from each other on a sector-by-sector basis is inserted. Thus, PO data recorded in small ECC blocks is allocated to be interleaved (distributed) in alternate sectors. Thus, the reliability against PO data damage is improved, and an error correction process with good precision is enabled.

In a current DVD standard, where incorrect detection occurs with a sync code due to a scratch adhering to the surface of the information recording medium, a frame shift occurs. Thus, the error correction capability in the ECC block has been remarkably degraded. In contrast, in the present embodiment, where incorrect detection occurs with a sync code due to a scratch adhering to the surface of the information recording medium, the incorrect detection can be discriminated from a frame shift. Thus, it is sufficient if a frame shift is prevented. As shown in step ST7 shown in FIG. 136, incorrect detection of a sync code can be automatically corrected. Therefore, the detection precision and detection stability of a sync code are remarkably improved.

As shown in FIG. 41, in a guard area, the sync code 433 and sync data 434 are combined with each other. Thus, after a scratch or dust has adhered before or after the guard area, even if a sync code is incorrectly detected, such sync code can be automatically corrected in the same manner as in a sector. As a result, the degradation of error correction capability of ECC blocks is prevented, and error correction with high precision and high reliability is enabled. In particular, in the system lead-in area, recording density is remarkably reduced. Thus, even if a scratch or dust of the same physical length is made in this area, an error propagation distance is reduced. The number of data bits resulting in an error in the same ECC block is relatively reduced. Therefore, advantageous effect of error correction by the ECC block becomes greater. In the system lead-in area, a physical interval between sync codes becomes large. Thus, eve if a scratch or dust of the same physical length is made in this area, a probability that both of two sync codes are erroneously detected is remarkably reduced. Therefore, the detection precision of a sync code is remarkably improved.

Advantageous Effect <26>

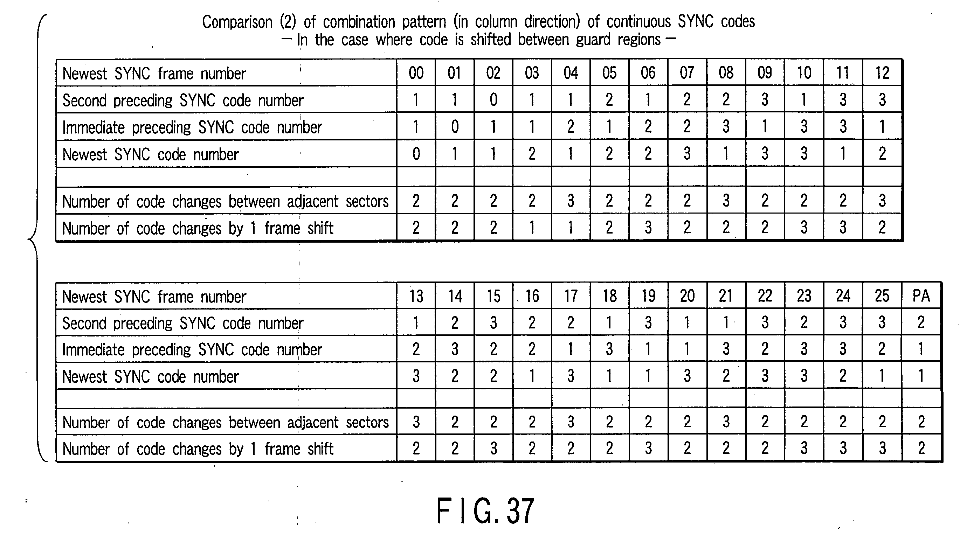

In the present embodiment, even if data is recorded at a high density, an ECC block is structured so as to enable error correction against a scratch whose length is equal to a conventional scratch. However, even if an ECC block is strength to the maximum, as long as an access to a desired site cannot be provided due to an effect of a scratch adhering to a surface, information cannot be reproduced. In the present embodiment, the occupancy ratio in a non-modulation area is set to be higher than that in a modulation area, and wobble address information is allocated to be distributed. In this manner, even if a long scratch is made, an effect of error propagation on wobble address information to be detected is reduced. In addition, since a synchronizing code allocating method is structured as shown in FIGS. 36 and 37, error correction against one synchronizing code detection error is enabled. With this combination, even if a scratch of the same length as a conventional scratch is made on the surface of the information recording medium, address information and position information recorded in sectors can be stably read, and high reliability during reproduction can be maintained.

<Reliability of (reproduction signal detection from) information recorded in information recording medium is remarkably improved>

Advantageous Effect <22>

In the present embodiment, technical improvements shown in the above advantageous effects (D) to (F) are made, whereby error correction capability is improved more significantly as compared with a current DVD format, and the reliability of (reproduction signal detection from) information recorded in an information recording medium is improved.

In general, in an error correction method using ECC blocks, as is evident from the fact that, if an error quantity before error correction exceeds the limit, error correction is disabled, a relationship between an original error rate before error correction and an error rate after error correction is linear. The lowered original error rate before error correction greatly contributes to improvement of error correction capability using ECC blocks.

The PRML technique employed in the present embodiment comprises capability of error correction during ML demodulation. Thus, the PRML technique and the error correction technique using ECC blocks are combined with each other, thereby providing information reliability which is equal to or greater than when correction capabilities of these techniques are added.

Advantageous Effect (23)

In response to a current SD video, where an HD video is recorded on an information recording medium by file or folder separation, the HD video has high resolution, and thus, it is necessary to increase recording capacity of an information recording medium. In addition, a high image quality sub-picture is also required in accordance with a high image quality video recorded in an information recording medium. However, if a sub-picture is changed from 2 bit expression to 4 bit expression, an amount of data to be recorded is increased. Thus, a large capacity of an information recording medium for recording the data is required. Therefore, in the present embodiment, there has been described in advantageous effects <1> and <2> that an information recording medium suitable for recording of an HD video and a high image quality sub-picture can be provided by combining land/groove recording and wobble modulation.

In the case where land/groove recording, when a step between a land and a groove (groove depth) is set to $\lambda/(5n)$ to $\lambda/(6n)$ with respect to a use wavelength $\lambda$ and refractive index "n" of a transparent substrate, it is known that a cross-talk quantity between the adjacent tracks during reproduction can be reduced. However, if a pitch between a land and a groove is narrowed in order to achieve a large capacity for an information recording medium suitable for recording of an HD video and a high image quality sub-picture, there occurs a cross-talk between the adjacent tracks during reproduction, and a large noise component is superposed on a reproduction signal. In order to solve this problem, in the present embodiment, an effect of noise is eliminated during ML demodulation, and a narrow pitch between a land and a groove has been achieved by employing the PRML.

Advantageous Effect (25)

In response to a current SD video, where an HD video is recorded on an information recording medium by file or folder separation, the HD video has high resolution, and thus, it is necessary to increase a recording capacity of an information recording medium. At the same time, a high image quality sub-picture is also required in accordance with a high image quality video recorded in an information recording medium. However, if a sub-picture is changed from 2 bit expression to 4 bit expression, an amount of data to be recorded is increased. Thus, a large capacity of an information recording medium for recording the data is further required.

In the present embodiment, by employing a modulation system in which "d = 1" is established, recording density is increased more significantly as compared with a current DVD, and further improvement of recording density is achieved by using land/groove recording and wobble modulation together. If recording density is high, stable signal reproduction or detection from a recording mark recorded in an information recording medium becomes difficult. In order to stabilize the signal reproduction or detection from the recording mark at such a high density, the present embodiment employs the PRML technique. In the PRML technique, if a local level change appears with a reproduction signal, the precision of reproduction signal detection is lowered.

In the present embodiment, one item of track information which is different from another depending on a land area and a groove area is set, and thus, an uncertain bit as shown in FIG. 50 occurs. In an uncertain bit area, a groove or land width is locally changed, and thus, a local level change of a reproduction signal occurs at an uncertain bit site.

In order to reduce this failure, the present embodiment employs a gray code or a specific track code at a site for specifying track information. In this manner, the frequency of generating uncertain bits is reduced, and uncertain bits are allocated to be distributed to a land area and a groove area, whereby the frequency of an occurrence of level change is remarkably reduced. Further, in the above uncertain bit, by utilizing the fact that the above uncertain bit appears only in a wobble modulation area, the occupancy ratio of a non-modulation area is increased more significantly than a modulation area in combination with the above described reduction method. In this manner, the frequency of an occurrence of level change of a reproduction signal is extremely lowered, and the precision of signal reproduction or detection from a recording mark is remarkably improved.

<Complete compatibility between a read only and a write once type can be obtained, and recording (write once) processing in finer units is possible>

Advantageous Effect <11>

In a current DVD-R or DVD-RW, recording (write-once) or rewriting in finer units is impossible. If an attempt is made to carry out restricted overwrite processing in order to forcibly record (write-once) or rewrite, there has been a problem that part of information already recorded is damaged. As in the present embodiment, plural types of recording formats can be set for a read only medium, and a recording format having a guard area can be provided between ECC blocks for a read only medium, enabling complete compatibility between a read only and a write once type. Further, recording (write-once) or rewriting can be carried out from the middle of this guard area, and thus, there is no danger that information recorded in the ECC blocks, the information being already recorded by recording (write-once) or rewriting process is damaged. At the same time, in this guard area, a part of the guard area is recorded in an overlap manner during recording (write-once) or rewriting. Thus, in order to prevent a gap area in which no recording mark exists in a guard area, an effect of a cross-talk between two layers due to this gap area can be eliminated, and a problem with an inter-layer cross-talk in a single-sided double-recording layer can be solved at the same time.

In addition, in this guard area, a part of the guard area is recorded in an overlap manner during recording (write-once) or rewriting. However, in the present embodiment, even if the area is recorded to be partially overlapped, the structure of sync code 433 and sync data 434 shown in FIG. 41 is maintained as is. Thus, there is advantageous effect that a position detection function using a synch code is maintained.

In the present embodiment, an ECC block as shown in FIG. 33 is formed. Therefore, during reproduction or during recording, there is a need for carrying out reproduction or recording in units of at least one ECC block. Therefore, where reproduction or recording is carried out at a high speed and with high efficiency, processing in units of ECC blocks is provided as the finest unit. Therefore, as shown in the present embodiment, a recording cluster which is a unit of rewriting or recording is formed as a set of data segments each including only one ECC block, thereby enabling recording (write-once) or rewriting in the substantially finest unit.

<Protection of high image quality video and identification of medium type>

Advantageous Effect (5)

In response to a current SD video, where an HD video is recorded on an information recording medium by file or folder separation, there is a strong demand for the HD video with high resolution and for strengthening protection from illegal copy. As in the present embodiment, the ECC block is divided into a plurality of segments; two types of recording formats are provided in a read only type information recording medium; and a guard area is provided between ECC blocks with respect to a high image quality video targeted for protection from illegal copy. In this manner, format compatibility among read only type, write once type, and rewritable type can be maintained, and medium type can be easily identified.

In addition, protection information (encryption key information) for identification of medium type or protection from illegal copy and copy control information are recorded in an extra area 482 in a guard area, as shown in FIG. 41, and protection from illegal copy can be strengthened. In particular, in a recording cluster representing a rewriting unit or an recording (write-once) unit in rewritable medium or write once type medium (shown in FIG. 41), data segments having the completely same structure as those for a read only type information recording medium are continuously arranged. Thus, in a recording cluster, format compatibility among a read only, a write once, and a rewritable type is extremely high, and thus, an information recording and reproducing apparatus or an information reproducing apparatus maintaining compatibility can be easily manufactured. In addition, a write once or rewritable type information recording medium enables protection from illegal copy strongly as in a read only type.

Advantageous Effect (6)

A high image quality sub-picture is also required in accordance with a high image quality video recorded in an information recording medium. There is a strong demand for strengthening protection from illegal copy with respect to a high image quality sub-picture changed from conventional 2 bit expression to 4 bit expression. As in the present embodiment, the ECC block is divided into a plurality of segments; two types of recording formats are provided in a read only information medium; and a guard area is provided between ECC blocks with respect to a high image quality sub-picture targeted for protection from illegal copy. In this manner, format compatibility among a read only, a write once, and a rewritable type can be maintained, and medium type can be easily identified.

In addition, protection information (encryption key information) for identification of medium type or protection from illegal copy and copy control information are recorded in the extra area 482 in a guard area, as shown in FIG. 41, and protection from illegal copy can be strengthened. In particular, in a recording cluster representing a rewriting unit or an recording (write-once) unit in a rewritable type and a write once type (shown in FIG. 41), there is provided a structure in which data segments having the completely same structure as those for a read only type information recording medium are continuously arranged. Thus, in a recording cluster, format compatibility among a read only, a write once, and a rewritable type is extremely high, and thus, an information recording and reproducing apparatus or an information reproducing apparatus maintaining compatibility can be easily produced. In addition, a write once type or a rewritable type information recording medium enables protection from illegal copy strongly as in a read only.

<Precision of identifying address information is enhanced, and an access speed is ensured>

Advantageous Effect <12>

At a portion which does not include an uncertain bit but includes an error detection code, track information can be detected with a very high precision. Thus, in the present embodiment, an uncertain bit is allocated in a groove area as well, and uncertain bits are allocated to be distributed to both of a land area and a groove area. In this manner, it is possible to form such a portion in a land area that does not include an uncertain bit but includes an error detection code. As a result, the precision of identifying address information is enhanced, and a predetermined access speed can be maintained. In addition, the present embodiment employs a wobble phase modulation of $\pm 90$ degrees, thus making it easy to produce an uncertain bit in a groove area as well.

<Improvement of reference clock sampling precision>

Advantageous Effect <13>

In the present embodiment, a wobble frequency (wobble wavelength) is constant anywhere, and thus, this wobble period is detected to do the followings:

(1) Sampling of a reference clock for wobble address information detection (phase alignment with a frequency)
(2) Sampling of a reference clock for reproduction signal detection during signal reproduction from a recording mark (phase alignment with a frequency)
(3) Sampling a reference clock for recording when a recording mark is formed in a rewritable type information recording medium and a write once type information recording medium (phase alignment with a frequency)

In the present embodiment, wobble address information is recorded in advance by using wobble phase modulation.
In the case where wobble phase modulation has been carried out, if a reproduction signal is passed through a band pass filter in order to shape'a waveform, there appears a phenomenon that a detection signal waveform amplitude after shaped becomes small before and after a phase change position. Therefore, if the frequency of phase change points due to phase modulation is increased, a waveform amplitude fluctuation becomes frequent. Then, the above clock sampling precision is reduced. Conversely, if the frequency of phase change points is low in a modulation area, there occurs a problem that a bit shift is likely to occur during wobble address information detection. Therefore, in the present embodiment, there are provided a modulation area and a non-modulation area due to phase modulation, and the occupancy ratio of non-modulation area is increased, whereby there is advantageous effect that the above clock sampling precision is improved.
In the present embodiment, a switch position between a modulation area and a non-modulation area can be predicted in advance. Thus, a gate is applied to a non-modulation area in response to the above described clock sampling to detect a signal only in the non-modulation area. From that detected signal, it becomes possible to carry out the above clock sampling.

<A track number can be reproduced reliably in land, whereby the track number reproduction precision on land is increased>

Advantageous Effect <14>

At a portion which does not include an uncertain bit but includes an error detection code, track information can be detected with a very high precision. Thus, in the present embodiment, an uncertain bit is allocated in a groove area as well, and uncertain bits are allocated to be distributed to both of a land area and a groove area. In this manner, it is possible to form such a portion in a land area that does not include an uncertain bit but includes an error detection code. As a result, on a land area as well, it becomes possible to read a track number with a high reproduction precision, and access stability at a land area and a high access speed can be maintained.

<In an ECC block, uncertain bits are prevented from being longitudinally arranged on a straight line, and error correction capability is ensured>

Advantageous Effect <15>

In the present embodiment, 32 sectors and 7 segments configure an ECC block. These sectors and segments each have a non-dividable relationship (undefined multiple relationship). Thus, in an ECC block shown in FIG. 33, the start position of each segment is allocated at their shifted position. In a wobble address format shown in FIG. 53, there is a possibility that an uncertain bit 504 shown in FIG. 50 is mixed into groove track information 606 and land track information 607. In this uncertain bit area 504, a groove width or a land width is changed, and thus, a level of a reproduction signal from this change point fluctuates, causing an occurrence of an error. As in the present embodiment, the number of sectors and the number of segments forming an ECC block are in an undefined multiple relationship. In this manner, as is the start position of each segment described above, there is advantageous effect that uncertain bits are prevented from being longitudinally arranged on a straight line in an ECC block shown in FIG. 33. In this manner, allocation of uncertain bits is shifted; uncertain bits are prevented from being longitudinally arranged in an ECC block; and the performance for error correction capability in an ECC block can be ensured. As a result, an error rate (after correction) of reproduction information from a recording mark recorded in an information recording medium is reduced, and reproduction with high precision is enabled.

Further, in the present embodiment, where incorrect detection occurs with a synch code due to a defect of an information recording medium, the incorrect detection can be discriminated from a frame shift, thus preventing a frame shift. In addition, as shown in step ST7 of FIG. 136, incorrect detection of a sync code can be automatically corrected, and thus, the detection precision and detection stability of a sync code are substantially improved.

As a result, degradation of the error correction capability of an ECC block is prevented, enabling error correction with high precision and high reliability.

Thus, uncertain bits are prevented from being longitudinally arranged on a straight line in an ECC block, and error correction capability is ensured. In addition, there is advantageous effect that the detection precision of a sync code is enhanced, and the allocation site setting precision in an ECC block for frame data is enhanced, whereby error correction capability is enhanced more significantly by weighting action of both parties (the lowering of error correction capability is stopped).

<Current position information can be identified at a high speed, thus making it possible to improve reliability of high speed access or reproduction>

Advantageous Effect <16>

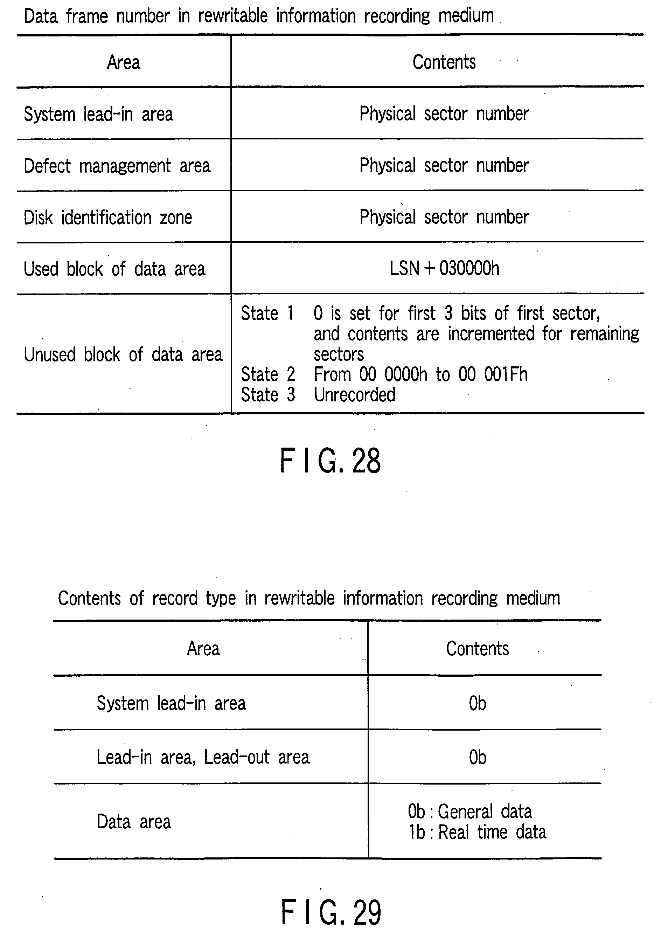

Together with a high image quality main picture, where high image quality sub-picture information is recorded in a file or folder other than a current SD video, in the present embodiment, as shown in FIGS. 40 and 41, recording is carried out in an information recording medium in a format in a guard area is inserted by data area 470 forming one ECC block. At the beginning in this guard area, a post-amble area 481 having the recorded sync code 433 therein is set. Thus, by the methods shown in FIGS. 136, 36, and 37, in both of the guard area and a data area 470, a current reproduction site can be identified at a high speed and with very high precision. A sector number can be identified based on data frame number information of FIG. 27. However, when a current reproduction site is identified, it is possible to predict how long it takes for this data frame number position to come while in continuous reproduction. A timing of opening a detection gate is identified in advance, and thus, the precision of reading a sector number is remarkably improved. When the precision of reading a sector number is improved, the following advantages can be achieved.

    (1) In the course of access, a displacement quantity from a target reach position can be precisely measured without an occurrence of a read error, and access can be provided at a high speed.
    (2) While in continuous reproduction, reproduction processing can be continued while a sector number of a reproduction site is precisely checked, and the reliability of reproduction processing is significantly improved.

Further, in the same recording cluster, intervals of the sync codes 433 allocated at the beginning in a guard area are constant anywhere, and thus, a timing of opening a gate at a data frame number position can be predicted more precisely. Therefore, the precision of reading a sector number is further improved.

<Reliability of lead-in area reproduction and recording efficiency are ensured at the same time>

Advantageous Effect <17>

As described later in detail, it is difficult to reproduce lead-in area information in a stable manner in accordance with DVD-R and DVD-RW specifications (Version 1.0), where the information has been recorded in advance (Unreadable emboss). In particular, a reproduction signal amplitude from a portion with high density is reduced. Thus, if the entire recording density is lowered, a relative signal amplitude from the densest bit position is improved, and the stability and reliability of signal reproduction is improved. However, in this case, the recording density of the lead-in area is lowered. Therefore, there occurs a problem that the recording capacity of the entire information recording medium is lowered.

According to the present embodiment, in any information recording medium of a read only, write once, or rewritable type, a portion called a lead-in area is divided into a system lead-in area and a data lead-in area. Irrespective of medium type, i.e., a read only, write once, or rewritable type, information required in common is recorded in a system lead-in area having low recording density; and items of information specific to information storage media of a read only type and a rewritable type are recorded in a data lead-in area having high recording density (in this lead-in area, by using a modulation system in which "d = 1" is established, signal detection using the PRML is carried out, thereby making it possible to achieve higher density than conventionally). In addition, with respect to a write once type information recording medium, a data lead-in area is utilized as a test writing area, thereby making it possible to prevent the lowering of the use efficiency of the entire lead-in area and to achieve a large capacity of the entire information recording medium.

Advantageous Effect <18>

Even if recording density is lowered, the depth of pit on emboss is small in a write once type information recording medium. Thus, the reliability during signal reproduction in a system lead-in area is inferior as compared with a read only type or a rewritable type (because a reproduction signal amplitude is low).

Therefore, the reliability during signal reproduction can be improved by employing an ECC structure shown in FIGS. 31 to 33.

Advantageous Effect <19>

Even if recording density is lowered, the depth of pit on emboss is small in a write once type information recording medium. Thus, the reliability during signal reproduction in a system lead-in area is inferior as compared with a read only type or a rewritable type (because a reproduction signal amplitude is low).

Therefore, a sync code pattern (sync frame structure) shown in FIGS. 34 to 37 is employed, and an error correction processing is carried out for a sync code by the method shown in FIG. 136, thereby making it possible to ensure the reliability of signal reproduction from a system lead-in area.

<Ensuring reliability of address information after repetition rewriting>

Advantageous Effect <27>

In the present embodiment, an extended guard area is provided at the end of a recording cluster. A structure is provided such that overlap recording is carried out between recording clusters to be added next or to be written at the above portion. In this manner, by providing a structure in which no gap is provided between the recording clusters, an inter-layer cross-talk is eliminated during reproduction on a write once type or a rewritable type information recording medium of a single sided double-recording layer. In the meantime, if the number of rewriting becomes large, the shape of a wobble groove or a wobble land at this overlapped portion is changed, and wobble address detection signal characteristics derived therefrom is degraded. If a track shift occurs during recording, there is a danger that data already recorded is damaged. Thus, there is a need for earlier detect such a track shift. In the present embodiment, the overlapped portion of the above described recording data is set in a guard area which exists between ECC blocks, thus making it possible to reduce wobble address detection signal degradation in an ECC block even if the rewrite count is increased, and to earlier detect a track shift in an ECC block. Further, the occupancy ratio of a non-modulation area is set to be higher than that of a modulation area, and settings can be provided so that the above overlap recording site reaches a non-modulation area. Thus, even if the number of rewriting is increased, stable wobble address signal detection can be guaranteed.

<Properties of manufacturing medium>

Advantageous Effect <24>

In the present embodiment, a phase modulation of ±90 degrees is used for wobble modulation. Thus, during recording of an original master, uncertain bits are allocated to be distributed to a groove area by a very simple method such as a method for changing exposure strength with respect to a photo resist layer during production of a groove area. In addition, uncertain bits can be allocated to be distributed to a land area or a groove area. Thus, a manufacturing cost of a rewritable type information recording medium is reduced, and a rewritable type information recording medium at a low price can be provided to a user.

Now, an information recording medium according to one embodiment will be described in detail.

[1] Description of format for recording video information on information recording medium

FIG. 3 shows an example of allocating a video information file on an information recording medium. A current SD (Standard Definition) object file (current SD specific title object (VTS1TT_VOBS) file 216) and management files 206, 208, 211, and 213; and an HD (High Definition) compatible object file (high image quality HD specific title object (VTS2TT_VOBS) file 217) and management files 207, 209, 212, and 214 are separately independent of each other, and are allocated altogether in a current DVD-video exclusive directory 202.

In another example shown in FIG. 4, the current SD object file (current SD specific object (VTS1TT_VOBS) file 216) and the management files 206, 208, and 211; and the HD compatible object file (high image quality HD specific title object (VTS2TT_VOBS) file 217) and the management files 207, 209, and 212 are allocated separately under other a current DVD-video (SD) exclusive directory 203 and a high definition DVD-video (HD) exclusive directory 204, respectively. In this manner, when the object files and management files are separated for SD and HD, file management is facilitated, and preparation for an SD or HD decoder becomes possible before reproduction of an object file, and a preparation time for starting picture reproduction is significantly reduced.

[Individual points of the present embodiment and description unique advantageous effect by the individual points]

Point (A)

As shown in FIGS. 3 and 4, separate management on an information recording medium becomes possible for the current SD (Standard Definition) object file and management files and an HD (High Definition) object file and management files compatible with a high image quality video by file separation or directory (folder) separation.

[Advantageous Effect]

When object files and management files recorded on an information recording medium are separated for SD and HD, it is possible to discriminate what file is in advance before reproduction of an object file. As a result, preparation for an SD or HD decoder becomes possible before reproduction of an object file; a preparation time for starting video reproduction is significantly reduced; and video reproduction can be started immediately when the user want to see it.

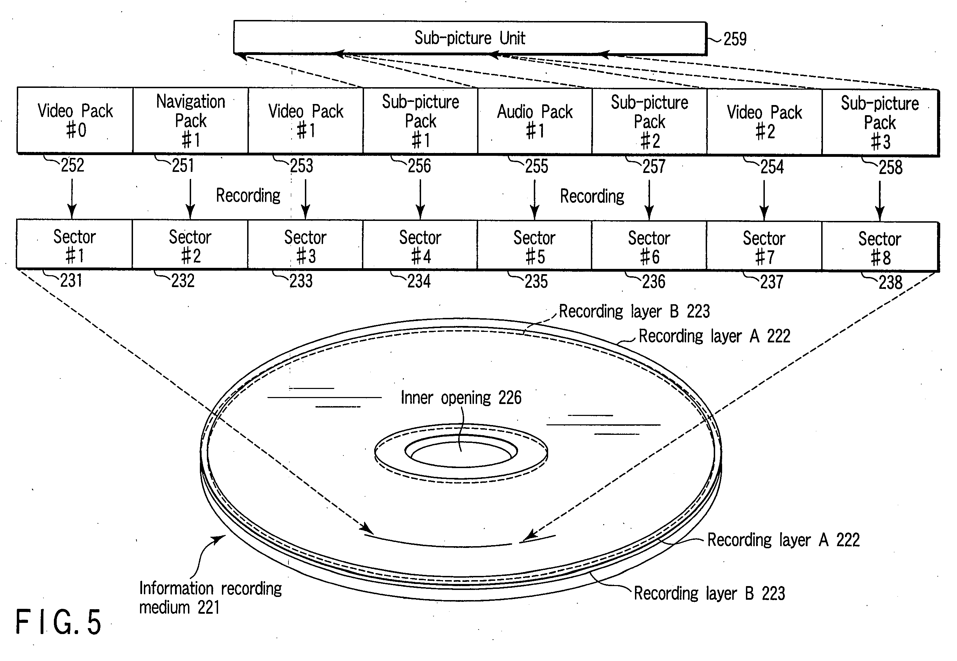

According to the present embodiment, as shown in FIG. 5, in accordance with a multiplication rule specified in an MPEG layer 2, recording on an information recording medium is carried out in the form of program stream. That is, the main picture information recorded in video information is allocated to be distributed in video packs 252 to 254, and audio information is allocated into distributed in an audio pack 255. In a system according to the present embodiment, although not shown, a navigation pack 251 is allocated at the start position of a video object unit VOBU (Video Object Unit) which is a minimum unit of video information. In addition, sub-picture information SB (sub-picture) indicating subtitles or menus is defined independent of the main picture recorded in the video packs 252 to 254. Sub-picture information is allocated to be distributed in sub-picture packs. Sub-picture information is recorded to be distributed into sub-picture packs 256 to 258. When video information is reproduced from an information recording medium, sub-picture information recorded to be distributed into the sub-picture packs 256 to 258 is collected to form a sub-picture unit 259. Then, video processing is carried out by a video processor (not shown), and then, the processed video is displayed to the user.

In the present embodiment, sectors 231 to 238 each having 2,048 bytes in size are provided as a unit of management of information recorded on an information recording medium 221. Therefore, a data size of each of packs 241 to 248 is also set to 2,048 bytes in accordance with the sector size.

[2] Expression format of, and compression rule on, video information (point (B))

- Run-length compression rule -

Run-length compression is employed to compress a sub-picture. Some compression rules will be described here. Some compression rules have been developed as SD compatible and HD compatible rules.

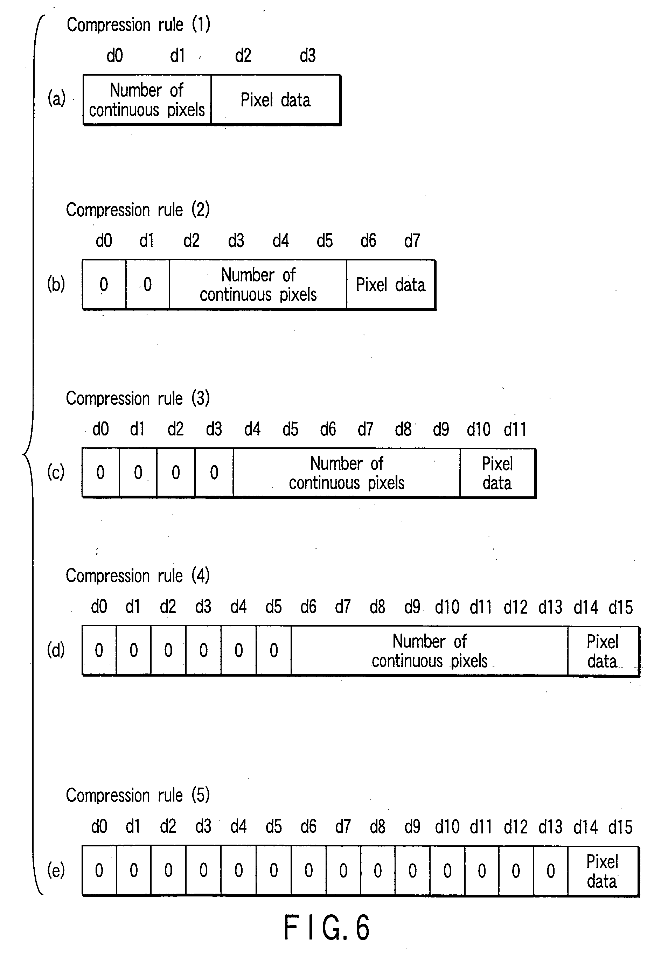

(1) A case in which 4 bits are set as one unit (refer to compression rule (1) on sub-picture information in FIG. 6).
In the case where picture element data (pixel data) for the same values is continuously set by one to three items, the first 2 bits (d0, d1) indicates the number of picture elements (the number of pixels), and specific pixel data is represented by the subsequent 2 bits (d2, d3).
(2) A case in which 8 bits are set as one unit (refer to compression rule (2) on sub-picture information in FIG. 6).
In the case where picture element data (pixel data) for the same values is continuously set by 4 to 15 items, the first 2 bits (d0-d1) are defined as 0. The subsequent 4 bits (d2-d5) indicate the number of pixels, and specific pixel data is represented by the subsequent 2 bits (d6-d7).
(3) A case in which 12 bits are set as one unit (refer to compression rule (3) on sub-picture information in FIG. 6).
In the case where picture element data (pixel data) for the same values is continuously set by 16 to 63 items, the first 4 bits (d0-d3) are defined as 0. The subsequent 6 bits (d4-d9) indicate the number of pixels, and specific pixel data is represented by the subsequent 2 bits (d10-d11).
(4) A case in which 16 bits are set as one unit (refer to compression rule (4) on sub-picture information in FIG. 6).
In the case where picture element data (pixel data) for the same values is continuously set by 64 to 255 items, the first 6 bits (d0-d5) are defined as 0. The subsequent 8 bits (d6-d13) indicate the number of pixels, and specific pixel data is represented by the subsequent 2 bits (d14-d15).
(5) A case in which 16 bits are set as one unit (refer to compression rule (5) on sub-picture information in FIG. 6).
In the case where picture element data (pixel data) for the same values is continuously set up to the end of one line, the first 14 bits (d0-d13) are defined as 0. Specific pixel data is represented by the subsequent 2 bits (d14-d15).
(6) If a pixel for one line is expressed, when the pixel cannot be provided by byte alignment, dummy 4 bit data "0000b" is inserted for adjustment.

The above rules are used for compressing an SD sub-picture. In addition, a rule used for compressing an HD sub-picture has already been developed.

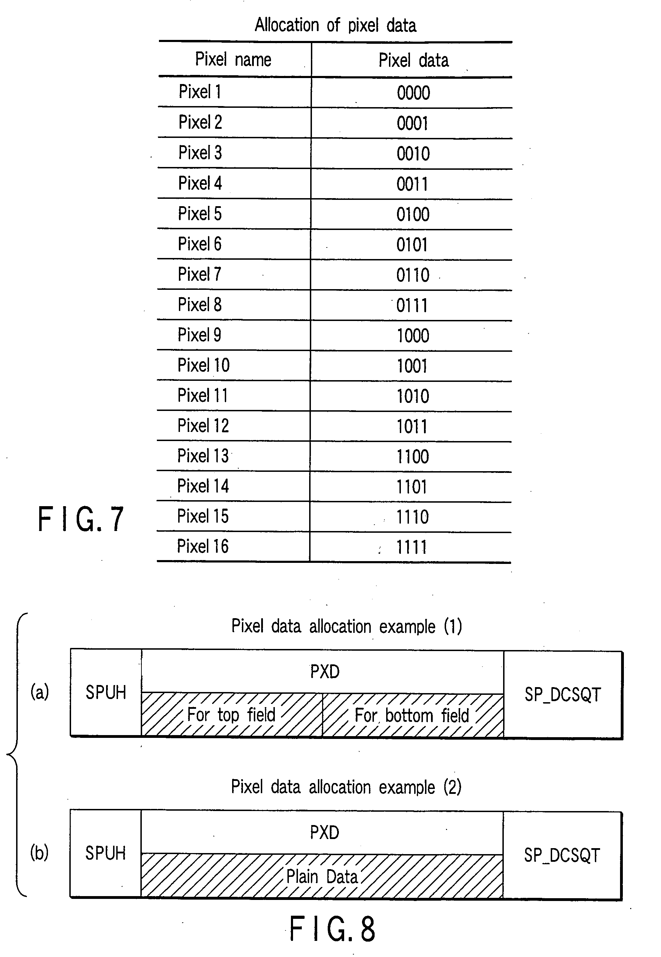

FIG. 7 shows how pixel data is expressed by 4 bits, and what pixel name is allocated to respective pixel data.
Pixel data is provided as data obtained by compressing bit map data on a row-by-row basis in accordance with a specific run length compression technique described on raw data or run length compression rule.
Pixel data shown in FIG. 7 is allocated to pixels of bit map data.
Pixel data is allocated to data discriminated in fields or plain data, as shown in FIG. 8. In each sub-picture unit SPU, pixel data is organized so that all of pixel data units displayed in 1 field are continuously set. In an example (a) shown in FIG. 8, pixel data for a top field is first recorded (after SPUH), and then, pixel data for a bottom field is recorded, and allocation of pixel data suitable for interlace display is made. In an example (b) shown in FIG. 8, plain data is recorded, and allocation of pixel data suitable for non-interlace display is made.

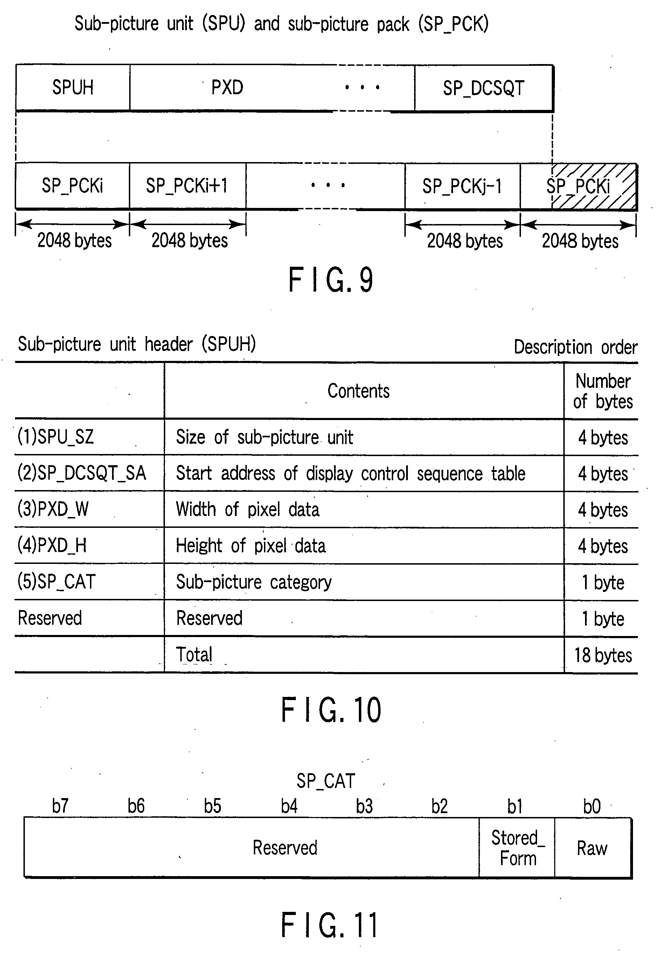

FIG. 9 shows a sub-picture unit used for collecting sub-picture information. Pixel data is allocated to data discriminated in fields in the sub-picture unit or plain data. In each sub-picture unit SPU, pixel data is organized so that all of pixel data units displayed in 1 field are continuously set. This sub-picture unit is provided as a unit constructed by collecting a plurality of sub-picture packets.
In an example (a) shown in FIG. 8, pixel data for a top field is first recorded (after SPUH), pixel data for a bottom field is then recorded, and allocation of pixel data suitable for interlace display is made. In an example (b) shown in FIG. 8, plain data is recorded, and allocation of pixel data suitable for non-interlace display is made. An even number of "00b" may be added at the end of pixel data so as to conform to a size restriction on SP_DCSQT. FIG. 9 shows a relationship between a sub-picture pack SP_PCK and a sub-picture unit SPU.
A sub-picture unit header SPUH comprises address information for data recorded in a sub-picture unit SPU. As shown in FIG. 10, there are described: 4 byte sub-picture unit size SPU_SZ; start address of 4 byte display control sequence table SP_DCSQT_SA; 4 byte pixel data width PXD_W; 4 byte pixel data height PXD_H; 1 byte sub-picture category SP_CAT; and 1 byte reservation.
Sub-picture unit size SPU_SZ describes the size of sub-picture unit in number of bytes. The maximum size is 524,287 bytes ("7FFFFh"). The size must be in even number bytes. If the size is in odd number bytes, 1 byte of "FFh" is added at the end of sub-picture data in order to be set in even number bytes. The size of the start address SP_DCSQT_SA in the sub-picture unit SPU is equal to or smaller than the size of the SPU.

The start address SP_DCSQT_SA describes the start address of the display control sequence table SP_DCSQT in relative byte number RBN from the start byte of the sub-picture unit. The maximum value of the pixel data width PXD_W is 1,920, and the maximum value of the pixel data height PXD_H is 1,080.

In the sub-picture category SP_CAT, as shown in FIG. 11, bit numbers b7 to b2 describe a reservation (Reserve); bit number b1 describes a flag "Stored_Form" indicating a method for storing data in a pixel data PXD area of 4 bits per pixel; and bit number b0 describes a flag "Raw" indicating run length compression or decompression of pixel data PXD.

The flag "Stored_Form" indicating a method for storing data in a PXD area specifies "0b" (top or bottom) where an interlace display is made. Display data is stored in one place and another by dividing the data into top and bottom. In this manner, there can be provided a data structure in which data can be easily retrieved, and an interlace display is easily made. In the case where a non-interlace display is made, this flag specifies "1b" (plain), and display data is stored in batch. In this manner, there can be provided a data structure in which data can be easily retrieved, and a non-interlace display is easily made. In an SD system, an interlace display is made, and in an HD system, a non-interlace display is made. This flag "Stored_Form" can be utilized for an HD decoder to enter a standby state.

The flag "Raw" indicating run length compression or decompression specifies "0b" (compression) for a stream of a subtitle with a good compression rate such as a subtitle. This flag specifies "1b" (decompression) for such a little bit complicated image stream which has a poor compression rate such as a pattern, and which causes an increase of data obtained after compression. In this manner, it becomes possible to specify compression or decompression in units of the sub-picture unit SPU. Information can be allocated to main picture data or any other data (such as audio), and efficient recording of sub-picture information into an information recording medium is enabled. Thus, high definition contents can be maintained. This flag "Raw" can be utilized for an HD decoder to enter a standby state.

When high image quality contents of a high definition TV system is recorded in a DVD video disk, it is required to record sub-picture information which has been utilized as subtitle or menu information in a high definition TV system similarly. A sub-picture run length compression rule according to the present embodiment will be described below.

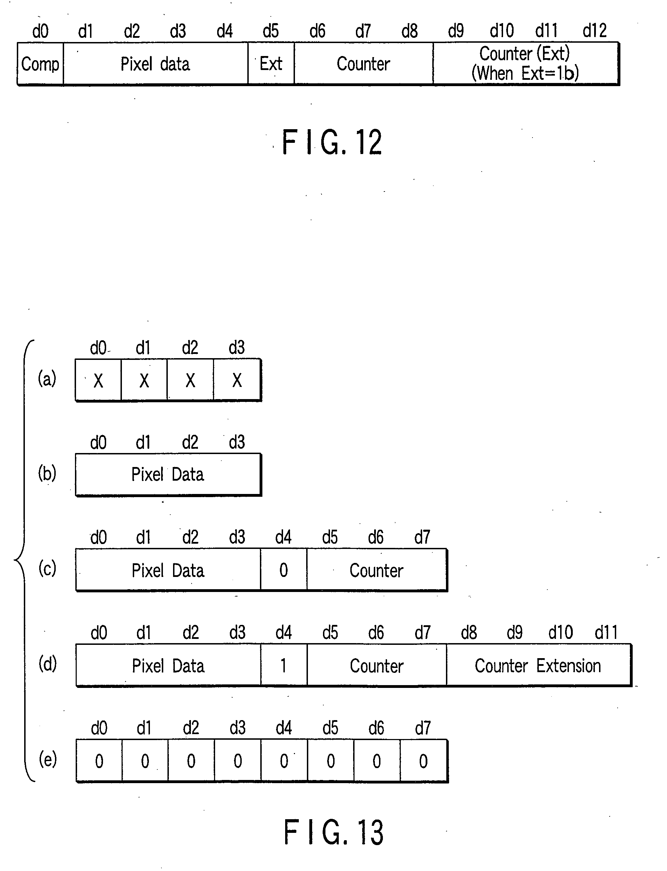

As shown in FIG. 12, a bit map data pixel is compressed in accordance with the following rule on a row-by-row basis. A compressed pixel pattern basically comprises 5 units: the run length compression flag "Comp"; a pixel data area "Pixel data"; a counter extension flag "Ext"; a counter field "Counter"; and an extended counter field "Counter (Ext)." In a run length compression flag "Comp," if pixel data is not compressed, "1b" is described. If compression is made by run length encoding, "0b" is described. In the case where pixel data is not compressed, one data unit represents only 1 pixel, and a counter extension flag "Ext" or subsequent does not exist.

A "Pixel data" describes any of 16 pixel data shown in FIG. 7, and this value represents a color lookup table index. In a counter extension flag "Ext," if a counter field "Counter" is in 3 bits, "0b" is described; and if the counter field is in 7 bits, "1b" is described. A counter field "Counter" specifies the number of continuous fields. In the case where a flag "Ext" is set to "0b," this field is in 3 bits. In the case where the flag is set to "1b," this field is in 7 bits (the extended counter field "Counter(Ext)" is used).

The data compressed in this compression rule comprises a plurality of units. Each unit has 4 points at a pixel change point. These'units are formed of:

(a) a unit header forming a packet of 4 run length flags; and 4 types of compression patterns (b) to (e) shown in FIG. 13 which follows the unit header.

A unit header (a) shown in FIG. 13 is provided as a set of run length compression flags "Comp" indicating whether or not a run length exists. If a run length does not continue, "0b" is described. If a run length continues, "1b" is described. In compression pattern

(b) shown in FIG. 13, if pixels of the same values do not continue, the run length compression flag "Comp" is set as "0b," and 4 bit pixel data is described.

In compression pattern (c) shown in FIG. 13, if 1 to 7 pixels of the same values are followed, the run length compression flag "Comp" is set to "1b," and pixel data is described in the first 4 bits. The next 1 bit (flag "Ext") is specified as "0b," and a counter is described for the next 3 bits. In compression pattern (d) shown in FIG. 13, if 8 to 127 pixels of the same values are followed, the run length compression flag "Comp" is set to "1b," and pixel data is described in the first 4 bits. The next 1 bit (flag "Ext") specifies "1b," and a counter is described in the next 3 bits, and counter extension is described in the next 4 bits.

In compression pattern (e) shown in FIG. 13, where pixels of the same values are continuously set at the end of line, "0b" is described in all 8 bits, and the run length compression flag "Comp" is set to "1b."

When a description of pixels per line has terminated, if byte adjustment does not complete, 4 bit dummy data "0000b" is inserted for adjustment. The size of run length coded data in one line is equal to or smaller than 7,680 bits.

An encoding or decoding method according to the present embodiment carries out run length compression or decompression according to the following combinations (1) to (4).

(1) It is indicated whether or not a run is continuous, thereby providing a run length compression flag "Comp" for determining compression or decompression.

(2) A run continuity counter "Counter" is extended according to the number of run continuities, and a counter extension flag "Ext" is provided so as to add an extended counter "Counter(Ext)."

(3) 4 run change points are handled as one unit, and a nibble (4 bit) configuration for easy byte alignment is provided, thereby providing a data structure in which processing is facilitated.

(4) An end code E for ending run length compression or decompression is provided on a row-by-row basis. However, if information indicating what capacity per line is can be provided to an encoder device or a decoder device in advance, this end code can be eliminated.

FIG. 14 is a view showing "a run length compression rule of 3 bit 8 color expression in 3 bit data (in units of rows)" which is a run length compression rule according to the present embodiment. In this case, no special unit is required because data can be handled in units of 4 bits.

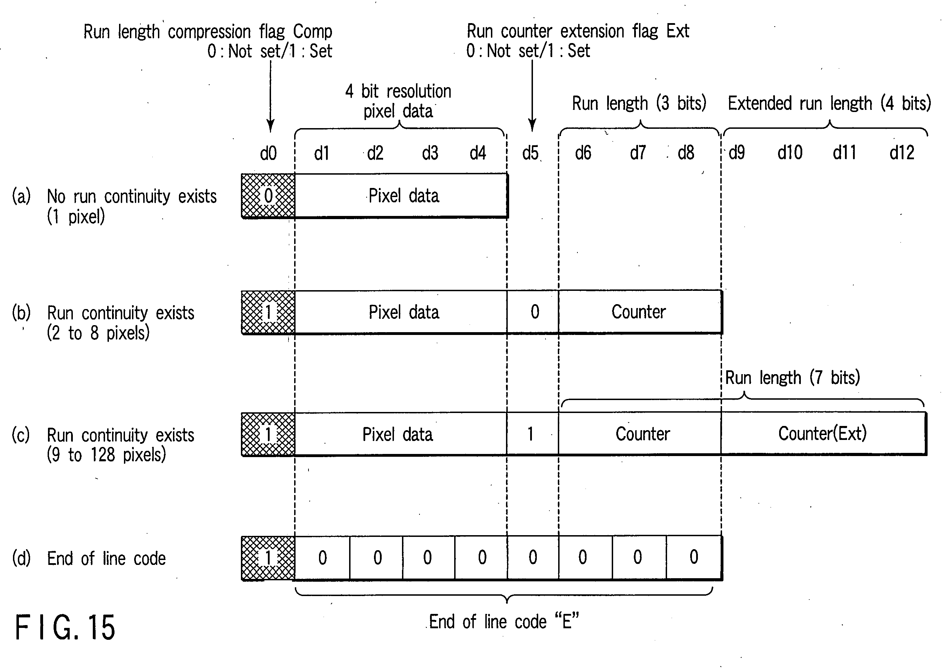

FIG. 15 is a view showing "a run length compression rule of 4 bit 16 color expression in 4 bit data (in units of rows)."

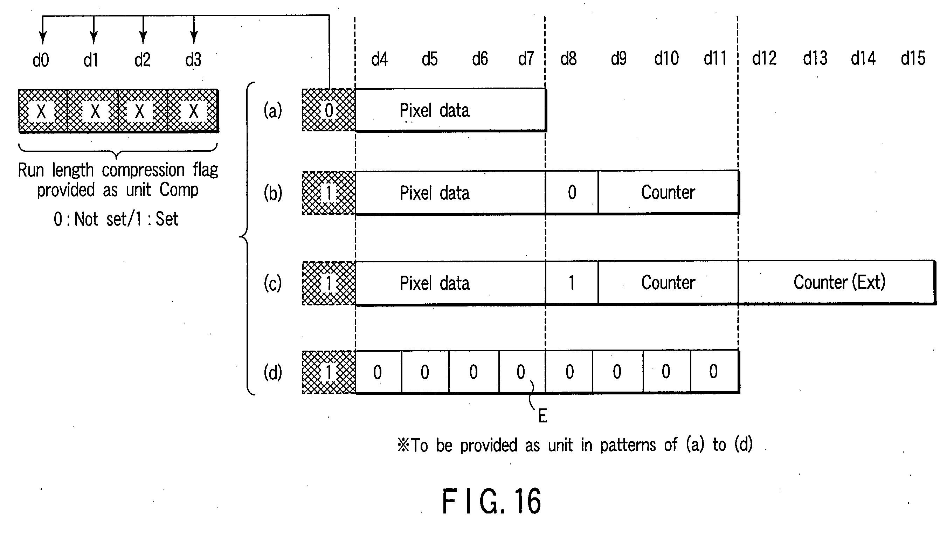

FIG. 16 is a view showing an example of practical data structure according to a run length compression rule according to the present embodiment.

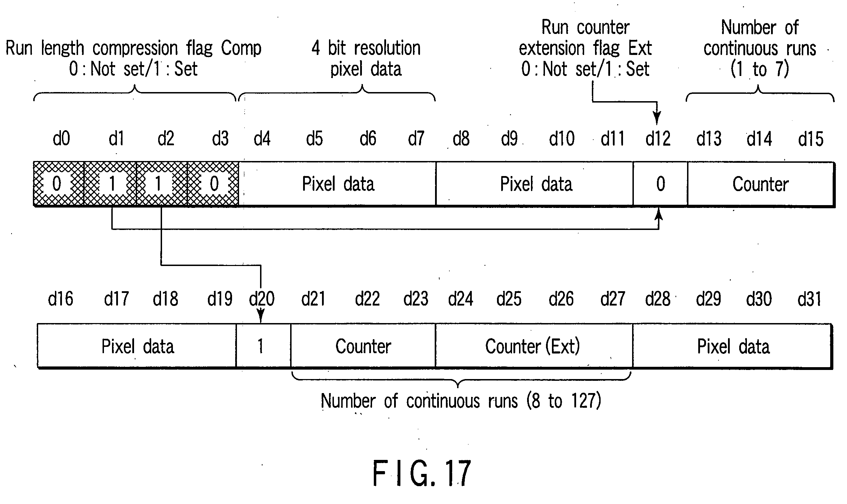

FIGS. 17 to 19 are views each showing an example when this data structure is provided as a unit.

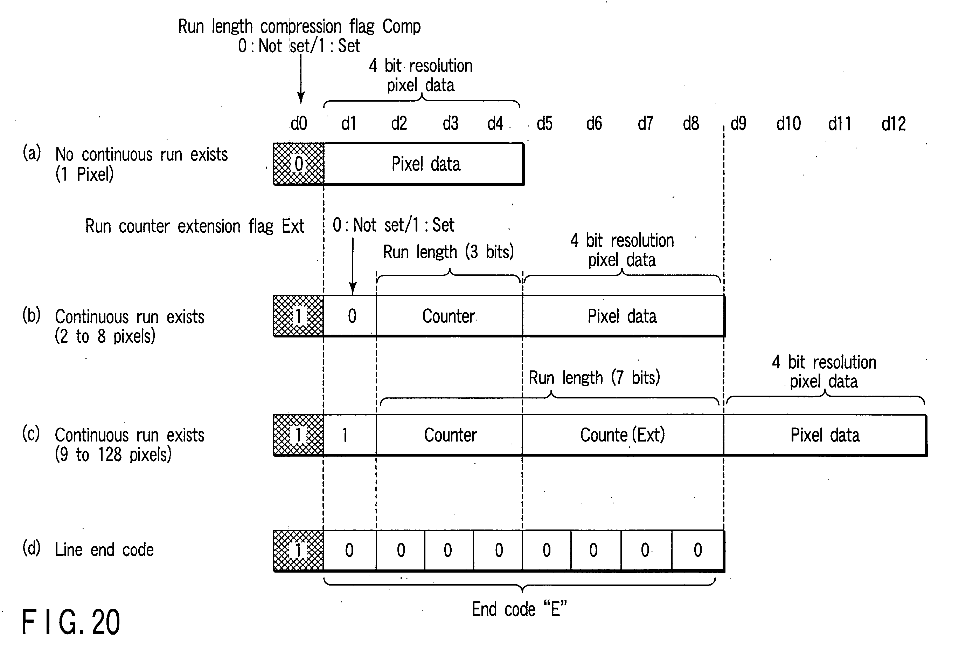

FIGS. 20 is a view showing another example of "a run length compression rule of 4 bit 16 color expression in 4 bit data (in units of rows)."

With an encoding method of a sub-picture encoder according to the present embodiment, even in the sub-picture image data of 1 pixel 4 bit expression (16 colors) for which run non-continuities continue in a comparatively large scale, where pixel data does not have continuity, no counter is used. Thus, a data length is kept unchanged. In addition, even where a predetermined number or more of run continuities exist, these continuities can be reliably reproduced by using an extended counter "Counter(Ext)." Therefore, more sufficient compression effect can be achieved by functions of these run length compression flags "Comp," a basic counter "Counter," an extended counter "Counter(Ext)," and a counter extension flag "Ext" or the like. The run length compression flag "Comp" is allocated at the beginning of data raw collectively as 4 bit expression (or its multiple). In this manner, by taking the form such that decode processing based on 4 bit information can be easily carried out, it becomes possible to improve a decode processing speed.

The end of line code E generated at an end of line code generator is not always required for encode or decode processing as long as the number of pixels per line is identified in advance. That is, even if the end of line position is not identified, the number of pixels is counted from a start position, thereby making it possible to subject image data for a sub-picture per line to encode or decode processing.

With a decoding method of a sub-picture decoder according to the present embodiment, even in a sub-picture image data of 1 pixel 4 bit expression (16 colors) for which run non-continuities are continued in a comparatively large scale, sufficient compression effect can be achieved by functions of these run length compression flags "Comp"; a basic counter "Counter," an extended counter "Counter(Ext)," and a counter extension flag "Ext" or the like. The run length compression flag "Comp" is allocated at the beginning of data row collectively as 4 bit expression (or its multiple). By taking the'form such that decode processing based on 4 bit information is easily carried out, it becomes possible to improve a decode processing speed.

As is the case with encode processing, the end of line code E detected at an end of line code detector unit is not always required for encode or decode processing. If the number of pixels per line is identified in advance, it becomes possible to carry out decode processing per line according to the number of pixels.

Now, a description will be given with respect to an example of data structure compressed or decompressed by an encoding or decoding method according to the present embodiment.

FIG. 14 shows run length compression rules of 3 bit 8 color expression (in units of rows) in 4 bit data. A basic data structure comprises: a 1 bit run length compression flag "Comp" (d0) indicating the presence or absence of run continuity; 3 bit pixel data (d1 to d3) indicating run pixel data; 1 bit counter extension flag "Ext" (d4) indicating the presence or absence of counter extension when run length flag "Comp" = 1 (Yes); a 3 bit counter "Counter" of a continuous run (d5 to d7); and a 4 bit extended counter "Counter(Ext)" (d8 to d11) utilized as a 7 bit run counter by being linked with the 3 bit counter.

A pattern (a) shown in FIG. 14 can express 1 pixel data without any run continuity. A pattern (b) shown in FIG. 14 can express 2 to 8 pixel data with run continuity by using a counter "Counter." A pattern (c) shown in FIG. 14 can express 9 to 128 pixel data with run continuity by using a counter "Counter" and an extended counter "Counter (Ext)." A pattern (d) shown in FIG. 14 is provided as an end of line code E indicating the end of run length compression in units of rows.

A data structure of each of the patterns shown in FIG. 14 is provided as a 4 bit (nibble) configuration. Unlike FIG. 15, even if this data structure is not provided as unit, byte alignment can be easily carried out, and a system can be constructed comparatively easily.

FIG. 15 is a view showing a run length compression rule (in units of rows) which is a basis of the present embodiment. In this figure, a basic data structure comprises: a 1 bit run length compression flag "Comp" (d0) indicating the presence or absence of run continuity; 4 bit pixel data (d1 to d4) indicating run pixel data; 1 bit counter extension flag "Ext" (d5) indicating the presence or absence of counter extension when run length compression flag "Comp" = 1 (Yes); a 3 bit counter "Counter" (d6 to d8); and a 4 bit extended counter "Counter(Ext)" of a continuous run (d9 to d12) utilized as a 7 bit run counter by being linked with the 3 bit counter.

In a pattern (a) shown in FIG. 15, it is possible to express 1 pixel data without run continuity. In a pattern (b) shown in FIG. 15, it is possible to express 2 to 8 pixel data with run continuity by using a counter.

A pattern (c) shown in FIG. 15 can express 9 to 128 pixel data with run continuity by using a counter "Counter" and an extended counter "Counter(Ext)."

A pattern (d) shown in FIG. 15 is an end of line code E indicating the end of run length compression in units of rows.

A data structure of each of the patterns shown in FIG. 15 is provided as an odd number bit configuration. In this case, no byte alignment is carried out, and a processing system is likely to be complicated.

FIG. 16 shows a practical data structure in the present embodiment. In the figure, 4 run change points are provided as one unit so that the data structure of each of the patterns shown in FIG. 15 is provided as a nibble (4 bit) configuration in which byte alignment can be easily made. In addition, 4 run length compression flags "Comp" are provided as 4 bit unit flags (d0 to d3) (refer to FIG. 12). By doing this, a system in which 4 run change points are provided as a unit, and byte processing easily carried out can be constructed comparatively easily.

FIG. 17 shows an unit example of run length compression using a data structure provided as a unit shown in FIG. 16.

(1) A subsequent data pattern is first determined by a 4 bit run length compression flag "Comp" (d0 to d3).

(2) From d0 = 0, it is determined that a first run comprises non-continuous 1 pixel. A pattern (a) shown in FIG. 16 is applied, and the subsequent pixel data (d4 to d7) is expanded.

(3) From d1 = 1, it is determined that a second run is continuous. Any of the patterns shown in FIG. 16 is applied. First, pixel data (d8 to d11) is maintained. Then, it is determined that d12 = 0 and the number of counters (d13 to d15) is not zero by using the extended counter "Counter(Ext)" (d12). From this result, a pattern (b) shown in FIG. 16 without the extended counter is used. Then, pixel data (d8 to d11) is expanded, and then, pixel data (d8 to d11) whose number is equal to or smaller than 7 indicated by the 3 bit counters (d13 to d15) is expanded.

(4) From d2 = 1, it is determined that a third run is continuous. As in (3), any of the patterns (b) to (d) shown in FIG. 16 is applied. First, pixel data (d16 to d19) is maintained. Then, by the run length compression flag "Comp" (d20), from d20 = 1, a pattern (c) shown in FIG. 16 is used. Then, pixel data (d16 to d19) is expanded by combining a counter "Counter" (d21 to d23) and an extended counter "Counter(Ext)" (d24 to d27). Then, pixel data (d16 to d19) whose number is equal to or smaller than 127 indicated by a 7 bit counter (d21 to d27) is expanded.

(5) From d3 = 0, it is determined that a last run comprises non-continuous 1 pixel. The pattern (a) shown in FIG. 16 is used, and then, pixel data (d28 to d31) is expanded.

By doing this, 4 change points are provided as one unit, and a run length is expanded.

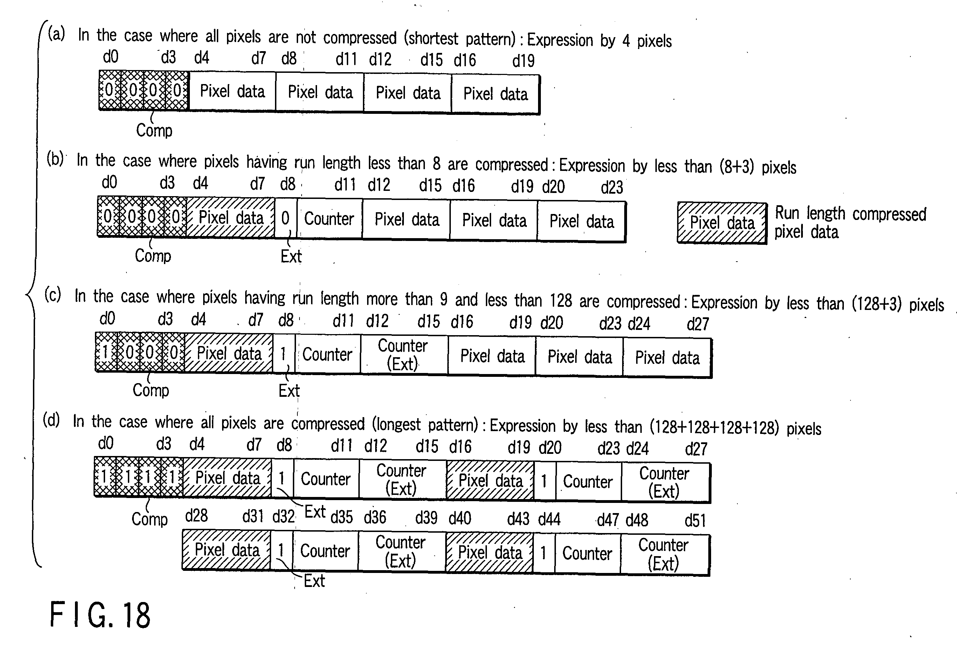

FIG. 18 shows a unit example of run length compression rule according to the present embodiment.

A pixel data (a) in FIG. 18 shows a case in which all data is not compressed, wherein pixel data of 4 pixels is expressed as it is. A pixel data (b) in FIG. 18 shows a case in which run continuity is equal to or smaller than 8 pixels, wherein pixel data of 3 pixels is expressed with no compression. FIG. 18 shows a case (c) in which run continuity is equal to or larger than 9 and equal to or smaller than 128 pixels, wherein pixel data of 3 pixels is expressed with no compression. FIG. 18 shows a case (d) in which all pixels are compressed, wherein pixel data of 4 pixels is expressed with run continuity equal to or smaller than 128 pixels (a maximum of 512 pixels).

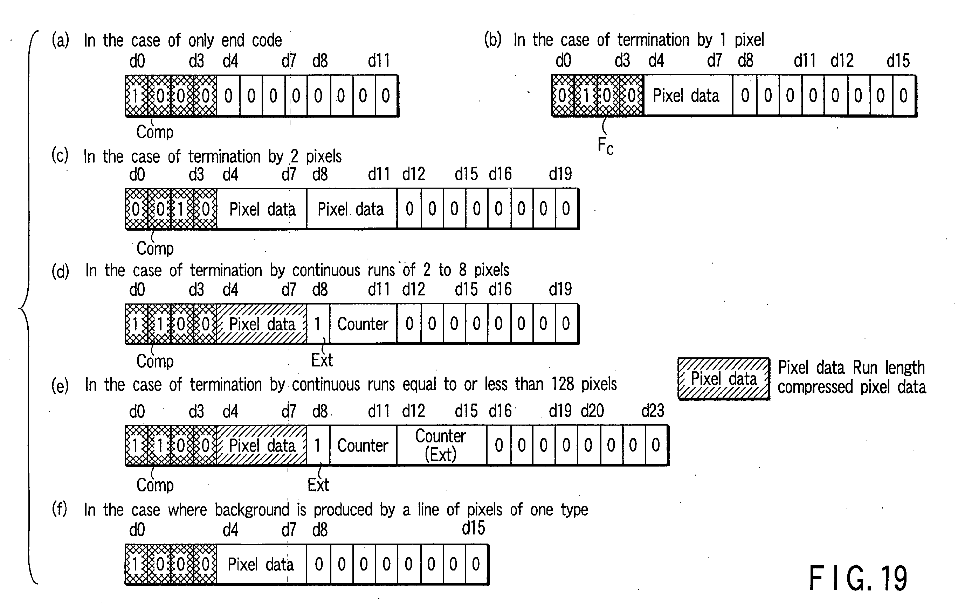

FIG. 19 shows unit examples having an end code E indicating the end of line according to the present embodiment and a unit example having a background code. A unit is terminated by inserting an end code E, and the run length compression flag "Comp" in the subsequent units is ignored. FIG. 19 shows an example (a) formed of only an end code E, an example (b) formed of one pixel and an end code E, an example (c) formed of 2 pixels and an end code E, an example (d) formed of run continuity between 2 and 8 pixels and an end code E, an example (e) formed of run continuity equal to or smaller than 128 pixels and an end code E, and an example (f) using a background code.

FIG. 19 shows a case (f) in which a data line identical to that (b) is provided; the number of pixels per line is identified; and the end code is not used. In a case in which no end code is used, "00000000" is used as a background code. That is, where a background image based on all the same image data is produced with respect to one line, one item of pixel data is placed after a unit of run length compression flag "Comp." Then, a background code meaning that one line is the same background image is placed, thereby making it possible to display the unit. In this manner, a background image is displayed and encoded, and concurrently, the background image according to one item of pixel data is decoded, thereby making it possible to compress and decompress the background image at a high compression rate.

FIGS. 20A to 20D show another pattern of a run length compression rule (in units of rows) which is a basis shown in FIGS. 15A to 15D. As in FIGS. 15A to 15D, a basic data structure comprises: a 1 bit run length compression flag "Comp" (d0) indicating the presence or absence of run continuity; a 1 bit counter extension flag "Ext" (d1) indicating the presence or absence of counter extension when run length compression flag "Comp" = 1 (YES); a 4 bit extended counter "Counter(Ext)" (d5 to d8) linked with the 3 bit counter and utilized as a 7 bit counter when the 3 bit counter "Counter(Ext)" of a continuous run (d2 to d4) and a counter extension flag "Ext" = 1 (YES); and 4 bit pixel data ((a) d1 to d4, (b) d5 to d8, and (c) d9 to d12) indicating run pixel data according to each of the patterns (a) to (c) shown in FIG. 20.

As a pattern (a) in FIG. 15, the pattern (a) shown in FIG. 20 can express 1 pixel data without run continuity. As a pattern (b) in FIG. 15, a pattern (b) shown in FIG. 20 can express 2 to 8 pixel data with run continuity by using the counter. As a pattern (c) in FIG. 15, a pattern (c) shown in FIG. 20 'can express 9 to 128 pixel data by using a counter "Counter" and an extended counter "Counter(Ext)." As a pattern (d) in FIG. 15, a pattern (d) shown in FIG. 20 is provided as an end of line code E indicating the end of run length compression in units of rows.

An encoding or decoding method according to the present embodiment can be well applied to general digital data processing as one encoding or decoding method as well as an encoder unit and a decoder unit of a disk unit. Therefore, identical procedures are used in the form of microcomputers and computer programs for supplying commands to such microcomputers, thereby achieving similar operation and advantageous effect.

[Individual points according to the present embodiment and description of unique advantageous effect by the individual points]

Point <B>

4 bit expression and compression rule on sub-picture information (FIGS. 6 to 20)

[Advantageous Effect]

A high image quality video including a sub-picture can be provided to the user.

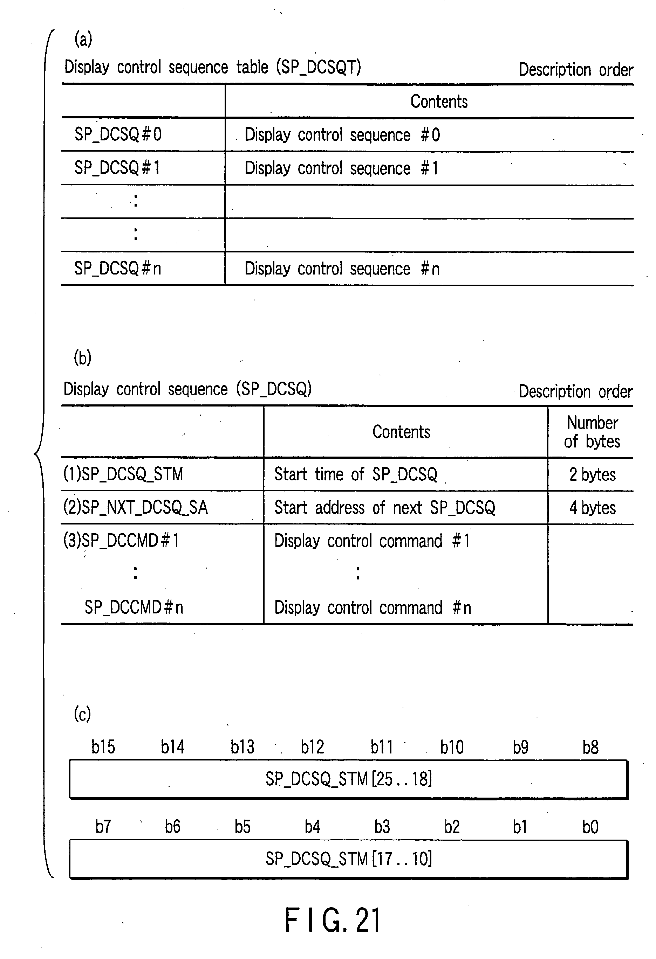

Next, a sub-picture header and a display control sequence will be described with reference to FIG. 21.

A display control sequence table SP_DCSQT is a display control sequence for starting or stopping display of sub-picture data during validity of a sub-picture unit SPU and for changing an attribute. As shown in FIG. 21, a display control sequence SP_DCSQ is described in order of execution. The display control sequence SP_DCSQ having the same execution time must not exist in a display control sequence table SP_DCSQT. One or more display control sequences SP_DCSQ must be described in a sub-picture unit.

In each display control sequence SP_DCSQ, as shown in FIG. 21, there are described: a start time SP_DCSQ_STM of a 2 byte display control sequence SP_DCSQ; a start address of 4 byte next display control sequence SP_NXT_DCSQ_SA; and one or more display control commands SP_DCCMD.

A start time of display control sequence SP_DCSQ_STM describes an execution start time of SP display control command SP_DCCMD described in a display control sequence SP_DCSQ in relative PTM from the PTS described in SP-PKT. From a first top field after the described execution start time, a display control sequence is opened in accordance with the display control sequence SP-DCSQ.

A start time SP_DCSQ_STM in a first display control sequence SP_DCSQ (SP_DCSQ#0) must be set to "0000b." The execution start time must be PTS or more recorded in an SP packet header. Therefore, the start time of a display control sequence SP_DCSQ_STM must be "'0000b" or must be a positive integer value calculated below.

$$SP\_DCSQ\_STM\ [25 ... 10]$$

$$= (225 \times n)/64$$

where $0 \leq n \leq 18641$ (625/50 in the case of SDTV system)

$$SP\_DCSQ\_STM\ [25 ... 10]$$

$$= (3003 \times n)/1024$$

where $0 \leq n \leq 22347$ (525/60 in the case of SDTV system)

$$SP\_DCSQ\_STM \ [25 \ ... \ 10]$$

$$= (225 \times n)/64$$

where $0 \leq n \leq 18641$ (in the case of HDTV system)

In the above formula, "n" denotes a video frame number after PTS of SPU. When n = 0, it denotes a video frame of PTS time. "/" denotes division of integers truncated below a decimal point.

The last PTM in SPU must be equal to or smaller than PTS described in an SP packet including the next SPU. The last PTM is defined as follows.

$$Final \ PTM \ SPU\#I$$

$$= PTM \ SPU\#I + SP\_DCSQ\_STM_{LAST} \ SPDCSQ$$

$$+ \ 1 \ video \ frame \ period$$

The start address of the next display control sequence SP_NXT_DCSQ_SA describes a start address of the next display control sequence SP_DCSQ in relative byte number (RBN) from the SPU start byte. In the case where the next display control sequence SP_DCSQ does not exist, the start address of this display control sequence SP_DCSQ is described in RBN from the SPU start byte.

SP_DCCMD#n describes one or more display control commands SP_DCCMD executed in this display control sequence SP_DCSQ. The same display control command SP_DCCMD must be described two or more times.

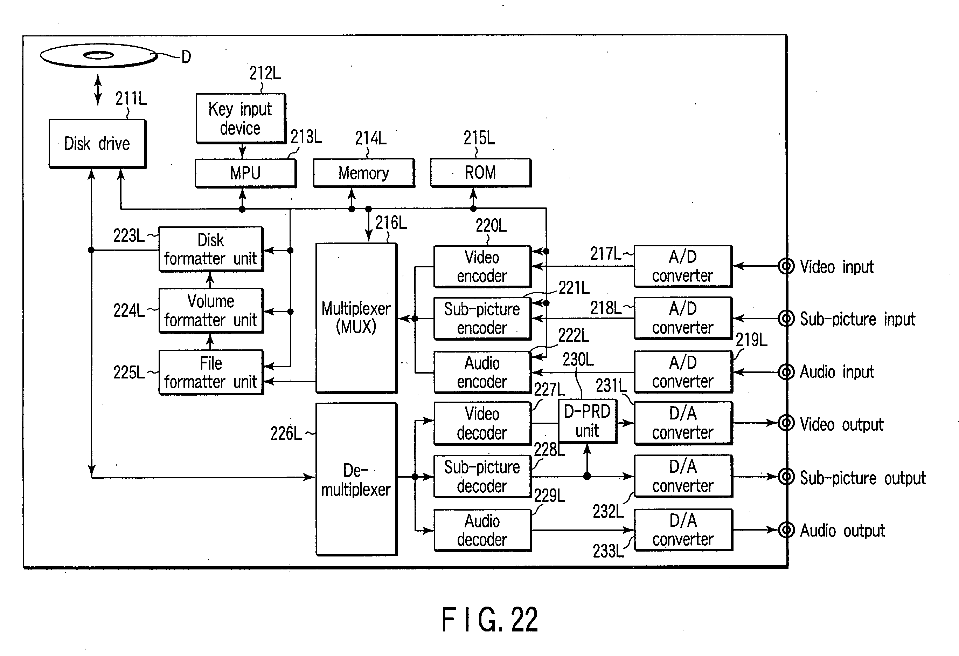

FIG. 22 shows a disk unit for carrying out reproduction processing for, from a disk shaped information recording medium D, reading out, decoding, and reproducing information stored in the medium D; and/or for carrying out record processing for encode processing upon receipt of a video signal, a sub-picture signal, and an audio signal, and recording the encoded data into a disk shaped information recording medium D.

The information recording medium D is mounted on a disk drive unit 211L. This disk drive unit 211L rotationally drives the information recording medium D mounted to the drive unit. Then, information stored in the information recording medium D by using an optical pickup (where the information recording medium D is an optical disk) is read, decoded, and reproduced, and/or information according to the encoded signal is recorded on the information recording medium.

Now, a disk unit according to the present embodiment will be described with respect to reproduction processing.

Information read by the disk'drive unit 211L is supplied to an MPU (Micro Processing Unit) 213L, and error correction processing is performed. Then, the resultant information is stored in a buffer (not shown).

Among these items of information, management information recorded in a control data area is recorded in a memory unit 214L, and the recorded information is utilized for reproduction control or data management and the like.

Among the items of information stored in the above buffer, information recorded in a video object area is transferred to a de-multiplexer 226L, and the transferred information is separated into a main picture pack 203L, an audio pack 204L, and a sub-picture pack 205L. Information recorded in the main picture pack 203L is supplied to a video decoder 227L. Information recorded in an audio pack 204 is supplied to an audio decoder 229L. Information recorded in a sub-picture pack 205L is supplied to a sub-picture decoder 228L, respectively, and decode processing is carried out. Main picture information processed to be decoded at the video decoder 227L and sub-picture information processed to be decoded at the sub-picture decoder 228L are supplied to a D-processor unit 230L. After a weighting process has been applied, the main picture information is converted into analogue data by means of a D/A (Digital/Analogue) converter 231L. The sub-picture information is converted into analogue data. Then, a video signal is output to a picture display unit (not shown), such as CRT: Cathode Ray Tube, for example. Audio information processed to be decoded at the audio decoder 229L is converted into analogue data by means of a D/A converter 233L. Then, an audio signal is output to an audio reproducing device (for example, speaker), although not shown.

A series of reproducing operations for the above described information recording medium D is integrally controlled by means of the MPU 213L. The MPU 213L receives operation information from the key input unit 212L, and controls each unit based on a program stored in an ROM (Read Only Memory) unit 215L.

Referring to record processing, a disk unit according to the present embodiment will be described here.

Data input through video, audio, and sub-picture input terminals are supplied to A/D converters 217L, 218L, and 219L, and the supplied data are converted from an analog signal into a digital signal. Video data digitally converted by the A/D converter 218 is supplied to a video encoder 220L, and the supplied data is encoded there. Sub-picture data digitally converted by the A/D converter 218 is supplied to a sub-picture encoder 221, and the supplied data is encoded there. Audio data digitally converted by the A/D converter 219L is supplied to an audio encoder 222L, and the supplied audio data is encoded there.

Video, audio, and sub-picture data encoded by the encoders are supplied to an MUX (Multiplexer) 216L. The supplied data is provided as a packet and a pack. MPEG-2 program streams are formed as a video pack, an audio pack, and a sub-picture pack. A group of multiplexed data is supplied to a file formatter unit 225L, and this disk unit converts the supplied data into a file which conforms to a file structure capable of recording and reproduction. This file is supplied to a volume formatter unit 224L. This disk unit forms a data format which conforms to a volume structure capable of recording and reproduction. Here, data produced as a file at the file formatter unit 225L and playback control information or the like for reproducing the data produced as a file are added. Then, the resultant information is supplied to a disk formatter 223L, and the data produced as a file in a disk D is recorded by means of the disk drive unit 211L.

Such a reproducing operation or recording operation is based on a set of processing programs stored in an ROM 215L of this disk unit. The above operation is carried out by supplying an instruction from the key input unit 212L and by executing it at the MPU 213L. This disk unit carries out both of encode processing and decode processing of sub-picture data. However, only encode processing can be carried out solely by an authoring system or the like or only decode processing can be carried out by the disk unit.

An optical disk unit operates with reference to a logical format of the optical disk D. The optical disk D has volume and file structures as described previously in a volume space from a lead-in area to a lead-out area. These structures are defined as a logical format in conformance to a specific standard, for example, a micro UDF and ISO9660. A volume space is physically divided into a plurality of sectors, as described above, and serial numbers are allocated to such physical sectors. A logical address denotes logical sector number LSN, as defined in micro UDF and ISO9660. A logical sector is in 2,048 bytes as is the size of physical sector. With respect to the logical sector number LSN, serial numbers are allocated in ascending and descending orders of physical sector numbers.

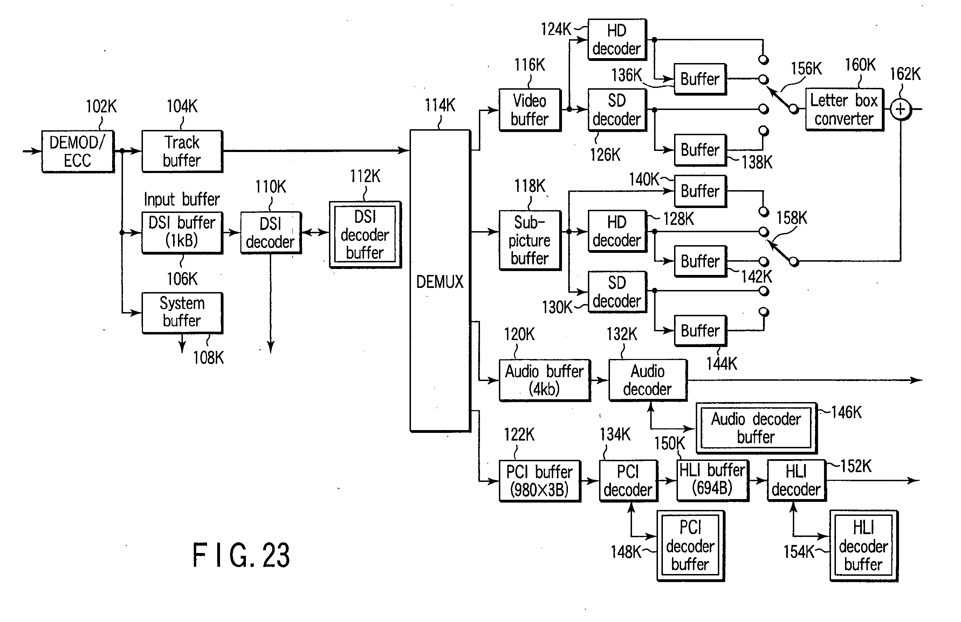

FIG. 23 shows a player reference model which shows a signal processing system of the above described apparatus in detail. During a reproduction period, packs in the program stream read from a disk are fed from the interface unit (described previously) of a demodulator or error corrector circuit 102K to a track buffer 104K, and the fed packs are stored therein. An output of the track buffer 104K is demultiplexed by means of a demultiplexer 114K. The demultiplexed output is transferred to input buffers 116K, 118K, 120K, and 122K for target decoders 124K, 126K, 128K, 130K, 132K, and 134K specified under ISO/IEC 13818-1. The track buffer 104K is provided to ensure continuous data supply to the decoders 124K, 126K, 128K, 130K, 132K, and 134K. DSI_PKT recorded in a navigation pack is stored in the track buffer 104K, and at the same time, is stored in a data search information (DSI) buffer 106K. The stored DSI_PKT is decoded at a DSI decoder 110K. A DSI decoder buffer 112K is also connected to the DSI decoder 110K. A system buffer 108K is also connected to the demodulator or error corrector circuit 102K.

An output (main picture) of a video buffer 116K is supplied to the HD decoder 124K and the SD decoder 126K. Outputs of the HD decoder 124K and SD decoder 126K are directly supplied to a selector 156K, and are supplied to the selector 156K via a buffer 136K, 138K. An output of the selector 156K is supplied to a mixer 162K via a letterbox converter 160K.

An output of a sub-picture buffer 118K is supplied to the HD decoder 128K and SD decoder 130K. Outputs of the HD decoder 128K and SD decoder 130K are directly supplied to the selector 158K, and are supplied to the selector 158K via a buffer 142K, 144K. An output of the selector 158K is supplied to the mixer 162K.

An output of an audio buffer 120K is supplied to an audio decoder 132K. An output of the playback control information (PCI) buffer 122K is supplied to the PCI decoder 134K. An audio decoder buffer 146K is connected to the audio decoder 132K, and an output of the audio decoder 132K is directly forwarded. A PCI decoder buffer 148K is also connected to an audio decoder 134K, and an output of the PCI decoder 134K is supplied to an HIL decoder 152K via a highlight (HIL) buffer 150. An HIL decoder buffer 154K is also connected to the HIL decoder 152K, and an output of the HIL decoder 152K is directly forwarded.

The power supply timing of each of the decoders 124K, 126K, 128K, 130K, 132K, and 134K is controlled according to the above described version number and compression or decompression flag. A necessary decoder is established in a standby state according to the SD/HD system, and playback can be started speedily while power is saved.

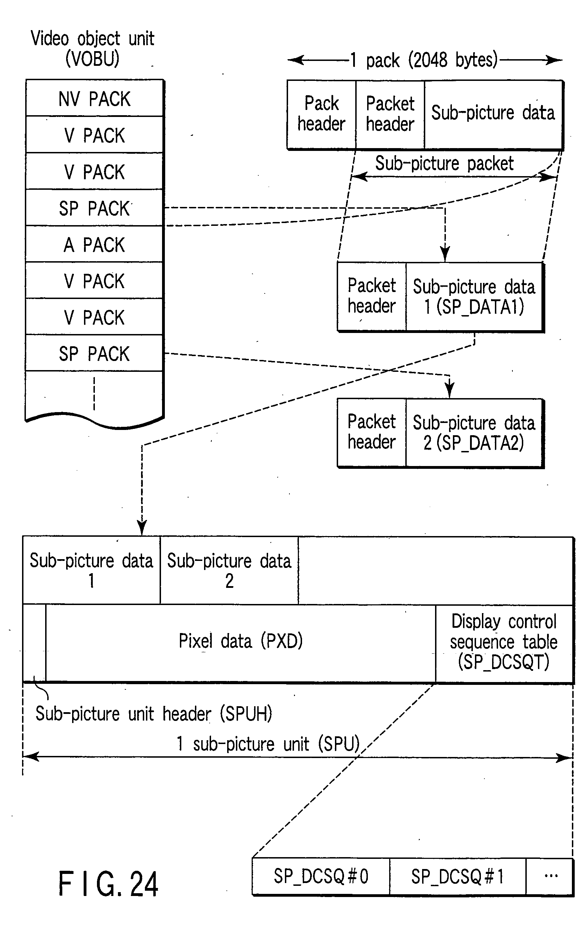

A sub-picture unit formed of sub-picture data of a plurality of sub-picture packets will be described with reference to FIG. 24. A sub-picture unit can be recorded in one GOP as data for a still picture having some tens of screens (for example, subtitles). A sub-picture unit SPU comprises: a sub-picture unit header SPUH; pixel data PXD formed of bit map data; and a display control sequence table SP_DCSQT.

The size of the display control sequence table SP_DCSQT is equal to or smaller than half of the sub-picture unit. The display control sequence SP_DCSQ describes the contents of display control of each pixel. The display control sequences SP_DCSQ are sequentially recorded as they are with each other.

The sub-picture unit SPU is divided into an integer number of sub-picture packs SP_PCK, and the divided packs are recorded on a disk. The sub-picture pack SP_PCK can have a padding packet or a stuffing packet as long as it is a final pack of one sub-picture unit SPU. In the case where a length of SP_PCK including final data for a unit is less than 48 bytes, adjustment is made. SP_PCK other than the final pack cannot have a padding packet.

PTS of the sub-picture unit SPU must be aligned in a top field. The validity of the sub-picture unit SPU ranges from PTS of the sub-picture unit SPU to PTS of a sub-picture unit SPU to be reproduced next. However, where a still image is present in the navigation data during the validity of the sub-picture unit SPU, the validity of the sub-picture unit SPU is maintained until such still image has terminated.

A display of the sub-picture unit SPU is defined below.

(1) In the case where the display is switched ON during the validity period of the sub-picture unit SPU by a display control command, sub-picture data is displayed.
(2) In the case where the display is switched OFF during the validity period of the sub-picture unit SPU by a display control command, sub-picture data is cleared.
(3) After the validity period of the sub-picture unit SPU has elapsed, the sub-picture unit SPU is forcibly cleared. Then, the sub-picture unit SPU is discarded from a decoder buffer. The sub-picture unit header SPUH is processed as described previously.

[3] A common data structure among a read only type information recording medium (next generation DVD-ROM), a write once type information recording medium (next generation DVD-R), and a rewritable type information recording medium (next generation DVD-R/W, next generation DVD-RAM).

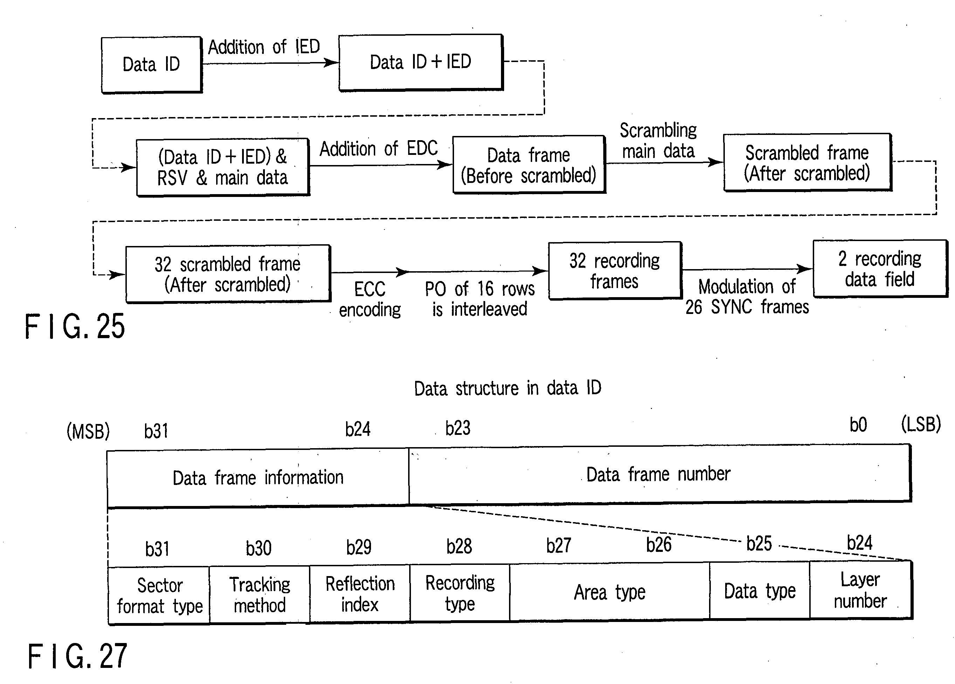

Data recorded in a data area of an information recording medium, as shown in FIG. 25, is referred to as a data frame, a scrambled frame, a recording frame, or a recorded data field according to a signal processing stage. The data frame comprises 2,048 bytes, and has main data, a 4 byte data ID, a 2 byte ID error detection code (IED), a 6 byte reserved byte, and a 4 byte error detection code (EDC). FIG. 25 shows the steps of processing for forming a recording data area.

After an error detection code (EDC) has been added, scrambling for main data is executed. Here, a cross reed-Solomon error correction code is applied to 32 scrambled data frames (scrambled frames), and so called ECC encode processing is executed. In this manner, a recording frame is formed. This recording frame includes an outer parity code (Parity of Outer-code (PO)) and an inner parity code (Parity of Inner-code (PI)).

PO and PI are provided as error correction codes produced for ECC blocks each consisting of 32 scrambled frames.

The recording frame is 4/6-modulated. Then, a sync code (SYNC) is added at the beginning on a 91 bytes-by-91 bytes basis, and a recording field is produced. 4 recording fields are recorded in one data area.

FIG. 25 shows how data is changed from main data to a recording frame. FIG. 26 shows a mode of data frame. The data frame is in 2,064 bytes consisting of 172 bytes $\times$ 2 $\times$ 6 rows, and includes main data of 2,048 bytes.

FIG. 27 shows a data structure described in data ID. The data ID comprises 4 bytes. A first 1 byte of bits b31 to b24 is provided as data frame information, and the remaining 3 bytes (bits b23 to b0) are provided as a data frame number.

The data frame information includes: a sector format type, a tracking method, a reflection index, a recording type, an area type, a data type, and a layer number or the like.

    Sector format type:
        0b... CLV format type
        1b... Zone format type
    Tracking method
        0b... Pit tracking
        1b... Group tracking
    Reflection index:
        0b... Greater than 40%
        1b... Equal to or smaller than 40%
    Recording type
        0b... Reservation
    Area type:
        00b... Data area

01n... System lead-in area or data lead-in area

10b... Data lead-out area or system lead-out area

11b... Middle area

Data type:

0b... Read only data

1b... Rewritable data

Layer number

0b... Layer 0 of dual layer disk or a single layer disk

1b... Layer 1 of dual layer disk

Data frame information described in a rewritable data zone is as follows.

Sector format type:

1b... Zone format type

Tracking method:

1b... Group tracking

Reflection index:

1b... Equal to or smaller than 40%

Recording type

0b... General data (Where a defect occurs with a block, a linear replacement algorithm is applied to a block including the corresponding sector.)

1b... Real time data (Even where a defect occurs with a block, a linear replacement algorithm is not applied to a block including the corresponding sector.) (Refer to FIG. 29.)

Area type:

00b... Data area

01b... Lead-in area

10b... Lead-out area

Data type:

1b... Rewritable data

Layer number:

0b... Layer 0 of dual layer or single layer disk

1b... Layer 1 of dual layer

Data frame number: Refer to FIG. 28

These bits must be allocated under the following rule.

Sector format type:

0b... CLV format type for read only disk or recordable disk

1b... Zone format type for rewritable disk

Tracking method:

0b... Pit tracking

1b... Group tracking

Reflection index

0b... Greater than 40%

1b... Equal to or smaller than 40%

Recording type: In the case of data area of rewritable disk

0b... General data

1b... Real time data

Area type:

00b... Data area

01b... System lead-in area or data lead-in area

10b... Data lead-out area or system lead-out area

11b... Middle area

Data type:

0b... Read only data

1b... Other than read oily data

Layer number

0b... Layer 0 of dual layer or single layer disk

1b... Layer 1 of dual layer

Data frame number: The number of physical sectors.

FIG. 28 shows the contents of a data frame number in a rewritable type information recording medium. In the case where a data frame belongs to a system lead-in area, a defect management area, and a disk identification zone, a physical sector number is described in any case. In the case where a data frame belongs to a data area, that data frame number is allocated as a logical sector number: (LSN) + 030000h. At this time, an ECC block including the user data is used.

In addition, there is a case in which a data frame belongs to a data area, but this data frame does not include the user data, i.e., the data frame is allocated as an unused block. The unused block denotes an ECC block which does not include the user data. In such a case, any one of the following is assumed.

(1) The three bits from a first sector 0 are all 0s, and serially incremented numbers are described in the subsequent sectors. All the sectors in the ECC block are under the same condition;
(2) Numbers ranging from "00 0000h" to "00 000Fh" are described; or
(3) Nothing is described.

FIG. 29 shows a definition of record type in a rewritable type information recording medium.

When a data frame is in a system lead-in area, "0b" is described. When a data frame is in a data lead-in area or a data lead-out area, "0b" is described. When a data frame is in data, "0b": General data or "1b": Real time data is described. In the case of general data when a defect occurs with a block, a linear replacement algorithm is applied to a block including the corresponding sector. In the case of real time data, even where a defect occurs with a block, a linear replacement algorithm is not applied to a block including the corresponding sector.

Now, an error detection code (IED) of data ID will be described here.

Assuming that bytes allocated to matrices, for $C_{i,j}$ ($i$ = 0 to 11, $j$ = 0 to 171) IED are $C_{0,j}$ ($j$ = 4 to 5), IED can be expressed as follows.

$$\text{IED}(X) = \sum_{j=4}^{5} C_{0,j} \cdot X^{5-j}$$

$$= \{I(X) \cdot X^2\} \bmod \{G_E(X)\}$$

wherein

$$I(X) = \sum_{j=0}^{3} C_{0,j} \cdot X^{3-j}$$

$$G_E(X) = \prod_{k=0}^{1} (X + \alpha^k)$$

$\alpha$ denotes a primary route of a linear polynomial.

$$P(x) = x^8 + x^4 + x^3 + x^2 + 1$$

Now, 6 byte reservation data RSV will be described here.

RSV denotes 6 byte data when all bits are "0b."

An error detection code (EDC) is a 4 byte check code, and is associated with 2,060 bytes of a data frame before scrambled. Assume that an MSB of a first type of data ID is b16511, and an LSB of a last byte is b0. Bits bi ($i$ = 31 to 0) for EDC are as follows.

$$EDC(x) = \sum_{i=31}^{0} bix^i$$

$$= I(x) \bmod \{g(x)\}$$

wherein

$$I(x) = \sum_{i=16511}^{32} bix^i$$

$$g(x) = x^{32} + x^{31} + x^4 + 1$$

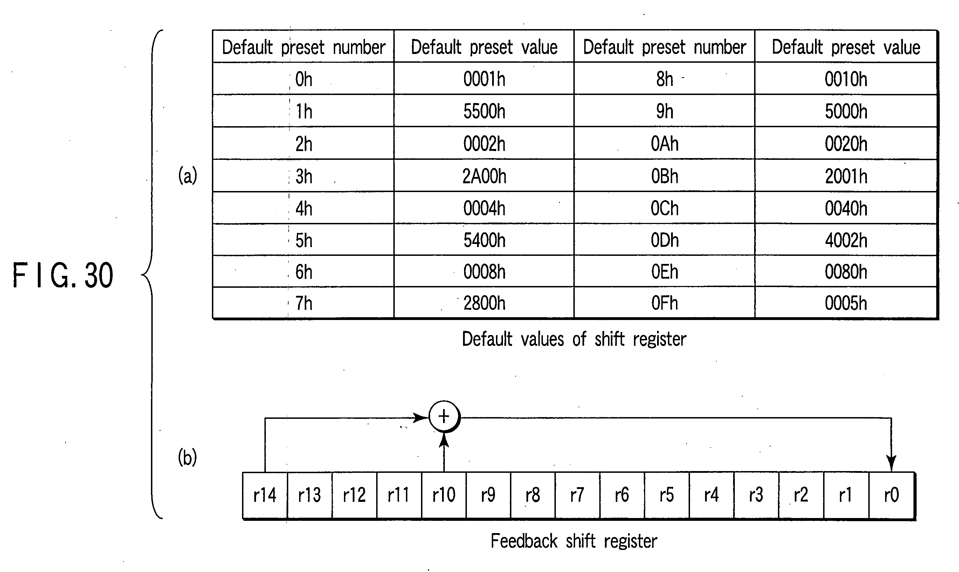

FIG. 30 shows an example of default value allocated to a feedback shift register when a scrambled frame is produced and the feedback shift register for producing a scrambled byte. 16 types of preset values are reserved.

r7 (MBS) to r0 (LSB) are shifted by 8 bits, and are used as scrambled bytes. The default preset number shown in FIG. 30 is equal to 4 bits (b7 (MSB) to b4 (LSB)) of data ID. When scrambling of a data frame is started, the default values of r14 to r0 must be set to the default preset value of a table shown in FIG. 30.

The same default preset value is used for 16 continuous data frames. Next, the default preset value is changed, and the changed same preset value is used for the 16 continuous data frame.

The lower 8 bits of the default values of r7 to r0 are retrieved as scrambled byte S0. Then, an 8 bit shift is carried out, a scrambled byte is then retrieved, and such an operation is repeated 2,047 times. When scrambled bytes S0 to S2047 are retrieved from r7 to r0, a data frame is from main byte Dk to scrambled byte D'k. This scrambled byte D'k is allocated as follows.

$$D'k = DK \oplus Sk \text{ for } k = 0 \text{ to } 2047$$

wherein $\oplus$ denotes an exclusive OR operation

Now, a configuration of an ECC block relating to points (D) and (E) will be described here.

FIG. 31 shows an ECC block. The ECC block is formed of 32 continuous scrambled frames. 192 rows + 16 rows is allocated in a vertical direction, and $(172 + 10) \times 2$ columns are allocated in a horizontal direction. $B_{0,0}$, $B_{1,0}$, ... is allocated as 1 byte, respectively. PO and PI are error correction codes and are an outer parity and an inner parity.

In the ECC block shown in FIG. 32, a unit of (6 rows $\times$ 172 bytes) is handled as 1 scrambled frame. FIG. 33 is a view showing an example when the ECC block of FIG. 32 is written as scrambled frame allocation. That is, 1 ECC block comprises 32 continuous scrambled frames. Further, in this system, a block (182 bytes $\times$ 207 bytes) is handled in pair. When L is allocated to the number of each scrambled frame of the left side ECC block, and R is allocated to the number of each scrambled frame of the right side ECC block, the scrambled frames are allocated as shown in FIG. 32. That is, the left and right scrambled frames exist alternately in the left side block, and scrambled frames exist alternately in the right side block.

That is, an ECC block is formed of 32 continuous scrambled frames. Rows at the left half of odd number sectors are replaced with those of the right half. $172 \times 2$ bytes $\times$ 192 rows are equal to 172 bytes $\times$ 12 rows $\times$ 32 scrambled frames, and a data area is produced. PO of 16 bytes is added to each $172 \times 2$ rows in order to form an outer code of RS (208, 192, 17). In addition, PI (RS (182, 172, 11)) of 10 bytes is added to $208 \times 2$ rows of the left and right blocks. PI is also added to a row of PO.

The numbers used in frames denote scrambled frame numbers, and suffixes R and L means the right side half and left side half of the scrambled frame. The PO and PI shown in FIG. 32 is generated in accordance with the procedures as described below.

First, Bi,j (i = 192 to 207) of 16 bytes is added to column j (j = 0 to 171 and j = 182 to 353). This $B_{i,j}$ is defined by the following polynomial Rj(x). In this polynomial, outer code RS (208, 192, 17) is formed in $172 \times 2$ columns each.

$$R_j(X) = \sum_{i=192}^{207} B_{i,j} \cdot X^{207-i}$$

$$= \{I_j(X) \cdot X^{16}\} \bmod \{G_{PO}(X)\}$$

wherein

$$I_{j,k}(X) = \sum_{i=0}^{191} B_{m,n} \cdot X^{191-i}$$

$$G_{PO}(X) = \prod_{k=0}^{15} (X + \alpha^k)$$

Next, $B_{i,j}$ (j = 172 to 181, j = 354 to 363) of 10 bytes is added to row "i" (i = 0 to 207). This $B_{i,j}$ is defined by the following polynomial Ri(x).

In this polynomial, inner code RS (182, 172, 11) is formed in each row of (208 × 2)/2.

$$(\text{For } j = 172 \text{ to } 181)$$

$$R_i(X) = \sum_{j=172}^{181} B_{i,j} \cdot X^{181-j}$$

$$= \{I_i(X) \cdot X^{10}\} \bmod \{G_{PI}(X)\}$$

wherein

$$I_i(X) = \sum_{j=0}^{171} B_{i,j} \cdot X^{171-j}$$

$$G_{PI}(X) = \prod_{k=0}^{9} (X + \alpha^k)$$

$$(\text{For } j = 354 \text{ to } 363)$$

$$R_i(X) = \sum_{j=354}^{363} B_{i,j} \cdot X^{363-j}$$

$$= \{I_i(X) \cdot X^{10}\} \bmod \{G_{PI}(X)\}$$

wherein

$$I_i(X) = \sum_{j=182}^{353} B_{i,j} \cdot X^{353-j}$$

$$G_{PI}(X) = \prod_{k=0}^{9} (X + \alpha^k)$$

$\alpha$ denotes a primary route of a linear polynomial.

$$P(x) = x^8 + x^4 + x^3 + x^2 + 1$$

[Individual points of the present embodiment and description of unique advantageous effect by the individual points]

Point (D)

An ECC block structure using a multiplication code (FIGS. 31 and 32).
As shown in FIGS. 31 and 32, in the present embodiment, there is provided a structure in which: data recorded in an information recording medium is allocated in a two-dimensional manner; an inner parity PI (Party in) is added in a row direction as an error correction additional bit, and an outer parity PO (Parity out) is added in a column direction.

[Advantageous Effect]

High error correction capability using erasure correction and vertical and horizontal repetition correction processing is provided.

○  One error correction unit (ECC block) comprises 32 sectors.

As shown in FIG. 32, in the present embodiment, there is provided a structure in which 32 sectors from sector 0 to sector 31 are sequentially arranged vertically to configure an ECC block.

[Advantageous Effect]

In a next generation DVD, even where a scratch whose length is equal to that of a current generation DVD is made on the surface of an information recording medium, it is required that precise information reproduction can be carried out by error correction processing. In the present embodiment, recording density is enhanced to ensure high capacity corresponding to high image quality video. As a result, where 1 ECC block comprises 16 sectors as in the current DVD, a length of physical scratch which can be corrected by error correction is reduced as compared with a current DVD. As in the present embodiment, by providing a structure in which 1 ECC block comprises 32 sectors, an allowable length of a surface scratch of an information recording medium capable of error correction can be increased, and compatibility or format continuity of the current DVD ECC block structure can be maintained.

Point (E)

The sector is divided into plural portions, and each portion becomes a multiplication code (small ECC block).
As shown in FIG. 32, sector data is allocated alternately at the left and right on a 172 bytes-by-172 bytes basis, and the allocated data are grouped separately at the left and right (the data belonging to the left and right groups is in the form that a respective item of data is interleaved in a nesting manner). These divided left and right groups are collected by 32 sectors, as shown in FIG. 32, and small ECC blocks are formed at the left and right. For example, "2-R" in FIG. 32 means a sector number and a left or right group identification sign (for example, second right side data). L in FIG. 32 denotes the left.

[Advantageous Effect]

Reliability of recording data is improved by enhancing error correction capability of sector data.
For example, assume that a "track-off" occurs during recording, the recorded data is overwritten, and data for 1 sector is damaged. In the present embodiment, the damaged data in 1 sector is subjected to error correction by using two small ECC blocks. Thus, a burden on error correction in one ECC block is reduced, and error correction with higher performance is guaranteed.
In the present embodiment, there is provided a structure in which data ID is allocated at the start position of each sector even after an ECC block has been formed. Thus, data location check during access can be carried out at a high speed.

○The sector is interleaved (included in another groove with equal interval), and is attributed to small ECC blocks which are different from each other on a group-by-group basis.

[Advantageous Effect]

A structure which is strong to a burst error is provided according to the present embodiment.
For example, assume a state of a burst error in which a long scratch is made in the circumferential direction of an information recording medium, making it impossible to read data which exceeds 172 bytes. In this case, a burst error exceeding 172 bytes is allocated to be distributed into two small ECC blocks. Thus, a burden on error correction in one ECC block is reduced, and error correction with higher performance is guaranteed.
$B_{i,j}$ which is an element of each matrix B shown in FIG. 31, comprises 208 rows $\times$ 182 $\times$ 2 columns. This matrix B is interleaved between rows so that $B_{i,j}$ is allocated again by $B_{m,n}$. This interleave rule is expressed by the following formula.

$$m = i + \lfloor (i + 6)/12 \rfloor^*, \qquad n = j$$

wherein $i \leq 191$, $j \leq 181$

$$m = (i - 191) \times 13 - 7, \qquad n = j$$

wherein $i \geq 192$, $j \leq 181$

$$m = i + \lfloor i/12 \rfloor^*$$

wherein $i \leq 191$, $j \geq 182$

$$m = (i - 191) \times 13 - 1, \qquad n = j$$

wherein $i \geq 192$, $j \geq 182$

$\lfloor p \rfloor^*$ denotes a maximum integer equal to or smaller than p.
As a result, as shown in FIG. 33, 16 parity rows are distributed on a row-by-row basis. That is, 16 parity rows are allocated on one a row-by-row basis for 2 recording frame placements. Therefore, a recording frame consisting of 12 rows is obtained as 12 rows plus 1 row. After this row interleaving has been carried out, 13 rows $\times$ 182 bytes is referred to as a recording frame. Therefore, after row interleaving has been carried out, the ECC block comprises 32 recording frames. In one recording frame, as described in FIG. 32, the right side and left side blocks each have 6 blocks. In addition, PO is allocated so as to be positioned in different rows between a left block (182 $\times$ 208 bytes) and a right block (182 $\times$ 208 bytes). In the figure, one complete type ECC block is shown. However, during actual data reproduction, such ECC blocks continuously arrive at an error correction processor unit. In order to correction capability of such correction processing, an interleaving system as shown in FIG. 33 has been employed.
Now, a configuration of a recording data area (point F) will be described here.
A recording frame (2,366 bytes) of 13 rows $\times$ 182 bytes is continuously modulated and 2 sync codes are added to this frame. One sync code is added before column 0, and the other sync code is added before column 91.

At the beginning of a recording data area, a state of sync code SY0 is provided as state 1. The recording data area is provided as a 13 sets × 2 sync frames, as shown in FIG. 34. One recording data area of 29,016 channel bit length is equivalent to 2,418 bytes before modulation.

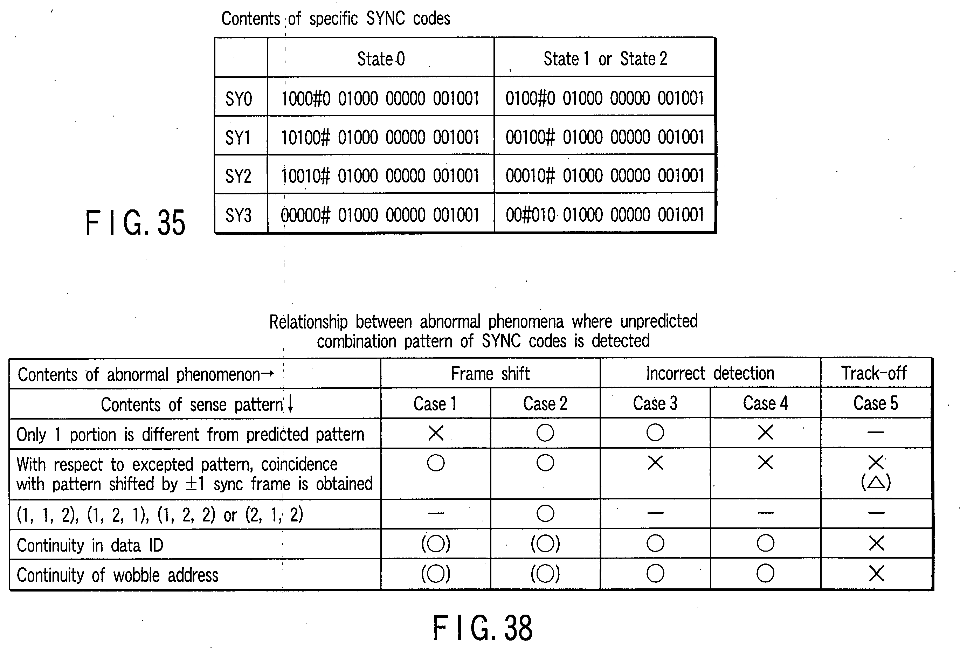

SY0-SY3 of FIG. 34 are provided as sync (SYNC) codes, and are selected from among the codes shown in FIG. 35. Number 24 and number 1092 described in FIG. 34 are provided as channel bit lengths.

In FIG. 34, items of information on the outer parity PO shown in FIG. 33 are inserted into a sync data area in the last 2 sync frames (that is, a portion at which the last sync code is SY3; a portion immediately following the sync data SY3; a portion at which the last sync code is SY1; a portion immediately following the sync data SY1) are inserted into both of an even recorded data field and an odd recorded data field.

A part of the left side PO shown in FIG. 32 is inserted into the last 2 sync frame units in the even recorded data area. A part of the right side PO shown in FIG. 32 is inserted into the last 2 sync frame units in the odd recorded data area. As shown in FIG. 32, one ECC block comprises the left and right small ECC blocks, respectively, and the data in the PO groups which are alternately different from each other on a sector-by-sector basis (PO belonging to the left small ECC block or PO belonging to the right small ECC block) is inserted into this block.

The left side data area (A) in which sync codes SY3 and SY1 are continuously allocated and the right side data area (B) in which sync codes SY3 and SY1 are continuously allocated are shown in FIG. 34.

[Individual points of the present embodiment and description of unique advantageous effect by the individual points]

Point (F)

Plural types of synchronizing frame structures are specified by a sector forming an ECC block.

According to the present embodiment, a synchronizing frame structure is changed as shown in FIG. 34 depending on whether a sector number of a sector forming one ECC block is an even number or an odd number. That is, there is provided a structure in which data for the alternately different PO groups are inserted on a sector-by-sector basis as shown in FIG. 33.

[Advantageous Effect]

Even after an ECC block has been formed, there is provided a structure in which data ID is allocated at the start position of a sector, and thus, data location check can be carried out at a high speed during access. In addition, POs belonging to different small ECC blocks coexist in, and are inserted into, the same sector, whereby a method employing the PO inserting method as shown in FIG. 33 is structurally simplified, facilitating information sampling on a sector-by-sector basis after error correction processing in an information reproducing apparatus and making it possible to simplify an ECC block data assembling process in an information recording and reproducing apparatus.

  ○  A structure in which PO interleaving and inserting positions are different from each other depending on the left or right is provided (FIG. 33).

[Advantageous Effect]

Even after an ECC block has been formed, there is provided a structure in which data ID is allocated to the start position of a sector. Thus, data location check during access can be carried out at a high speed.

FIG. 35 describes specific contents of sync codes. 3 states ranging state 0 to state 2 are established in accordance with a modulation rule according to the present embodiment (a detailed description will be given later). 4 types of sync codes ranging from SY0 to SY3 are set respectively, and these sync codes are selected from the left and right groups of FIG. 35 according to each state. In a current DVD standard, RLL (2, 10) of 8/16 modulation (converting 8 bits into 16 channel bits) (Run Length Limited: d = 2, k = 10: Minimum value 2 and maximum value 10 in the range in which "0s" are continuously set) is employed as a modulation system. For modulation, 4 states ranging from state 1 to state 4 and 8 types of sync codes ranging from SY0 to SY7 are set. In contrast, in the present embodiment, types of sync codes are reduced. In an information recording and reproducing apparatus or in an information reproducing apparatus, sync code type is identified in accordance with a pattern matching technique during information reproduction from an information recording medium. As in the present embodiment, types of sync codes are significantly reduced, making it possible to reduce the number of target patterns required for matching. In addition, processing required for pattern matching is simplified, thereby making it possible to improve processing efficiency and to improve a recognition speed.

In FIG. 35, a bit (channel bit) marked with "#" represents a DSV (Digital Sum Value) control bit. The above DSV control bit is determined to suppress a DC component (to ensure that a value of DSV is close to "0") by means of a DSV controller device (DSV controller), as described later. That is, including a double-side frame data area in which the above sync codes are sandwiched (1,092 channel bit area of FIGS. 34A and 34B), from the macroscopic point of view, a value of "#" is selected as "1" or "0" so that a DSV value is close to "0."

As shown in FIG. 35, the sync code in the present embodiment comprises the following portions.

(1) Synchronization position detection code portion

A common pattern to all sync codes is provided, and a fixed code area is formed. By detecting this code, a sync code location can be detected. Specifically, this portion means a portion of the last 18 channel bits "010000 000000 001001" in each sync code shown in FIG. 35.

(2) Conversion table selection code portion (during modulation)

This code forms a part of a variable code area, and is changed with a state number at the time of modulation. A first 1 channel bit of FIG. 35 corresponds to this code. That is, where either of state 1 and state 2 is selected, a first 1 channel bit is set to "0" in any of the codes SY0 to SY3. When state 0 is selected, a first 1 channel bit of sync code is set to "1." However, as an exception, a first 1 channel bit of SY3 in state 0 is set to "0."

(3) Sync frame position identification code portion

This code identifies types ranging from SY0 to SY3 in sync code, and comprises a part of a variable code area. The first 6 channel bit units in each sync code shown in FIG. 35 correspond to this code. As described later, a relative location in the same sector can be detected from a connecting pattern of 3 sync codes which are continuously detected.

(4) Polarity inverting code portion for DC suppression

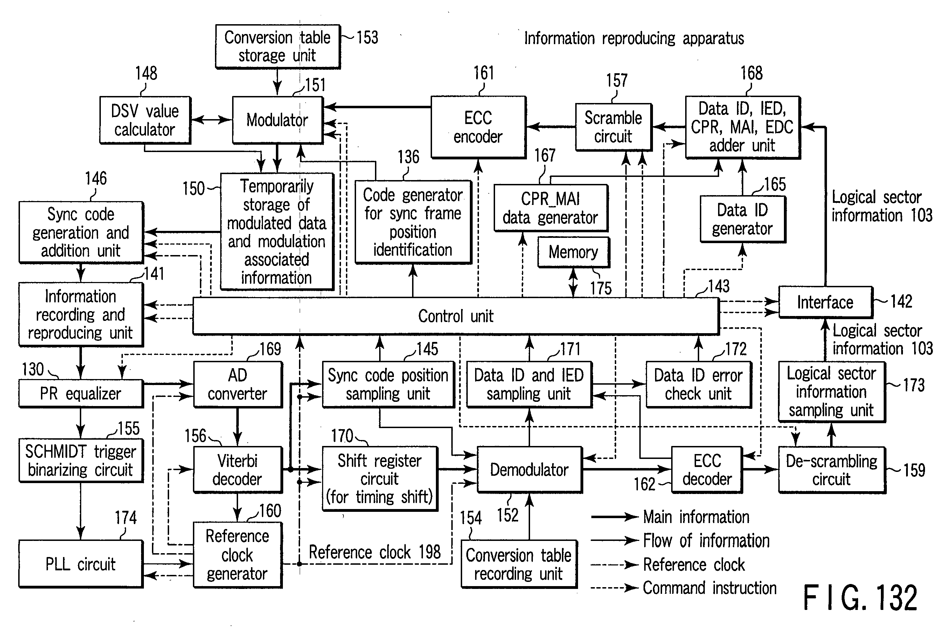

A channel bit at a position marked with "#" in FIG. 35 corresponds to this code portion. As described above, this bit is inverted or non-inverted, whereby this code portion functions so that a DSV value of a channel bit array including the preceding and succeeding frame data is close to "0."
In the present embodiment, 8/12 modulation (ETM: Eight to Twelve Modulation), RLL (1, 10) is employed as a modulation method. That is, during modulation, 8 bits are converted into a 12 channel bit. In the range in which "0"s after converted are continuously set, the minimum value (d value) is set to 1, and the maximum value (k value) is set to 10. In the present embodiment, by setting d = 1, high density can be achieved more significantly than conventionally. However, sufficiently large reproduction signal amplitude is hardly obtained at the densest-marked unit.
Therefore, as shown in FIG. 132, an information recording and reproducing apparatus according to the present embodiment comprises a PR equalizer circuit 130 and a Viterbi decoder 156, which enables very stable signal reproduction by using a PRML (Partial Response Maximum Likelihood) technique. In addition, k = 10 is established, and thus, there is no case in which 11 or more "0"s are continuously set in modulated general channel bit data. By utilizing this modulation rule, the above described synchronizing position detection code portion has a pattern which does not appears in the modulated general channel bit data. That is, as shown in FIG. 35, at the synchronizing position detection code portion, 12 (= k + 2) "0"s are continuously set. The information recording and reproducing apparatus or the information reproducing apparatus finds out this portion, and detects a position of the synchronizing position detection code portion. In addition, if continuous "0"s are too long, a bit shift error is likely to occur. Thus, in order to alleviate this problem, in the synchronizing position detection code portion, a pattern with a small number of continuous "0"s is allocated immediately after such "0"s. In the present embodiment, d = 1 is established, thus making it possible to set "101" as a corresponding pattern. However, as described above, at a portion at which "101" is set (at a portion at which the densest pattern is set), a sufficiently large reproduction signal amplitude is hardly obtained. Instead, "1001" is allocated, thereby generating a pattern of a synchronizing position detection code portion as shown in FIG. 35.
The present embodiment, as shown in FIG. 35, is featured in that 18 channel bits at the rear side of a sync code are allocated independently to be (1) synchronizing position detection code portion; and the front side 6 channel bits are compatible with (2) conversion table selection code portion at the time of modulation; (3) sync frame position identification code portion; and (4) DC suppression polarity inversion code portion. There are advantageous effects that, in a sync code, the (1) synchronizing position detection code portion made independent, thereby facilitating single detection and enhancing synchronizing position detection precision; the (2) to (4) code portions are shared in 6 channel bits, thereby reducing a data size (channel bit size) of the entire sync code; and the occupancy ratio of sync data is enhanced, thereby improving substantial data efficiency.

According to the present embodiment, among 4 types of sync codes shown in FIG. 35, only SY0 is allocated at a first sync frame position in a sector, as shown in FIG. 34. The advantageous effect is that a start position in a sector can be identified immediately merely by detecting SY0, and a start position sampling process in a sector is simplified very significantly.

In addition, according to the present embodiment, combination patterns of 3 continuous sync codes are different from each other in the same sector.

In the embodiment of FIG. 34, also in the case of either of the even recorded data area and odd recorded data area, SY0 appears at a sync frame position of the beginning of a sector, and then, SY1, SY1 is followed. In this case, combination patterns of 3 sync codes are produced as (0, 1, 1) by arranging only the sync code numbers. This communication pattern is arranged vertically in a columnar direction. If a pattern change made when this combination is shifted on a one-by-one basis is arranged in a horizontal direction, the pattern change is made as shown in FIG. 36. For example, in a column in which the newest sync frame numbers are "02," sync code numbers are arranged in order of (0, 1, 1). In FIG. 34, the sync frame position of "02" in the even recorded data area represents a third sync frame position from the left of the top row. A sync code at this sync frame position is allocated as SY1. In the case where sector data is continuously reproduced, a sync code at the sync frame position allocated immediately before the sync code is allocated as SY1. A sync code which is precedent by two codes is allocated as SY0 (sync code number is "0"). As is evident from FIG. 36, combination patterns of 3 sync code numbers in which the latest sync frame numbers are arranged in a columnar direction in the range from "00" to "25" is obtained as completely different combinations. By utilizing this feature, the position in the same sector can be identified from combination patterns of 3 continuous sync codes.

A sixth row in FIG. 36 represents the number of sync code numbers changed in a pattern change when combinations of 3 continuous sync codes is shifted on a one-by-one basis. For example, in a column in which the newest sync frame numbers are "02," sync code numbers are arranged in order of (0, 1, 1). In a combination pattern when this combination is shifted on a one-by-one basis, the newest sync frame numbers are described in columns of "03," and are produced as (1, 1, 2). As comparing these 2 patterns, although a center number of the sync code is not changed ("1 → 1"), it is changed as "0 → 1" at the front side, and it is changed as "1 → 2" at the rear side. Thus, a total of two portions are changed, and the number of code 1 is changed between the adjacent sync codes is obtained as "2." As is evident from FIG. 36, according to the present embodiment, sync codes in a sector has been allocated so that, in the full range in which the newest sync frame number ranges from "00" to "25," the number of changes of code between the adjacent codes is equal to or greater than 2 (that is, in a combination pattern in which combinations of 3 continuous sync codes are shifted on a one-by-one basis, sync code numbers of at least two units or more are changed).

As described later with reference to FIGS. 40 and 41, in the present embodiment, a specific data structure in a read only type information recording medium; and a write once type information recording medium and a rewritable type information recording medium each have a guard area between ECC blocks. A sync code is first allocated in PA (post-amble) in this guard area, and SY1 is set as a sync code in the guard area, as shown in FIG. 37. In this manner, by setting a sync code number, even where 2 sectors are allocated with sandwiching the guard area, the number of code changes between the adjacent codes when combinations of 3 continuous sync codes are shifted on a one-by-one basis is always maintained to be equal to or greater than 2, as shown in FIG. 37.

A seventh row in FIGS. 36 and 37 represents the number of code changed when combinations of 3 continuous sync codes are shifted on a two-by-two basis. For example, with respect to a column in which the newest sync frame numbers are "02" when sync code numbers are arranged in order of (0, 1, 1), a pattern produced when the combinations are shifted on a two-by-two basis corresponds to a column in which the newest sync frame numbers are "04," and sync code numbers are arranged in order of (1, 2, 1). At this time, at the rear side, no sync code number is changed, i.e., "1 → 1" is kept unchanged. However, at the front side, the sync code is changed to "0 → 1," and at the center, the sync code is changed to "1 → 2." Thus, a total of two portions are changed, and the number of code changes when the combinations are shifted on a two-by-two basis is obtained as "2."

When information recorded in an information recording medium is continuously reproduced, in an ideal case where the top of the information recording medium is free of any defect and is free of any frame shift or track-off, frame data is reproduced, and at the same time, sync code data is sequentially detected precisely as well. In this case, combination patterns of 3 continuous sync codes are sequentially detected as the adjacent patterns which are shifted on a one-by-one basis. In the case where sync code allocation according to the present embodiment as shown in FIG. 34 has been made, in combination patterns of 3 continuous sync codes, sync code numbers of two or more portions are always changed as shown in FIGS. 36 and 37. Therefore, where only one sync code number has been changed between the adjacent sync codes in the above described combination patterns, there is a high possibility that a sync code (number) has been partially incorrectly detected or a "track-off" occurs.

During information reproduction on an information recording medium, even if synchronization comes off for any reason, and synchronization is applied to be shifted by 1 sync frame, the current reproduction position in the same sector can be checked in accordance with preceding combination patterns of 2 sync codes at a time when a next sync code has been detected. As a result, it becomes possible to reset synchronization to be shifted (position corrected) by 1 sync frame. After synchronization has come off during continuous reproduction, when it is detected that a shift occurs by 1 sync frame, there appears a pattern change made when combinations of 3 continuous sync codes are shifted on a two-by-two basis. At this time, the seventh row shown in FIGS. 36 and 37 indicates the number of places in which a sync code number is changed in a pattern. In the case where a frame shift has occurred, a frame shift quantity is by ±1 sync frame in most cases. Thus, as long as a pattern change state is grasped when 1 sync frame is shifted, a majority of frame shifts can be detected. As is evident from the seventh row of FIGS. 36 and 37, in the sync code allocation method according to the present embodiment, when a frame shift occurs by ±1 sync frame, according to the present embodiment:

(i) In most cases, there are two or more portions in which sync code numbers are changed in patterns.

(ii) There is only one portion in which a sync code number is changed in a pattern, i.e., a portion close to the beginning in a sector (only a portion in which the newest sync frame numbers are "03" and "04").

(iii) There is only one portion in which a sync code number is changed in a pattern, i.e., only a portion in which the detected combination pattern is (1, 1, 2) or (1, 2, 1) (a portion in which the newest sync frame numbers are "03" and "04") and (1, 2, 2) or (2, 1, 2) (a combination pattern in a portion shifted by 1 sync frame with respect to a portion in which the newest sync frame numbers are "03" and "04" (in a portion in which combination portions are shifted on a two-by-two basis).

From the above features, in many cases (where a shift quantity is by ±1 sync frame even if a frame shift occurs), if there is only one portion in which sync code numbers are changed in combination patterns of 3 continuous sync codes, and the detected combination pattern does not fall under any of (1, 1, 2), (1, 2, 1), (1, 2, 2), and (2, 1, 2), it can be determined that incorrect detection of a sync code or "track-off" has occurred.

In the case where a "track-off" has occurred, such track-off can be detected according to the possibility of continuity of data ID shown in FIG. 26 or continuity of wobble address information described later (if "track-off" occurs, the continuity is eliminated).

By utilizing the features with the sync code allocation method in the present embodiment shown in FIG. 34, it becomes possible to identify any of frame shift, incorrect detection of sync code, and track-off in accordance with a state of a combination pattern change of 3 continuous sync codes.

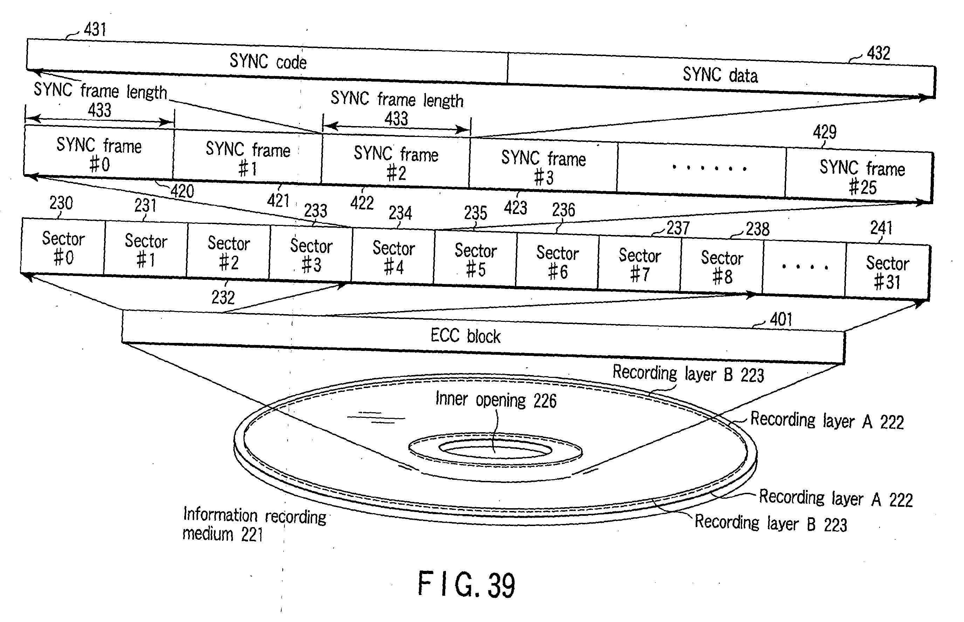

The above described contents will be described collectively in FIG. 38. According to the present embodiment, a frame shift, incorrect detection of a sync code, or a track-off can be identified according to whether or not there is only one portion in which a sync code number is changed in a pattern.

In FIG. 38, a pattern change state in each case is described in a columnar direction (vertical direction). For example, in case 1, when there are two or more different portions from a predetermined combination pattern, and a coincidence is obtained with a pattern shifted by ±1 sync frame with respect to the predetermined pattern, it is regarded as a frame shift. In contrast, in case 2, as long as there is only one different portion from a predetermined pattern; a coincidence is obtained with a pattern shifted by ±1 sync frame with respect to the predetermined pattern; and the detected pattern falls under any of (1, 1, 2), (1, 2, 1), (1, 2, 2), and (2, 1, 2), i.e., as long as these three states are not established at the same time, it is not regarded that a frame shift has occurred.

[Individual points of the present embodiment and description of unique advantageous effect by the individual points]

Point (J)

By making best use of an allocation, two or more code changes occur when combinations of 3 continuous sync codes are shifted on a one-by-one basis (FIGS. 36 to 38).

[Advantageous Effect]

A sync code recorded due to the dust or scratch adhering onto the surface of an information recording medium or due to a fine defect on a recording film (optical reflection film) cannot be correctly read, and such sync code is often mistakenly recognized (incorrectly detected) as another sync code number. In a current DVD sync code allocation, there exists a portion in which a sync code number is changed only at one portion between combination patterns of the adjacent sync codes. Thus, if the sync code number of one sync code is mistakenly read (incorrectly detected), it is mistakenly determined that a frame shift has occurred, and re-synchronization is applied (reset) to an incorrect position. In this case, the remaining frame data excluding a sync code in a sync frame is allocated to an incorrect position in the ECC block shown in FIG. 33, for example, and error correction processing is carried out. A frame data quantity for 1 sync frame corresponds to a half row in the left and right small ECC blocks each forming the ECC block shown in FIG. 33.

Therefore, by the above described incorrect detection, if an allocation position in an ECC block is mistaken by 1 sync frame, error correction capability is significantly lowered, and all data in the ECC block are affected. As in the present embodiment, sync code allocation is improved so that there are two or more code changes when combinations of 3 continuous sync codes are shifted on a one-by-one basis. In this manner, even if a sync code number is incorrectly detected due to the dust or scratch adhering to the surface of an information recording medium or due to a fine defect or the like on a recording film (optical reflection film), there is a few case in which it is incorrectly determined that a frame shift has occurred. Thus, substantial degradation of error correction capability due to an ECC block can be prevented.

Further, even if only one unpredicted sync code number has been detected in a sync code combination pattern, it can be determined whether or not such a sync code is incorrectly detected. Thus, "automatic correction processing" (ST7 of FIG. 136) for automatically correcting an incorrectly detected result to a correct sync code number is enabled. As a result, as compared with a current DVD, the reliabilities of sync code detection and synchronization processing using the detection are remarkably improved.

○ Improvement is made so that 2 or more code changes occur even in an allocation in which a sector structure is repeated without a guard area.
○ Improvement is made so that two or more code changes occur even where a sector structure is repeated with sandwiching a guard area.

[Advantageous Effect]

As shown in FIGS. 40 and 41, even where there exist two types of data recording formats in a read only type information recording medium, there can be used a same detection method using sync code allocation with respect to a write once type information recording medium and a rewritable type information recording medium irrespective of the data recording format. Thus, it becomes possible to ensure compatibility concerning a medium type or a data recording format (in a read only type information recording medium) seen from synchronizing detection. As a result, a detection processing circuit and a processing program using a sync code allocation can be used in common irrespective of a medium type or a recording format, enabling simplification and cost reduction of the information recording and reproducing apparatus.

[4] First example of read only type information recording medium (next generation DVD-ROM)

Point (C)

The present embodiment permits two types of data structures of recording data in a read only type information recording medium (next generation DVD-ROM). Contents providers can select either one of these data structures according to the contents of data to be recorded.

[4-1] Description of data structure in first example of read only type information recording medium (next generation DVD-ROM)

In the present embodiment, irrespective of type of information recording medium 221 (read only, write once, or rewritable type), the data recorded onto the information recording medium 221 has a hierarchical structure of recording data as shown in FIG. 39.

That is, one ECC block 401 which is the largest data unit enabling data error detection or error correction comprises 32 sectors 230 to 241. The detail of each ECC block 401 is shown in FIG. 33. Sectors 230 to 401 shown in FIG. 39 respectively indicate the same contents as sectors 231 to 238 for carrying out recording in units of packs shown in FIG. 5. As has already been described in FIG. 34 and as shown again in FIG. 39, the sectors 230 to 241 respectively comprise 26 sync frames (#0) 420 to (#25) 429. The sync frame, as shown in FIG. 39, comprises a sync code 431 and sync data 432. The sync frame, as shown in FIG. 34, includes channel bit data. A sync frame length 433 which is a physical distance on an information recording medium 221 in which such one sync frame is recorded is substantially constant everywhere (In the case of excluding a change of a physical distance for intra-zone synchronization).

[4-2] Comparison with data structure in a second example of read only type information recording medium (points (C), (Q))

According to the present embodiment, in a read only type information recording medium, plural types of recording formats can be set (corresponding to point (C)). Specifically, there are two types of recording formats shown in the first and second examples of read only type information recording medium. FIG. 40 shows a difference between the first and second example in the read only type information recording medium according to the present embodiment. FIG. 40 shows the first example (a), wherein ECC blocks (#1) 411 to (#5) 415 are physically packed, and are continuously recorded onto the information recording medium 221. In contrast, the difference therebetween is that, in the second example (b), as shown in FIG. 40, guard regions (#1) 441 to (#8) 448 are allocated to be inserted into ECC blocks (#1) 411 to (#8) 418, respectively (corresponding to point (H)). The physical length of each of the guard regions (#1) 441 to (#8) 448 coincides with the sync frame length 433.

As is evident from FIG. 34, the physical distance of data recorded on the information recording medium 221 is handled by defining the sync frame length 433 as a basic unit. Thus, the physical length of each of the guard regions (#1) 441 to (#8) 448 are also made coincident with the sync frame length 433, whereby there is achieved advantageous effect of facilitating management of physical allocation with respect to the data recorded onto the information recording medium 221 or data access control.

FIG. 41 shows a detailed structure in a guard area in the second example (b) shown in FIG. 40. FIG. 39 shows that a sector internal structure comprises a combination of sync code 431 and sync data 432. According to the present embodiment, the guard area also comprises a combination of a sync code 433 and sync data 434; and at the area of the sync data 434 in the guard area (#3) 443, the modulated data is allocated in accordance with the same modulation rule as the sync data 432 in a sector.

In the present embodiment, a area in one ECC block (#2) 412 formed of 32 sectors shown in FIG. 39 is referred to as a data area 470.

VFO (Variable Frequency Oscillator) regions 471, 472 in FIG. 41 are utilized for synchronization of a reference clock of the information reproducing apparatus or information recoding and reproducing apparatus when the data area 470 is reproduced.

The contents of data recorded in these regions 471, 472 are such that data before modulation in a common modulation rule described later is obtained as a continuous repetition of "7Eh," and a channel bit pattern actually recorded after modulation is obtained as a repetition pattern of "010001 000100" (a pattern in which 3 continuous "0"s are repeated). In order to obtain this pattern, it is required that the start bytes of the VFO regions 471, 472 are set in a state of State 2 in modulation.

Pre-sync regions 477, 478 represent a boundary position between a VFO area 471, 472 and a data area 470, and a recording channel bit pattern after modulation is obtained as a repetition of "100000100000" (a pattern in which 5 continuous "0"s are repeated). In the information reproducing apparatus or information recording and reproducing apparatus, a pattern change position of a repetition pattern of "100000 100000" in the pre-sync regions 477, 478 is detected from a repetition pattern of "010001 000100" in the VFO regions 471, 472, and it is recognized that the data area 470 is close.

A post-amble area 481 indicates an end position of the data area 470, and represents a start position of the guard area 443. A pattern produced in the post-amble area 481 coincides with that of SY1 in the sync codes shown in FIG. 35.

An extra area 482 is provided as a area used for copy control or illegal copy protection. In particular, where this area is not used for copy control or illegal copy protection, all "0"s are set by a channel bit.

In a buffer area, data before modulation, which is the same as that described in the VFO area 471, 472, is provided as a continuous repetition of "7Eh." A channel bit pattern actually recorded after modulation is provided as a repetition pattern of "010001 000100" (a pattern in which 3 continuous "0"s are repeated). In order to obtain this pattern, it is required that the start bytes of the VFO regions 471, 472 are set in a state of State 2 in modulation.

As shown in FIG. 41, the post-amble area 481 in which a pattern of SY1 is recorded corresponds to the sync code area 433. A area ranging from the immediately following extra area 482 to the pre-sync area 478 corresponds to the sync data 434. In addition, in the present embodiment, a area ranging from the VFO area 471 to a buffer area 475 (i.e., data area 470 and a area including a part of the previous and next guard regions) is referred to as a data segment 490. This data segment 490 indicates the contents different from a physical segment described later. In addition, the data size of each item of data shown in FIG. 41 is expressed in number of bytes of data before modulation.

[Individual points of the present embodiment and description of unique advantageous effect by the individual points]

Point (Q)

Data in accordance with a modulation rule is recorded in a sync data area in a guard area (FIG. 41)

[Advantageous Effect]

In the guard area as well, a sync code similar to sector data and a pattern after modulation can be recorded. Thus, there is no need for providing a specific pattern generator circuit for producing data described in the guard area. The data recorded in the guard area can be produced as a part of modulation processing similar to a sector. Thus, signal reproduction or detection in the guard area can be carried out by a circuit for reproducing the data recorded in the data area 470. As a result, the circuit scale of the information recording and reproducing apparatus or information reproducing apparatus can be simplified.

○  The same sync code as that in a sector is recorded in a post-amble area allocated at the start position in the guard area.

[Advantageous Effect]

The guard area has a structure in which the similar sync code 433 and sync data 434 to those in a sector are combined with each other. This facilitates position detection of the guard area using position detection of the sync code 433 similar to that in the data area, and facilitates search for the start position of an ECC block.

○  An extra area is allocated at the rear of the data area.

[Advantageous Effect]

There is a case in which information recorded in an extra area 482 is used independently and a case in which information recorded in the extra area 482 and information recorded in a reserved area (RSV) are used in combination, as described later. In any case, processing is carried out for information recorded in the immediately preceding data area 470. The data area 477 comprises one ECC block, and carries out processing associated with the information recorded in the extra area 482 in response to information after error correction. Thus, a plurality of errors occur in the data area 470. In the case where error correction cannot be carried out, processing associated with the information recorded in the extra area 482 cannot be carried out. Thus, there is no need for reproducing the information recorded in the extra area 482. Therefore, the extra area 482 is allocated at the rear of the data area 470, it can be determined whether or not reading of the information recorded in the extra area 482 is skipped according to whether error correction in the data area 470 is enabled or disabled. Thus, simplified and faster reproduction processing is achieved.

○  The extra area is allocated immediately after the post-amble area.

[Advantageous Effect]

A sync code is recorded in the post-amble area 481, and thus, position detection of the post-amble area 481 is carried out at a high speed. Thus, in the present embodiment, there is achieved advantageous effect that the extra area 482 is allocated immediately after the post-amble area 481 capable of position detection at a high speed, thereby achieving high speed position detection (search) of the extra area 482.
The present embodiment can adopt the method described below as another example without being limited to a structure shown in FIG. 41. That is, a pre-sync area 477 is allocated in the middle of the VOF regions 471, 472 of FIG. 41 instead of allocating the pre-sync area 477 at the boundary portion of the VOF area 471 and data area 470. In this example, a distance correlation is maximized by increasing a distance between a sync code of SY0 allocated at the start position of the data block 470 and the pre-sync area 477; the pre-sync area 477 is set as a temporary sync area; and the set area is utilized to detect distance correlation information on a real sync position (although it is different from a distance between other syncs). If a real sync code cannot be detected, a sync code is inserted at a position at which a real sync code will be detected from a temporary sync area. In this manner, according to the present embodiment, the pre-sync area 477 is slightly distant from the real sync (SY0). If the pre-sync area 477 is allocated at the beginning of the VFO regions 471, 472, PLL of a read clock is not locked, and thus, a role on pre-sync is weakened. Therefore, it is desirable that the pre-sync area 477 is allocated at the intermediate position of the VFO regions 471, 472.

[4-3] Method for utilizing extra area in second example of read only type information recording medium

FIG. 41 shows an example of defining a recording data block including a guard area as a data segment, and showing its allocation structure. A VFO area 471 is allocated at a head side so that a PLL (Phase Locked Loop) for generation of a channel bit readout clock during demodulation of a modulated recording signal can be easily phase locked. At a read side, there are provided a sync signal of the guard area and the post-amble area 481; the extra area 482 utilized as a data area protection and control signal or the like; and the buffer area 475 which is easily connected to the VFO area allocated in a start side guard area of a data segment to be connected so as to provide a configuration identical to a frame configuration of the data area 470 when a guard area of a data segment 490 is linked.

In a recording process for a recording medium, when data segment recording is started, random shift write is performed to start writing after a recording start position has moved forwardly or backwardly in order to protect a recording film. In a recording process for a write once type recording medium, when data segment recording is started, recording start position shifts. Thus in a guard area, a 93 bytes/frame length is not always guaranteed.

In recording each data segment 490 as described above, data in the extra area 482 is not provided as data protected in a data area, and thus, is provided as a area which is not managed from the outside. Thus, this area 482 can be utilized as a secret information recording and reproducing area for storing a control signal for protecting contents copyright of main data such as video or audio data. However, this area is allocated in a narrow guard area, and thus, protection from an occurrence of a data error due to a defect or the like becomes difficult. Thus, in the present embodiment, data in an extra area allocated in a plurality of data segments specified from a data segment number (ECC block number) is collected, and is used for secret information for copyright protection.

FIG. 42 shows a configuration concerning allocation of a secret information signal allocated in an extra area according to the present embodiment. Here, 4 sets of 4-byte data in an extra area allocated in 4 sets of data segments, and are formed of 8-byte data and 8-byte parities. An error is prevented by allocating these signals to be distributed at four portions.

FIG. 43 shows another example of data configuration in a system in which 4-bit data allocated in an extra area of the guard area is linked with reserved data RSV formed in each data sector in FIG. 26. Each data sector has 6-byte reserved data, and a control data block of (6 bytes $\times$ 32) $\times$ 4 = 768 bytes is formed of 4 sets of data segments. This data can be utilized as data with high reliability because error correction processing is carried out as an ECC block in a data area. However, there is a possibility that this data is externally managed, the data is recorded as secret information allocated in the extra area in FIG. 42 after it has been subjected to encryption processing. By doing this, even if externally open control information reserved data is externally output as long as the data is not decrypted by secret information, information is not utilized. At this time, where reserved data information is defined as an encrypted encryption key of main data, the information cannot be utilized as an encryption key as is, requiring decryption processing using secret information recorded in an extra area. According to the present embodiment, a secret control signal recording and reproducing system having a required secret level can be provided using a small amount of information which is not externally opened.

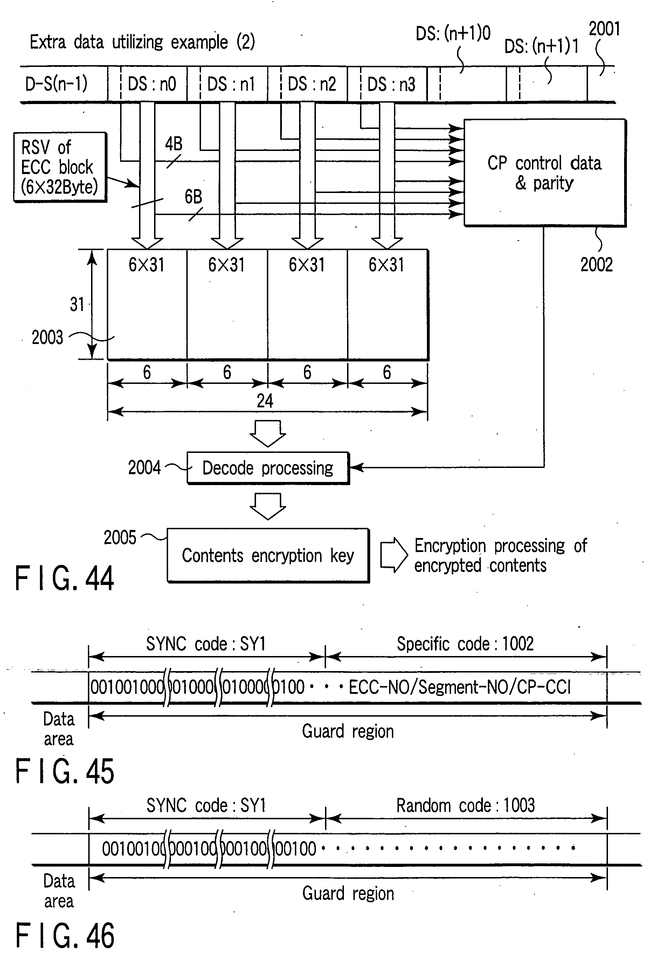

FIG. 44 is a modified example of data structure in the above described extra area. Extra area data of each data segment has 4 bytes. However, in reserved data of a data sector shown in FIG. 26, 6 bytes of a specified sector are added to data of 16 bytes collected in 4 sets of data segments. A secret information data block including an error correction code is defined in 10 bytes $\times$ 4 = 40, and the remaining reserved data is utilized for a copyright protection control signal or the like of main data. Here, as in FIG. 43, where a reserved data area is defined as an encrypted encryption key, a method for producing an encryption key by carrying out decryption using secret information is considered similarly. In this manner, secret information itself is used by linking a part of reserved data recorded in a data sector which can be externally viewed together with data recorded in an extra area, thereby making it possible to prevent weakness if an error occurs by 4 bytes being intensively recorded without loosing stealth capability.

[5] Application example concerning second example in read only type information recording medium (next generation DVD-ROM)

[5-1] Description of structure in which ROM compatible guard area is allocated between ECC blocks

A recording format shown in a second example in a read only type information recording medium according to the present embodiment has a structure in which the guard regions (#1) 441 to (#8) 448 are allocated to be inserted between the ECC blocks (#1) 411 to (#8) 418, as shown in FIG. 41 described above (corresponding to point (C)).

[5-2] Description of specific data structure in ROM compatible guard area in the second embodiment (corresponding to point (H))

In a current ROM medium reproducing operation, first, there is a need for reading out an error correction block including a request data block. Then, a position at which a specified block will exist from a current position is calculated from a block number difference or the like, and a seek operation is started after the position has been predicted. After seeking a predicted specified portion, a readout clock is sampled from information data; channel bit synchronization or detection of a frame sync signal and symbol synchronization are carried out; and symbol data is read out. Then, a block number is detected, and it is determined that a specific block exists. That is, in general ROM medium reproducing, only an RF signal based on an information pit exists as a detection signal, all of disk rotation control or information linear velocity and generation of a channel bit readout clock which is a data readout clock depend on the RF signal. In a recording and reproducing medium, in order to specify a recording portion, address information or the like to be acquired in the present embodiment exists in a signal mode other than recording of data information. Thus, with respect to channel bit clock generation PLL or the like, a linear velocity or the like can be detected by using such a signal, making it possible to control an oscillation frequency of PLL in the vicinity of a channel bit clock frequency. This makes it possible to provide an optimal system capable of preventing runway as well as reducing a lockup time of PLL. However, in a ROM medium, such a signal cannot be utilized, and thus, a similar control system cannot be utilized. Therefore, conventionally, a system has been constructed by utilizing a maximum code length ($T_{max}$) or a minimum code length ($T_{min}$) of an information signal. That is, in a ROM medium, it is important how well PLL can be established in an early locked state, and provision of a signal mode therefor has been desired. However, in a ROM medium in an existing CD or DVD, a data/track'structure is determined referring to only recording density, and thus, data streams different from each other on a medium by medium basis are provided.

While data streams of a recording and reproducing medium such as a ROM medium or R/W RAM medium are made approximate, further, introduction to measures for recording density improvement is discussed in development of a recording system of a next generation medium. As one of this recording density improving technique, there is discussed introduction to a new modulation system in which modulation efficiency is improved, and a minimum pit length ($T_{min}$) with respect to a recording and reproducing beam diameter is reduced. When a minimum pit length is reduced with respect to a beam system, the signal amplitude cannot be obtained. Although data readout is made possible by a PRML technique, it becomes difficult to detect a phase channel bit clock generation PLL for carrying out channel bit separation. As described above, PLL lock easiness in a ROM medium which depends on only a pit signal is severer due to introduction of a technique for achieving high density. Thus, high speed seek operation becomes difficult, and there is a need for inserting an auxiliary signal therefor.

In a recording format shown in the second embodiment in the read only type information recording medium of the present embodiment, as shown in FIG. 41 described above, a ROM medium also has a structure in which the guard regions (#1) 441 to (#8) 448 are allocated to be inserted between the ECC blocks (#1) 411 to (#8) 418. It is an object of the present embodiment to implement control similar to reproduction processing of a recording and reproducing medium by inserting into a guard area a signal required for seeking easiness and lock easiness of channel bit clock generation PLL.

FIG. 45 is a view showing an example of a guard area in a ROM medium. The guard area comprises a sync code SY1 and a specific code 1002. The specific code comprises an error correction ECC block number or a segment number and a copyright protection signal or any other control information signal. The specific code can be utilized to allocate a specific control signal which is not included in a data area. For example, the specific code is provided as a copyright protection signal or a medium specific information signal and the like. System can be expanded by maintaining such a specific information area.

FIG. 46 is a view showing another embodiment. In a specific code area of FIG. 45, a random signal is allocated such that a channel bit clock generation PLL is easily established in a locked state. Conventionally, in a recording medium such as DVD-RAM, a repetition signal of a constant code length (VFO: Variable Frequency Oscillator) has been inserted so that PLL can achieve a locked state easily. In the ROM medium, there is a high possibility that a phase difference detecting technique is employed as a tracking error signal detecting method. In this phase difference detecting technique, if a signal pattern of the adjacent tracks is continuously close to a signal pattern of a target track, there occurs a phenomenon that a tracking error signal cannot be detected due to a cross-talk from the adjacent tracks. Thus, there is a problem in employing a VFO signal formed of a signal with a predetermined period used for a recording medium or the like. On the other hand, in the minimum code length when a PRML system or the like is used to cope with high density, there are a plurality of signals which hardly detects a phase difference in a channel bit clock generation PLL. Of course, there is a need for considering the fact that a large number of phase detections increases detection sensitivity from the viewpoint of phase lock easiness of PLL.

A random code portion in FIG. 46 introduces a random signal according to a combination of restricted code lengths having deleted therefrom a partial code length at the minimum bit side which is unreliable in PLL phase detection and a partial code length at the maximum pit side at which the number of detections is reduced. That is, a random signal using a run length restricted code is utilized.

A specific code in FIG. 45 is considered to be scrambled with a random signal from a random generator where a default value is specified by a segment number. At this time, when scramble data is modulated to a recording signal, it is desirable that a modulation table be changed so as to form a recording signal stream with a restricted run length. By such processing, as with a scramble processing function supported in a data area of a current DVD-ROM, it becomes possible to prevent coincidence of the adjacent track patterns in a specific code area.

[6] Relational description on format between recordable type information recording medium and the above described read only type information recording medium (next generation DVD-ROM)

A relationship on a recording format between a recordable type recording medium and a read only type information recording medium in the present embodiment will be described with reference to FIG. 47. Formats (a), (b) are completely identical to the first and second examples (a), (b) of the read only type information recording medium shown in FIG. 40.

With respect to the recordable information recording medium, like the second example of the read only type information recording medium, a guard area of the same length as the sync frame length 433 is provided from the ECC blocks (#1) 411 to (#8) 418. However, the read only type information recording medium and the guard regions (#2) 452 to (#8) 458 of a write once type information recording medium (c) shown in FIG. 47 are different from each other in pattern of data (recording mark) recorded in the guard area, respectively. Similarly, the guard regions (#2) 442 to (#8) 448 of the read only type information recording medium (b) shown in FIG. 47 and the guard regions (#2) 462 to (#8) 468 of the rewritable type information recording medium are different from each other in pattern of data (recording mark) recorded in a header area, respectively. This makes it possible to discriminate type of information recording medium 221. According to the present embodiment, in any case of a write once type information recording medium and a rewritable type information recording medium, information add and rewrite processing is carried out in units of the ECC block (#1) 411 to (#8) 418.

In addition, according to the present embodiment, in any format of FIG. 47, although not shown, a post-amble area PA (Post-amble) is formed at the start position of each of the guard regions 442 to 468. Further, sync code SY1 of sync code number "1" is allocated at the start position of that post-amble area, as shown in the PA column of FIG. 37.

Although a method for using a guard area of a read only type information recording medium has been described in section [5], the method for utilizing the guard area caused by a difference between the read only type information recording medium and the recordable type information recording medium will be described with reference to formats (b), (c), and (d) shown in FIG. 47. The write once information recording medium shown here serves as a write once type recording medium in which only one recording operation can be carried out. In general, continuous record processing is carried out. However, in the case of recording in a specific block unit, a system of sequentially recording data blocks in a write-once recording system is employed. Thus, in FIG. 47, this system is referred to as a write once type information recording medium.

Before describing a difference between guard structures of media, a description will be given with respect to a difference in data stream between a read only type information recording medium and a recording and reproduction type medium. In the read only type information recording medium, a relationship between a channel bit and symbol data is continuous in a relationship specified in all data blocks including a guard area. However, in the write once information recording medium, at least a channel bit phase changes between blocks in which a recording operation has stopped. In the rewritable type information recording medium, there is a high possibility that a phase changes in units of ECC blocks because rewriting is carried out in units of ECC blocks. That is, in the read only medium, the channel bit phase is continuous from the start to the end. However, in a rewritable medium, the channel bit phase significantly changes in a guard area.

On the other hand, in a recording track of the rewritable medium, a recording track groove is physically formed, and that groove is wobbled for the purpose of recording rate control or address information insertion and the like. Thus, an oscillation frequency of channel bit clock generation PPL can be controlled. In a processing operation such as variable speed reproduction as well, runway of the oscillation frequency can be prevented. However, in the write once type recording medium, the medium obtained after recording has completed is used for read only. Thus, recording signal pattern coincidence between the adjacent tracks should be avoided, which is a consideration where the tracking error detecting method described in section [5] has been introduced as a phase difference system. In the rewritable type information recording medium, no problem occurs with information signal pattern coincidence at the adjacent tracks in the case of a structure in which a phase difference system (DPD: Differential Phase Detection) is not generally utilized as a tracking error detecting technique. It is desirable that a guard area have a structure in which channel clock generation PLL can be easily locked, i.e., a random code area in FIG. 46 be a signal of a predetermined period such as VFO.

Because of such medium type and the presence of different properties, a data structure optimized in consideration of medium properties is introduced into the guard area 442 in a format (b) of FIG. 47, the guard area 452 in a format (c) of FIG. 47, and the guard area 462 in a format (d) of FIG. 47.

In a header area of the read only type information recording medium, linear velocity detection comprises a signal for easily locking channel bit generation PLL due to a pattern and random signal whose linear velocity can be easily detected.

In a header area of the write once information recording medium, at an oscillation frequency of channel bit clock generation PLL, runway is prevented by wobbling detection, and vicinity control can be made. Thus, this header area comprises a signal easily locking channel bit generation PLL due to a random signal in consideration of phase fluctuation in the header area.

In the rewritable type information recording medium, a VFO pattern of a predetermined period can be introduced to ensure PLL lock easiness, and the medium is optimally formed of other header mark signal or the like.

The guard regions are differentiated from each other by types of these information recording media, thereby making it easy to identify media. From a copyright protection system as well, the read only and recordable type media are different from each other, thereby improving protection capability.

[Individual points of the present embodiment and description of unique advantageous effect by the individual points]

Point (H)

Guard area allocation structure between ECC blocks (FIG. 47)

[Advantageous Effect]

The contents of information recorded in a guard area are changed according to medium type while maintaining format compatibility among the read only, write once, and rewritable, making it possible to identify the read only, write once, or rewritable at a high speed and easily.

○ The contents of data are changed among the read only, write once, and rewritable (because they are utilized for identification) (FIG. 45).
○ A random signal is utilized for a DVD-ROM header (FIG. 46).

[Advantageous Effect]

Even if positions are coincident among the adjacent tracks, DPD signal detection can be carried out stably at the DVD-ROM header position.

○ Copy control associated information or illegal copy protection associated information is recorded in an extra area of a guard area (FIGS. 42 to 44).

[Advantageous Effect]

The user cannot utilize a guard area in a write once or rewritable type information recording medium. Therefore, even if disk copy processing for copying information recorded in a read only type information recording medium as is has been carried out, specific information based on medium type is recorded in a guard area in the write once or rewritable type information recording medium. Thus, illegal copy (disk copy) can be prevented by a disk copy by utilizing information' recorded in an extra area.

[7] Description of common technical features in the embodiment of rewritable type information recording medium

[7-1] Description of zone structure

A rewritable type information recording medium according to the present embodiment has a zone structure as shown in FIG. 48.

In the present embodiment, the following settings are provided.

Reproduction linear velocity: 5.6 m/s to 6.0 m/s
(6.0 m/s in system lead-in area)
Channel length: 0.087 microns to 0.093 microns

(0.204 microns in system lead-in area)
Track pitch: 0.34 microns
(0.68 microns in system lead-in area)
Channel frequency: 64.8 MHz
(32.4 MHz in system lead-in area)
Recording data (RF signal): (1, 10) RLL
Wobble carrier frequency: About 700 KHz (937/wobbles)
Modulation phase difference [deg]: ±900.0
Number of zones: 19 zones

[7-2] Description of recording format of address information (wobble modulation using phase modulation plus NRZ system)

In the present embodiment, address information recorded in a rewritable type information recording medium is recorded in advance by using wobble modulation. Phase modulation of ±90 degrees (180 degrees) is used as a wobble modulation system, and an NRZ (Non Return to Zero) method is employed. In addition, according to the present embodiment, a land/groove recording method is used for a rewritable type information recording medium. The wobble modulation is used in the land/groove recording method.

A specific description will be given with reference to FIG. 49. In the present embodiment, a 1 address bit (also referred to as address symbol) area 511 is expressed by 8 wobbles or 12 wobbles, and the frequency and the amplitude and phase are coincident anywhere at the 1 address bit area 511. In addition, where the same address bit values are continuously set, the same phases are continuous at the boundary portion (a portion marked with the filled triangle of FIG. 49) of the each 1 address bit area 511. In the case where an address bit is inverted, wobble pattern inversion (180 degree phase shift) occurs.

[Individual points of the present embodiment and description of unique advantageous effect by the individual points]

Point (O)

In land/groove recording, wobble phase modulation of 180 degrees (±90 degrees) is employed (FIG. 49).

[Advantageous Effect]

In the land/groove recording method and the wobble modulation method, if a groove track number is changed, whereby an uncertain bit is generated on a land, the entire level of a reproduction signal from a recording mark recorded on the land is changed. Thus, there is a problem that an error rate of the reproduction signal from the recording mark is locally impaired. However, as in the present embodiment, wobble modulation for a groove is defined as phase modulation of 180 degrees (±90 degrees), a land width is changed in horizontal symmetry and a sine wave manner at an uncertain bit position on the land. Thus, the entire level change of the reproduction signal from the recording mark is produced in a very normal shape close to the sine wave shape. Further, where tracking is performed in a stable manner, an uncertain bit position on a land can be predicted in advance. Thus according to the present embodiment, correction processing is applied to the reproduction signal from the recording mark by using a circuit, and a structure capable of improving the reproduction signal quality can be achieved.

[7-3] Description of entry of uncertain bit due to land/groove recording method and wobble modulation method

As information indicating an address on an information recording medium 221, a rewritable type information recording medium in the present embodiment has 3 types of address information: zone number information which is zone identification information; segment number information which is segment address information; and track number information indicating track address information. A segment number denotes a number in one cycle, and a track number denotes a number in one zone. In the case where a zone structure shown in FIG. 48 is employed, zone identification information and segment address information recorded in the above described address information has the same value for the adjacent tracks. However, the track address information has different values for the adjacent tracks.

As shown in FIG. 50, assume that "... 0110 ..." is recorded as track address information in a groove area 501, and "... 0010 ..." is recorded as track address information in a groove area 502. In this case, in the adjacent groove regions, in a land area 503 sandwiched between "1" and "0," there occurs a area in which a land width is periodically changed, and an address bit is not identified due to a wobble modulation. In the present embodiment, this area is referred to as an uncertain bit area 504. When a light spot passes through this uncertain bit area 504, a land width is periodically changed. Thus, a total quantity of light reflected from this area 504 and returned through an objective lens (not shown) is periodically changed. A recording mark is formed in the uncertain bit area 504 in the land, and thus, a reproduction signal for this recording mark is periodically fluctuated due to the above described change. Thus, there is a problem that the reproduction signal detection characteristics are degraded (error rate of reproduction signal impaired).

[7-4] Description of contents of gray code and specific track code employed in the present embodiment

A known gray code or the above described gray code is improved for reduction of a frequency of generating the above described uncertain bit area 504. In the present embodiment, a newly proposed specific track code is used (corresponding to point (O)).

FIG. 51 shows a gray code. The gray code is featured in that only 1 bit is changed (alternating binary code is produced) every time "1" is changed in a decimal notation.

FIG. 52 shows a specific track code newly proposed in the present embodiment. This specific track code is changed by only 1 bit every time it is changed by "2" in a decimal notation (track numbers "m" and "m+2" are produced in alternating binary notation). Only the most significant bit is changed between 2n and 2n+1 with respect to integer value "n," and the all other bits are all coincident with each other. Specific track codes in the present embodiment are changed by 1 bit only every time they are changed by "2" in a decimal notation (track numbers "m" and "m+2" are produced in alternating binary notation) without being limited to the above described embodiment. In addition, the scope of the present embodiment is satisfied by setting a code featured in that an address bit is changed while a specific relationship between 2n and 2n+1 is maintained.

[Individual points of the present embodiment and description of unique advantageous effect by the individual points

Point (P)

A gray code or a specific track code is employed for a track address (FIGS. 51 and 52)

[Advantageous Effect]

In land/groove recording plus groove wobble modulation method, the frequency of generating uncertain bits on a land due to a change of a groove track number is suppressed. At an undefined position on the land, a land width is locally changed in the form of horizontal symmetry. As a result, a wobble detection signal cannot be obtained from the uncertain bit position on the land, and the entire level of a reproduction signal from the recording mark recorded on the land is changed. Thus, there is a problem that an error rate of the reproduction signal from the recording mark is locally impaired. In this manner, the frequency of uncertain bit generation on the land is suppressed, whereby the frequency of generating the above described faulty portion is suppressed, making it possible to stabilize reproduction of the wobble detection signal and the reproduction signal from the recording mark.

[8] Description of wobble address format application in rewritable type information recording medium

[8-1] Description of physical segment format

A recording format of address information using wobble modulation in a recordable type information recording medium of the present embodiment will be described with reference to FIG. 53. An address information setting method using wobble modulation according to the present embodiment, the sync frame length 433 shown in FIG. 39 is allocated as a unit. As shown in FIG. 34, 1 sector comprises 26 sync frames. As shown in FIG. 33, 1 ECC block comprises 32 sectors, and 1 ECC block comprises $26 \times 32 = 832$ sync frames. As shown in FIG. 47, the length of the guard regions 462 to 468 existing in the ECC blocks 411 to 418 coincides with that of 1 sync frame length 433. Thus, the length obtained by adding 1 guard area 426 and 1 ECC block 411 comprises $832 + 1 = 833$ sync frames.

Here, a number can be factored into

$$833 = 7 \times 17 \times 7 \qquad (101)$$

and thus, a structure and allocation utilizing this features are provided. That is, as shown in a format (b) of FIG. 53, a area equal to a length of area obtained by adding 1 guard area and 1 ECC block is produced as a basic unit of rewritable data, and the produced data is defined as a data segment 531. As described later, a data segment internal structure in a rewritable type information recording medium and a write once type information recording medium completely coincide with a data segment structure in the read only type information recording medium shown in FIG. 41. A area whose length is equal to a physical length of one data segment 531 is divided into 7 physical segments (#0) 550 to (#6) 556. Wobble address information 610 is recorded in advance in the form of wobble modulation for each of the physical segments (#0) 550 to (#6) 556. As shown in FIG. 53, the boundary position of the data segment 531 does not coincide with that of the physical segment 550, and is shifted by a quantity described later. Further, the physical segments (#0) 550 to (#6) 556 each are divided into 17 wobble data units (WDU: Wobble Data Unit) (#0) 560 to (#16) 576 (format (c) in FIG. 53). From the formula (101), it is evident that 7 sync frames each are allocated to the length of one wobble data unit (#0) 560 to (#16) 576. The wobble data units (#0) 560 to (#16) 576 comprises a modulation area for 16 wobbles and non-modulation regions 590, 591 for 68 wobbles. According to the present embodiment, the occupancy ratio of non-modulation regions 590, 591 to the modulation area is significantly increased. In the non-modulation regions 590, 591, a groove or a land is always wobbled at a predetermined frequency, and thus, PLL (Phase Locked Loop) is applied by utilizing the non-modulation regions 590, 591. A reference clock produced when a recording mark recorded in an information recording medium is reproduced or a recording reference clock used during new recording can be constantly sampled (generated).

In this manner, in the present embodiment, the occupancy ratio of non-modulation regions 590, 591 to the modulation area is significantly increased, thereby making it possible to significantly improve the precision of sampling (producing) a reproduction reference clock or sampling (producing) a recording reference clock and the stability of sampling (production). When a transition from the non-modulation regions 590, 591 to the modulation area occurs, modulation start marks 581, 582 are set by using 4 wobbles. Wobble modulated wobble address regions 586, 587 are allocated so as to come immediately after the modulation start mark 581, 582. In practice, in order to sample wobble address 610, as shown in formats (d), (e) of FIG. 53, the wobble address regions 586, 587 and the wobble sync area 580 excluding the non-modulation regions 590, 591 and the modulation start marks 581, 582 in the wobble segments (#0) 550 to (#6) 556 are collected and reallocated as shown in a format (e) of FIG. 53. In the present embodiment, as shown in FIG. 49, phase modulation of 180 degrees and the NRZ (Non Return to Zero) technique are employed. Thus, address bit (address symbol) "0" or "1" is set according to whether a wobble phase is set to 0 degrees or 180 degrees.

As shown in the format (d) of FIG. 53, in the wobble address regions 586, 587, 3 address bits are set in 12 wobbles. That is, 1 address bit is formed by continuous 4 wobbles. In the present embodiment, as shown in FIG. 49, the NRZ system is employed. Thus, in the wobble address regions 586, 587, no phase change occurs in continuous 4 wobbles. By utilizing this feature, wobble patterns of the wobble sync area 580 and the modulation starts marks 561, 582 each are set. That is, the wobble pattern which is hardly produced in the wobble address regions 586, 587 are set to the wobble sync area 580 and modulation start marks 561, 582, thereby making it easy to identify the allocated positions of the wobble sync area 580 and modulation start marks 561, 582. According to the present embodiment, 1 address bit length is set to a length other than 4 wobbles at the position of the wobble sync area 580 with respect to the wobble address regions 586, 587 forming 1 address bit in continuous 4 wobbles. That is, in the wobble sync area 580, an area in which a wobble bit is "1" is set to 6 wobbles different from 4 wobbles. In addition, all of the modulation area (for 16 wobbles) in 1 wobble data unit (#0) 560 are assigned to the wobble sync area 580, thereby improving detection easiness of the start position of wobble address information 610 (allocated position of the wobble sync area 580).

Wobble address information 610 includes the following:

1. Track information 606, 607

The track information 606, 607 indicate a track number in a zone. The groove track information 606 having a determined address on a groove (an uncertain bit is not included, and thus, an uncertain bit is generated on a land) and the land track information 607 having a determined address on a land (an uncertain bit is not included, and thus, an uncertain bit is generated on a groove) are recorded alternately. In addition, track number information is recorded in portions of the track information 606, 607 in a gray code shown in FIG. 51 or in a specific track code shown in FIG. 52.

2. Segment information 601

This information indicates a segment number in a track (within 1 cycle in information recording medium 221). When segment numbers are counted from "0" as segment address information 601, a pattern of "000000" formed by continuous 6 bits "0" is generated in the segment address information 601. In this case, it becomes difficult to detect a position of a boundary portion (a portion of a filled triangle mark) of the address bit area 511 as shown in FIG. 51, and a bit shift detected by shifting a position of the boundary portion of the address bit area 511 is likely to occur. As a result, incorrect judgment of wobble address information due to a bit shift occurs. In order to avoid the above described problem, according to the present embodiment, segment numbers are counted from "000001."

3. Zone identification information 602

This information indicates a zone number in the information recording medium 221 in which a value of "n" in Zone (n) shown in FIG. 48 is recorded.

4. Parity information 605

This information is set for error detection during reproduction from the wobble address information 610. 17 address bits are individually added from segment information 601 to reservation information 604. In the case where a result of addition is an even number, "0" is set. In the case where the result is an odd number, "1" is set.

6. Unity area 608

As described previously, the each of wobble data units (#0) 560 to (#16) 576 are set so as to be formed of a modulation area for 16 wobbles and non-modulation regions 590, 591 for 68 wobbles. In addition, the occupancy ratio of non-modulation regions 590, 591 to the modulation area is increased significantly. Further, the occupancy ratio of the non-modulation regions 590, 591 is increased, and the precision and stability of sampling (generation) of a reproducing reference clock or a recording reference clock are improved more remarkably. A unity area 608 shown in a format (e) of FIG. 53 is placed in a wobble data unit (#16) 576 shown in a format (c) of FIG, 53 and the immediately preceding wobble data unit (#15) (although not shown). Monotone information 608 sets all of 6 address bits to "0." Therefore, although a wobble data unit (#16) 576 including this monotone information 608 is not shown, modulation start marks 581, 582 are not set in the immediately preceding wobble data unit (#15), and all non-modulation regions of uniform phases are produced.

A data structure shown in FIG. 53 will be described below in detail.

A data segment 531 includes a data area 525 capable of recording data of 77,376 bytes. The length of the data segment 531 is generally 77,469 bytes; and the data segment 531 comprises: a 67 byte VFO area 522; a 4 byte pre-sync area 523; the 77,376 byte data area 525; a 2 byte post-amble area 526; a 4 byte extra area (reservation area) 524; and a 16 byte buffer area field 527. The layout of the data segment 531 is shown in a format (a) of FIG. 53.

Data recorded in a VFO area 522 is set to "7Eh." As a state of modulation, State 2 is set at a first byte of the VFO area 522. A modulation pattern of the VFO area 522 is a repetition of the next pattern.

"010001 000100"

The post-amble area 526 is recorded in the sync code SY1 shown in FIG. 35. The extra area 524 is reserved, and all bits are set to "0b."

Data recorded in the buffer area 527 is set to "7Eh." The state of a first byte in the buffer area 527 depends on a final byte of a reserved area. A modulation pattern in a buffer area other than the first byte is as follows.

"010001 000100"

Data recorded in the data area 525 is referred as a data frame, a scrambled frame, a recording frame, or a physical sector according to a stage of signal processing. A data frame comprises 2,048 byte main data, 4 byte data ID, 2 byte ID error detection code (IED), 6 byte reservation data, and 4 byte error detection code (EDC). EDC scrambled data is added to 2,048 byte main data recorded in a data frame, and then, a scrambled frame is formed. A Cross Reed-Solomon error correction code is assigned over 32 scrambled frames in an ECC block.

A recording frame is provided as a scrambled frame obtained by adding an outer code (PO) and an inner code (PI) after ECC encoding. PO and PI are generated for each ECC block consisting of 32 scrambled frames.

After ETM processing for adding a sync code at the beginning of a recording frame on a 91 bytes-by-91 bytes basis, a recording data area is provided as a recording frame. 32 physical sectors are recorded in one data area.

NPW and IPW in FIGS. 53 and 58 to 62 are recorded in tracks in a waveform shown in FIG. 54. NPW starts fluctuation outwardly of a disk, and IPW starts fluctuation inwardly of a disk. A start point of a physical segment is identical to that of a sync area.

Physical segments are arranged in periodical wobble address position information (WAP: Wobble address in periodic position) modulated in wobbles. Each item of WAP information is indicated by 17 wobble data units (WDU). A length of a physical segment is equal to 17 WDU.

A layout of WAP information is shown in FIG. 55. Each field number indicates a WDU number recorded in a physical segment. A first WDU number recorded in the physical segment is 0.

In the wobble sync area 580, bit synchronization with a start point of the physical segment is obtained.

A segment information area is reserved, and all bits are set to "0b." This area corresponds to the reservation area 604 of FIG. 53. The segment information area 601 indicates a physical segment number on a track. This number indicates a maximum number of the physical segment per track.

The data area and zone information area 602 indicate a zone number. The zone information area is set to 0 in a data lead-in area, and is set to 18 in a data lead-out area.

The parity information area 605 is provided as a parity of a segment information field, a segment area, and a zone area each. The parity information area 605 can detect 1 bit error of these 3 fields, and is formed as follows:

$$b30 \oplus b37 \oplus b36 \oplus b35 \oplus b34 \oplus b33$$
$$\oplus b32 \oplus b31 \oplus b30 \oplus b29 \oplus b28$$
$$\oplus b27 \oplus b26 \oplus b25 \oplus b24 = 1$$

wherein $\oplus$ denotes an exclusive OR operation

A groove track information area 606 indicates a track number in a zone when a physical segment exists in a groove segment, and is recorded in the form of gray code. Each bit in a groove track field is calculated as follows:

$$g_{11} = b_{11} \qquad m=11$$

$$g_m = b_{m+1} \oplus b_m \qquad m=0\sim10$$

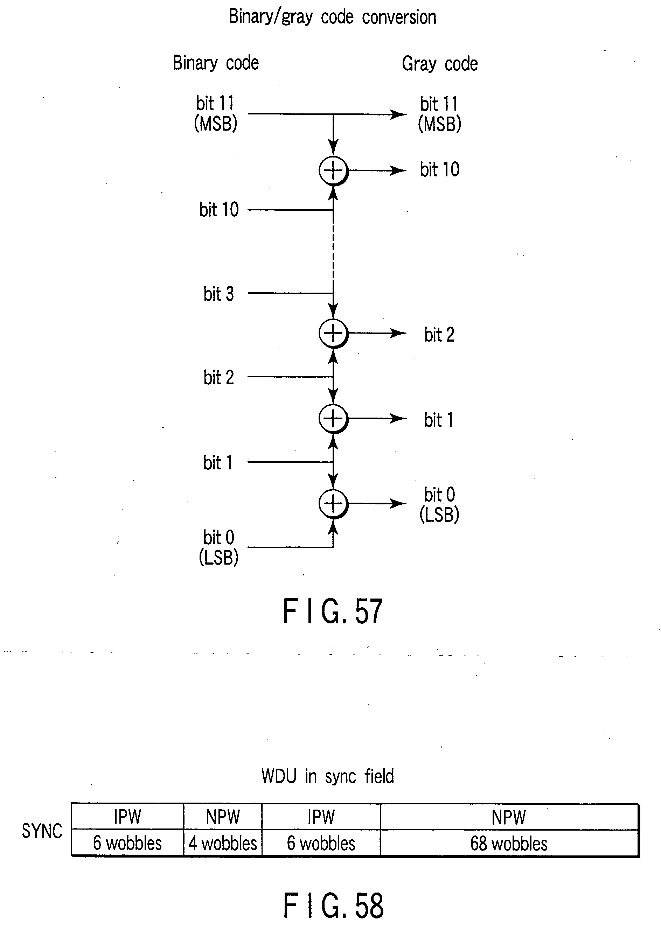

wherein $g_m$ denotes a gray code converted from $b_m$ and $b_{m+1}$ (refer to FIG. 57).

All bits are ignored in a land track field in a land segment.

A land track information area 607 indicates a track number in a zone when a physical segment exists in a land segment, and is recorded in the form of gray code. Each bit in a land track field is calculated as follows.

$$g_{11} = b_{11} \qquad m=11$$

$$g_m = b_{m+1} \oplus b_m \qquad m=0\sim10$$

wherein $g_m$ denotes a gray code converted from $b_m$ and $b_{m+1}$ (refer to FIG. 57).

All bits are ignored in a land track field in a groove segment.

A wobble data unit (WDU) includes 84 wobbles (refer to FIGS. 58 to 62).

The WDU in a sync area is shown in FIG. 58.

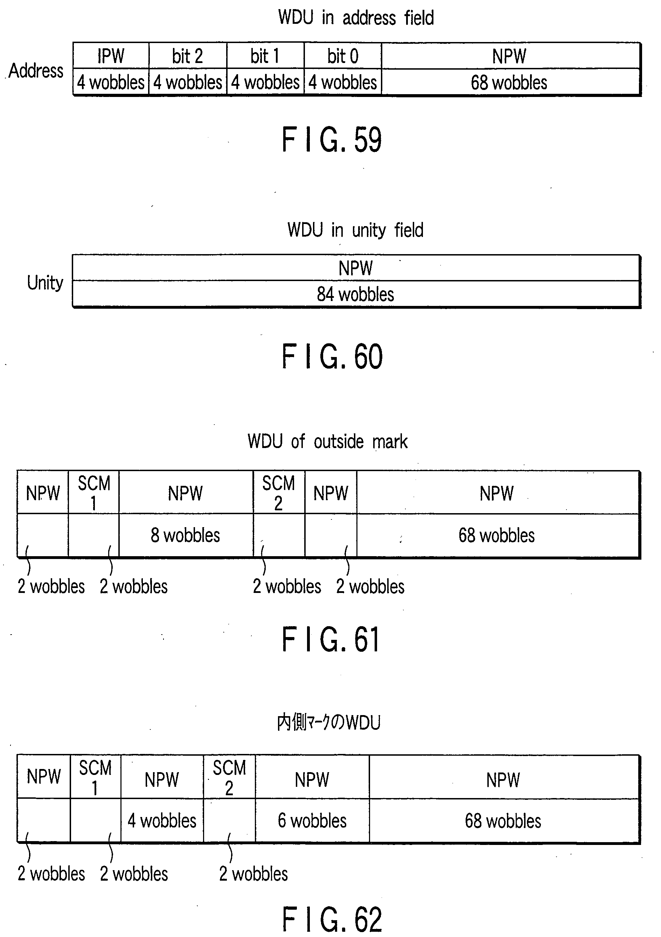

The WDU in an address area is shown in FIG. 59. For 3 bits in the address area, "0b" are recorded in the case of a normal phase wobble NPW (Normal Phase Wobble); and "1b" are recorded where an inversion phase wobble IPW (Invert Phase Wobble).

The WDU in the unity area is shown in FIG. 60. The WDU in the unity area is not modulated.

The WDU of an outside mark is shown in FIG. 61.

The WDU of an inside mark is shown in FIG. 62.

[Individual points of the present embodiment and description of unique advantageous effect by the individual points]

Point (G)

A divisional structure of physical segment in ECC block (FIG. 53)

[Advantageous Effect]

A format compatibility among a read only, a write once type, and a rewritable is high, and in particular, the lowering of error correction capability of a reproduction signal from a recording mark can be prevented in a rewritable type information recording medium.

The number of sectors 32 and the number of segments 7 forming an ECC block are in a relationship such that they cannot be divided with each other (in a non-multiple relationship), and thus, the lowering of error correction capability of a reproduction signal from a recording mark can be prevented.

[Individual points of the present embodiment and description of unique advantageous effect by the individual points]

Point (K)

The occupancy ratio of wobble non-modulation regions 590, 591 is higher than that of wobble modulation regions 580 to 587 (FIGS. 53, 58, and 59).

[Advantageous Effect]

In the present embodiment, wobble frequencies (wobble waveforms) are constant anywhere, and thus, this wobble period is detected to do the following:

(1) Sampling of a reference clock for wobble address information detection (phase alignment with frequency);
(2) Sampling of a reference clock for reproduction signal detection during signal reproduction from a recording mark (phase alignment with frequency); and

(3) Sampling of a recording reference clock when a recording mark is formed in rewritable and write once information storage media (phase alignment with frequency).

In the present embodiment, wobble address information is recorded in advance by using wobble phase modulation. In the case where wobble phase modulation has been carried out, if a reproduction signal is passed through a band pass filter for the purpose of waveform shaping, there occurs a phenomenon that a detection signal waveform amplitude after shaped is reduced before and after phase change positions.

Therefore, there occurs a problem that, if the frequency of phase change points due to phase modulation increases, a waveform amplitude fluctuation becomes large, and the above described clock sampling precision is lowered. Conversely, if the frequency of phase change points in a modulation area decreases, a bit shift during wobble address information detection is likely to occur. Therefore, in the present embodiment, there is advantageous effect that a non-modulation area and a modulation area due to phase modulation are formed, and the occupancy ratio of non-modulation area increases, thereby improving the above described clock sampling precision. In addition, in the present embodiment, a transition position of modulation area and non-modulation area can be predicted in advance. Thus, with regard to the above described clock sampling, a non-modulation area is gated, thereby detecting a signal in only the non-modulation area, and making it possible to carry out the above clock sampling from the detected signal.

○ A modulation area is allocated to be distributed, and the wobble address information 610 is recorded to be distributed (FIGS. 53 and 55).

[Advantageous Effect]

When the wobble address information 610 is intensively recorded in one unit in an information recording medium, it becomes difficult to detect all information when a surface dust or scratch is made. As shown in a format (d) in FIG. 53, in the present embodiment, there is provided a structure in which: the wobble address information 610 is allocated to be distributed on a 3 address bits by 3 address bits (12 wobbles by 12 wobbles) basis contained one of the wobble data units 560 to 576; a predetermined amount of information is recorded for integer multiple address bits of 3 address bits; and even if it is difficult to detect information at one portion due to an effect of dust or scratch, another item of information can be detected.

☆ Wobble sync information 580 comprises 12 wobbles (a format (d) of FIG. 53).

[Advantageous Effect]

The physical length for recording wobble sync information 580 is made coincident with the above described 3 address bit length. In addition, in a wobble address area, 1 address bit is expressed with 4 wobbles, and thus, a wobble pattern change occurs only on a 4 wobble by 4 wobble basis in the wobble address area. By utilizing this phenomenon, in the wobble sync area 580, a wobble pattern change which cannot occur in a wobble address area called 6 wobbles → 4 wobbles → 6 wobbles is generated, thereby improving the detection precision of the wobble sync area 580 which is different from the wobble address regions 586, 587.

☆ 5 address bit zone information 602 and 1 address bit parity information 605 are allocated adjacently to each other (a format (e) of FIG. 53).

[Advantageous Effect]

When 5 address bit zone information 602 and 1 address bit parity information 605 are added, there is provided a structure in which 6 address bits which are multiples of 3 address bits are obtained, and, even in the case it is difficult to detect information at one portion under an effect of dust and scratch, another information can be detected.

☆ A unity area 608 is expressed by 9 address bits (a format (e) of FIG. 53).

[Advantageous Effect]

Multiples of 3 address bits entering a wobble data unit which is identical to the above are obtained.

[Individual points of the present embodiment and description of unique advantageous effect by the individual points]

Point (L)

Address information is recorded by land/groove recording plus wobble modulation (FIG. 50).

[Advantageous Effect]

The largest capacity can be achieved. Recording efficiency caused by forming recording marks on both of a groove and a land is increased more significantly than that caused by forming a recording mark on only a groove. In addition, where an address is recorded in advance in the form of pre-bit, a recording mark cannot be formed at the pre-pit position. However, as in the present embodiment, a recording mark can be recorded to be overlapped on the wobble modulated groove or land area, and thus, an address information recording method using wobble modulation has higher recording efficiency of a recording mark than a pre-pit address system. Therefore, the above described method employing both systems is the most suitable for achieving large capacity.

[Individual points of the present embodiment and description of unique advantageous effect by the individual points]

Point (M)

Uncertain bits are allocated to be distributed on a groove area (track information 606, 607 of a format (e) of FIG. 53 and FIG. 74).

[Advantageous Effect]

A land area includes a area in which no uncertain bit is included and a track address is established, thereby making it possible to carry out address detection with high precision at the land area.
A area in the land and groove area in which no uncertain bit is included and a track address is established can be predicted in advance, thus increasing track address detection precision.

○ A groove width is locally changed during groove generation, and a area having a predetermined land width is produced.

☆ An exposure quantity is locally changed when a groove area is produced, and a groove width is changed.
☆ Two exposure light spots are used when a grove area is produced, an interval between both of these spots is changed, and a groove width is changed.

○ A wobble amplitude width in a groove is changed, and an uncertain bit is allocated in a groove area (FIG. 74).

[Individual points of the present embodiment and description of unique advantageous effect by the individual points]

Point (N)

Uncertain bits are allocated to be distributed to both of a land and a groove by land/groove recording plus wobble modulation (track information 606, 607 of a format (e) of FIG. 53 and FIG. 74).

[Advantageous Effect]

If uncertain bits are intensively allocated to either a land or a groove, the frequency that incorrect detection occurs during address information reproduction at a portion at which uncertain bits have been intensively allocated significantly increases. Uncertain bits are allocated to be distributed in a land and a groove, thereby making it possible to provide a system for distributing a risk and easily detecting address information constantly in total.

○ When a groove width is locally changed, the groove width is controlled so that a land width at the adjacent units becomes constant.

At a groove width change unit, an uncertain bit is obtained in a groove area. However, a width is kept constant in a land area of the adjacent units, thus making it possible to avoid an uncertain bit in the land area.

[8-2] Description of mark allocation structure for servo circuit adjustment

A physical segment for servo calibration mark is adjacent to a final groove track of each zone in which no user data is written, and is allocated in a groove track equal to the final groove track. WDU#14 of the adjacent physical segments at the final groove track of each zone is a WDU of an inner mark. A servo calibration mark is produced by producing a land area in a groove track excluding a part of a groove structure. The configuration of the servo calibration mark is shown below.

High frequency (HF) signal

A high frequency signal is obtained by diffraction light from a servo calibration mark measured from a lead channel 1.

a. Signal from servo calibration mark 1 (SCM1)

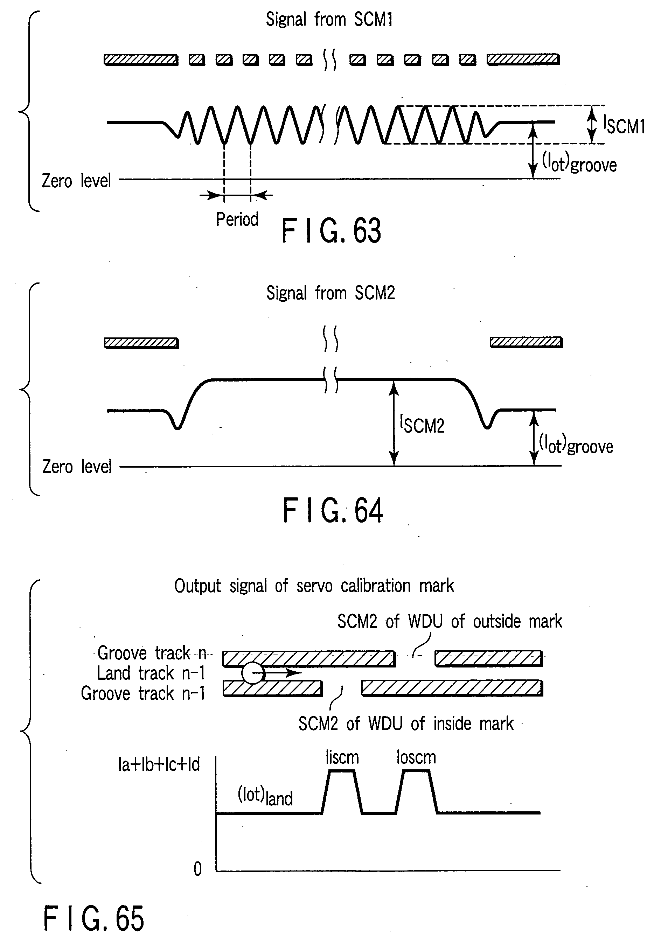

A peak to peak value produced from SCM1 is obtained as ISC1, and an on-track signal is obtained as $(I_{ot})_{groove}$. A zero level is obtained as a level of a signal measured when no disk is inserted. These signals meet the following establish, and are shown in FIG. 63.

$$ISCM1/ (I_{ot})_{groove} : 0.30 \text{ min.}$$

An average period of waveform from SCM1 is obtained as $8T \pm 0.5T$

b. Signal from servo calibration mark 2 (SCM2)

A peak to peak value produced from SCM2 is obtained as ISCM2, and an on-track signal is obtained as $(I_{ot})_{groove}$. A zero level is obtained as a level of a signal measured when no disk is inserted. These signals meet the following relationship, and are shown in FIG. 64.

$$ISC2/ (I_{ot})_{groove} : 1.50 \text{ min.}$$

Shown below is a method for detecting a tilt quantity in a radial direction of an information recording medium using a servo circuit adjustment mark in the present embodiment.

Detecting tilt quantity in radial direction

It is preferable that a recording apparatus compensate a tilt quantity in a radial direction of a disk. The tilt quantity in a radial direction in one rotation is suppressed to be equal to or smaller than an allowable value. The recording apparatus may compensate only a large deviation according to a radial position of a track. A physical segment of land track "n-1" positioned between physical segments of a servo calibration mark is used to detect a tilt quantity in a radial direction.

$$SCD = (I_{iscm} - I_{oscm})/(I_{ot})_{land}$$

Definition: A normalized difference in a position output $(I_a + I_b + I_c + I_d)$ between SCM2 of WDU for outer mark and SCM2 of WDU for inner mark
wherein,

$$I_{iscm} = [I_a + I_b + I_c + I_d]_{iscm}$$

$$I_{oscm} = [I_a + I_b + I_c + I_d]_{oscm}$$

(Refer to FIG. 65.)

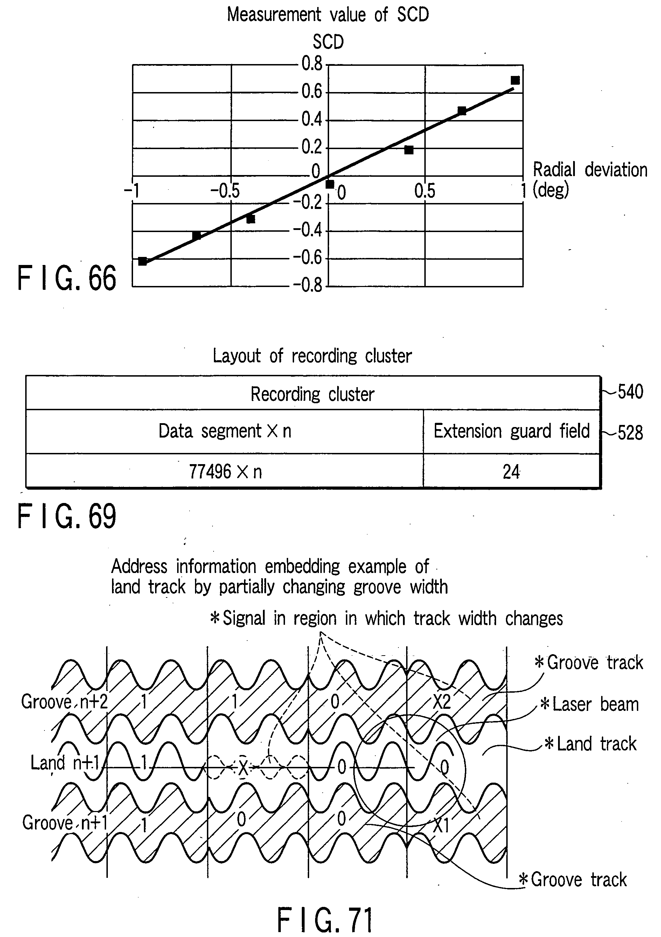

When a light beam traces a center of land track "n-1," $I_{iscm}$, $I_{oscm}$, $(I_{ot})_{land}$ is detected. The derived SCD value is proportional to a tilt quantity in a radial direction. FIG. 66 shows an example of measurement results of SCD values.

An average value of tilt quantity in a radial direction of a position in a radial direction can be obtained by obtaining an average of continuous SCD values in one rotation of land track "n-1."

The SCD value has an offset based on non-symmetry of light beams. Thus, it is preferable that calibration be carried out before measurement.

A residual difference in tracking error affects measurement of an SCD value. However, by maintaining an error in a radial direction, realistic precision of the SCD value can be obtained.

[8-3] Physical segment layout and physical sector layout

A data lead-in area, a data area, and a data lead-out area each have a zone, a track, and a physical segment.

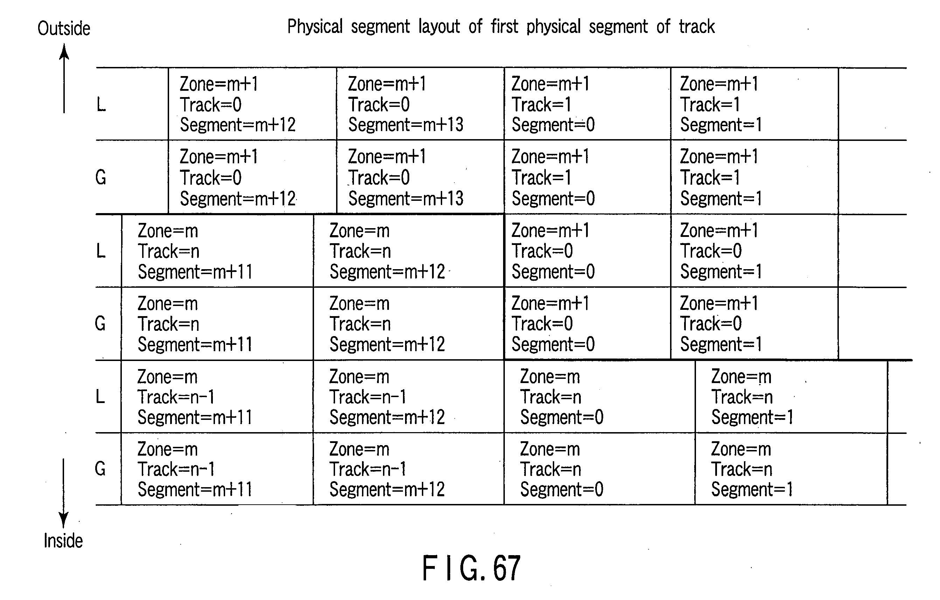

The physical segment is specified by a zone number, a track number, and a physical segment number, as shown in FIG. 67.

The physical segments of the same physical segment numbers are arranged in zones each. An angle difference between first channel bits of physical segments of the adjacent tracks in zones each is within the range of ±4 channel bits.

First physical segments whose physical segment numbers are 0 are arranged between zones. An angle difference between first channel bits of either of two start physical segments in the data lead-in area, data area, and data lead-out area is within the range of ±256 channel bits.

An address of the adjacent land tracks at the boundary of zones cannot be read.

The system lead-in area includes a track which comprises an embossed pit array. A track in the system lead-in area forms a continuous spiral shape of 360 degrees. The center of a track is identical to that of a pit.

A track from the data lead-in area to the data lead-out area forms a continuous spiral shape of 360 degrees.

The data lead-in area, data area, and data lead-out area each include a groove track column and a land track column. 'The groove track is continuous from the start of the data lead-in area to the end of the data lead-out area. The land track is continuous from the start of the data lead-in area to the end of the data lead-out area. The groove track and land track are formed in a continuous spiral shape, respectively. The groove track is formed as a groove, and the land track is not formed as a groove. The groove is formed in a trench shape, and a bottom of the groove is allocated in the vicinity of a read surface as compared with the land.

The disk rotates in the counterclockwise direction seen from its read face. The track is formed in a spiral shape from an inner diameter to an outer diameter.

Tracks in the system lead-in area each are divided into a plurality of data segments. A data segment includes 32 physical sectors. A length of the data segments in the system lead-in area is equal to that of 7 physical segments. Data segments in the system leas-in area each are 77,469 bytes. The data segments each do not include a gap, and are placed in the system lead-in area. The data segments in the system lead-in area are equally allocated on a track so that an interval between a first channel of 1 data segment and a first channel bit of the next data segment is obtained as 929,628 bits.

Tracks in the data lead-in area, data area, and data lead-out area each are divided into a plurality of physical segments. The number of physical segments per track in the data area increases from an inner diameter to an outer diameter so that recording density is constant in any zone. The number of physical segments in the data lead-in area is equal to that of physical segments in zone 18 in the data area. Each physical segment is obtained as 11,067 bytes. Physical segments of the data lead-in area, data area, and data lead-out area are equally allocated on a track so that an interval between a first channel bit of 1 physical segment and a first channel bit of the next physical segment is obtained as 132,804 bits.

The physical sector number is determined so that the physical sector number of the last physical sector in the system lead-in area is obtained as 158,719 ("02 6AFFh").

The physical sector number other than the system lead-in area in a land track is determined so that the physical sector number of the physical sector first allocated in the data area allocated next to the lead-in area is 196,608 ("03 0000h"). The physical sector number increases in the start physical sector in the data lead-in area in the land track to the last physical sector in the data lead-out area. The physical sector number other than that in the system lead-in area in a groove track is determined so that the physical sector number of the physical sector first allocated in the data area allocated to the next of the data lead-in area is obtained as 8,585,216 ("83 0000h"). The physical sector number increases from the start physical sector in the data lead-in area in the groove track to the last physical sector in the data lead-out area.

[8-4] Description of method for recording or rewriting recording data

FIG. 68 shows formats for rewritable recording data recorded in a rewritable type information recording medium. FIG. 68 shows the format (a) identical to those (d) in FIG. 47 described previously. In the present embodiment, rewriting concerning rewritable data is carried out in units of recording clusters 540, 541 shown in formats (b) and (e) of FIG. 68. One recording cluster comprises one or more data segments 529 to 531 and an extended guard area 528 lastly allocated, as described later. That is, a start position of one recording cluster 531 coincides with that of a data segment 531, and the recording cluster starts from a VFO area 522. In the case where a plurality of the data segments 529, 530 are continuously recorded, as shown in formats (b), (c) of FIG. 68, a plurality of the data segments 529, 530 are continuously allocated in the same recording cluster 531. In addition, a buffer area 547 existing at the last of the data segment 529 and a VFO area 532 existing at the beginning of the next data segment are continuously connected to each other. Thus, phases of recording reference clocks during recording between both parties are coincident with each other. When continuous recording has ended, the extended guard area 528 is allocated at the end position of the recording cluster 540. The data size of this extended guard area 528 is equal to a size of 24 data bytes as data before modulation.

As is evident from the formats (a), (c) shown in FIG. 68, a rewritable guard area 461 includes: post-amble regions 546, 536; extra regions 544, 534; buffer regions 547, 537; VFO regions 532, 522; and pre-sync regions 533, 523. An extended guard area 528 is allocated only in a continuous end of recording portion.

As shown in the formats (b), (c), and (d) of FIG. 47, a data allocation structure in which a guard area is inserted between ECC blocks is common in any of the read'only, write once, and rewritable information storage media. In addition, although not shown with respect to the write once type, as shown in FIGS. 41 and 53 (format (a)), a data structure in the data segments 490, 531 is common in any of the read only, write once, and rewritable information storage media. Further, the contents of data recorded in ECC blocks 411, 412 also have a data structure whose format is completely identical irrespective of medium type such as read only type information recording medium (the formats (a), (b) of FIG. 47) or write once information recording medium (the format (c) of FIG. 47), and data of 77,376 data bytes (the number of source data bytes before modulation) can be recorded, respectively. That is, the data contents of rewritable data 525 included in ECC block #2 has a structure shown in FIG. 33. Sector data forming ECC blocks each comprise 26 sync frames, as shown in FIG. 39 or FIG. 34 (data area structure).

For comparison of physical range of rewrite units, FIG. 68 shows a part (c) of a recording cluster 540 which is an information rewriting unit; and a part (d) of a recording cluster 541 which is a next rewriting unit. According to the present embodiment, rewriting is carried out so that the extended guard area 528 and the rear side VFO area 522 are partially overlapped at the overlapped portion 541 during rewriting (corresponding to point (I) of the embodiment). By so partially overlap rewriting, an inter-layer cross-talk in a recordable information recording medium of a single-sided double-recording layer can be eliminated. The recording clusters 540, 541 are located in the data lead-in area, data area, and data lead-out area.

The recording clusters 540, 541 each include one or more data segments 529, 530 and the extended guard area 528 (refer to FIG. 69). A length of the data segments 529, 530 is equal to that of 7 physical segments. The number of recording clusters 540, 541 is one during each recording.

A data segment recorded in a land track does not include a gap. A data segment recorded in a groove segment does not include a gap. The start physical segment of a data segment is expressed by the following formula:

$$\{(\text{number of physical segments per track}) \times (\text{track number}) + (\text{physical segment number})\} \bmod 7 = 0$$

wherein "A mod B" denotes a remainder produced by dividing "A" by "B."

That is, the above formula denotes that recording is started from a multiple position of 7 as a physical segment.

FIG. 69 shows a layout of the recording clusters 540, 541. The number shown in the figure indicate a length of area in bytes.

"n" shown in FIG. 69 is 1 or more.

Data recorded in the extended guard area 528 is obtained as "7Eh," and a modulation pattern of the extended guard area 528 is a repetition of the following pattern.

"010001 000100"

An actual start position of a recording cluster is within the range of ±1 byte with respect to a theoretical start position which is shifted by 24 wobbles from the start position of a physical segment. Theoretical start position starts from that of NPW (refer to FIG. 70).

The start position of a recording cluster is shifted by j/12 bytes from an actual start position in order to make equal an average probability of positions of a mark and a space on a recording layer after several rewriting cycles (refer to FIG. 70).

The number shown in FIG. 70 is a length indicated in units of bytes. $J_m$ changes in random between 0 to 167, and $J_{m+1}$ changes in random between 0 and 167.

As is evident from the format (a) of FIG. 53, a rewritable data size in one data segment in the present embodiment is obtained as:

$$67 + 4 + 77,376 + 2 + 4 + 16$$

$$= 77,469 \text{ data bytes} \tag{102}$$

In addition, as is evident from the formats (c) and (d), one wobble data unit comprises:

$$6 + 4 + 6 + 68 = 84 \text{ wobbles} \tag{103}$$

One physical segment 550 comprises 17 wobble data units, and a length of 7 physical segments 550 to 556 coincides with that of one data segment 531. Thus,

$$84 \times 17 \times 7 = 9996 \text{ wobbles} \tag{104}$$

is allocated in a length of one data segment 531. Therefore, from formulas (102) and (104), the following data bytes correspond to one wobble:

$$77496 / 9996$$

$$= 7.75 \text{ data bytes per wobble} \tag{105}$$

As shown in FIG. 70, an overlapped portion of the next VFO area 522 and extended guard area 528 are located at a distance for 24 wobbles or more from the start position of a physical segment. However, as is evident from the format (d) of FIG. 53, the wobble sync area 580 of 16 wobbles and the non-modulation area 590 of 68 wobbles are allocated from the start of the physical segment 550. Therefore, a portion at which the next VFO area 522 on and after 24 wobbles and the extended guard area 528 overlap each other is allocated in the non-modulation area 590.

A recording film in a rewritable type information recording medium in the present embodiment uses a phase change type recording film. In the phase change recording film, degradation of a recording film starts in the vicinity of a rewriting start and end positions. Thus, if recording start and recording end are repeated at the same position, there occurs a restriction on the rewrite count due to degradation of the recording film. In the present embodiment, in order to solve the above problem, during rewriting, as shown in FIG. 70, $J_{m+1}/12$ data bytes are shifted and a recording start position is shifted in random.

In the formats (c), (d) of FIG. 53, in order to describe a basic concept, a start position of the extended guard area 528 coincides with that of the VFO area 522. However, in the present embodiment, strictly speaking, as shown in FIG. 70, a start position of the VFO area 522 is shifted in random.

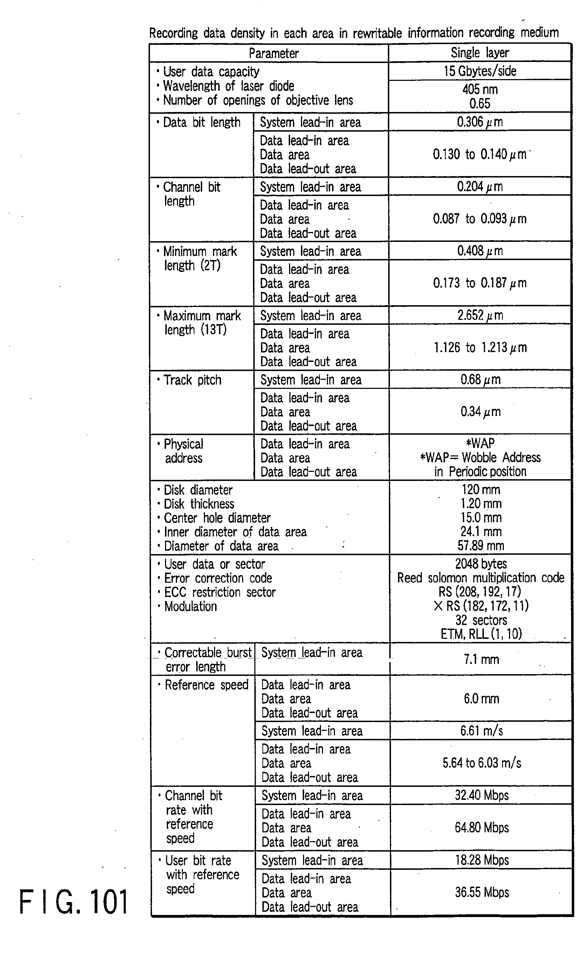

In a DVD-RAM disk which is a current rewritable type information recording medium as well, a phase change type recording film is used as a recording film, and recording start and end positions are shifted in random in order to improve rewrite count. When a random shift in the current DVD-RAM disk is carried out, the range of the maximum shift quantity is set to 8 data bytes. In addition, a channel bit length (of data after modulation recorded in a disk) in the current DVD-RAM disk is set to 0.143 microns on average. In the rewritable type information recording medium of the present embodiment, an average length of channel bits is obtained from FIG. 101 as follows:

$$(0.087 + 0.093)/ 2 = 0.090 \text{ microns} \tag{106}$$

In the case where a length of a physical shift range is applied to the current DVD-RAM disk, the required minimum length of the random shift range in the present embodiment, by utilizing the above value, is obtained as follows:

$$8 \text{ bytes} \times (0.143 \text{ microns}/ 0.093 \text{ microns})$$

$$= 12.7 \text{ bytes} \tag{107}$$

In the present embodiment, in order to ensure easiness of reproduction signal detection processing, a unit of the random shift quantity is applied to a channel bit after modulation. In the present embodiment, ETM modulation (Eight to Twelve modulation) for converting 8 bits to 12 bits is used for modulation. Thus, with data bytes being a reference, formula expression for expressing the random shift quantity is expressed as follows.

$$J_m/ 12 \text{ data bytes} \tag{108}$$

By using the value of formula (107), $J_m$ can obtained as follows:

$$12.7 \times 12 = 152.4 \tag{109}$$

Thus, $J_m$ ranges from 0 to 152. By virtue of the above reason, the length of the random shift range coincides with that of the current DVD-RAM disk as long as it is within the range meeting formula (109). As a result, the rewrite count similar to that of the current DVD-RAM disk can be guaranteed. In the present embodiment, in order to ensure rewrite count equal to or greater than that of the current disk, while a margin is slightly provided to the value of formula (107), the following value is set.

$$\text{Length of random shift range}$$

$$= 14 \text{ data bytes} \tag{110}$$

When the value of formula (110) is substituted into formula (108), $14 \times 12 = 168$ is obtained. Thus, the following value is set.

$$J_m \text{ ranging from: 0 to 167} \tag{111}$$

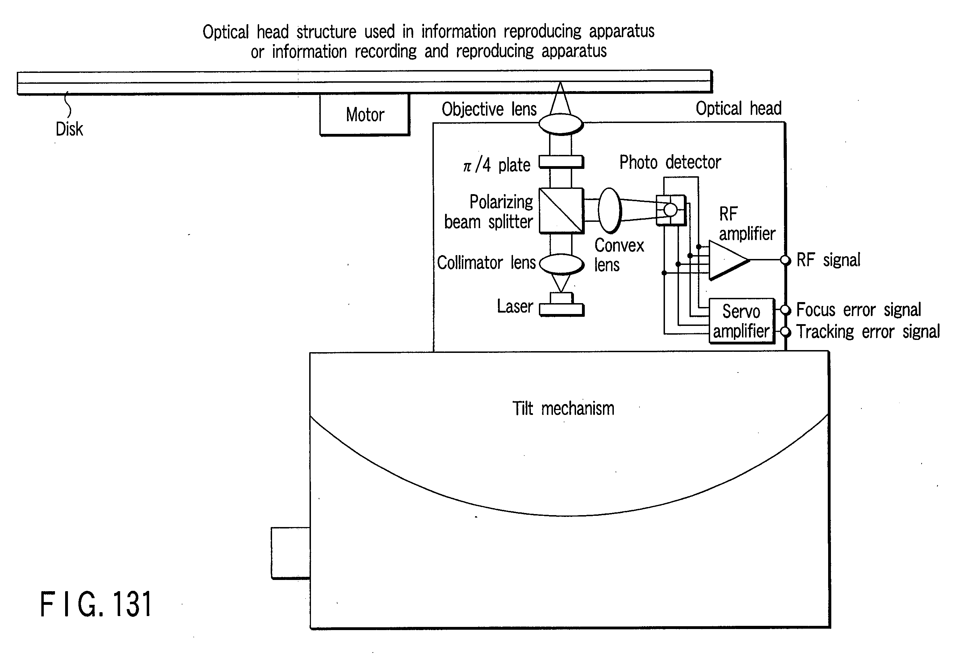

In FIG. 68, the lengths of the buffer area 547 and VFO area 532 are constant in the recording cluster 540. In addition, as is evident from FIG. 69 as well, the random shift quantity $J_m$ of all the data segments 529, 530 is obtained as the same value anywhere in the same recording cluster 540. In the case where one recording cluster 540 including a large amount of data segments therein is continuously recorded, the recording position is monitored from a wobble. That is, while position detection of a wobble sync area 580 shown in FIG. 53 is carried out or the number of wobbles is counted in the non-modulation area 590, 591, checking and recording of the recording position on an information recording medium are carried out at the same time. At this time, in a rare case, a wobble slip (recording at a position shifted by 1 wobble period) occurs due to miscount of wobbles or rotation nonuniformity of a rotary motor rotating an information recording medium (motor of FIG. 131, for example), and the recording position on the information recording medium is shifted.

The information recording medium according to the present embodiment, where a recording position shift produced as described above has been detected, adjustment in a rewritable guard area 461 of FIG. 68 is carried out, and correction of a recording timing is carried out. In FIG. 68, important information for which bit missing or bit overlap cannot be permitted is recorded in a post-amble area 546, an extra area 544, and a pre-sync area 533. However, a specific pattern repetition is obtained in the buffer area 547 and the VFO area 532. Thus, as long as this repetition boundary position is ensured, missing or duplication of only 1 pattern is permitted. Therefore, in the present embodiment, among the guard area 461, adjustment is carried out in the buffer area 547 or VFO area 532 in particular, and correction of a recording timing is carried out.

As shown in FIG. 70, in the present embodiment, an actual start point which is a reference of position setting is set so as to coincide with a position (wobble center) of wobble amplitude "0." However, the wobble position detection precision is low, and thus, in the present embodiment, the following is permitted as "±1 max" in FIG. 70 is described.

Actual start position

$$= \text{shift quantity of a maximum of } \pm 1 \text{ data byte} \qquad (112)$$

In FIGS. 68 and 70, a random shift quantity in a data segment 530 is defined as $J_m$ (the random shift quantities of all data segments 529 are coincident with each other in the recording cluster, as described above), and the random shift quantity of the subsequent data segment 531 to be additionally described is defined as $J_{m+1}$. As a value which can be taken by $J_m$ and $J_{m+1}$ shown in formula (111), for example, an intermediate value is taken $J_m = J_{m+1} = 84$. In the case where actual start point position precision is sufficiently high, as shown in FIG. 68, a start position of an extended guard area 528 coincides with that of the VFO area 522.

In contrast, where the data segment 530 has been recorded at the maximum rear position, and the data segment 531 additionally described or written has been recorded at the maximum front position, the start position of the VFO area 522 may enter a buffer area 537 by a maximum of 15 data bytes from a value explicitly shown in formula (110) and a value of formula (112). Specific important information is recorded in an extra area 534 immediately preceding the buffer area 537. Therefore, in the present embodiment, the following is required:

Length of buffer area 537:

$$\text{15 data bytes or more} \qquad (113)$$

In the embodiment shown in FIG. 68, a data size of the buffer area 537 is set to 16 data bytes in consideration of a margin of 1 data byte.

As a result of a random shift, if a gap exists between the extended guard area 528 and the VFO area 522, where a single-sided double-recording layer structure is employed, there occurs an inter-layer cross-talk during reproduction due to the presence of this gap. Thus, even if a random shift is carried out, contrivance is made such that a part of the extended guard area 528 and VFO area 522 always overlaps, and no gap exists. Therefore, in the present embodiment, by virtue of a reason similar to that stated in formula (113), it is required to set a length of the extended guard area 528 to 15 data bytes or more. The subsequent VFO area 520 is 71 data bytes which are sufficiently long. Thus, even if an overlapped portion of the extended guard area 528 and VFO area 522 is somewhat increased, there is no problem during signal reproduction (because a time for obtaining synchronization of a reproduction reference clock is sufficiently ensured in a non-overlap VFO area 522). Therefore, the extended guard area 528 can be set at a value which is greater than 15 data bytes. A rare case in which a wobble slip occurs during continuous recording, and a recording position is shifted by 1 wobble period has already been described. As shown in formula (105), 1 wobble period is equivalent to 7.75 (about 8) data bytes. Thus, in consideration of this value in formula(113), in the present embodiment, the following value is set.

Length of extended guard area 528

$$= (15 + 8=) \text{ 23 data bytes or more} \qquad (114)$$

In the embodiment shown in FIG. 68, as in the buffer area 537, a length of the extended guard area 528 is set to 24 data bytes in consideration of a margin of 1 data byte.

In the format (e) of FIG. 68, it is required to precisely set a recording start position of a recording cluster 541. In the information recording and reproducing apparatus of the present embodiment, this recording start position is detected by using a wobble signal recorded in advance in a rewritable or write once information recording medium. As is evident from the format (d) of FIG. 53, patterns are changed from NPW to IPW in units of 4 wobbles in all regions other than wobble sync area 580. In contrast, in the wobble sync area 580, a transition position of wobbles is partially shifted from 4 wobbles, and thus, position detection of the wobble sync area 580 is made easiest. Thus, in the information recording and reproducing apparatus of the present embodiment, after a position of the wobble sync area 580 has been detected, preparation for recording processing is carried out, and recording is started. Therefore, a start position of the recording cluster 541 must be in the non-modulation area 590 immediately after the wobble sync area 580.

FIG. 70 shows the contents. The wobble sync area 580 is allocated immediately after a physical segment has been switched. As shown in the format (d) of FIG. 53, a length of the wobble sync area 580 is equivalent to a 16 wobble period. Further, after the wobble sync area 580 has been detected, an 8 wobble period is required in consideration of a margin for preparation for recording processing. Therefore, as shown in FIG. 70, a start position of the VFO area 522 existing at the start position of the recording cluster 541 must be allocated rearward of 24 wobbles or more from a switch position of a physical segment in consideration of a random shift.

As shown in FIG. 68, recording processing is carried out many times at an overlapped portion 541 during rewriting. If rewriting is repeated, the physical shape of a wobble groove or wobble land is changed (degraded), and a wobble reproduction signal quality is lowered because of such change (degradation). In the present embodiment, as shown in the format (f) of FIG. 68 or the formats (a), (d) of FIG. 53, improvement is made so that the overlap portion 541 during rewriting is not within the wobble sync area 580 or wobble address area 586, and is recorded in the non-modulation area 590. In the non-modulation area 590, a predetermined wobble pattern (NPW) is repeated, and thus, even if a wobble reproduction signal quality is partially degraded, interpolation can be carried out by utilizing the forward and backward wobble reproduction signals.

[Individual points of the present embodiment and description of unique advantageous effect by the individual points]

Point (I)

A guard area is recorded to be partially overlapped in a recording format for a recordable information recording medium.

As shown in FIG. 54, the extended guard area 528 and the rear side VFO area 522 are overlapped each other, and an overlapped portion 541 during rewriting occurs (FIGS. 68 and 70).

[Advantageous Effect]

If a gap (a portion at which no recording mark exists) exists between segments or between the rear and front guard areas, a difference in light reflection index occurs due to the presence or absence of a recording mark. Thus, at that gap portion, there occurs a difference in light reflection index when macroscopically seen. Therefore, in the case of a single-sided double-recording layer structure, an information reproduction signal from another layer is distorted due to the gap portion, and an error frequently occurs during reproduction. As in the present embodiment, an occurrence of a gap in which no recording mark exists is prevented by partially overlapping a guard area; an effect of an inter-layer cross-talk can be eliminated from a recorded area in the single-sided double-recording layer; and a stable reproduction signal can be produced.

○ A overlapped portion 541 during rewriting is set so as to be recorded in the non-modulation area 590.

[Advantageous Effect]

A position of an overlapped portion 541 during rewriting is set so as to be within a non-modulation area 590, thus making it possible to prevent degradation of a wobble reproduction signal quality due to shape degradation in a wobble sync area 580 or a wobble address area 586 and to guarantee a stable wobble detection signal from wobble address information 610.

☆ A VFO area in a data segment starts 24th wobbles or more from the beginning of a physical segment.

○ An extended guard area 528 is formed at the last of a recording cluster which is a rewrite unit.

[Advantageous Effect]

An extended guard area 528 is formed at the last of a recording cluster, whereby, in FIG. 68, the front side recording cluster 540 and the rear side recording cluster 541 can be set so as to be always partially overlapped. No gap exists between the front side cluster 540 and the rear-side recording cluster 541. Thus, in a rewritable or write once information recording medium having a single sided double-recording layer, a reproduction signal can be produced in a stable manner from a recording mark without being affected by an inter-layer cross-talk, and reliability during reproduction can be ensured.

☆ Dimensions of the extended guard area 528 are defined as 15 data bytes or more.

[Advantageous Effect]

By virtue of the reason stated in formula (113), no gap exists between recording clusters 540 and 541 due to a random shift, and a reproduction signal from a recording mark can be produced in a stable manner without being affected by an inter-layer cross-talk.

☆ Dimensions of an extended guard area 528 are defined as 24 bytes.

[Advantageous effect]

By virtue of the reason stated in formula (114), no gap exists between the recording clusters 540 and 451 even in consideration of a wobble strip, and a reproduction signal from a recording mark can be produced in a stable manner without being affected by an inter-layer cross talk.

○ A random shift quantity is within the range beyond $J_m/$ 12 ($0 \leqq J_m \leqq 154$).

[Advantageous Effect]

Formula (109) is met, and the length of a physical range with respect to a random shift quantity coincides with that of the current DVD-RAM. Thus, the repetition recording count similar to that of the current DVD-RAM can be guaranteed.

○ The size of a buffer area is set to 15 data bytes or more.

[Advantageous Effect]

By virtue of the reason stated in formula (113), even due to a random shift, data reliability of an extra area 534 is ensured without the extra area 537 in FIG. 54 being overwritten on the adjacent VFO area 522.

[Individual points of the present embodiment and description of unique advantageous effect by the individual points]

Point (U)

A recording cluster representing a rewriting unit comprises one or more data segments (FIGS. 68 and 69).

[Advantageous Effect]

Mixed recording processing is facilitated for storing in the same information recording medium PC data (PC file), a small data amount of which is often written, and AV data (AV file), a large data amount of which is continuously recorded in batch.
With respect to data used for a personal computer, a comparatively small data amount is often written. Therefore, when a rewrite or recording (write once) data unit is set to be extremely small, a recording method suitable to PC data is obtained. In the present embodiment, as shown in FIG. 33, an ECC block comprises 32 sectors. Rewriting or recording (write once) is carried out in units of data segments each including only one ECC block, thereby obtaining a minimum unit for carrying out rewriting or recording (write once) efficiently. Therefore, a structure in the present embodiment in which one or more data segments are included in a recording cluster representing a rewriting unit is obtained as a recording structure suitable to PC data (PC file). With respect to AV (Audio Video) data, a large amount of video information or audio information must be continuously recorded without any intermission. In this case, continuously record data is collectively recorded as one recording cluster. During AV data recording, if a random shift quantity, a structure in a data segment, or a attribute of a data segment and the like is switched for each data segment forming one recording cluster, a time for switching processing increases, and continuous recording processing becomes difficult.
In the present embodiment, as shown in FIG. 69, data segments in the same format (without changing an attribute or a random shift quantity or inserting specific information between data segments) are continuously arranged to configure a recording cluster. In this manner, there can be provided a recording format suitable for AV data recording in which a large amount of data is continuously recorded. In addition, a structure in the recording cluster is simplified; simplifications of a recording controller circuit and a reproduction detector circuit are achieved; and price reduction of an information recording and reproducing apparatus or an information reproducing apparatus can be achieved.
In addition, a data structure in which data segments 529, 530 (excluding an extended guard area 528) in a recording cluster 540 shown in FIG. 68 are continuously arranged is obtained as a structure which is completely identical to that of the read only type information recording medium shown in FIG. 41. Although not shown, in the present embodiment, the same structure is provided for a recording (write once) information recording medium. In this manner, a common data structure is provided in all information storage media irrespective of the read only, write once, or rewritable. Thus, medium compatibility is maintained; a detector circuit of the information recording and reproducing apparatus or information reproducing apparatus whose compatibility has been maintained can be used in a shared manner; high reproduction reliability can be maintained; and price reduction can be achieved.

○ Random shift quantities of all the data segments are coincident with each other in the same recording cluster.

[Advantageous Effect]

In the present embodiment, in the same recording clusters, random shift quantities of all the data segments are coincident with each other. Thus, where reproduction is carried out across different data segments in the same recording clusters, synchronization (phase resetting) in the VFO area 532 (the format (c) of FIG. 68) is eliminated, making it possible to simplify a reproduction detector circuit during continuous reproduction and to maintain high reliability of reproduction detection.

○ Adjustment is carried out in a guard area between ECC blocks, and correction of a recording timing is carried out.

[Advantageous Effect]

In a data structure (c) shown in FIG. 68, data recorded in ECC blocks 410, 411 are targeted for error correction, and basically, missing of only 1 bit data is undesirable.

In contrast, data recorded in a buffer area 547 and VFO area 532 are repetition of the same pattern. Thus, even if partial missing or partial duplication occurs while a break of repetition is maintained, no problem occurs. Therefore, where a recording position shift has been detected during continuous recording, even if adjustment is carried out in a guard area 461 or correction of a recording timing is carried out, it is possible to carry out recording or reproduction control in a stable manner without having an effect on data recorded in the ECC blocks 410, 411.

○ A recording cluster start position is recorded from a non-modulation area immediately after a wobble sync area.

[Advantageous Effect]

In order to start recording immediately after detecting a wobble sync area 580 which is most detectable, stable recording processing can be carried out with high precision of recording start position.

☆ Recording is started from a position shifted by 24 wobbles or more from a switch position of a physical segment.

[Advantageous Effect]

A detection time of a wobble sync area 580 and a preparation time for recording processing can be taken as required, and thus, stable recording processing can be guaranteed.

[8-5] Description of track information recording method and reproducing method (Points (N), (M), and (P))

Now, a description will be given below with respect to some examples of a wobble modulation method concerning groove track information 606 and land track information 607 shown in the format (e) of FIG. 53 and a reproduction method.

In the case where wobble modulation is applied while a groove width is made constant, and address information is embedded, a area in which a track width changes is produced at a part of a land area, and address data at that unit is obtained as an uncertain bit. A level down of a wobble signal occurs, whereby data can be detected by utilizing a portion in which such level down occurs. However, where a plurality of noises are generated, there is a high possibility that reliability drops. By utilizing this phenomenon in reverse, a part of a groove width is changed, thereby enabling groove-wobble modulation processing as if data were recorded in a land track.

FIG. 71 shows a relationship between groove "n+1," land "n+1," and groove "n+2." In wobble modulation of a groove "n+1" track, although address data "... 1, 0, 0, X2, ..." is recorded, a portion of X1 is formed by amplitude modulation in which a groove width is changed so that land "n" is set to "1," and land "n+1" is set to "0" changes.

Similarly, in X2 area of groove "n+2," a groove is formed by amplitude modulation in which a groove width is changed so that land "n+1" is set to "0," and land "n+2" is set to "1." In this manner, by introducing a system for partially changing a groove width, even where address data for a land track opposite to a groove track is different from each other, it is possible to carry out wobble modulation in which requested land data is correctly detected.

In the present embodiment shown in the format (e) of FIG. 53, land and groove address data are allocated in regions of groove track information 606 and land track information 607 whose positions are determined in advance. That is,

◎ A groove width is made coincident with each other anywhere in a area of groove track information 606, and groove side track address information is recorded by wobble modulation using a gray code shown in FIG. 51. A width of a land side is locally changed, and an uncertain bit is allocated on the land side.

◎ A land width is made coincident with each other anywhere in a area of land track information 607, and land side track address information is recorded by wobble modulation using a gray code shown in FIG. 51. A width of a groove side is locally changed, and an uncertain bit is allocated on the groove side.

By doing so,

☆ where tracing is carried out on a groove, groove track information 606 having a track identified therein is reproduced. In addition, as described later, it becomes possible to predict and judge a track number with respect to land track information 607 by utilizing a technique for judging an odd number or even number of track number.

☆ where tracing is carried out on a land, groove track information 607 having a track identified therein is reproduced. In addition, as described later, it becomes possible to predict and judge a track number with respect to groove track information 606 by utilizing a technique for judging an odd number or even number of track number.

In this manner, it is possible to preset in the same track a portion at which groove track address information is determined without including an uncertain bit in a groove area and a portion at which an uncertain bit is included in a groove area, but a groove track address can be predicted and determined by using a technique. In this case, at the same time, a portion at which land track address information is determined without including an uncertain bit in a land area; and a portion at which an uncertain bit is included in a land area, but a land track address can be predicted and determined by using a technique described later, are preset in the same track.

FIG. 72 shows another example when a land address is formed while a groove width is changed. As compared with an address setting method (e) shown in FIG. 53, according to the present embodiment, G synchronizing signal (G-S) for identifying a groove track address position is allocated at the start position of groove track information and land track information, and a track information position can be easily detected. In this case, where opposite land address data are different from each other, a groove width is changed and recorded as if recording were carried out by wobble modulation of a land track. In this processing, it becomes possible to obtain a correct detection signal by address information detection in land track recording and reproduction. In FIG. 72, although groove track address data and land track address data are allocated separately, it is possible to form land and groove address data by the same groove wobbling modulation using a technique for changing the above described groove width.

FIG. 73 is a view showing an example. Land and groove address data can be validated by the same groove wobble when odd number or even number of a land can be identified, as described above. Groove width modulation can be utilized for this odd number or even number identification. That is, there is provided a system for allocating data "0" for an odd number land, data "1" for an even number land, to a next bit of track number of FIG. 73. With respect to a groove track, a track number is determined, and thus, even if a redundant bit is added at the rear of the track number, detection may be ignored. In a land track, after track number detection, an odd number land or an even number land may be determined by whether the bit is set to "0" or "1." In a land track, as a result a track number is determined in a data row including odd number or even number track identification data. Thus, even if no specific odd number or even number track identification mark exists, groove or land address data can be detected. Further, a track width change area produced only in a land track due to the presence of a gray code is produced in a groove track as well; a groove land detection system comprises the same technique, and a system balance can be optimized.

A method for allocating uncertain bits to be distributed includes:

(i) locally changing an exposure quantity with respect to a photo resist coated on a surface of a grooved master disk during reproduction of the master disk;

(ii) providing two beam stops for carrying out exposure to a photo resist coated on a surface of a grooved master disk during production of the master disk; and

(iii) changing a wobble amplitude width in a groove area 502, as shown in FIG. 74.

In an uncertain bit area 710 in a groove area 502, a wall face is linear in shape, and thus, no wobble detection signal is obtained. However, at position ε and position η of the adjacent land regions 503 and 507, the other wall wobbles, and thus, a wobble signal can be obtained. As compared with the method shown in (i) and (ii) described above, groove width fluctuation in an uncertain bit area is small, and thus, level fluctuation of a reproduction signal from a recording mark recorded on the area is small. Therefore, there is advantageous effect that impairment of an error rate of rewritable information is suppressed. As a formatting method where this method is used, there can be provided a structure which is completely identical to that of the format (e) shown in FIG. 53 or that of FIG. 72.

The present embodiment in which an uncertain bit is provided to a groove has been described above. Another embodiment of the present embodiment includes a method for reading track information on a land by using the arrangement order of track information without providing any uncertain bit to a groove.

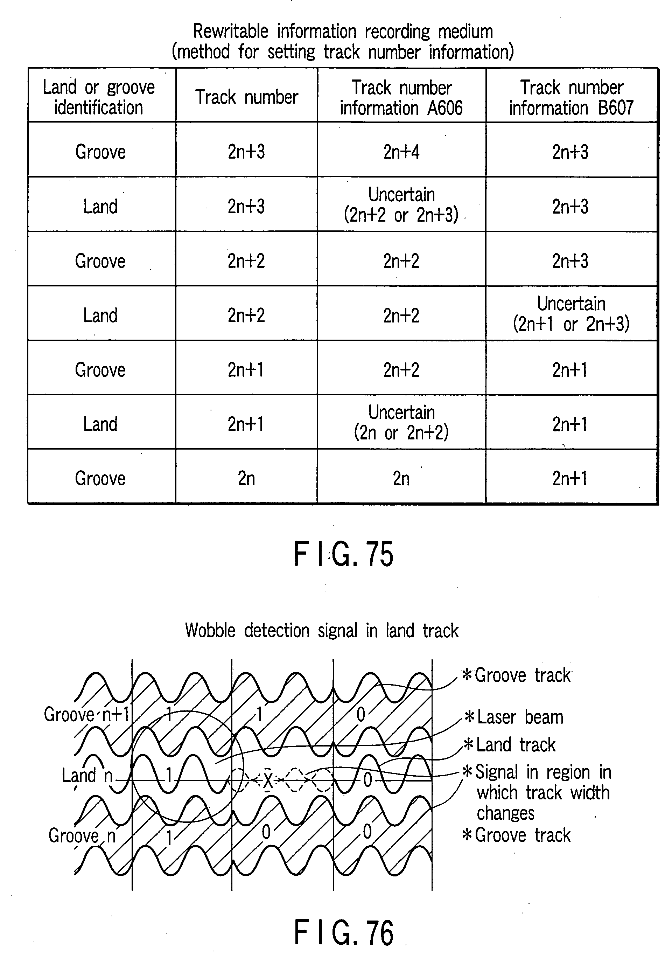

A area of groove track information 606 in the format (e) of FIG. 53 is referred to as track number information A608 in FIG. 75; and a area of land track information 607 in the format (e) of FIG. 53 is referred to as track number information B607 in FIG. 75. With respect to any item of track number information, a specific track code shown in FIG. 52 is employed. The embodiment shown in FIG. 75 is featured in that a track number is set in a groove area in a zigzag manner with respect to track number information A611 and B612. In the adjacent groove regions, a similar track number is set in a land area as well in a portion in which the same track number has been set. Track information can be read even on a land without any uncertain bit. In a portion in which different track numbers are set in the adjacent groove regions, no track number is determined. However, it becomes possible to predict or judge a track number by using a method described later. Features in connection of information shown in FIG. 75 are sampled as follows.

1. On a groove, a smaller value coincides with a track number from among A and B.
2. On a land, track number A is determined in an even number track; and track number B is determined in an odd number track.
3. On a land, track number B is determined in an even number track; and track number is not determined in an odd number track (however, a track number can be predicted and determined by a method described later).
   In addition, according to a specific track code of the present embodiment shown in FIG. 52, the following item can be exemplified.
4. All patterns of the remaining bits other than the most significant bit are coincide with each other if track information on a groove which is obtained after specific track code conversion is an even number track; and patterns of the remaining bits other than the most significant bit vary if track information on a groove which is obtained after specific track code conversion is an odd number track.

Further, another example of a track information setting method is shown here. In this method, a gray code setting method is improved, making it possible to carry out address detection even if an uncertain bit exists.

Conventionally, an addressing system in a land/groove recording track has been formed by an emboss prepit as in a DVD-RAM. Then, there has been proposed a method for embedding address information by utilizing groove track wobbling. There has been a large problem in forming a land track address.

As one idea, in groove wobbling, allocations have been made separately for a groove and for a land. For a land, the adjacent grooves sandwiching a land has been wobbled. Land addressing has been achieved by employing a construction as if land wobbling were carried out.

However, in this method, a track address area which is as twice or more as large as usual is required, which is wasteful. Even when groove address information is defined as a set of address information, if the information can be utilized as land address information, efficient allocation becomes possible. As a method for implementing this allocation, there is proposed a method for utilizing a gray code as track address data.

FIG. 76 illustrates a relationship between a track mode when a groove wobble is phase modulated by using track address data; and a land wobble detection signal.

If address data is detected as a wobble signal in land "n" sandwiched between address data "... 1, 0, 0, ..." of groove "n" and address data "... 1, 1, 0, ..." of groove "n+1," the result is "... 1, x, 0, ...." Here, an "x" portion is provided as a area sandwiched between "0" of groove "n" and "1" of groove "n+1," and a wobble detection signal is obtained as an amplitude 0 signal of a center level. In an actual system, although a current level is lowered than that in another area due to a "track-off" of read beam or imbalance of a detector, there is a high possibility that a signal of a "1" side or a "0" side is detected. In a land area sandwiched between such different groove address data, by utilizing the fact that a detection level is lowered in a land area, that unit is considered to detect a land address signal by referring to an address data position. However, although this method has been applicable where C/N of a wobble detection signal is high, there has been a possibility that reliability cannot be established in the case of a high noise.

Therefore, as a method for reading out address data from a wobble detection signal on a land track, there has been a demand for a method capable of determining correct land address data even if groove wobble data are different from each other, and opposite land wobble detection data is undefined (both of "1" and "0" may be determined.)

Hence, with respect to a land track, there is proposed a system for wobble modulating a groove track address by using gray code data. In addition, there is proposed a system for adding a specific mark and adding a specific identification code by wobble modulation, thereby providing a structure capable of easily judging an odd land and an even land.

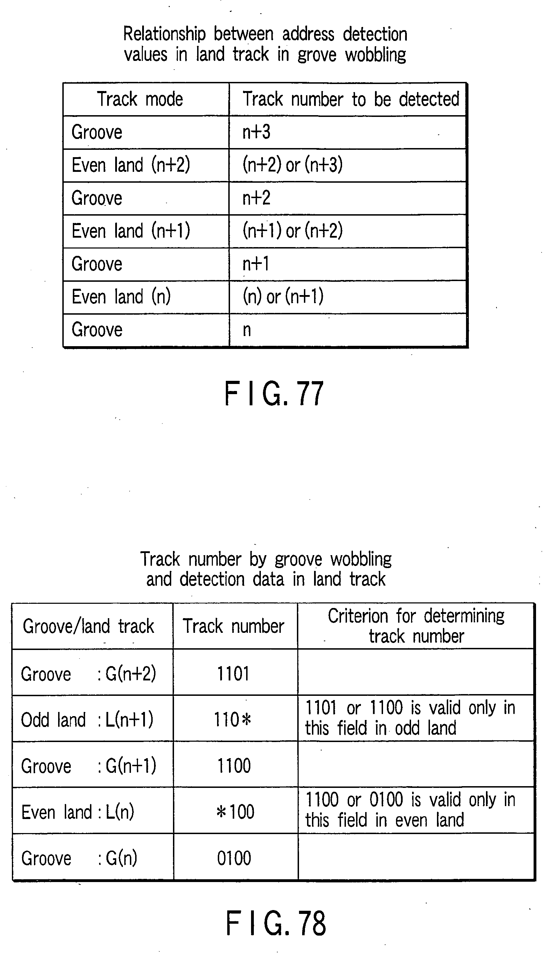

As long as a land track can judge an odd number or an even number, land address data can be easily identified because of gray code properties. A proof of this easiness will be described with reference to FIG. 77.

A gray code is provided as a code composed so that 1-step code change is made only for 1 bit, as shown in FIG. 51. If groove track addressing is carried out with this gray code, a wobble of a land formed of groove wobbles is detected as an undefined code for only 1 bit, as shown in FIG. 76. That is, if address data as shown in FIG. 77 is allocated to a groove track, with respect to a wobble detection signal of a land track opposed to a groove track, only 1 bit is set to "0," "1," or uncertain bit, and the other bits are detected as a value which is equal to that of the adjacent groove wobble signal. The wobble detection signal on even land "n" in FIG. 77 is detected as "n" or "n+1." Similarly, odd land "n+1" is detected as (n+1) or (n+2).

Here, for a land track, if an odd land or an even land is identified in advance, in the case of odd land "n+1," when (n+1) is detected, the corresponding data is obtained as an address value. When (n+2) is detected, the detected value - 19 is obtained as an address value. Similarly, in the case of even land "n," if "n" is detected, the corresponding value is obtained as an address value. If (n+1) is detected, the detected value - 1 is obtained as an address value. In this case, "n" is defined as an even number.

As described above, as long as a land track is determined to be an odd track or an even track, even if the wobble detection value on a land track includes an uncertain bit, a correct address value can be easily determined. In a groove track, a wobble detection signal is obtained as a track address as is.

FIG. 78 illustrates specific contents of detection where a gray code whose track address is set to 4 bits has been allocated. In the case where gray code address data on groove track G(n) is set to "0110," and G(n+1) is set to "1100," even land L(n) which is set to "1100" or "0100" is detected as a wobble signal. In accordance with a concept described in FIG. 77, an even land is obtained, and thus, "0100" is determined as a correct address value.

However, from a detection value described in FIG. 77, even if "0" or "-1" is not corrected, assuming that a land track is first is identified as an odd number or even number, it is considered that two address values are provided respectively. Even if either of "1100" and "0100" is detected on an even land (n) in FIG. 78, this code does not exist on another even land. Thus, address data can be determined by a detected value.

The above contents have the same features with respect to a specific track code shown in FIG. 52.

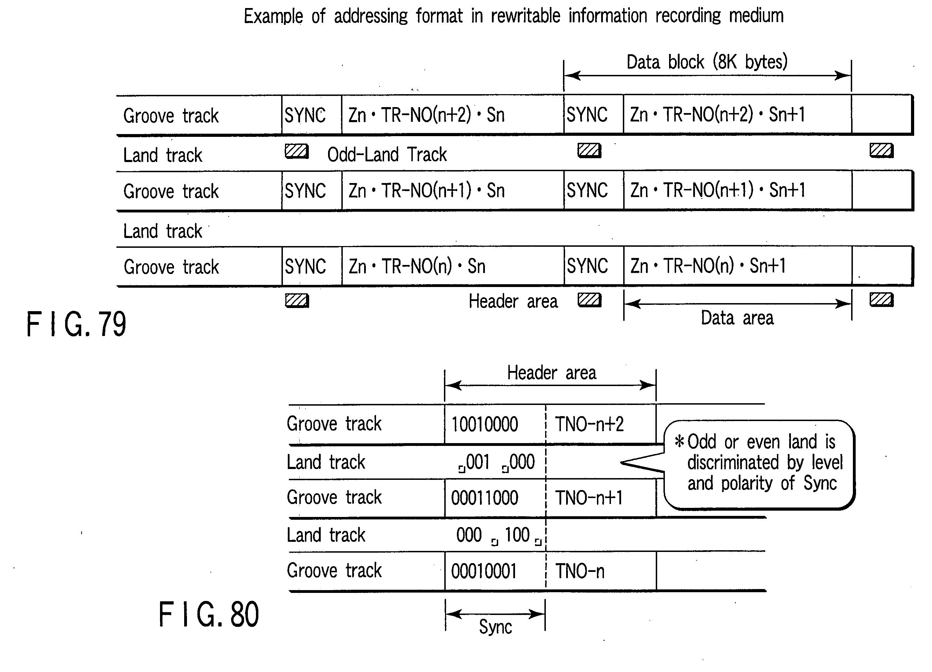

FIG. 79 shows an example of addressing format where a groove track and a land track are used as a recording and reproducing track together on a rewritable type information recording medium. A land odd or even number identification information is allocated to be inserted into a guard area which exists between ECC blocks shown in FIG. 47.

With respect to land odd or even number identification shown in FIGS. 77 and 78, a mark is recorded in a land header area by a pre-pit.

In a groove wobble addressing system according to the present embodiment, odd land or even land identification is important for land address detection, and a variety of methods are proposed as such an identification system.

FIGS. 80 to 83 illustrate such an identification mark system.

In FIG. 80, a specific pattern is provided in groove wobble, and odd or even number land judgment is made by using a positional relationship in level down portion as shown in FIG. 76.

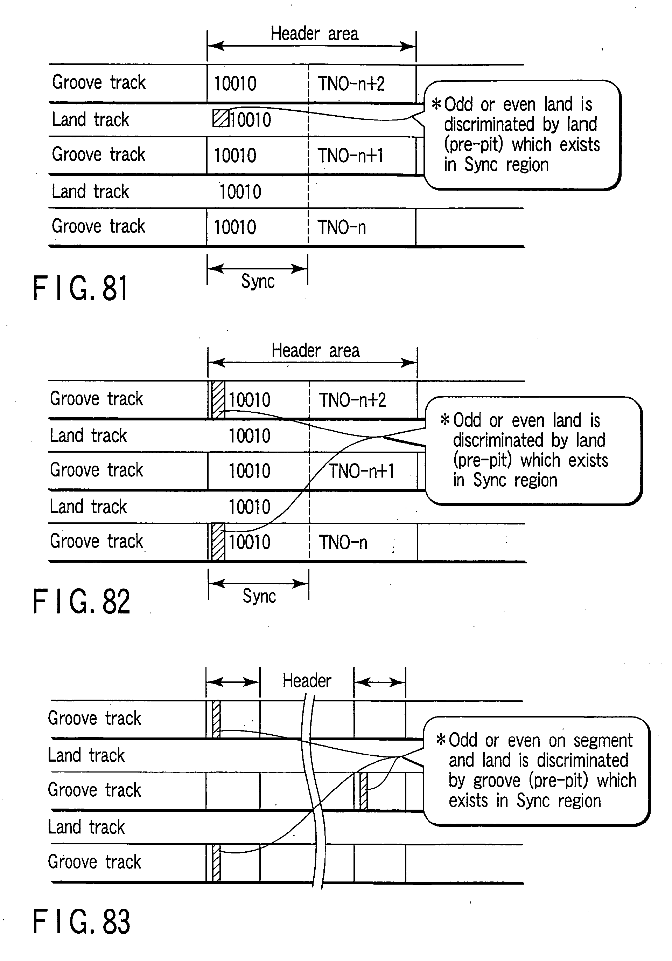

FIG. 81 shows a method for allocating an emboss pre-pit mark in a land header area as in FIG. 79.

FIG. 82 shows a method for placing a physical mark such that a recording track of only a groove track is cut. In land track detection, a physically deformed structure of a groove track is detected as a cross-talk signal, and a mark signal is detected only in one direction of an opposite groove. Thus, directivity is provided, and therefore, odd or even land detection becomes possible.

In FIG. 83, a mark as shown in FIG. 82 is allocated to a header in an odd segment of an odd track and an even segment header of an even track. In this method, a header area identification mark other than wobbling is provided to all tracks, and the above described mark can be utilized for header position detection. In odd or even land judgment, odd or even number information on segment number data recorded by wobbling modulation is utilized altogether, thereby making it possible to carry out odd or even land identification.

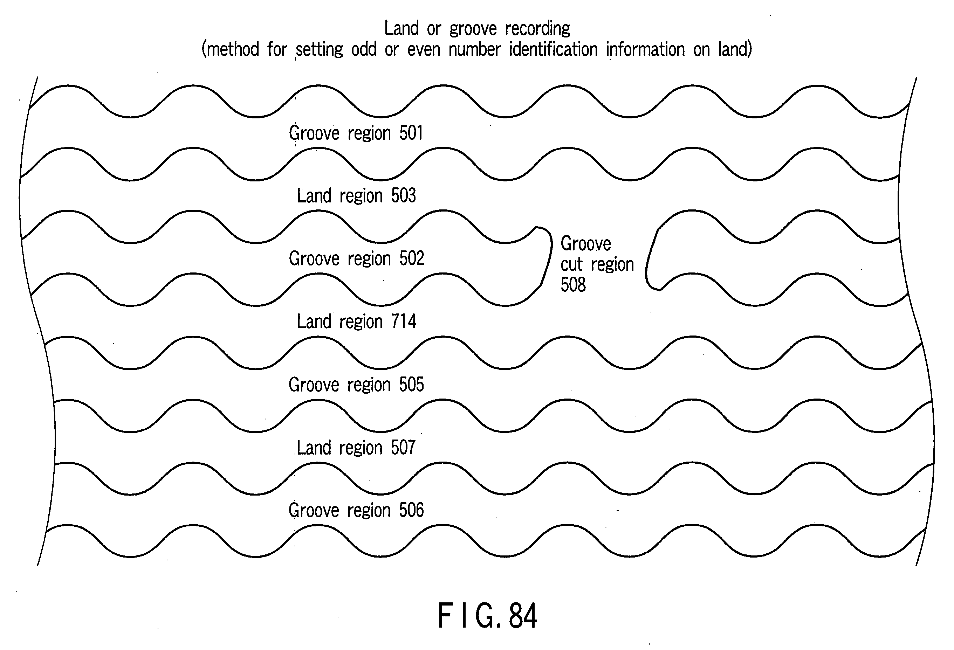

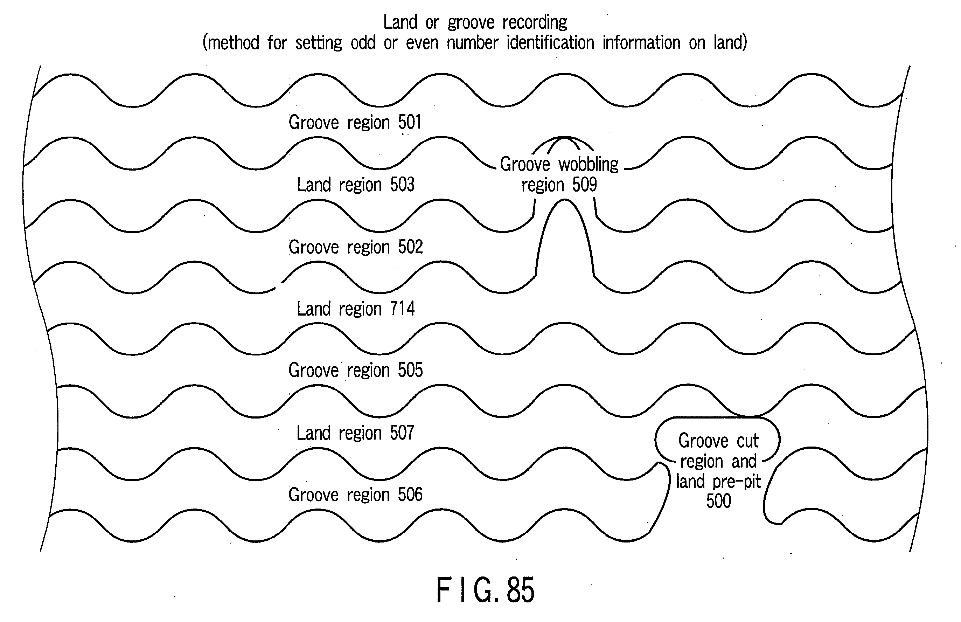

FIGS. 84 and 85 each show another example concerning FIG. 82 or FIG. 83. In the example shown in FIG. 84, a part of a groove area 502 is cut, and a groove cut area 508 is indicated. Although not shown, where a reproduction light spot carries out tracing on land regions 503, 504, a judgment of whether tracing is carried out on an odd or even track on a land can be made by detection a direction in which a track difference signal suddenly changes. FIG. 85 shows another example. As another example of method for forming a groove wobbling area 509 which locally wobbles greatly in a groove area 502, as shown in FIG. 84, a groove is partially cut, and at such a cut portion, there is indicated a groove cut + land pre-pit area 500 for forming a land pre-pit. In any case, judgment of whether tracing is carried out on an even track or odd track on a land in a direction in which a track difference signal changes can be made.

[9] Description of wobble format in the present embodiment of write once information medium

A write once type information recording medium of the present embodiment has the same physical segment structure or data segment structure as that shown in FIG. 53. In a rewritable type information recording medium of the present embodiment, as shown in FIG. 48, a zone structure is provided. In contrast, the write once type information recording medium according to the present embodiment, a CLV (Constant Linear Velocity) structure similar to that of a read only type information recording medium of the present embodiment is provided instead of providing such a zone structure.

[10] Description of data allocation structure of entire information recording medium

[10-1] Description of data allocation structure of information recording medium common to a variety of types of information recording medium (Point (R), (S))

In the present embodiment, it is important to ensure compatibility among information storage media of read only, write once, and rewritable. With respect to a structure of the information recording medium, a common structure in read only, write once, and rewritable is employed at the following items.

(i) A lead-in area, a data area, and a data lead-out area are provided in common.
(ii) The lead-in area is divided into a system lead-in area and a data lead-in area with sandwiching a connection area.
(iii) Any of read only, write once, and rewritable media permit structures of a single layer (single light reflection layer or recording layer) and dual layer (two layers, i.e., a light reflection layer and a recording layer exist in the form that reproduction from a single side can be carried out).
(iv) Dimensions including a total of thickness, inner diameter, and outer diameter of the information recording medium are coincident with each other.

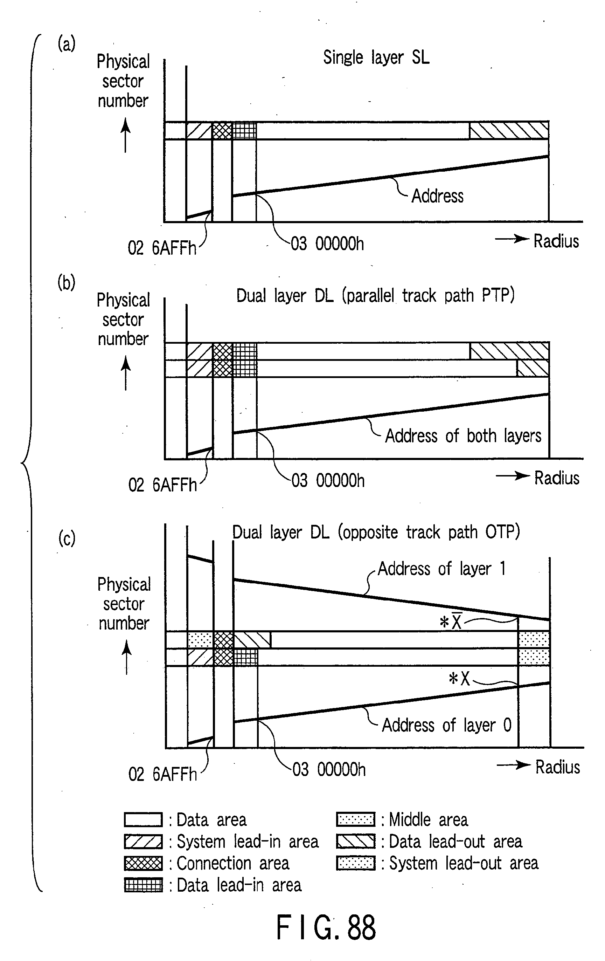

As shown in FIG. 88, only two layers of read only medium (opposite track path) have a system lead-in area.
In the foregoing description, with respect to items (i) and (iv), similar features have been provided in a current DVD as well. In particular, the features of item (ii) will be described according to the present embodiment. A disk internal information area is divided into the following 5 areas according to a disk mode.

- System lead-in area;
- Connection area;
- Data lead-in area;
- Data area; and
- Data lead-out area.

The data area has a track which comprises a line of emboss bits. A track in the system lead-in area is formed in a spiral shape which continuously makes one round at 360 degrees. Tracks of the data lead-in area, data area, and data lead-out area are formed in a spiral shape which continuously makes one round at 360 degrees. A center of track is obtained as a center of pit.
In a current DVD as well, any information recording medium of read only type, write once type, and rewritable type has a lead-in area. In addition, on a rewritable type information recording medium in a current DVD (DVD-RAM disk, DVD-RW disk) and a write once type information recording medium (DVD-R disk), there exists a pit area having fine irregular shapes called an embossed lead-in area.
In either of the above described rewritable type information recording medium and write once type information recording medium, a pit depth in a pit area coincides with a depth of a pre-groove (continuous groove) in a data area. In a current DVD-ROM which is a read only type information recording medium in a current DVD, with respect to this pit depth, $\lambda / (4n)$ is considered to be an optimal depth when a used wavelength is defined as $\lambda$, and a refraction index of the substrate is defined as "n." In a current DVD-RAM which is a rewritable type information recording medium in a current DVD, a condition for minimize a cross-talk (a quantity of noise entry into reproduction signal) from a recording mark of the adjacent tracks in a data area is such that, with respect to a depth of pre-groove, $\lambda / (5n)$ to $\lambda / (6n)$ is considered to be an optimal depth. Therefore, in the current DVD-RAM, the pit depth of an embossed lead-in area is also set to $\lambda / (5n)$ to $\lambda / (6n)$ concurrently. From the depth of $\lambda / (4n)$ or $\lambda / (5n)$ to $\lambda / (6n)$, a reproduction signal having a sufficiently large amplitude is obtained because the depth is sufficiently large. In contrast, in the current DVD-R, the groove depth in the data area is very small, a large reproduction signal amplitude cannot be obtained from a bit in an embossed lead-in area having the same depth. Thus, there has been a problem that stable reproduction cannot be carried out.

Therefore, according to the present embodiment, a system lead-in area is provided in order to guarantee a stable reproduction signal from a lead-in area of an recording (write once) information recording medium while format compatibility with any information recording medium of read only, write once, or rewritable type is maintained; the track pitch and the shortest pit pitch are significantly larger than the track pitch and the shortest pit pitch (shortest mark pitch) in the data area.

In the current DVD, reproduction signal detection (binary coding processing for analog reproduction signal) is carried out by using a level slice technique. In the current DVD as well, the shortest pit pitch of pit having fine irregular shape or the shortest mark pitch of recording mark formed by an optical characteristic change of a recording film is close to a cut-off frequency in OTF (Optical Transfer Function) characteristics of an objective lens used for a reproduction optical head (FIG. 131). Thus, the reproduction signal amplitude from the shortest pit pitch or the shortest mark pitch is significantly reduced. Further, the shortest pit pitch or the shortest mark pitch is narrowed, it becomes impossible to detect a reproduction signal by using the level slice technique. In addition, by virtue of the above described reason, in the current recording (write once) information recording medium (current DVD-R), the shortest pit pitch is narrowed. Thus, there is a problem that a stable reproduction signal from a lead-in area cannot be obtained. In the present embodiment, in order to solve this contradictory problem, the following measures are taken:

[α] The lead-in area is divided into a system lead-in area and a data lead-in area, and the track pitch and the shortest pit pitch of both areas are changed.

[β] In the system lead-in area, the track pitch and the shortest pit pitch are significantly increased, and the lowered quantity of reproduction signal amplitude from the shortest pit pitch with respect to the reproduction signal amplitude from the sparsest pit pitch. In this manner, signal reproduction is facilitated from the shortest pitch, making it possible to carry out signal reproduction from the system lead-in area in the write once information recording medium which is small in pit depth.

[γ] The shortest pit pitch or the shortest mark pitch is narrowed in order to increase the recording density of the data lead-in area, data area, and data lead-out area for the purpose of increasing the storage capacity of an information recording medium itself. In addition, a PRML (Partial Response Maximum Likelihood) technique is employed instead of the current level slice technique in which reproduction signal detection (binary coding from an analog signal) is difficult.

[δ] A modulation system suitable for improving the recording density by narrowing the shortest pit pitch or the shortest mark pitch is employed.

That is, a modulation rule of setting a minimum number for which "0"s after modulation are continuous (value of "d" in (d, k) restriction after modulation) to d = 1 with respect to d = 2 in the current DVD is employed. A combination of these 4 improvements is made.

A PRML (Partial Response and Maximum Likelihood) technique in the present embodiment will be described here.

This processing detects a binary signal from an HF signal. Typically, an equalizer and a Viterbi decoder are needed. The equalizer controls an inter-symbol interference of the HF signal, and fits the HF signal to a partial response channel. In the partial response channel, an impulse response indicates a number of sampling points. This impulse response means linearity and no time change. For example, a transfer function H (z) of PR (1, 2, 2, 2, 1) channel is defined as follows.

$$H(z) = z^{-1} + 2z^{-2} + 2z^{-3} + 2z^{-4} + z^{-5}$$

The Vitervi decoder detects binary data by using a known correlation with the HF signal.

[Individual points of the present embodiment and description of unique advantageous effect by the individual points]

Point (R)

The track pitch and the shortest pit pitch in the system lead-in area is increased (FIG. 68).

[Advantageous Effect]

A system lead-in area is provided to any information recording medium of read only, write once, or rewritable type, thereby providing data structure compatibility among different types of information storage media. Then, low pricing and stabilized performance (improved reliability) of an information reproducing apparatus or an information recording or reproducing apparatus can be achieved by simplifying a control circuit and a control program of the information reproducing apparatus or information recording and reproducing apparatus having a compatibility function of a variety of media.

○ In a system lead-in area, signal reproduction (binary coding) processing is carried out by using the level slice technique (FIG. 138).

○ Medium identification information is recorded in a system lead-in area of an embossed area (FIG. 94).

By the book type and the part version in a control data zone shown in FIG. 94, in the read only type information recording medium in the present embodiment, "0100b" (HD-DVD standard for read only disk) is set; and in a rewritable type information recording medium, "0101b" (HD-DVD standard for a rewritable type disk) is set.

Further, a layer type recorded in a disc structure in a control data zone shown in FIG. 94 describes identification information as read only ($b2 = 0$, $b1 = 0$, $b0 = 1$); write once ($b2 = 0$, $b1 = 1$, $b0 =1$); or rewritable ($b2 = 1$, $b1 = 0$, $b0 = 1$); or recording format where the medium is read only (in the case of the first example (a) shown in FIG. 40, $b3 = 0$, $b2 = 0$, $b1 = 0$, $b0 = 1$, and in the case of the second example (b) shown in FIG. 40, $b3 = 1$, $b2 = 0$, $b1 = 0$, $b0 = 1$)

[Advantageous Effect]

Medium identification information is provided as information required in common for any information recording medium of read only, write once, or rewritable. This information is recorded in a system lead-in area which exists in common in any type of information recording medium, thereby making it possible to maintain compatibility among information recording medium of each type, and to commonly use and simplify a control circuit or control software of an information reproducing apparatus (or information recording and reproducing apparatus) which guarantees compatibility.

○ Identification information indicating the current DVD disk or high density compatible disk of the present embodiment and the linear density and track pitch information are recorded in a system lead-in area, and the linear density and track pitch in a system lead-in area are set to be equal to or smaller than 30% in a difference from the lead-in area of the current DVD (FIG. 94, FIG. 90).

FIG. 86 shows a comparison between dimensions of the read only type information recording medium of the present embodiment described in FIG. 90 and the current DVD-ROM. In the case where a level slice circuit shown in FIG. 138 is used, it is experimentally verified that reproduction can be carried out in a stable manner as long as a change of the longest pit is equal to or smaller than ±30%. As shown in FIG. 86, the scope of the present embodiment includes the allowable upper limit and the allowable lower limit indicated when dimensions in the system lead-in area are in the range of ±30% with respect to the standard value of the current DVD-ROM. That is, the allowable range of dimensions in the system lead-in area in the present embodiment is such that the track'pitch in a single layer disk is 0.52 microns to 0.96 microns, and the shortest pit length is 0.28 microns to 0.52 microns, and the track pitch in the dual layer disk is 9.52 microns to 0.96 microns, and the shortest pit length is 0.31 microns to 0.57 microns.

In addition, in the allowable range of the system lead-in area, the same value is applied to the write once information recording medium and rewritable type information recording medium without being limited to the read only type information recording medium.

[Advantageous Effect]

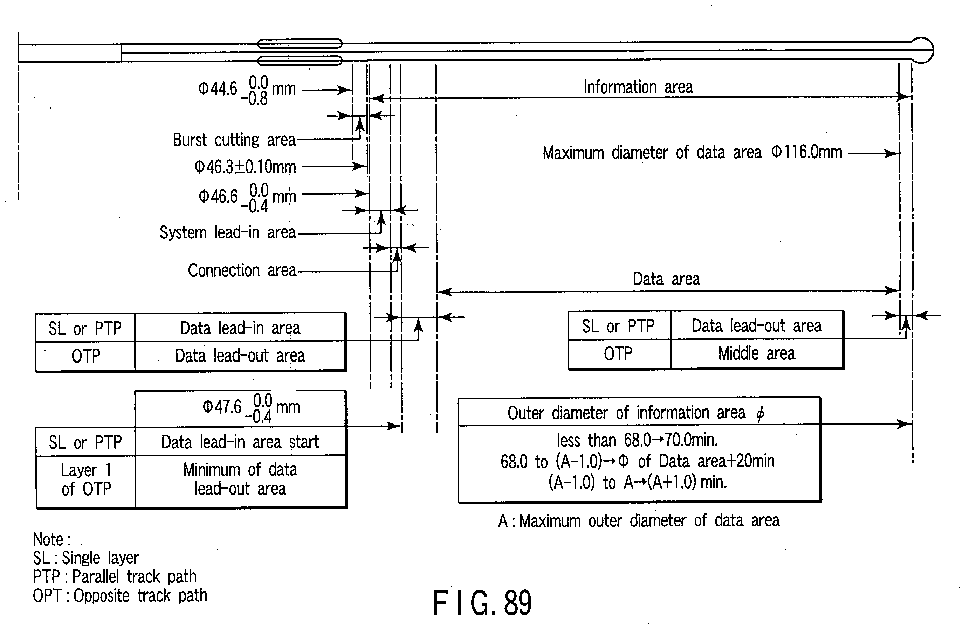

As shown in FIG. 89, the information recording medium according to the present embodiment coincides with the current DVD disk in mechanical dimensions irrespective of read only, write once, or rewritable. Therefore, a user suffers from a danger of:

(a) incorrectly mounting the information recording medium of the present embodiment on the current DVD player or DVD recorder; or

(b) incorrectly mounting the current DVD disk on the information reproducing apparatus or information recording and reproducing apparatus of the present embodiment.

In this case, the track pitch and the shortest embossed pit length of an embossed pit in the system lead-in area are set to a value close to embossed bit dimensions of the lead-in area of the current DVD disk. In this manner, even where a phenomenon of (a) or (b) described above occurs, a new and old medium can be identified in the equipment, and stable countermeasures according to the medium type can be taken.

In the current read only DVD-ROM disk or rewritable DVD-RAM disk, embossed pits are formed in a lead-in area at the inner periphery. However, in the current information reproducing apparatus or current information recording and reproducing apparatus, signal detection from an embossed pit of the lead-in area is carried out by using the level slice technique. The information reproducing apparatus or information recording and reproducing apparatus according to the present embodiment employs a level slice circuit shown in FIG. 138 with respect to the system lead-in area. According to the present embodiment, the same detector circuit shown in FIG. 138 can be used for an embossed pit which exists in the lead-in area of the inner periphery of the current read only DVD-ROM or rewritable DVD-RAM disk. In this manner, the information reproducing apparatus or information recording and reproducing apparatus can be simplified, and low pricing can be achieved. According to experiments, even if the track pitch or the shortest pitch length is changed by ±30%, it is verified that the circuit of FIG. 138 can detect a slice level in stable manner. The existing information reproducing apparatus capable of carrying out reproduction in a data area of the information recording medium of the present embodiment enables information reproduction of the system lead-in area in the information recording medium of the present embodiment by using the incorporated level slice circuit merely by applying slight improvement. Even if the user make incorrect operation of (a) described above, it becomes possible to reproduce information recorded in the system lead area, to carry out medium identification, and to notify it to the user.

[Individual points of the present embodiment and description of unique advantageous effect by the individual points]

Point (S)

If the high density of a recording pit or a recording mark is achieved in order to increase the capacity of an information recording medium, as described above, almost no reproduction signal amplitude is obtained at the densest pit pitch or the densest recording mark pitch from a relationship in OTF characteristics of an objective lens. In the conventional level slice technique, signal reproduction processing cannot be carried out in a stable manner. In the present embodiment, the PRML technique is used for signal reproduction processing, thereby making it possible to achieve high density of the recording pit or recording mark and to achieve high capacity of the information recording medium.

○ In the read only type information recording medium, a reference code zone is allocated in a data lead-in area (FIG. 87).

[Advantageous effect]

As shown in FIG. 87, a reference code zone is allocated in a data lead-in area.

A reference code is used for automatic circuit adjustment in a reproduction circuit shown in FIG. 140 (in particular, settings of tap coefficient values in pre-equalizer or auto circuit adjustment in AGC). That is, in order to reproducing and signal detecting information recorded in a data area in a stable manner, first, automatic circuit adjustment is carried out while the above reference code is reproduced. Therefore, by allocating this reference code in the data lead-in area, it becomes possible to improve automatic adjustment precision of a reproduction circuit while adjusting the track pitch and the shortest pit length in the reference code to the value in the data area.

○ In the rewritable type information recording medium, a connection zone (connection area) is allocated between a data lead-in area and a system lead-in area (FIG. 102, FIG. 108).

[Advantageous Effect]

In the rewritable type information recording medium in the present embodiment, as shown in FIGS. 102 and 108, there is provided a structure such that a connection zone is allocated between a system lead-in area recorded in an embossed pit and a data lead-in area recorded in a write once or rewritable type recording mark; and the connection zone is allocated with a distant between the system lead-in area and the data lead-in area. The rewritable type information recording medium in the present embodiment has a dual recording layer capable of recording and reproduction from only a single side. There occurs a phenomenon called an inter-layer cross-talk that, when reproduction is carried out from one recording medium, the light reflected in the other recording layer enters an optical detector, and reproduction signal characteristics are degraded. In particular, the reflection quantity greatly depends on whether the light reflected in the other recording layer is emitted to the system lead-in area or data lead-in area. Therefore, if the light reflected in the other recording layer alternately accesses the system lead-in area and data lead-in area while one-round tracing is carried out along the recording layer targeted for reproduction due to a difference in relative eccentricity quantity between two recording layers, an effect of the inter-layered cross-talk is increased. In order to avoid this problem, in the present embodiment, there is provided an allocation such that a connection zone is allocated between a system lead-in area recorded by an embossed pit and a data lead-in area recorded by a write once or rewritable type recording mark; a distance between the system lead-in area and the data lead-in area is increased; an effect of the inter-layer cross-talk is reduced; and a stable reproduction signal can be obtained.

[Individual points of the present embodiment and description of unique advantageous effect by the individual points]

Point (T)

A modulation system for setting the minimum continuous repetition count of "0" after modulation to 1 (d = 1) is employed (FIGS. 112 to 130).

[Advantageous Effect]

By employing a modulation rule of d = 1, the shortest pit pitch or the shortest recording mark pitch is narrowed, and high density of the recording pit or recording mark is achieved, making it possible to achieve a large capacity of an information recording medium.
In addition, by employing a modulation rule of d = 1, a window margin (a width of $\Delta T$) is increased as compared with a current DVD modulation system which is d = 2, and the stability and reliability of signal detection during PRML detection is improved.

Point (iii)

A single layer (SL) disk in a parallel track path (PTP mode) and a dual layer (DL) disk each have one information area on a mode-by-mode basis. A dual layer disk in an opposite track path (OTP) mode has one information area over 2 layers. In the dual layer disk in the OPT mode, the information area has a middle area in each layer in order to a readout beam from layer 0 to layer 1. In layer 1 of the dual layer disk in the OTP mode, the information area has a system lead-out area which is adjacent to a connection area. A data area is provided for recording main data. A system lead-in area includes control data and a reference code. A data lead-out area enables continuous smooth readout. A layer is defined in opposite to one readout face. The single layer disk has 1 track for each readout face. On one readout face, the dual layer disk has a track of layer 0 close to a recording face and a track of layer 1 distant from the recording face. The single layer disk and layer 0 of the dual layer disk read out data from the inside to the outside. Layer 1 of the dual layer disk in the PTP mode reads out data from the inside to the outside, while layer 1 of the dual layer disk in the OPT mode reads out data from the outside to the inside. A disk rotates in the counterclockwise direction seen from the readout face. In the single layer disk and layer 0 of the dual layer disk, a track is formed in a spiral shape from the inner diameter to the outer diameter. In layer 1 of the dual layer disk in the PTP mode, a track is formed in a spiral shape from the inner diameter to the outer diameter. In layer 1 of the dual layer disk in the OTP mode, a track is formed in a spiral shape from the outer diameter to the inner diameter. A data segment on a track does not include a gap. The data segments are continuously allocated from the start of the middle area to the end of the lead-out area. In addition, in the system lead-in area, the data segments are continuously allocated from the start of the data lead-in area to the end of the data lead-out area. Alternatively, in a system lead-in area, the data segments are continuously allocated from the start of the data lead-in area to the end of the middle area.

[10-2] Description of data allocation structure in read only type information recording medium (Points (R) an (S)).

FIG. 87 shows a data structure of a lead-in area in a read only type information recording medium. The lead-in area is divided into a system lead-in area and a data lead-in area with sandwiching a connection area. Further, an initial zone and a control data zone exist at the system lead-in area, and a buffer zone is allocated between the respective zones. A physical sector shown in FIG. 87 is the same as that shown in FIG. 40; and the sector number of each sector is recorded in data ID shown in FIG. 26, and coincides with a value of the data frame number shown in FIG. 27. A sector number at the start position of each area is explicitly shown in a right column shown in FIG. 87.
The data allocation contents and data allocation sequence of the initial zone, buffer zone, control data zone, and buffer zone in the system lead-in area shown in FIG. 87 have a common structure in any information recording medium of read only, write once, or rewritable type.
In the system lead-in area shown in FIG. 87, the initial zone includes an embossed data area. Main data in a data frame recorded as a recording data area in the initial zone is set to "00h." The buffer zone includes 32 ECC blocks (1,024 sectors). Main data in a data frame recorded as a physical sector in this zone is set to "00h." The control data zone includes an embossed data area. A data area includes embossed control data. A connection area connects the system lead-in area and the data lead-in area. A distance between a center line of sector "02 6AFFh" which is the end of the system lead-in area and a center line of sector "02 6C00h which is the start of a data lead-in area ranges from 1.4 microns to 20.0 microns (one example). The connection area does not include the number of physical sectors because the number of physical sectors is not allocated. All bits of the data lead-in area excluding a reference code zone are reserved. The reference code zone includes an embossed data segment. A data area includes an embossed reference code. A reference code comprises one ECC block (32 sectors starting from sector number 1965576 ("02FFE0h"). Each sector (2,048 bytes of the main data is defined as follows in accordance with a distribution of the main data.

A sector of 2,048 bytes of main data D0 to D2047 for which data symbols "164" are repeated is generated.

A reference code for 32 sectors is generated as follows by adding scrambled data to sector main data.

Sectors 0 to 15:

Scrambled data having initial preset value "0Eh" is added to sector main data. However, scrambled data is masked for a portion of D0 to D331 of sector 0, and no adding operation is carried out.

Sectors 16 to 31:

Scrambled data having initial preset value "0Eh" is added to sector main data.

A reference code is provided to form 1 ECC block length (32 sectors) of a specific pit pattern on a disk. Therefore, data in a recording frame before modulation is filled with data symbol "164" (= 0A4h) other than ID, EDC, PI, and PO.

Now, a description will be given with respect to how to generate main data from 32 sectors of a reference code. Executing scrambling twice is identical to failure to scramble. Thus, processing for generating a specific data pattern after scrambled is easy. A main data byte of a data frame is filled with a specific pattern of a data byte which has been already added as a scrambled value (pre-scrambled). When these pre-scrambled bytes are normally processed, a recording data area includes all bytes representing a specific pattern.

As long as a pre-scrambled mask is not provided, first sectors D0 to D159 of an ECC block are not pre-scrambled in order to prevent uncontrollable DSV of some PO rows in a block including continuous sets of data with a large DSV which appears immediately before modulation.

FIG. 88 shows a data structure in a read only type information recording medium having a dual layer structure and a method for allocating a sector number.

Each data segment includes 32 physical sectors. Physical sector numbers of a single layer disk or both layers of a dual layer disk in a PTP mode continuously increase in a system lead-in area, and continuously increase from the start of a data lead-in area in each layer to the end of a lead-out area. On the dual layer disk in an OTP mode, the physical sector number of layer 0 continuously increases in a system lead-in area, and continuously increases from the start of a data lead-in area to the end of a middle area. However, the physical sector number of layer 1 has a bit inverted value of the physical sector number of layer 0. This sector number continuously increases from the start of the middle area (outside) to the end of a data lead-out area (inside), and continuously increases from the outside of a system lead-out area to the system lead-in area. A first physical sector number in a data area of layer 1 has a bit inverted value of a final physical sector number of the data area. The bit inverted number is calculated so that a bit value is set to 0, and vice versa.

On a dual layer disk of a parallel track path, a physical sector on each layer of the same sector number is substantially equal in distance from a center of the disk. On a dual disk of an opposite track path, a physical sector on each layer of the bit inverted sector number is substantially equal in distance from a center of the disk.

A physical sector number of the system lead-in area is calculated so that a sector number of a sector positioned at the end of the system lead-in area is set to 158463 "02 6AFFh."

A physical sector number other than that of the system lead-in area is calculated so that a sector number of a sector positioned at the start of a data area after the data lead-in area is set to 196608 "03 0000h" (refer to FIG. 88).

Only a read only dual layer (opposite track path) is featured in that the layer has a system lead-in area.

All main data in a data frame recorded as a physical sector in a middle area is set to "00h."

All main data in a data frame recorded as a physical sector in a data lead-out area is set to "00h."

All main data in a data frame recorded as a physical sector in a system lead-out area is set to "00h."

The above described "00h" indicates data information before modulation. Therefore, in accordance with a modulation rule described later, a channel bit pattern after modulation is recorded in an information recording medium. Thus, a line of pits are allocated everywhere in the data lead-out area or system lead-out area.

FIG. 89 is a view showing relation in dimension among the respective areas in the read only type information recording medium according to the present embodiment.

FIG. 90 shows a comparison chart of recording data density of each area in the read only type information recording medium according to the present embodiment.

According to the present embodiment, in any of track pitch, minimum mark length (minimum pit pitch), maximum mark length (maximum pit pitch), and channel bit length, a value in the system lead-in area is twice as large as any of a data lead-in area, a data area, and a data lead-out area.

[10-3] Contents of information recorded in data lead-in area in read only type information recording medium

In the present embodiment, all types of information recording and reproducing media have a common data structure of a read only information recording and reproducing medium (ROM medium), a write once type information recording and reproducing medium (R medium), and a rewritable information recording and reproducing medium (RAM medium). In this manner, advantageously, a system platform can be used in common for a different recording medium, final products can be easily manufactured; and further, the reliability of products can be improved.

Although the above advantage is attained by such common use of the system platform, some of the functions become unwanted with respect to some of the information recording and reproducing media having different features. Instead of these functions, an efficient utilization method can be adopted because of the characteristics of the corresponding recording and reproducing media.

As an example, a method for utilizing an area deriving from a data structure of a lead-in area is newly proposed as an efficient utilization method because of an information recording and reproducing medium.

A lead-in area in a recording medium such as R medium or RAM medium includes: a read only system lead-in area formed of an embossed pit; and a data lead-in area for data recording and reproduction utilized for disk or drive testing, defect management and the like. However, a read only ROM medium does not require a function of the data lead-in area of a recording system.

FIG. 87 is an exemplary structural view showing a lead-in area of a read only ROM medium. In FIG. 65, in the system lead-in area, where a groove recording system is employed in an R medium, it is required to reduce a groove depth because of a relationship in RF signal characteristics during servo signal detection and recording signal readout. Thus, signal reading characteristics using an embossed pit becomes severe. If an attempt is made to use media in common, it is required to lower recording density in accordance with an R medium.

Therefore, in the recording mode identical to that of the data area, a data lead-in area signal will suffice. From this fact, in a ROM medium, a reference code serving as a reference signal of the data area is allocated in the data lead-in area. However, a large amount of capacity can be utilized from an area range, and a function specific to the ROM medium can be allocated.

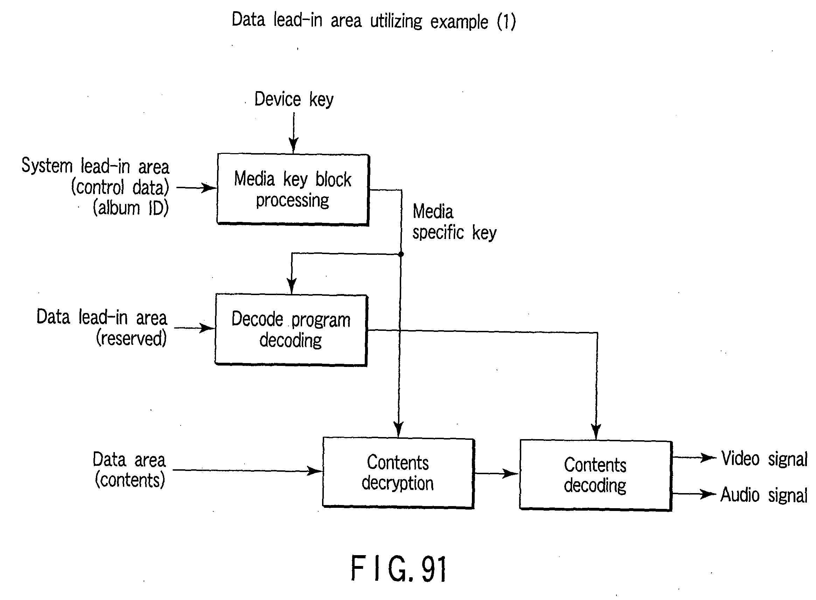

The ROM medium can be mass produced, and is excellent as a method for distributing information. In an encoding system in a compression system of data structure or video and audio of these items of information, there is a possibility that a system different from that during standardization of a physical system is proposed and utilized. That is, in a physical standard for data structure of an information recording medium, it is desired that a data storage portion be defined, and its utilization mode have flexibility. On the other hand, from the viewpoint of productivity easiness due to standardization, it is desired that such recording media be available for many users. Because of this, there is proposed a method in which a decoding system for final signal reproduction processing such as contents is recorded together with encoded contents; and in a decoder system, a decoding program is read out, and then, the encoded contents are utilized after decoded by a decoder method shown there. FIG. 91 illustrates a proposed system in which a storage area of this decoding program is applied to the data lead-in area.

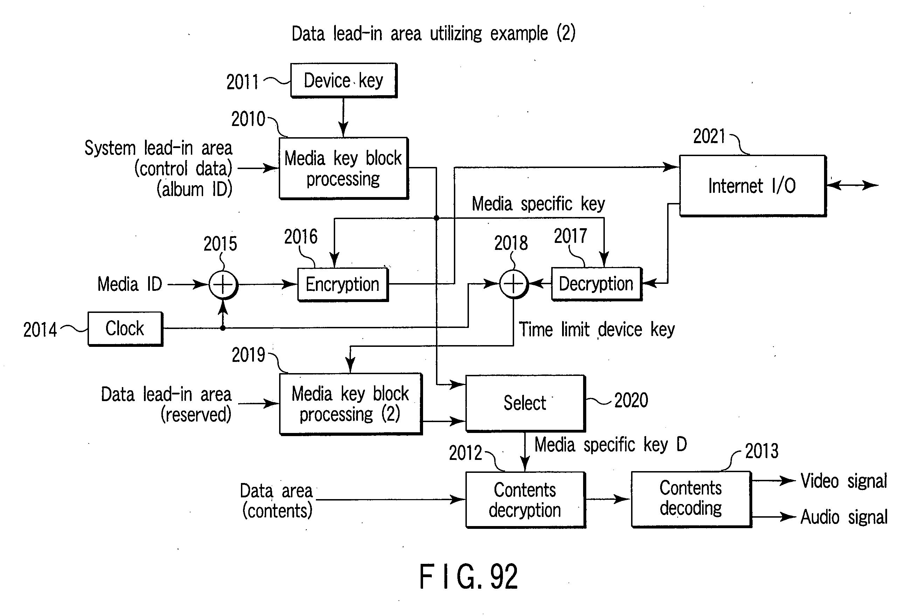

FIG. 92 is a view showing a new proposal of another method for utilizing a data lead-in area. In a next generation ROM medium, high image quality HD video compatibility is important. In this medium, in a copyright protection system, there is a need for providing a system in which illegal action is more difficult. Among them, in a region system in a current DVD, there is a need for providing a system suitable to an essential purpose of region control. That is, contents'providing time control may be possible according to the provider's intention for providing contents. Unlike a current system, ideally, a system can reproduce a region controlled medium when a time limit has elapsed without controlling a sales time. As one example of such a corresponding method, utilization of a data lead-in area is exemplified.

A system shown in FIG. 92 will be described here.

In processing of reproducing encoded contents, first, an encryption key is extracted, encoded contents are decoded, and final video, audio, and character signals are reproduced by an AV decoder board or the like. When such reproduction processing is carried out, first, a media key block MKB, album ID and the like are read out from control data in the system lead-in area, and a media specific key is extracted by using a device key 201 at a media key block processor unit 2010. The media specific key decodes encoded contents in a data area at a contents decoding unit 2012, and reproduces contents data. The contents data are fed to a contents decoder 2013 which is an AV decoder board, a base band signal such as video or audio is reproduced, and the reproduced base band signal is fed to a display device.

At this time, where a region controlled medium expires a time at which it may be set free, clock (date and time) information in drive is linked with media ID assigned to a medium or associated identification code by means of an adder 2015; the resultant information is encoded by the media specific key using an encryption unit 2016; and the encrypted information is transferred to an externally organized management organization via Internet. From the management organization, encrypted information which is a base of a device key with time limit is sent. Thus, decryption is carried out by a decryption unit 2017 using the media specific key, and clock data is added by an adder 2018 to generate a time limit device key. Then, a media key block 2 is read out by using a reserved area in the data lead-in area, and a media specific key D capable of decrypting encrypted contents is detected by the time limit device key. As a result, region controlled encrypted contents can be decrypted. In the management organization, where permission for decrypting encrypted contents from media ID information or the like, for example, where the time is too early, the information is sent back, and a user must wait for medium reproduction until the permission enable time has expired. Essentially, such a system is not required if it is verified that a clock placed in drive is illegally utilized. However, because a generally placed clock can be easily time changed (because a time setting system must be incorporated), time control closed in drive is difficult. Therefore, the above-described system is required.

A clock is not required if it is incorporated in a system like a radio clock. Thus, there is no need for externally acquiring time limit control information in Internet shown on FIG. 92. There may be used a method for generating the time limit device key by using the media specific key and clock information and extracting the media specific key D by the media key block 2.

[10-4] Information recorded in control data zone

FIG. 93 shows data allocation in the control data zone shown in FIG. 87. The allocation shown in FIG. 93 has a common structure with respect to any information recording medium of read only, write once, and rewritable type. FIG. 94 shows contents of information described in physical format information shown in FIG. 93 in a read only type information recording medium. The information described in physical format information in the information recording medium according to the present embodiment includes common information from 0-th byte (book type and part version) shown in FIG. 94 to a 16th byte (BCA descriptor) in any of read only, write once, and rewritable type. Text or code data written in disk manufacture information is ignored when the medium is exchanged.

In FIG. 94, BP 0 to BP 31 include common data used for a DVD family, and BP 32 to BP 2047 are used for information unique to each block.

Functions of each byte position are described as follows.

(BP 0) Book type and part version (refer to FIG. 95)

Book type

0100b    HD-DVD standard for read only disk

These bits are allocated to define DVD book issued by a DVD forum. The bits are allocated in accordance with the following rule.

0000b    DVD standard for read only disk
0001b    DVD standard for rewritable disk (DVD-RAM)
0010b    DVD standard for write once disk (DVD-R)
0011b    DVD standard for recordable disk (DVD-RW)
0100b    DH-DVD standard for read only disk
0101b    HD-DVD standard for rewritable disk
Other    Reserved

Part version:

0000b    Version 0.9 (Version 0.9 is provided for test use only, and is not applied to general products)

0001b    Version 1.0
0100b    Version 1.9 (Version 1.0 is provided for test use, and is not applied to general products)
0101b    Version 2.0
Other    Reserved

(BP 1) Disk size and maximum transfer rate of disk (refer to FIG. 96)

Disk size:

0000b    12 cm disk

These bits are allocated in accordance with the following rule.

0000b    12 cm disk
0001b    8 cm disk
Other    Reserved

Maximum transfer rate of disk

0100b    TBD (to be determined later) Mbps

These bits are allocated in accordance with the following rule.

0000b    2.25 Mbps
0001b    5.04 Mbps
0010b    10.08 Mbps
0100b    TBD (to be determined later) Mbps
1111b    Not specified
Other    Reserved

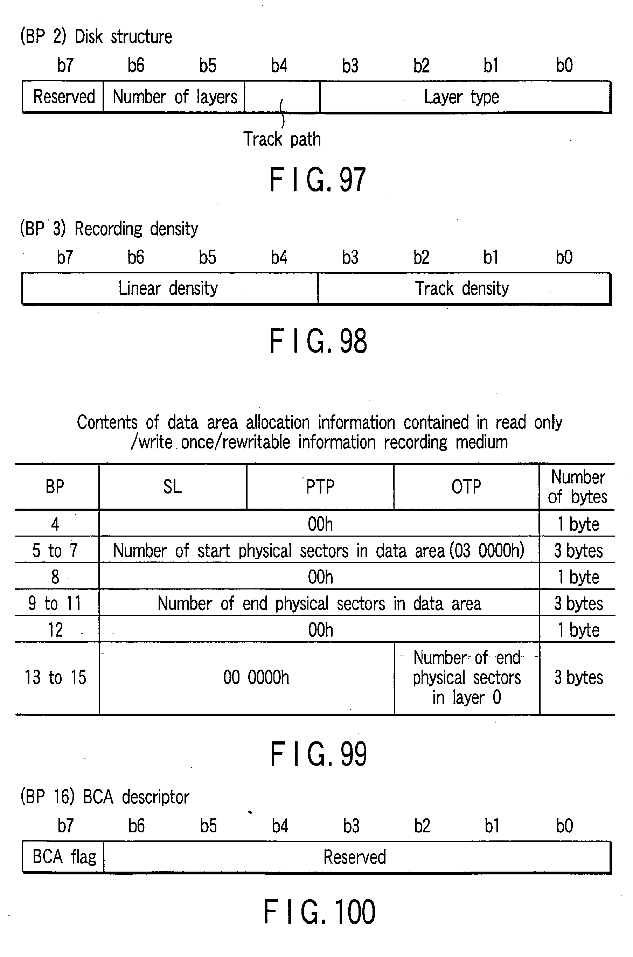

(BP 2) Disk structure (refer to FIG. 97)

Number of layers:

00b:    Single
01b:    Double
Other    Reserved

Track path:

0b    PTP or SL
1b    OTP

Layer type:

0100b    Each bit is allocated in accordance with the following rule.
b3: 0b    Embossed user data is recorded in a format (a) of FIG. 40.
1b    Embossed user data is recorded in a format (b) of FIG. 40.

b2: 0b    Disk does not include rewritable user data area.
1b        Disk includes rewritable user data area.
b1: 0b    Disk does not include recordable user data area.
1b        Disk includes recordable user data area.
b0: 0b    Disk does not include embossed user data area.
1b        Disk includes embossed user data area.

(BP 3) Recording density (refer to FIG. 98)

Linear density (data area)

0101b    0.153 microns per bit

These bits are allocated in accordance with the following rule.

0000b    0.267 microns per bit
0001b    0.293 microns per bit
0010b    0.409 to 0.435 microns per bit
0100b    0.280 to 0.291 microns per bit
0101b    0.153 microns per bit
0100b    0.130 to 0.140 microns per bit
Other    Reserved

Track density (data area)

0011b    0.40 microns per track (SL disk)
0100b    0.44 microns per track (DL disk)

These bits are allocated in accordance with the following rule.

0000b    0.74 microns per track
0001b    0.80 microns per track (recordable disk)
0010b    0.615 microns per track
0011b    0.40 microns per track (SL disk)
0100b    0.44 microns per track (DL disk)
0101b    0.34 microns per track
Other    Reserved

(BP 4 to BP 15) Data area location

FIG. 99 is an illustrative view showing contents of data area location information in a read only, a write once type, or a rewritable type information recording medium.

(BP 16) BCA descriptor (refer to FIG. 100)

This byte indicates whether or not a burst cutting area (BCA) exists on a disk. Bits b6 to b0 are set to "000 0000b," and bit b7 indicates whether or not BCA exists.
These bits are allocated in accordance with the following rule.
BCA flag:

1b    BCA exists

(BP 17 to BP 31) Reserved

All bytes are set to "00h."'

(BP 32 to BP 2047) Reserved

All bytes are set to "00h."'

[10-5] Description of data allocation structure in rewritable type information recording medium (Points (R) and (S))

FIG. 101 is an illustrative view showing recording data density of each area in a rewritable type information recording medium according to the present embodiment. As is evident from a comparison between FIGS. 101 and 90, various dimensions in a system lead-in area are coincident with read only and rewritable types. Further, although not shown, various dimensions in a system lead-in area of a write once type information recording medium according to the present embodiment are coincident with those shown in FIG. 90 or 101.

FIG. 102 shows a data structure of a lead-in area in the rewritable type information recording medium according to the present embodiment. In a system lead-in area shown in FIG. 102, an emboss pit is formed, and a rewritable recording mark is formed in a data lead-in area.

In FIG. 102, an initial zone includes an embossed data area. Main data in a data frame recorded in the initial zone as a recording data area is set to "00h." A buffer zone includes 32 ECC blocks (1,024 sectors). Main data in a data frame recorded in the initial zone as a physical sector is set to "'00h." A control data zone includes an embossed data area. A data area includes embossed control data.

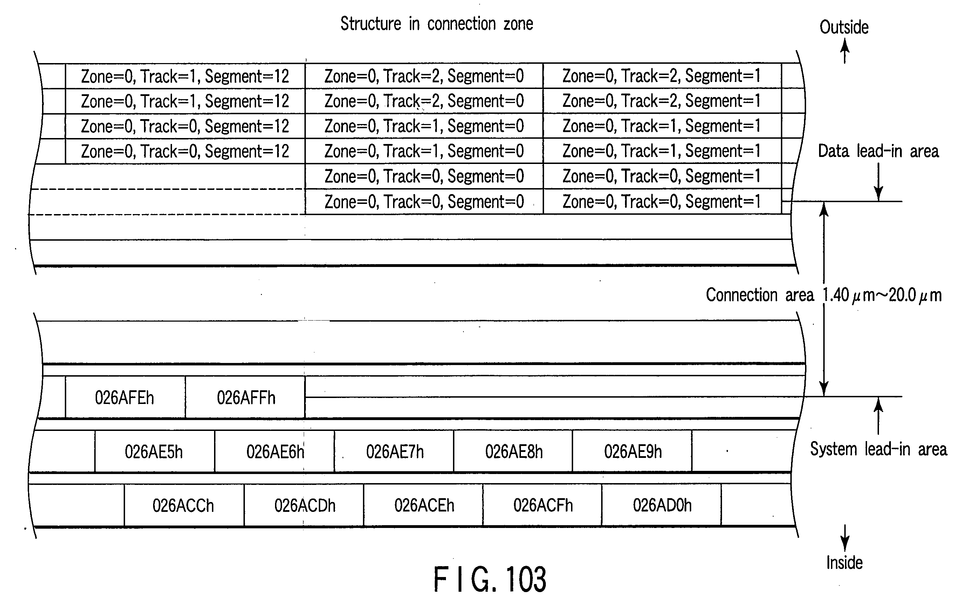

The connection area is provided to connect a system lead-in area and a data lead-in area. A distance between a center line of the last sector "02 6B FFh" in the system lead-in area and a center line of the first sector "02 6C 00h" in the data lead-in area is set to 1.4 microns to 20.0 microns (an example), as shown in FIG. 103.

A connection area does not include a physical sector number or a physical address because the physical sector number or physical address is not allocated.

A data segment of a guard track zone does not include data.

A disk test zone is provided for a quality test by a disk manufacturer.

A drive test zone is provided for a drive test.

An information recording and reproducing apparatus carries out a test write in this area, and optimizes a recording condition.

A disk ID zone in the data lead-in area includes drive information and a reserved area.

Drive information comprises ECC blocks in a land track and a groove track; starts from "02 CD00h" in the land track; and starts from "82 CD00h" in the groove track.

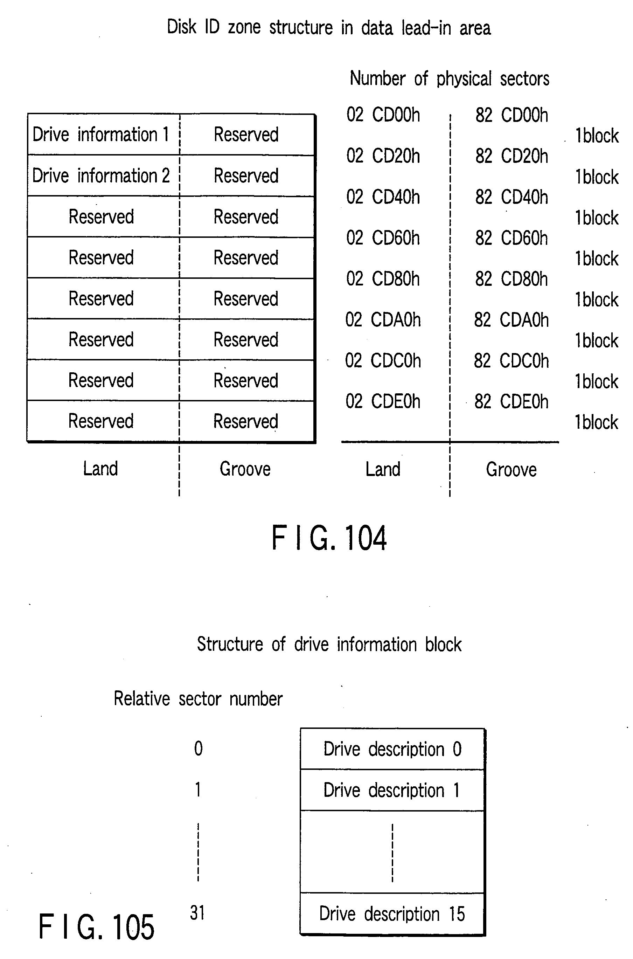

The contents of 1 block in the drive information blocks are identical to each other. FIG. 104 shows a structure of the disk ID zone in the lead-in area.

Drive information is read out in ascending order of physical sector numbers, and is written.

Drive information is arbitrarily used. In the case where this information is used, use of this field must meet the following condition.

FIG. 105 shows a structure of a drive information block. When a drive information block is updated, the following processing is carried out.

(1) In case where drive information can be read out
New drive description 0 is written in relative sector number 0 of drive information 1 and drive information 2, and the contents written in relative sector numbers 0 to 14 of drive information 1 are written into relative sector numbers 1 to 15 of drive information 1 and drive information 2.
(2) In case where drive information 1 is cannot be read out, and drive information 2 can be read out
New drive description 0 is written into relative sector number 0 of drive information 1 and drive information 2, and the contents written in relative sector numbers 0 to 14 of drive information 2 are written into relative sector numbers 1 to 15 of drive information 1 and drive information 2.
(3) In case where drive information 1 and drive information 2 cannot be read out
New drive description 0 is written into relative sector 0 of drive information 1 and drive information 2, and relative sector numbers 0 to 14 of drive information 1 and drive information 2 are filled with "00h."

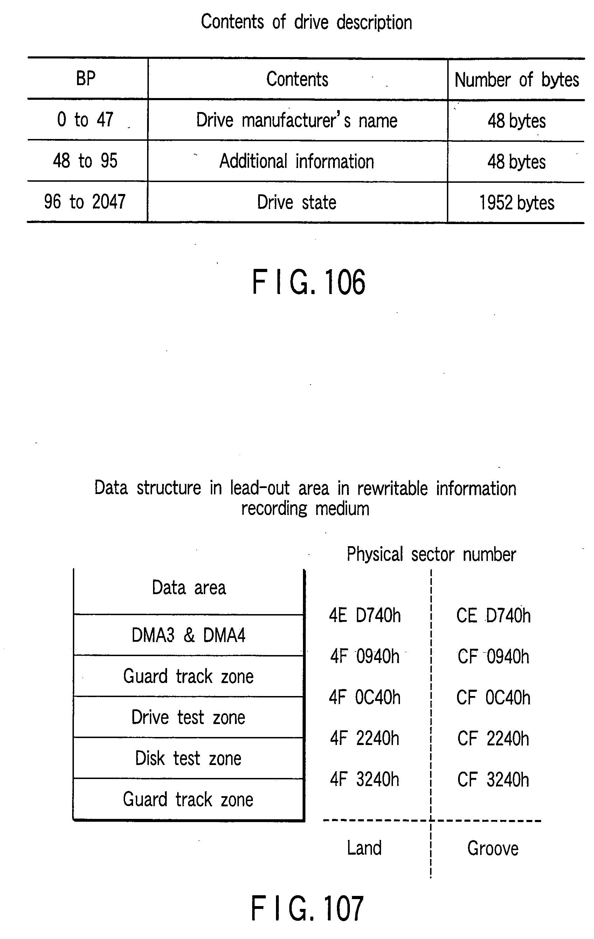

FIG. 106 shows the contents of drive description.

(BP 0 to BP 47) Drive manufacturer's name

This field is filled with ASCII codes of 48 bytes corresponding to the drive manufacturer's name.

ACSII code available for this field is limited to "0Dh," and is limited to codes from "20h" to "7Eh."

The first one character of the drive manufacturer's name is specified for a first byte of this field.

If this field is not full, the drive manufacturer's name must be ended with "0Dh." Bytes later than "0Dh" in this field are filled with "20h."

Example: Drive manufacturer's name = "Manufacturer"

 BP 0 = 4Gh = "M"
 BP 1 = 61h = "a"
 BP 2 = 6Eh = "n"
 BP 3 = 75h = "u"
 BP 4 = 66h = "f"
 BP 5 = 61h = "a"
 BP 6 = 63h = "c"
 BP 7 = 74h = "t"
 BP 8 = 75h = "u"
 BP 9 = 72h = "r"
 BP 10 = 65h = "e"
 BP 11 = 0Dh = Carriage return code
 BP 12 to BP 47 = 20h = space code
 (BP 48 to BP 95) Additional information

The manufacturer's serial number, date, place and the like are written into this fields.

ASCII code available for this field is limited to "0Dh," and is limited to codes from "20h" to "7Eh."

If this field is not full, the drive manufacturer's name additional information must be ended with "0Dh." Bytes later than "0Dh" in this field are filled with "20h."

Example: Additional information = "SN11A"

 BP 48 = 4Ch = "S"
 BP 49 = 6Fh = "N"
 BP 50 = 74h = "1"
 BP 51 = 31h = "1"
 BP 52 = 41h = "A"
 BP 53 = 0Dh = Carriage return code
 BP 54 to BP 95 = 20h = Space code
 (BP 96 to BP 2047) Drive state

Only the drive manufacturer defined in BP 0 to BP 47 can be written into this field. Any type of data can be written as a driver manufacturer into this field.

FIG. 107 shows a data structure in a lead-out area in a rewritable type information recording medium according to the present embodiment.

A method for setting a physical sector number suitable to a land and a groove is different from that for a current rewritable type information recording medium. This feature applies in common to FIGS. 102 and 104 as well. In the present embodiment, different physical sector numbers are set in a land area and a groove area, respectively, and address allocation optimal to these numbers is carried out, thereby achieving simplification and stabilization of recording processing or reproduction processing in an information recording and reproducing apparatus or information reproducing apparatus.

FIG. 108 shows a data layout in the rewritable type information recording medium according to the present embodiment. In the present embodiment, there is provided a structure in which the data area is divided into 18 zones; serial numbers are assigned to a land area all over a disk full face in order of setting physical sector numbers including the data lead-in area; and then, serial numbers all over the disk full face are assigned at a groove unit. In a physical sector number, skipping of a number occurs at a break from the land area to the groove unit.

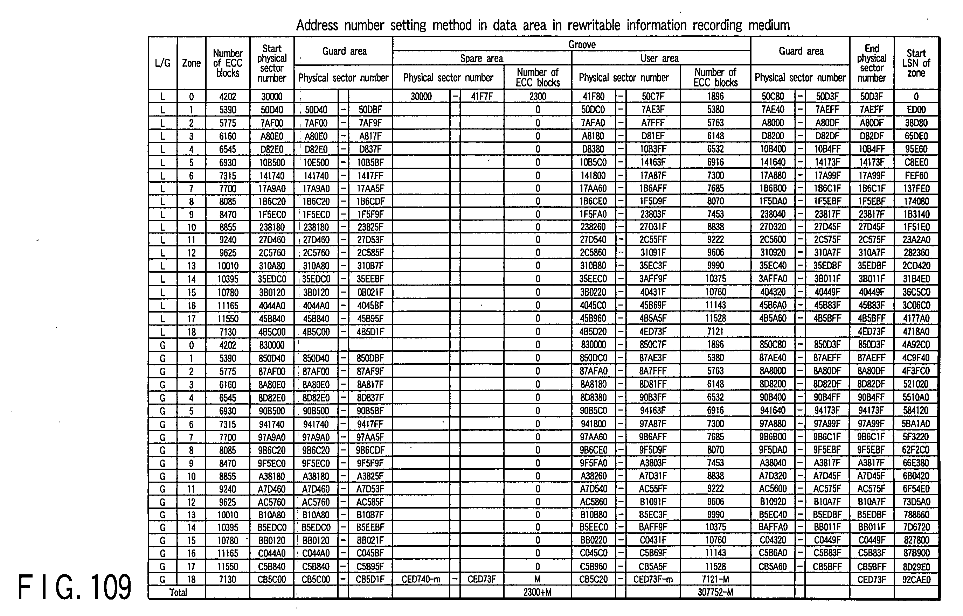

FIG. 109 shows a method for setting an address number in the data area in the rewritable type information recording medium according to the present embodiment.

With respect to a logical sector number (LSN), according to the present embodiment, an address is assigned from the land area side, and number continuity is provided at a break from the land area to the groove unit.

[10-6] Description of data allocation structure in write once information recording medium

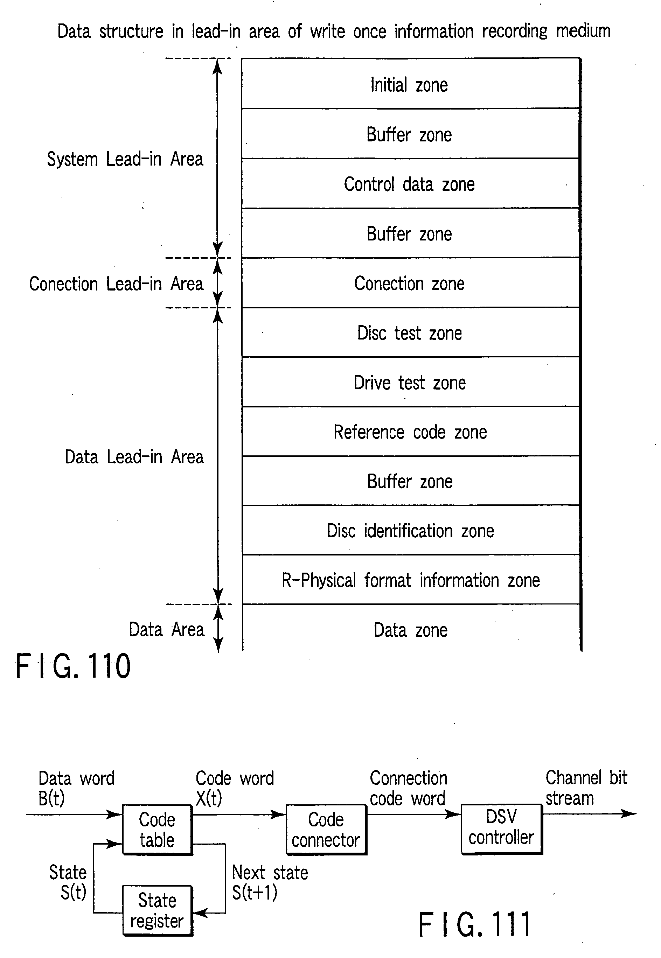

FIG. 110 shows a data structure in a lead-in area of a write once type information recording medium in the present embodiment.

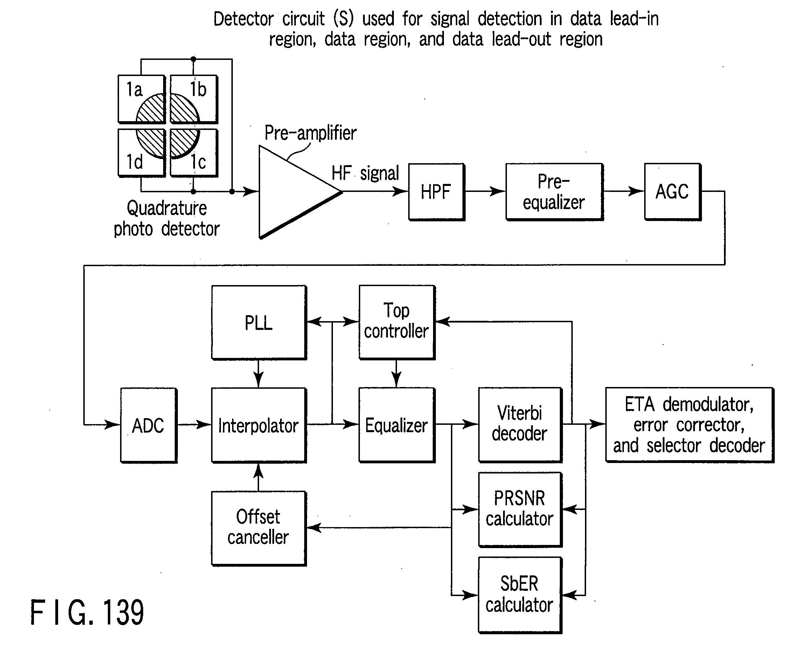

As shown in FIG. 110, the write once type information recording medium according to the present embodiment has a control data zone common to a variety of media in a system lead-in area in which an embossed pit is recorded. There exist: a disk test zone and a drive test zone for test writing in a data lead-in area in which a write once type recording mark is recorded; a reference code zone in which a reference signal for reproduction circuit adjustment shown in FIG. 139 is recorded; a disk ID zone and an R-physical information zone.

[11] Description of modulation system (Point (T))

[11-1] General description of modulation system

In the present embodiment, a common modulation system described below is employed for any information recording medium of read only, write once, and rewritable type.

An 8-bit data word in a data field is converted into a channel bit on a disk in accordance with an 8/12 modulation (ETM: Eight to twelve Modulation) technique. A channel bit column converted by the ETM technique meets a run length restriction called RLL (1, 10) that channel bit 1b is distant by least 1 bit and by at least 10 channel bits.

[11-2] Detailed description of modulation method

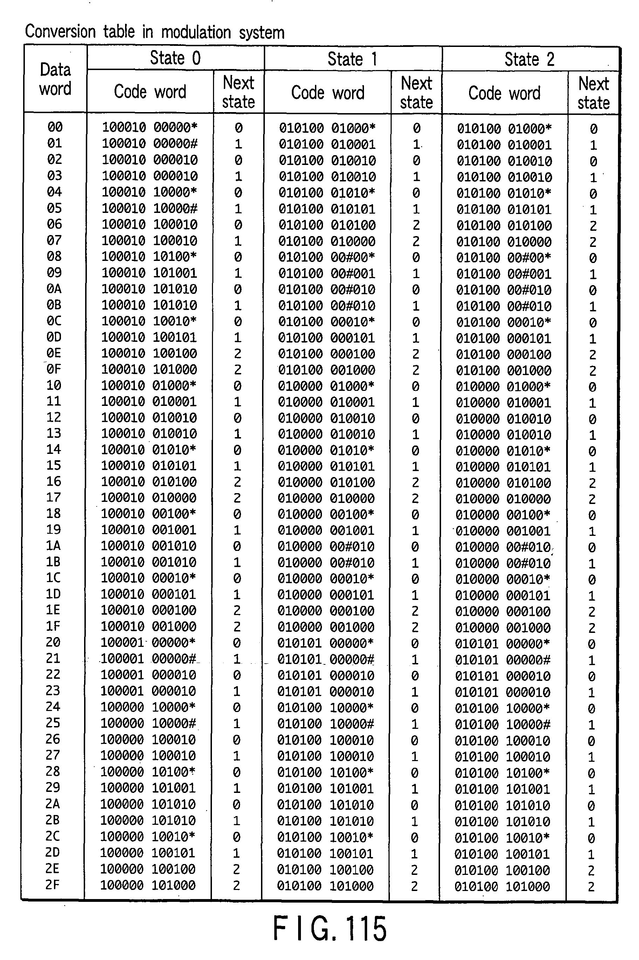

Modulation is carried out by using a code conversion table shown in FIGS. 115 to 120.
This conversion table indicates data words "00h" to "FFh"; 12 channel bits of the corresponding code word to states 0 to 2; and the state of the next data word.

FIG. 111 shows a configuration of a modulation block.

$$X(t) = H\{B(t), S(t)\}$$

$$S(t+1) = G\{B(t), S(t)\}$$

H denotes a code word output function, and G denotes a next state output function.

Some 12 channel bits described in the code conversion table include "0b," "1b," asterisk "*," and sharp bit "#."

Asterisk bit "*" described in the code conversion table indicates that a bit is a merging bit. Some code words described in the conversion table have a merging bit in LSB. The merging bit is set to either of "0b" and "1b" by a code connector according to a channel bit succeeding the bit itself. If the succeeding channel bit is set to "0b," the merging bit is set to "1b." If the succeeding channel bit is set to "1b," the merging bit is set to "0b."

The sharp bit "#" described in the conversion table indicates that a bit is a DSV control bit. The DSV control bit is determined by carrying out DC component suppression control by a DSV controller.

A concatenation rule for a code word shown in FIG. 112 is used for linking or concatenating a code word obtained from a code table. If the adjacent 2 code words coincide with a pattern shown in the previous code word and a current code word in a table, these code words are replaced with a concatenation or link code work shown in the table. A "?" bit is any of "0b," "1b," and "#." The "?" bit in the link code word is allocated as the previous code word and the current code word without being replaced.

A code word concatenation is first applied at a preceding link point. A concatenation rule in the table is applied at link points in order of indexes. Some code words are replaced two times for connecting the preceding code word to the succeeding code word. The merging bit of the preceding code word is determined before pattern matching for a link. DSV control bit "#" of the preceding code word or the current code word is handled as a specific bit before and after code connection. The DSV control bit is set to "?" instead of setting "0b" or "1b." A code word concatenation rule is not used for connecting a code word to a sync code. A concatenation rule shown in FIG. 113 is used for connecting a code word to a sync code.

(11-3) Recording frame modulation

A sync code is inserted into a beginning of each modulation code word of 91 byte data word when a recording frame is modulated. Modulation starts from state 2 after a sync code, and modulation code words are sequentially output as an MSB at the beginning of each conversion code word, and are subjected to NRZI conversion before recorded in a disk.

[11-4] Method for selecting sync code

A sync code is determined by carrying out DC component suppression control.

[11-5] Method for DC component suppression control

In DC component suppression control (DCC), an absolute value of cumulative DSV in NRZI conversion modulation channel bit stream (addition is carried out when digital sum value: "1b" is set to +1, and "0b" is set as -1) is minimized. A DCC algorism controls selection of a code word and a sync code on a case by case basis of (a) and (b) so that the absolute value of DSV is minimized.

Case (a): Selection of sync code (refer to FIG. 35)
Case (b): Selection of DSV control bit "#" of link code word

A selection is determined by a value of cumulative DSV at the position of each DSV bit between a link code word and a sync code.
A DSV which is a basis of calculation is added to a default value of 0 when modulation starts. Then, additions subsequently proceed until modulation has ended, and it is not reset to 0. Selection of DSV control bit means that a start point is set to a DSV control bit, and an absolute value of DSV is minimized immediately before the next DSV control bit. Among two channel bit streams, a smaller absolute value of DSV is selected. In the case where the absolute values of DSV of 2 channel bit streams are equal to each other, the DSV control bit "#" is set to "0b."
The range of DSV calculation requires ±2049 in consideration of the maximum DSV in calculation of a logically possible scenario.

[11-6] Demodulation method

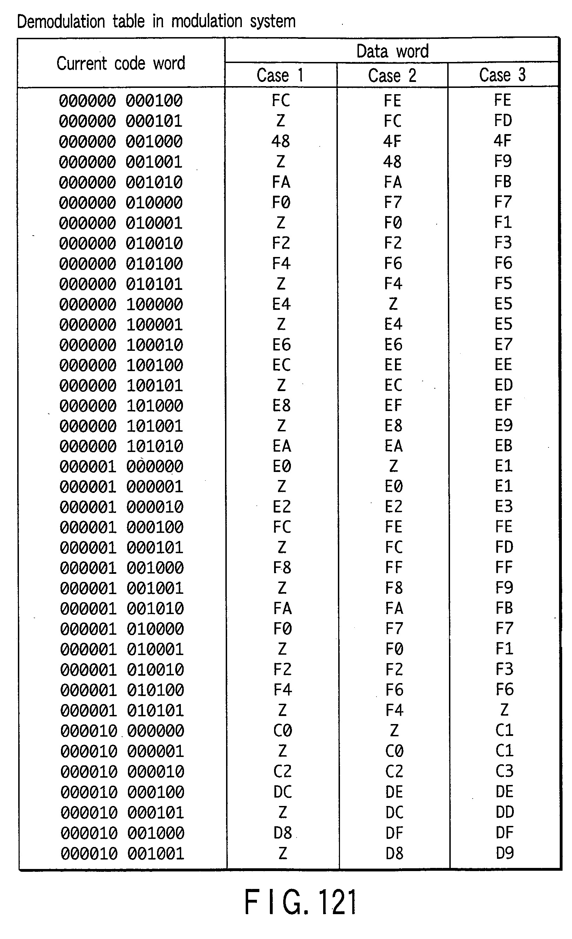

A demodulator converts a 12 channel bit code word to a 8 bit data word. A code word is reproduced by using a separation rule shown in FIG. 114 from a readout bit stream. If the two adjacent code words coincide with a pattern of the modulation rule, these code words are replaced with the current code word and next code word shown in the table of FIG. 114. A "?" bit is set to any of "0b," "1b," and "#." The "?" bit of the current code word and next code word each is allocated as is without replacing it in a readout code word.
The boundary of a sync code and a code word is separated without replacing it.
Conversion from a code word to a data word is executed in accordance with a demodulation table shown in FIGS. 121 to 130. All the possible code words are described in the demodulation table. "z" may be a data word of any of "00h" to "FFh." The separated current code word is decoded by observing 4 channel bits of the next code word or a pattern of the next sync code.

Case 1: The next code word starts from "1b" or the next sync code is set to any of SY0 to SY2 of state 0.
Case 2: The next code word starts from "0000b" or the next sync code is set to SY3 of state 0.
Case 3: The next code word starts from "0b," "001b," or "0001b" or the next sync code is set to any of SY0 to SY3 of states 1 and 2.

FIG. 131 shows a structure of an optical head for use in an information reproducing apparatus or an information recording and reproducing apparatus according to the present embodiment. A polarizing beam splitter and a 1/4 wavelength plate (λ/4 plate) is used at the optical head, and a quadrature photo detector is used for signal detection.
FIG. 132 shows an entire structure of the information reproducing apparatus or information recording and reproducing apparatus in the present embodiment. The optical head shown in FIG. 131 is allocated in an information recording and reproducing unit 141 shown in FIG. 132. In the present embodiment, a channel bit interval is reduced to its minimum for achieving high density of an information recording medium. As a result, for example, where a pattern of "101010101010101010101010" which is a repetition of a pattern of d = 1 is recorded in an information recording medium, and the data is reproduced by the information recording and reproducing unit 141, the reproduced data is close to a cutoff frequency of MTF characteristics of a reproduction optical system. Thus, the signal amplitude of a reproduction signal is formed in the shape almost buried in noise. Therefore, as a method for reproducing a recording mark or a pit whose density is close to the limit (cutoff frequency) of MTF characteristics, PRML (Partial Response Maximum Likelihood) technique is used in the present embodiment. That is, a signal reproduced from the information recording and reproducing unit 141 is subject to reproduction waveform correction by a PR equalizer circuit 130. A signal after passed through the PR equalizer circuit 130 is sampled in accordance with a timing of a reference clock 198 sent from a reference clock generator circuit 160 by means of an AD converter 169. Then, the sampled signal is converted to a digital quantity, and the digitized signal is subjected to Viterbi decode processing in a Viterbi decoder 156. Data after Viterbi decode processed is processed as data which is completely identical to the binary coded data at the current slice level. In the case where the PRML technique is employed, a sampling timing at the AD converter 169 is shifted, and an error rate of data after Viterbi decoding increases. Therefore, in order to increase the precision of a sampling timing, the information reproducing apparatus or information recording and reproducing apparatus according to the present embodiment, in particular, has a sampling timing extracting circuit (a combination of Schmidt trigger binary coding circuit 155 and a PLL circuit 174) additionally.

The information reproducing apparatus or information recording and reproducing apparatus according to the present embodiment, a Schmidt trigger circuit is used as a binary coding circuit. This Schmidt trigger circuit has a feature that a specific width (a forward voltage of diode) is provided to a slice reference level for binary coding, and binary coding is provided only when that specific width is exceeded. Therefore, for example, as described above, where a pattern of "101010101010101010101010" has been input, the signal amplitude is very small. Thus, switching of binary coding does not occur. In the case where "1001001001001001001001" or the like which is a sparser pattern, for example, has been input, the amplitude of a reproducing raw signal is increased. Thus, the polarity of a binary coded signal occurs with a Schmidt trigger binary coding circuit 155 in accordance with a timing of "1." In the present embodiment, the NRZI (Non Return to Zero Invert) technique is employed, and a position of "1" of the above pattern coincides with an edge portion (boundary) of a recording mark or pit.

The PLL circuit 174 detects a frequency and phase shift between a binary coded signal which is an output of this Schmidt trigger binary coding circuit 155 and a signal of the reference clock 198 sent from the reference clock generator circuit 160, and changes a frequency and a phase of an output clock of the PLL circuit 174. In the reference clock generator circuit 160, an output signal of this PLL circuit 174 and decoding characteristics information for the Viterbi decoder 156 (although not specifically shown) apply a feedback to (a frequency and a phase of) the reference clock 198 so that an error rate after Viterbi decoding is lowered by using a convergence length (information on distance in which convergence is achieved) in a path metric memory in the Viterbi decoder 156.

Any of an ECC encoding circuit 161, an ECC decoding circuit 162, a scramble circuit 157, and a descramble circuit 159 in FIG. 132 carry out processing in units of 1 byte. If 1 byte data before modulation is modulated in accordance of a (d, k: m, n) modulation rule (which means RLL (d, k) of m/n modulation in the description method described previously), the length after modulation is obtained as follows.

$$8n/m \qquad\qquad (201)$$

Therefore, a data processing unit in the above circuit is converted in processing units after modulation, a processing unit of sync frame data 106 after modulation is provided in formula (201). Thus, where the integrity of processing between a sync code and sync frame data after modulation is oriented, it is required to set the sync code data size (channel bit size) to an integer multiple of formula (201). Therefore, in the present embodiment, according to the present embodiment, the integrity of processing between a sync code 110 and sync frame data 106 after modulation is maintained by setting the size of sync code 110 to:

$$8Nn/n \qquad\qquad (202)$$

wherein, N denotes an integer value.

The present embodiment has been described, assuming that:
d = 1, k = 10, m = 8, n = 12.

When that value is substituted into formula (202), a total data size of the sync code 110 is obtained as:

$$12N \qquad\qquad (203)$$

The sync code size of a current DVD is set to 32 channel bits. Thus, in the present embodiment, the total data size of the sync code is smaller than 32 channel bits; processing is simplified; and the reliability of position detection or information identification is improved. Therefore, in the present embodiment, the total data size of the sync code is set to 24 channel bits, as shown in FIG. 42.

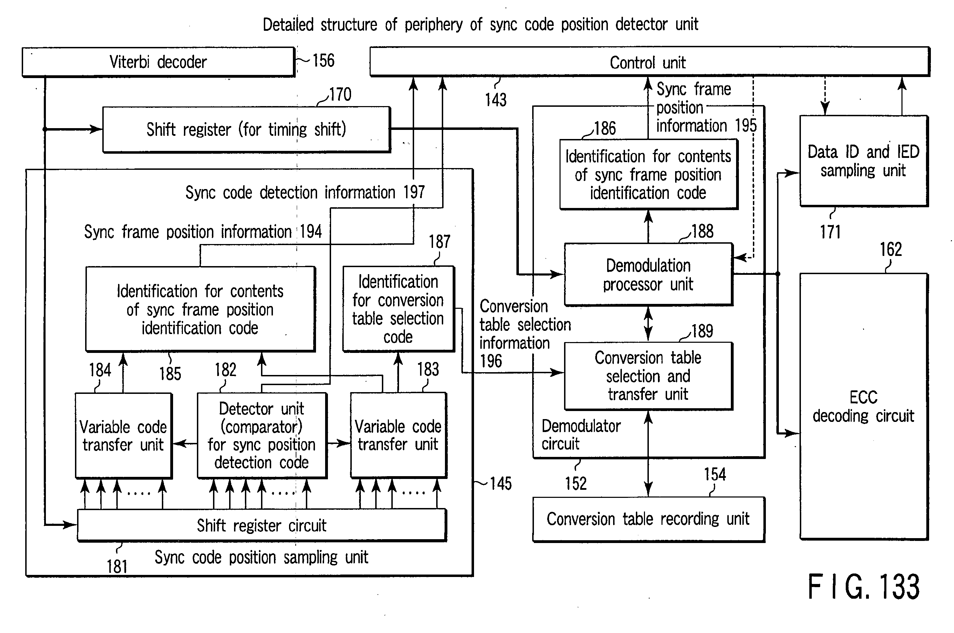

FIG. 133 is an illustrative view showing a detailed structure of a periphery of a sync code detecting unit 145 shown in FIG. 132.

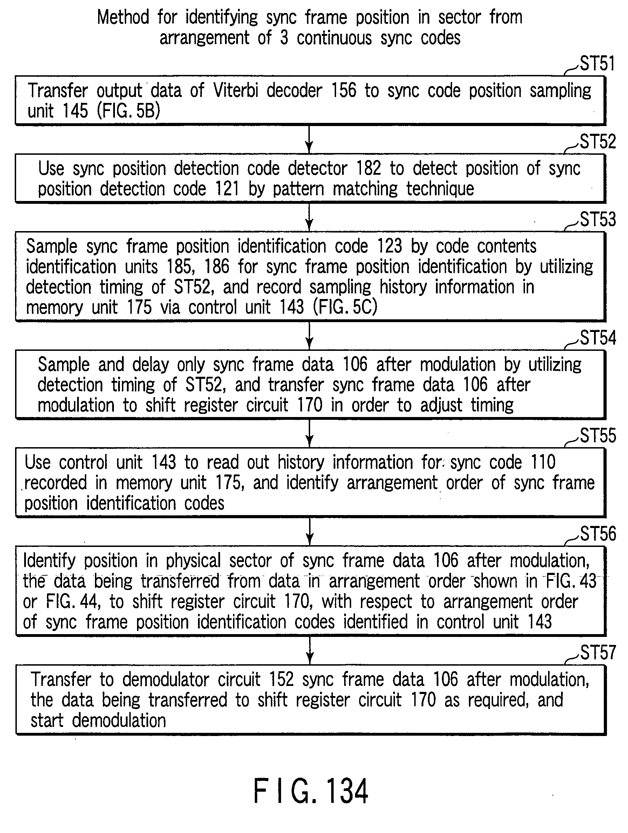

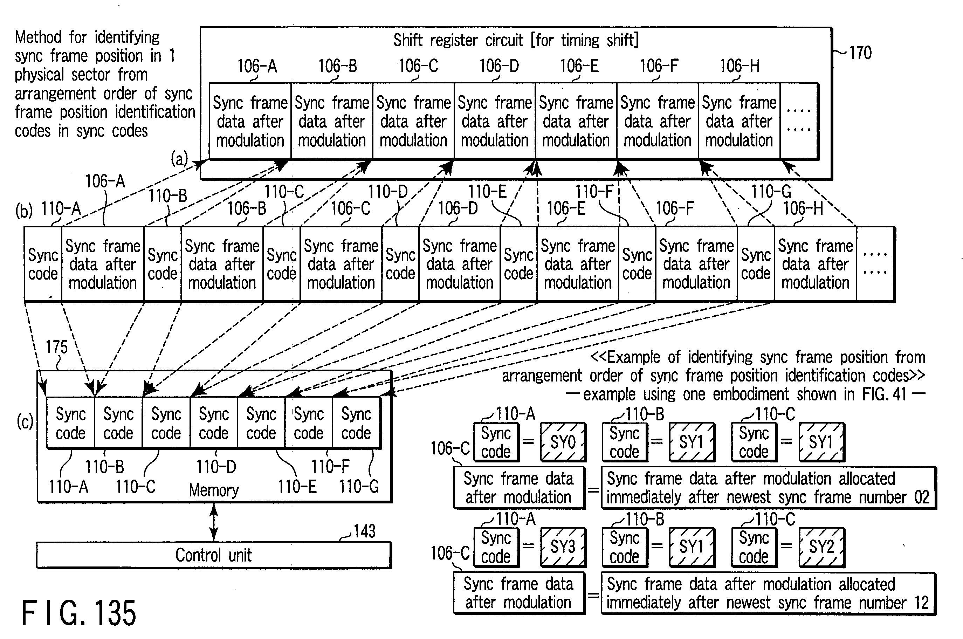

A method for allocating a position in a physical sector of data currently reproduced by utilizing a list of preceding and succeeding information with 3 continuous sync codes for the sync code allocation method shown in FIG. 34 will be described with reference to FIGS. 132 to 135. Output data (ST51 of FIG. 134) contained in the Viterbi decoder 156 of FIG. 132, as shown in a format (b) of FIG. 135, detects a position of the sync code 110 at the sync code position detecting unit 145 (ST52 of FIG. 134). Then, information for the detected sync code 110 is sequentially stored in a memory unit 175, as shown in a format (c) of FIG. 135, via a control unit 143 (ST53 of FIG. 134). If a position of the sync code 110 is identified, only sync frame data 106 after modulation is sampled from among data output from the Viterbi decoder 156, and the sampled data can be transferred to a shift register circuit 170 (ST54 of FIG. 134). Next, the control unit 143 reads out history information for the sync code 110 recorded in the memory unit 175; identifies the arrangement order of sync frame position identification codes (ST55 of FIG. 134); and identifies the position contained in a physical sector o.f the sync frame data 106 after modulation, the data being temporarily stored in the shift register circuit 170 (ST56 of FIG. 134).

For example, as shown in FIG. 135, it becomes possible to allocate that, if arrangement of the sync code stored in the memory unit 175 is SY0 → SY1 → S1, sync frame data after modulation, the data being allocated immediately after the newest sync frame number 02, exists immediately after the last SY1; and if the above arrangement is SY3 → SY1 → SY2, sync frame data after modulation, the data being allocated immediately after the newest sync frame number 12 exists immediately after the last SY2.

In this manner, where it has been verified that a position in a sector is allocated, and the sync frame data 106 after modulation at a desired position has been input into the shift register circuit 170, the data is transferred to a demodulator circuit 152, and demodulation is started (ST57 of FIG. 134).

FIG. 136 shows a phenomenon estimating method and a troubleshooting method where a combination pattern of sync codes is different from a predicted pattern. In the present embodiment, estimation is carried out by using a relational illustrative view shown in FIG. 38. In the features shown in FIG. 136, it is determined whether or not there exists one portion in which a combination pattern of detected sync codes is different from a predicted pattern (ST3). In the case where the determination result is affirmative, if a detection pattern is any of (1, 1, 2), (1, 2, 1), (1, 2, 2), and (2, 1, 2), there is a high possibility that a frame shift has occurred. Otherwise, it can be determined that a sync code is incorrectly detected. Based on the above determination result, the following processing is carried out.

○ Synchronization is carried out again if a frame shift occurs (ST6); or
○ If a sync code is incorrectly detected, a sync code incorrectly detected in accordance with a predicted value is automatically corrected (ST7).

In addition, continuity check (ST8) of data ID and wobble address continuity check (ST9) are carried out in parallel to each other, and track-off detection and troubleshooting if the track-off occurs (ST10) are carried out.

According to the present embodiment, in a system lead-in area, signal detection is carried out by using the level slice technique; and in a data lead-in area, a data area, and a data lead-out area, signal detection is carried out by using the PRML technique.

FIG. 137 shows a signal detector or signal evaluator circuit for use in signal reproduction in the system lead-in area. A total of outputs of the quadrature optical detector of the optical head shown in FIG. 131 are taken; and then, a high pass filter (HPF) is passed. Waveform correction is carried out by means of a pre-equalizer, and then, level slicing is carried out by means of a slicer. The circuit characteristics of the circuit shown in FIG. 137 are as follows.

(1) Phase lock loop (PLL)

4T natural frequency: $\omega_n$ = 300 Krads/ s
4T damping ratio: $\delta$ = 0.70

(2) High pass filter (HPF)

Primary fc (-3dB) = 1.0 KHz

(3) Pre-equalizer

The frequency characteristics are shown below.
As an example, a 7-order Equiripple filter is provided. A boot level "k1" is set to $9.0 \pm 0.3$ dB, and the cutoff frequency is $16.5 \pm 0.5$ MHz

(4) Slicer

A duty feedback method: fc = 5.0 KHz

(5) Jitter

A jitter during 1/4 disk rotation is measured.

The measurement frequency bandwidth ranges from 1.0 KHz to HF.

FIG. 138 is a circuit diagram showing a circuit in the slicer shown in FIG. 137 which carries out level slicing.

Basically, there is provided a structure in which a pre-equalizer output signal (Reed channel 1) is binary coded by using a comparator.

In the data lead-in area, data area, and data lead-out area, signal detection is carried out by using the PRML technique. FIG. 139 is a circuit diagram showing a detector circuit. The circuit construction of FIG. 139 is identical to that of FIG. 137 in that outputs of a quadrature optical detector of an optical head shown in FIG. 139 are added; the added signal is passed through an HPF; and a signal waveform after waveform corrected by the pre-equalizer is used. A front stage circuit before an input of the PRML circuit is featured in that a reproduction signal amplitude level is controlled to be constant by using an auto gain control (AGC) circuit. In the circuit shown in FIG. 139, digital conversion is carried out by means of an analog to digital converter circuit, and signal processing is carried out by digital processing. The features of the circuit shown in FIG. 139 are summarized as follows.

(1) Phase lock loop (PLL)

4T natural frequency: $\omega_n$ = 580 Krads/ s
4T damping ratio = $\delta$ = 1.1

(2) High pass filter (HPF)

Primary fc (-3 dB) = 1.0 KHz

(3) Pre-equalizer

The frequency characteristics are shown below.

As an example, a 7-order Equiripple filter is provided.

The boot level "k1" is set to $9.0 \pm 0.3$ dB, and the cutoff frequency is set to $16.6 \pm 0.5$ MHz.

(4) Auto gain control (AGC)

**[0684]** - 3 dB closed loop bandwidth: 100 Hz

(5) Analog digital conversion (ADC)

A relationship in dynamic range between ADC and HF signal
Sampling clock: 72 MHz
Resolution: 8 bits
Level of $I_{11L}$: $64 \pm 5$
Level of $I_{11H}$ $192 \pm 5$

(8) Equalizer

A 9 tap transversal filter is used as an equalizer. A coefficient is controlled by means of a tap controller.

Resolution of tap coefficient: 7 bits
Resolution of equivalent signal: 7 bits

(9) Tap controller

An equalizer tap coefficient is calculated in accordance with a Minimum Square Error (MSE) algorithm. Before coefficient calculation, a default value is used as a coefficient.

FIG. 140 shows an internal structure of a Viterbi decoder used in FIG. 139. In the present embodiment, PR (1, 2, 2, 2, 1) is employed as a PR class. FIG. 141 shows a state transition chart in this case.

Lead channels from the data lead-in area, data area, and data lead-out area are combined with an ETM code, and the combined channels are adjusted to a PR (1, 2, 2, 2, 1) channel.

FIG. 141 shows a state transition of the RP channel. "Sabcd" indicates that an input of the previous 4 bits is "abcd"; and "e/f" indicates that the next input data is "e"; and a signal level is "f."

FIG. 140 is a block diagram depicting a Viterbi decoder. The Viterbi decoder outputs binary data from an equivalent signal as follows.

A branch metric of time "t" is calculated as follows.

$$BM(t, i) = (y_t - i)^2$$

wherein $y_t$ indicates an HF signal after equalizing, and i = 0, 1,... 8.

The resolution of branch metric is equal to or greater than 10 bits.

The path metric of time "t" is calculated as follows.

PM(t, S0000)

= min{PM(t - 1, S0000) + BM(t, 0), PM(t - 1, S1000) + BM(t, 1)}

PM(t, S0001)

= min{PM(t - 1, S0000) + BM(t, 1), PM(t - 1, S1000) + BM(t, 2)}

PM(t, S0011)

= min{PM(t - 1, S0000) + BM(t, 3), PM(t - 1,

S1000) + BM(t, 4)}

PM(t, S0110)

= RM(t - 1, S0011) + BM (t, 4)

PM(t, S0111)

= PM(t - 1, S0011) + BM(t, 5)

PM(t, S1000)

= PM(t - 1, S1100) + BM(t, 3)

PM(t, S1001)

= PM(t - 1, 11000) + BM(t, 4)

PM(t, S1100)

= min{PM(t - 1, S0110) + BM(t, 4), PM(t - 1,

$$S1110) + BM(t, 5)\}$$

$$PM(t, S1110)$$

$$= \min\{PM(t - 1, S0111) + BM(t, 6), PM(t - 1,$$

$$S1111) + BM(t, 7)\}$$

$$PM(t, S1111)$$

$$= \min\{PM(t - 1, S0111) + BM(t, 7), PM(t - 1,$$

$$S1111) + BM(t, 8)\}$$

The resolution of path metric is equal to or greater than 11 bits.

An add-compare-select block calculates a new path metric, supplies the new metric to a path metric memory, and supplies a selection to a path memory.

select 0 = 0
(In the case where PM(t - 1, S0000) + BM(t, 0) < PM(t - 1, S1000) + BM(t, 1))
select 0 = 1 (A case other than the above)
select 1 = 0
(In the case where PM(t - 1, S0000) + BM(t, 1) < PM(t - 1, S1000) + BM(t, 2))
select 1 = 1 (A case other than the above)
select 2 = 0
(In the case where PM(t - 1, S0001) + BM(t, 3) < PM(t - 1, S1001) + BM(t, 4))
select 2 = 1 (A case other than the above)
select 3 = 0
(In the case where PM(t - 1, S0110) + BM(t, 4) < PM(t - 1, S1110 + BM(t, 5))
select 3 = 1 (A case other than the above)
select 4 = 0
(In the case where PM(t - 1, S0111) + BM(t, 6) < PM(t - 1, S1111) + BM(t, 7))
select 4 = 1 (A case other than the above)
select 5 = 0
(In the case where PM(t - 1, S0111) + BM(t, 7) < PM(t - 1, S1111) + BM(t, 8))
select 5 = 1 (A case other than the above)

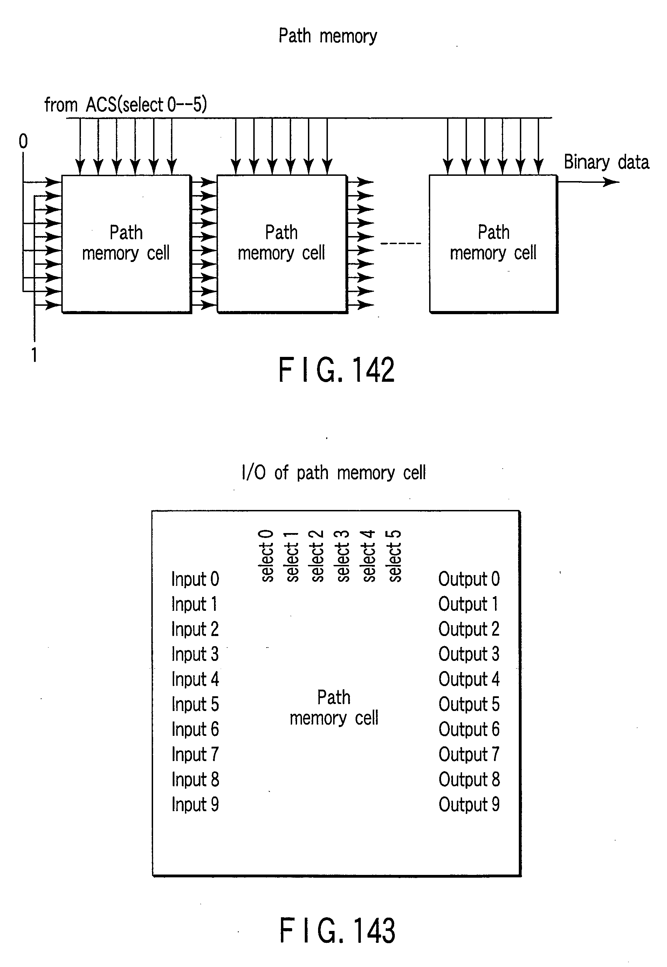

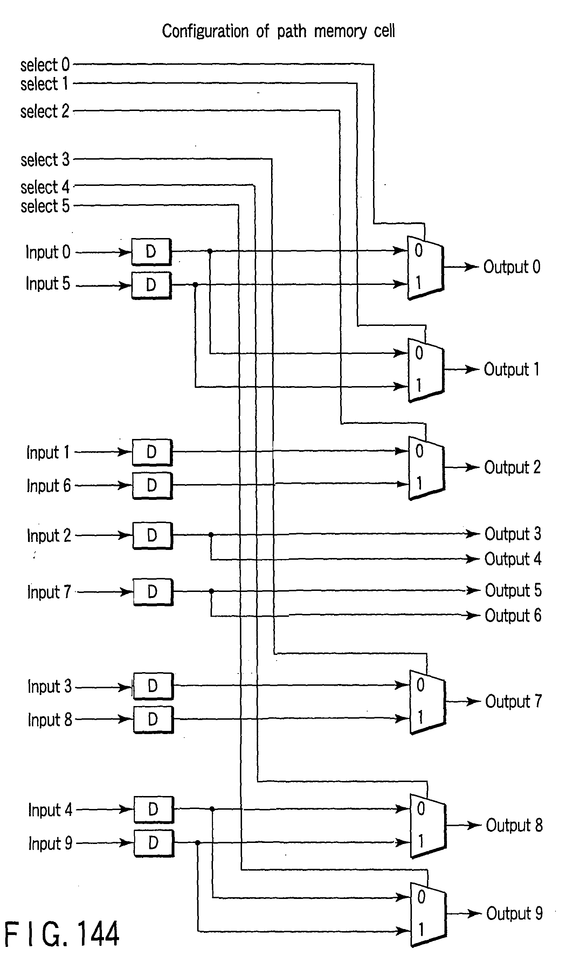

FIG. 142 is an illustrative view showing a path memory. The path memory has 20 memory cells. FIGS. 143 and 144 each show a configuration of an I/O and a path memory cell. A final path memory cell outputs only one signal as binary data from terminal "output 0."

In any of the read only type, write once type, and rewritable type, there can be provided an information recording medium and an information reproducing apparatus or information recording and reproducing apparatus therefor, capable of a stable reproduction signal from a lead-in area of the write once type recording medium while maintaining format compatibility.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein.

**Claims**

1. An information recording medium **characterized by** comprising:

   a system lead-in area;

a data lead-in area; and
a data area, and **characterized in that**
information is recorded in the system lead-in area in the form of embossed pits; and
a track pitch and a shortest pit pitch of embossed pits in the system lead-in area are greater than a track pitch and a shortest pit pitch in the data lead-in area and data area.

2. An information reproducing apparatus which reproduces an information from an information recording medium **characterized by** comprising a system lead-in area, a data lead-in area, and a data area, and **characterized in that** information is recorded in the system lead-in area in the form of embossed pits and a track pitch and a shortest pit pitch of embossed pits in the system lead-in area are greater than a track pitch and a shortest pit pitch in the data lead-in area and data area, the apparatus **characterized by** comprising:

a level slice unit which detects a signal from the system lead-in area of the information recording medium in accordance with a level slice technique, and
a partial response likelihood technique unit which detects a signal from at least one of the data lead-in area and data area in accordance with a partial response likelihood technique.

3. An information recording and/or reproducing apparatus which records and/or reproduces a signal using an information recording medium **characterized by** comprising a system lead-in area; a data lead-in area; and a data area, and **characterized in that** information is recorded in the system lead-in area in the form of embossed pits; and a track pitch and a shortest pit pitch of embossed pits in the system lead-in area are greater than a track pitch and a shortest pit pitch in the data lead-in area and data area, the apparatus **characterized by** comprising:

a level slice unit which detects a signal from the system lead-in area of the information recording medium in accordance with a level slice technique, and
a partial response likelihood technique unit which detects a signal from at least one of the data lead-in area and data area in accordance with a partial response likelihood technique.

Correlation table (I) between a variety of combination configurations and advantageous effect number

| Combination advantageous effect number | ① | ② | ③ | ④ | ⑤ | ⑥ | ⑦ | ⑧ | ⑨ | ⑩ | ⑪ | ⑫ | ⑬ | ⑭ |
|---|---|---|---|---|---|---|---|---|---|---|---|---|---|---|
| A) File or folder separation between SD and HD | O | | O | | O | | O | | O | | △ | △ | | △ |
| B) 4 bit expression of sub-picture information and compression rule | | O | | O | | O | | O | | O | △ | △ | | △ |
| C) Plural types of recording formats can be set for read only | | | | | O | O | △ | △ | △ | △ | O | | | |
| D) ECC block structure using multiplication code | | | | | O | O | O | O | O | O | O | | | |
| E) Sector is divided into a plurality of small ECC blocks | | | | | | | O | O | | | O | | | |
| F) PO group data which are different from each other on sector by sector basis are inserted | | | | | | | | | O | O | | | | |
| G) Physical segment division structure in ECC block | | | O | O | O | O | △ | △ | △ | △ | O | △ | O | △ |
| H) Guard region allocation structure between ECC blocks | | | △ | △ | O | O | | | | | O | | | |
| I) Partial duplication is recorded in guard area | | | | | | | | | | | O | | | |
| J) Number of code changes ≧ 2 when combination of SYNC codes is shifted | O | O | | | | | O | O | O | O | | | | |
| K) Occupancy rate of non-modulation region is set to be higher than modulation region | | | | | | | | | | | | O | | |
| L) L/G recording + Wobble modulation | O | O | O | O | | | | | | | | | | O |
| M) Uncertain bits are allocated to be distributed to group region | | | | | | | | | | | | O | | O |
| N) Uncertain bits are allocated to be distributed to Land and Groove | | | | | | | | | | | | O | | |
| O) Wobble phase modulation of ±90 degrees | | | | | | | | | | | | △ | O | |
| P) Gray code or specific track code is employed | O | O | | | | | | | | | | | | |
| Q) SYNC code or SYNC data structure in guard region | △ | △ | | | O | O | O | O | O | O | | | | |
| R) Tp・Pp is roughened in System Lead-in area | | | | | | | O | O | O | O | | | | |
| S) Signal reproduction processing using PRML technique is carried out | O | O | | | | | O | O | | | | | | |
| T) Modulation rule of d = 1 is employed | △ | △ | | | | | O | O | O | O | | | | |
| U) Configuration by data segment having one or more recording clusters | | | | | O | O | | | | | O | | | |

FIG.1

EP 1 465 165 A2

Correlation table (II) between a variety of combination configurations and advantageous effect number

| Combination advantageous effect number | ⑮ | ⑯ | ⑰ | ⑱ | ⑲ | ⑳ | ㉑ | ㉒ | ㉓ | ㉔ | ㉕ | ㉖ | ㉗ | ㉘ |
|---|---|---|---|---|---|---|---|---|---|---|---|---|---|---|
| A) File or folder separation between SD and HD | △ | △ | | | | ○ | | △ | ○ | | ○ | △ | | |
| B) 4 bit expression of sub-picture information and compression rule | △ | △ | | | | | ○ | △ | ○ | | ○ | △ | | |
| C) Plural types of recording formats can be set for read only | | ○ | | | | | | | | | | △ | | |
| D) ECC block structure using multiplication code | ○ | ○ | | ○ | | | | ○ | | | | △ | | |
| E) Sector is divided into a plurality of small ECC blocks | ○ | △ | | ○ | | | | ○ | | | | △ | | |
| F) PO group data which are different from each other on sector by sector basis are inserted | ○ | △ | | ○ | | | | ○ | | | | △ | | |
| G) Physical segment division structure in ECC block | ○ | | | | | | | | | | | | ○ | ○ |
| H) Guard region allocation structure between ECC blocks | | ○ | | | ○ | | | | | | | | ○ | |
| I) Partial duplication is recorded in guard area | | △ | | | | | | | | | | | ○ | |
| J) Number of code changes ≥ 2 when combination of SYNC codes is shifted | ○ | ○ | | | ○ | | | | | | | ○ | | |
| K) Occupancy rate of non-modulation region is set to be higher than modulation region | | | | | | | | | | | ○ | ○ | ○ | |
| L) L/G recording + Wobble modulation | | | | | | | | | ○ | ○ | ○ | | △ | |
| M) Uncertain bits are allocated to be distributed to group region | | | | | | | | | | ○ | ○ | | | |
| N) Uncertain bits are allocated to be distributed to Land and Groove | | | | | | | | | | ○ | | | | |
| O) Wobble phase modulation of ±90 degrees | | | | | | | | | | ○ | | | | |
| P) Gray code or specific track code is employed | | | | | | | | | | | ○ | | | |
| Q) SYNC code or SYNC data structure in guard region | | ○ | | | ○ | | | | | | | ○ | | |
| R) Tp · Pp is roughened in System Lead-in area | | | ○ | ○ | ○ | | | | | | | | | |
| S) Signal reproduction processing using PRML technique is carried out | | | ○ | | | | ○ | ○ | ○ | ○ | | ○ | | |
| T) Modulation rule of d = 1 is employed | | | ○ | | | | ○ | ○ | | | | ○ | | |
| U) Configuration by data segment having one or more recording clusters | | ○ | | | | | | | | | | | ○ | |

FIG.2

EP 1 465 165 A2

EP 1 465 165 A2

**F I G. 3**

Root directory ~ 201

DVD-Video exclusive directory ~ 202

Management file (VMG1I) for entire conventional SD ~206

Menu file (VMG1M_VOBS) for entire conventional SD ~208

Management file (VTS1I) for a specific title conventional SD ~211

Menu file (VTS1M_VOBS) for a specific file conventional SD ~213

Object file (VTS1TT_VOBS) for a specific title conventional SD ~216

. . . . . . .

Management file (VMG2I) for entire high image quality HD ~207

Menu file (VMG2M_VOBS) for entire high image quality HD ~209

Management file (VTS2I) for a specific title high image quality HD ~212

Menu file (VTS2M_VOBS) for a specific file high image quality HD ~214

Object file (VTS2TT_VOBS) for a specific title high image quality HD ~217

EP 1 465 165 A2

Root directory )~201

DVD-Video exclusive directory for conventional SD )~203

| Management file (VMG1I) for entire conventional SD | ~206 |

| Menu file (VMG1M_VOBS) for entire conventional SD | ~208 |

| Management file (VTS1I) for a specific title conventional SD | ~211 |

| Object file (VTS1TT_VOBS) for a specific title conventional SD | ~216 |

・・・・・・

DVD-Video exclusive directory for high image quality HD )~204

| Management file (VMG2I) for entire high image quality HD | ~207 |

| Menu file (VMG2M_VOBS) for entire high image quality HD | ~209 |

| Management file (VTS2I) for a specific title high image quality HD | ~212 |

| Object file (VTS2TT_VOBS) for a specific title high image quality HD | ~217 |

・・・・・・

# FIG.4

FIG.5

EP 1 465 165 A2

Compression rule (1)

|  d0 | d1 | d2 | d3 |
|---|---|---|---|
| Number of continuous pixels | | Pixel data | |

(a)

Compression rule (2)

| d0 | d1 | d2 | d3 | d4 | d5 | d6 | d7 |
|---|---|---|---|---|---|---|---|
| 0 | 0 | Number of continuous pixels | | | | Pixel data | |

(b)

Compression rule (3)

| d0 | d1 | d2 | d3 | d4 | d5 | d6 | d7 | d8 | d9 | d10 | d11 |
|---|---|---|---|---|---|---|---|---|---|---|---|
| 0 | 0 | 0 | 0 | Number of continuous pixels | | | | | | Pixel data | |

(c)

Compression rule (4)

| d0 | d1 | d2 | d3 | d4 | d5 | d6 | d7 | d8 | d9 | d10 | d11 | d12 | d13 | d14 | d15 |
|---|---|---|---|---|---|---|---|---|---|---|---|---|---|---|---|
| 0 | 0 | 0 | 0 | 0 | 0 | Number of continuous pixels | | | | | | | | Pixel data | |

(d)

Compression rule (5)

| d0 | d1 | d2 | d3 | d4 | d5 | d6 | d7 | d8 | d9 | d10 | d11 | d12 | d13 | d14 | d15 |
|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | Pixel data | |

(e)

F I G. 6

Allocation of pixel data

| Pixel name | Pixel data |
|------------|------------|
| Pixel 1 | 0000 |
| Pixel 2 | 0001 |
| Pixel 3 | 0010 |
| Pixel 4 | 0011 |
| Pixel 5 | 0100 |
| Pixel 6 | 0101 |
| Pixel 7 | 0110 |
| Pixel 8 | 0111 |
| Pixel 9 | 1000 |
| Pixel 10 | 1001 |
| Pixel 11 | 1010 |
| Pixel 12 | 1011 |
| Pixel 13 | 1100 |
| Pixel 14 | 1101 |
| Pixel 15 | 1110 |
| Pixel 16 | 1111 |

FIG. 7

Pixel data allocation example (1)

(a)

| SPUH | PXD | SP_DCSQT |

For top field  For bottom field

Pixel data allocation example (2)

(b)

| SPUH | PXD | SP_DCSQT |

Plain Data

FIG. 8

Sub-picture unit (SPU) and sub-picture pack (SP_PCK)

| SPUH | PXD | · · · | SP_DCSQT |
|------|-----|-------|----------|

| SP_PCKi | SP_PCKi+1 | · · · | SP_PCKj−1 | SP_PCKi |
|---------|-----------|-------|-----------|---------|

2048 bytes   2048 bytes   2048 bytes   2048 bytes

## FIG. 9

Sub-picture unit header (SPUH)                    Description order

|  | Contents | Number of bytes |
|--|----------|-----------------|
| (1)SPU_SZ | Size of sub-picture unit | 4 bytes |
| (2)SP_DCSQT_SA | Start address of display control sequence table | 4 bytes |
| (3)PXD_W | Width of pixel data | 4 bytes |
| (4)PXD_H | Height of pixel data | 4 bytes |
| (5)SP_CAT | Sub-picture category | 1 byte |
| Reserved | Reserved | 1 byte |
|  | Total | 18 bytes |

## FIG. 10

SP_CAT

| b7 | b6 | b5 | b4 | b3 | b2 | b1 | b0 |
|----|----|----|----|----|----|----|----|
| Reserved |  |  |  |  |  | Stored_Form | Raw |

## FIG. 11

92

| d0 | d1 | d2 | d3 | d4 | d5 | d6 | d7 | d8 | d9 | d10 | d11 | d12 |
|------|------|------|------|------|------|------|------|------|------|------|------|------|
| Comp | Pixel data | | | | Ext | Counter | | | Counter (Ext) (When Ext=1b) | | | |

**F I G. 12**

(a)

| d0 | d1 | d2 | d3 |
|----|----|----|----|
| X | X | X | X |

(b)

| d0 | d1 | d2 | d3 |
|----|----|----|----|
| Pixel Data | | | |

(c)

| d0 | d1 | d2 | d3 | d4 | d5 | d6 | d7 |
|----|----|----|----|----|----|----|----|
| Pixel Data | | | | 0 | Counter | | |

(d)

| d0 | d1 | d2 | d3 | d4 | d5 | d6 | d7 | d8 | d9 | d10 | d11 |
|----|----|----|----|----|----|----|----|----|----|-----|-----|
| Pixel Data | | | | 1 | Counter | | | Counter Extension | | | |

(e)

| d0 | d1 | d2 | d3 | d4 | d5 | d6 | d7 |
|----|----|----|----|----|----|----|----|
| 0 | 0 | 0 | 0 | 0 | 0 | 0 | 0 |

**F I G. 13**

EP 1 465 165 A2

Run length compression flag Comp
0 : Not set/1 : Set

Run counter extension flag Ext
0 : Not set/1 : Set

3 bit resolution
pixel data

Run length (3 bits)　Extended run length (4 bits)

| d0 | d1 | d2 | d3 | d4 | d5 | d6 | d7 | d8 | d9 | d10 | d11 |

(a) No run continuity exists
(1 pixel)

| 0 | Pixel data |

(b) Run continuity exists
(2 to 8 pixels)

| 1 | Pixel data | 0 | Counter |

Run length (7 bits)

(c) Run continuity exists
(9 to 128 pixels)

| 1 | Pixel data | 1 | Counter | Counter(Ext) |

(d) End of line code

| 1 | 0 | 0 | 0 | 0 | 0 | 0 | 0 |

End of line code "E"

FIG.14

EP 1 465 165 A2

Run length compression flag Comp
0 : Not set/1 : Set

Run counter extension flag Ext
0 : Not set/1 : Set

4 bit resolution pixel data

Run length (3 bits)  Extended run length (4 bits)

| d0 | d1 | d2 | d3 | d4 | d5 | d6 | d7 | d8 | d9 | d10 | d11 | d12 |
|----|----|----|----|----|----|----|----|----|----|-----|-----|-----|

(a) No run continuity exists (1 pixel)

0 | Pixel data

(b) Run continuity exists (2 to 8 pixels)

1 | Pixel data | 0 | Counter

Run length (7 bits)

(c) Run continuity exists (9 to 128 pixels)

1 | Pixel data | 1 | Counter | Counter(Ext)

(d) End of line code

1 | 0 | 0 | 0 | 0 | 0 | 0 | 0 | 0

End of line code "E"

## FIG.15

EP 1 465 165 A2

d0　　　d1　　　d2　　　d3　　　　　　　　　　d4　　d5　　d6　　d7 ¦ d8　　d9　　d10　　d11 ¦ d12　　d13　　d14　　d15

|   |   |   |   |
|---|---|---|---|
| X | X | X | X |

Run length compression flag
provided as unit Comp

0 : Not set/1 : Set

(a) | 0 | Pixel data

(b) | 1 | Pixel data | 0 | Counter

(c) | 1 | Pixel data | 1 | Counter | Counter (Ext)

(d) | 1 | 0 | 0 | 0 | 0 | 0 | 0 | 0 | 0 |

E

※To be provided as unit in patterns of (a) to (d)

F I G. 16

Run length compression flag Comp
0 : Not set/1 : Set

4 bit resolution
pixel data

Run counter
extension flag Ext
0 : Not set/1 : Set

Number of
continuous runs
(1 to 7)

| d0 | d1 | d2 | d3 | d4 | d5 | d6 | d7 | d8 | d9 | d10 | d11 | d12 | d13 | d14 | d15 |
|----|----|----|----|----|----|----|----|----|----|----|----|----|----|----|----|
| 0 | 1 | 1 | 0 | | Pixel data | | | | Pixel data | | | 0 | | Counter | |

| d16 | d17 | d18 | d19 | d20 | d21 | d22 | d23 | d24 | d25 | d26 | d27 | d28 | d29 | d30 | d31 |
|----|----|----|----|----|----|----|----|----|----|----|----|----|----|----|----|
| | Pixel data | | | 1 | | Counter | | | Counter (Ext) | | | | Pixel data | | |

Number of continuous runs (8 to 127)

FIG. 17

EP 1 465 165 A2

EP 1 465 165 A2

(a) In the case where all pixels are not compressed (shortest pattern) : Expression by 4 pixels

d0　　　　d3　d4　　　d7　d8　　　d11　d12　　d15　d16　　　d19

| 0 0 0 0 | Pixel data | Pixel data | Pixel data | Pixel data |

Comp

(b) In the case where pixels having run length less than 8 are compressed : Expression by less than (8+3) pixels

d0　　　d3　d4　　　d7　d8　　　d11　d12　　d15　d16　　　d19　d20　　　d23

| 0 0 0 0 | Pixel data | 0 | Counter | Pixel data | Pixel data | Pixel data |

Comp　　　　　　　Ext

| Pixel data | Run length compressed pixel data

(c) In the case where pixels having run length more than 9 and less than 128 are compressed : Expression by less than (128+3) pixels

d0　　　d3　d4　　.　d7　d8　　　d11　d12　　d15　d16　　　d19　d20　　　d23　d24　　　d27

| 1 0 0 0 | Pixel data | 1 | Counter | Counter (Ext) | Pixel data | Pixel data | Pixel data |

Comp　　　　　　　Ext

(d) In the case where all pixels are compressed (longest pattern) : Expression by less than (128+128+128+128) pixels

d0　　　d3　d4　　　d7　d8　　　d11　d12　　d15　d16　　　d19　d20　　　d23　d24　　　d27

| 1 1 1 1 | Pixel data | 1 | Counter | Counter (Ext) | Pixel data | 1 | Counter | Counter (Ext) |

Comp　d28　　　d31　d32　Ext　d35　d36　　　d39　d40　　　d43　d44　　　d47　d48　　　d51

| Pixel data | 1 | Counter | Counter (Ext) | Pixel data | 1 | Counter | Counter (Ext) |

Ext

# FIG. 18

(a) In the case of only end code

d0　　　d3　d4　　　d7　d8　　　d11

| 1 | 0 | 0 | 0 | 0 | 0 | 0 | 0 | 0 | 0 | 0 | 0 |

Comp

(b) In the case of termination by 1 pixel

d0　　　d3　d4　　　d7　d8　　　d11　d12　　　d15

| 0 | 1 | 0 | 0 | Pixel data | 0 | 0 | 0 | 0 | 0 | 0 | 0 | 0 |

Fc

(c) In the case of termination by 2 pixels

d0　　　d3　d4　　　d7　d8　　　d11　d12　　　d15　d16　　　d19

| 0 | 0 | 1 | 0 | Pixel data | Pixel data | 0 | 0 | 0 | 0 | 0 | 0 | 0 | 0 |

Comp

(d) In the case of termination by continuous runs of 2 to 8 pixels

d0　　　d3　d4　　　d7　d8　　　d11　d12　　　d15　d16　　　d19

| 1 | 1 | 0 | 0 | Pixel data | 1 | Counter | 0 | 0 | 0 | 0 | 0 | 0 | 0 |

Comp　　　　　　　　　Ext

(e) In the case of termination by continuous runs equal to or less than 128 pixels

d0　　　d3　d4　　　d7　d8　　　d11　d12　　　d15　d16　　　d19　d20　　　d23

| 1 | 1 | 0 | 0 | Pixel data | 1 | Counter | Counter (Ext) | 0 | 0 | 0 | 0 | 0 | 0 | 0 | 0 |

Comp　　　　　　　　　Ext

Pixel data: Pixel data Run length compressed pixel data

(f) In the case where background is produced by a line of pixels of one type

d0　　　　d4　　　d7　d8　　　　　　　d15

| 1 | 0 | 0 | 0 | Pixel data | 0 | 0 | 0 | 0 | 0 | 0 | 0 | 0 |

F I G. 19

EP 1 465 165 A2

Run length compression flag Comp
0 : Not set/1 : Set

4 bit resolution
pixel data

d0　d1　d2　d3　d4　d5　d6　d7　d8　d9　d10　d11　d12

(a)　No continuous run exists
(1 Pixel)

0　　Pixel data

Run counter extension flag Ext　　0 : Not set/1 : Set

Run length (3 bits)

4 bit resolution
pixel data

(b)　Continuous run exists
(2 to 8 pixels)

1　　0　　Counter　　Pixel data

Run length (7 bits)

4 bit resolution
pixel data

(c)　Continuous run exists
(9 to 128 pixels)

1　　1　　Counter　　Counte (Ext)　　Pixel data

(d)　Line end code

1　　0　0　0　0　0　0　0　0

End code "E"

FIG. 20

EP 1 465 165 A2

(a)

Display control sequence table (SP_DCSQT)                    Description order

|  | Contents |
|---|---|
| SP_DCSQ#0 | Display control sequence #0 |
| SP_DCSQ#1 | Display control sequence #1 |
| ⋮ | |
| ⋮ | |
| SP_DCSQ#n | Display control sequence #n |

(b)

Display control sequence (SP_DCSQ)                          Description order

|  | Contents | Number of bytes |
|---|---|---|
| (1)SP_DCSQ_STM | Start time of SP_DCSQ | 2 bytes |
| (2)SP_NXT_DCSQ_SA | Start address of next SP_DCSQ | 4 bytes |
| (3)SP_DCCMD#1 ⋮ SP_DCCMD#n | Display control command #1 ⋮ Display control command #n | |

(c)

| b15 | b14 | b13 | b12 | b11 | b10 | b9 | b8 |
|---|---|---|---|---|---|---|---|
| SP_DCSQ_STM[25..18] | | | | | | | |

| b7 | b6 | b5 | b4 | b3 | b2 | b1 | b0 |
|---|---|---|---|---|---|---|---|
| SP_DCSQ_STM[17..10] | | | | | | | |

F I G. 21

F I G. 22

EP 1 465 165 A2

F I G. 23

Video object unit
(VOBU)

| NV PACK |
| V PACK |
| V PACK |
| SP PACK |
| A PACK |
| V PACK |
| V PACK |
| SP PACK |

←——1 pack (2048 bytes)——→

| Pack header | Packet header | Sub-picture data |

Sub-picture packet

| Packet header | Sub-picture data 1 (SP_DATA1) |

| Packet header | Sub-picture data 2 (SP_DATA2) |

| Sub-picture data 1 | Sub-picture data 2 | |

| Pixel data (PXD) | Display control sequence table (SP_DCSQT) |

Sub-picture unit header (SPUH)

1 sub-picture unit (SPU)

| SP_DCSQ#0 | SP_DCSQ#1 | ... |

FIG. 24

EP 1 465 165 A2

Data ID —— Addition of IED —→ Data ID + IED

(Data ID + IED) &
RSV & main data
—— Addition of EDC —→
Data frame
(Before scrambled)
—— Scrambling main data —→
Scrambled frame
(After scrambled)

32 scrambled frame
(After scrambled)
—→
ECC encoding
PO of 16 rows is interleaved
32 recording frames
—→
Modulation of 26 SYNC frames
2 recording data field

FIG. 25

Data structure in data ID

(MSB)  b31                      b24   b23                                    b0   (LSB)

| Data frame information | Data frame number |
|---|---|

| b31 | b30 | b29 | b28 | b27 | b26 | b25 | b24 |
|---|---|---|---|---|---|---|---|
| Sector format type | Tracking method | Reflection index | Recording type | Area type | | Data type | Layer number |

FIG. 27

Data frame structure

| 172 bytes | | | | 172 bytes |
|---|---|---|---|---|

| 4 bytes | 2 bytes | 6 bytes | | |
|---|---|---|---|---|

| Data ID | IED | RSV | Main data (D0~D159) | Main data 172 bytes (D160~D331) |
|---|---|---|---|---|
| Main data 172 bytes (D332~D503) | | | | Main data 172 bytes (D504~D675) |
| Main data 172 bytes (D676~D847) | | | | Main data 172 bytes (D848~D1019) |
| Main data 172 bytes (D1020~D1191) | | | | Main data 172 bytes (D1192~D1363) |
| Main data 172 bytes (D1364~D1535) | | | | Main data 172 bytes (D1536~D1707) |
| Main data 172 bytes (D1708~D1879) | | | | Main data 168 bytes (D1880~D2047) / EDC |

6 rows

4 bytes

FIG. 26

EP 1 465 165 A2

Data frame number in rewritable information recording medium

| Area | Contents |
|---|---|
| System lead-in area | Physical sector number |
| Defect management area | Physical sector number |
| Disk identification zone | Physical sector number |
| Used block of data area | LSN + 030000h |
| Unused block of data area | State 1   0 is set for first 3 bits of first sector, and contents are incremented for remaining sectors<br>State 2   From 00 0000h to 00 001Fh<br>State 3   Unrecorded |

## F I G. 28

Contents of record type in rewritable information recording medium

| Area | Contents |
|---|---|
| System lead-in area | 0b |
| Lead-in area, Lead-out area | 0b |
| Data area | 0b : General data<br>1b : Real time data |

## F I G. 29

EP 1 465 165 A2

# FIG. 30

(a)

| Default preset number | Default preset value | Default preset number | Default preset value |
|---|---|---|---|
| 0h | 0001h | 8h | 0010h |
| 1h | 5500h | 9h | 5000h |
| 2h | 0002h | 0Ah | 0020h |
| 3h | 2A00h | 0Bh | 2001h |
| 4h | 0004h | 0Ch | 0040h |
| 5h | 5400h | 0Dh | 4002h |
| 6h | 0008h | 0Eh | 0080h |
| 7h | 2800h | 0Fh | 0005h |

Default values of shift register

(b)

| r14 | r13 | r12 | r11 | r10 | r9 | r8 | r7 | r6 | r5 | r4 | r3 | r2 | r1 | r0 |
|---|---|---|---|---|---|---|---|---|---|---|---|---|---|---|

Feedback shift register

| 172 bytes | | | PI 10 bytes | | | 172 bytes | | | PI 10 bytes | |
|---|---|---|---|---|---|---|---|---|---|---|
| B0,0 | | B0,171 | B0,172 | | B0,181 | B0,182 | | B0,353 | B0,354 | | B0,363 |
| B1,0 | | B1,171 | B1,172 | | B1,181 | B1,182 | | B1,353 | B1,354 | | B1,363 |
| B2,0 | | B2,171 | B2,172 | | B2,181 | B2,182 | | B2,353 | B2,354 | | B2,363 |
| | | | | | | | | | | | |
| B189,0 | | B189,171 | B189,172 | | B189,181 | B189,182 | | B189,353 | B189,354 | | B189,363 |
| B190,0 | | B190,171 | B190,172 | | B190,181 | B190,182 | | B190,353 | B190,354 | | B190,363 |
| B191,0 | | B191,171 | B191,172 | | B191,181 | B191,182 | | B191,353 | B191,354 | | B191,363 |
| B192,0 | | B192,171 | B192,172 | | B192,181 | B192,182 | | B192,353 | B192,354 | | B192,363 |
| | | | | | | | | | | | |
| B207,0 | | B207,171 | B207,172 | | B207,181 | B207,182 | | B207,353 | B207,354 | | B207,363 |

192 rows

PO 16 rows

(ECC block structure (D), (E))

# F I G. 31

1 Scrambled frame

(Scrambled frame allocation (D), (E))

# F I G. 32

F I G. 33

F I G. 34

(a) Data field (F) in which even sector number is recorded

(b) Data field (F) in which odd sector number is recorded

EP 1 465 165 A2

Contents of specific SYNC codes

|  | State 0 | State 1 or State 2 |
|---|---|---|
| SY0 | 1000#0 01000 00000 001001 | 0100#0 01000 00000 001001 |
| SY1 | 10100# 01000 00000 001001 | 00100# 01000 00000 001001 |
| SY2 | 10010# 01000 00000 001001 | 00010# 01000 00000 001001 |
| SY3 | 00000# 01000 00000 001001 | 00#010 01000 00000 001001 |

FIG. 35

Relationship between abnormal phenomena where unpredicted
combination pattern of SYNC codes is detected

| Contents of abnormal phenomenon→ | Frame shift | | Incorrect detection | | Track-off |
|---|---|---|---|---|---|
| Contents of sense pattern↓ | Case 1 | Case 2 | Case 3 | Case 4 | Case 5 |
| Only 1 portion is different from predicted pattern | ✕ | ◯ | ◯ | ✕ | — |
| With respect to excepted pattern, coincidence with pattern shifted by ±1 sync frame is obtained | ◯ | ◯ | ✕ | ✕ | ✕ (△) |
| (1, 1, 2), (1, 2, 1), (1, 2, 2) or (2, 1, 2) | — | ◯ | — | — | — |
| Continuity in data ID | (◯) | (◯) | ◯ | ◯ | ✕ |
| Continuity of wobble address | (◯) | (◯) | ◯ | ◯ | ✕ |

FIG. 38

Comparison (1) of combination pattern (in column direction) of continuous SYNC codes
— In the case where code is shifted between sectors —

| Newest SYNC frame number | 00 | 01 | 02 | 03 | 04 | 05 | 06 | 07 | 08 | 09 | 10 | 11 | 12 |
|---|---|---|---|---|---|---|---|---|---|---|---|---|---|
| Second preceding SYNC code number | 2 | 1 | 0 | 1 | 1 | 2 | 1 | 2 | 2 | 3 | 1 | 3 | 3 |
| Immediate preceding SYNC code number | 1 | 0 | 1 | 1 | 2 | 1 | 2 | 2 | 3 | 1 | 3 | 3 | 1 |
| Newest SYNC code number | 0 | 1 | 1 | 2 | 1 | 2 | 2 | 3 | 1 | 3 | 3 | 1 | 2 |
| | | | | | | | | | | | | | |
| Number of code changes between adjacent sectors | 3 | 2 | 2 | 2 | 3 | 2 | 2 | 2 | 3 | 2 | 2 | 2 | 3 |
| Number of code changes by 1 frame shift | 2 | 2 | 2 | 1 | 1 | 2 | 3 | 2 | 2 | 2 | 3 | 3 | 2 |

| Newest SYNC frame number | 13 | 14 | 15 | 16 | 17 | 18 | 19 | 20 | 21 | 22 | 23 | 24 | 25 |
|---|---|---|---|---|---|---|---|---|---|---|---|---|---|
| Second preceding SYNC code number | 1 | 2 | 3 | 2 | 2 | 1 | 3 | 1 | 1 | 3 | 2 | 3 | 3 |
| Immediate preceding SYNC code number | 2 | 3 | 2 | 2 | 1 | 3 | 1 | 1 | 3 | 2 | 3 | 3 | 2 |
| Newest SYNC code number | 3 | 2 | 2 | 1 | 3 | 1 | 1 | 3 | 2 | 3 | 3 | 2 | 1 |
| | | | | | | | | | | | | | |
| Number of code changes between adjacent sectors | 3 | 2 | 2 | 2 | 3 | 2 | 2 | 2 | 3 | 2 | 2 | 2 | 3 |
| Number of code changes by 1 frame shift | 2 | 2 | 3 | 2 | 2 | 2 | 3 | 2 | 2 | 2 | 3 | 3 | 2 |

# FIG. 36

EP 1 465 165 A2

Comparison (2) of combination pattern (in column direction) of continuous SYNC codes
— In the case where code is shifted between guard regions —

| Newest SYNC frame number | 00 | 01 | 02 | 03 | 04 | 05 | 06 | 07 | 08 | 09 | 10 | 11 | 12 |
|---|---|---|---|---|---|---|---|---|---|---|---|---|---|
| Second preceding SYNC code number | 1 | 1 | 0 | 1 | 1 | 2 | 1 | 2 | 2 | 3 | 1 | 3 | 3 |
| Immediate preceding SYNC code number | 1 | 0 | 1 | 1 | 2 | 1 | 2 | 2 | 3 | 1 | 3 | 3 | 1 |
| Newest SYNC code number | 0 | 1 | 1 | 2 | 1 | 2 | 2 | 3 | 1 | 3 | 3 | 1 | 2 |
| | | | | | | | | | | | | | |
| Number of code changes between adjacent sectors | 2 | 2 | 2 | 2 | 3 | 2 | 2 | 2 | 3 | 2 | 2 | 2 | 3 |
| Number of code changes by 1 frame shift | 2 | 2 | 2 | 1 | 1 | 2 | 3 | 2 | 2 | 2 | 3 | 3 | 2 |

| Newest SYNC frame number | 13 | 14 | 15 | 16 | 17 | 18 | 19 | 20 | 21 | 22 | 23 | 24 | 25 | PA |
|---|---|---|---|---|---|---|---|---|---|---|---|---|---|---|
| Second preceding SYNC code number | 1 | 2 | 3 | 2 | 2 | 1 | 3 | 1 | 1 | 3 | 2 | 3 | 3 | 2 |
| Immediate preceding SYNC code number | 2 | 3 | 2 | 2 | 1 | 3 | 1 | 1 | 3 | 2 | 3 | 3 | 2 | 1 |
| Newest SYNC code number | 3 | 2 | 2 | 1 | 3 | 1 | 1 | 3 | 2 | 3 | 3 | 2 | 1 | 1 |
| | | | | | | | | | | | | | | |
| Number of code changes between adjacent sectors | 3 | 2 | 2 | 2 | 3 | 2 | 2 | 2 | 3 | 2 | 2 | 2 | 2 | 2 |
| Number of code changes by 1 frame shift | 2 | 2 | 3 | 2 | 2 | 2 | 3 | 2 | 2 | 2 | 3 | 3 | 3 | 2 |

# FIG.37

EP 1 465 165 A2

F I G. 39

Comparison between first and second embodiments in read only information recording medium

| Sector #0 | Sector #1 | . . . . | Sector #31 | Sector #32 | Sector #33 | Sector #34 | . . . . | Sector #63 | . . . . . . |
|---|---|---|---|---|---|---|---|---|---|

230  231  241  242  243  244  248

| ECC block #1 | ECC block #2 | ECC block #3 | ECC block #4 | ECC block #5 | . . . . . . |
|---|---|---|---|---|---|

411  412  413  414  415

(a)

Information recording medium 221

SYNC frame length 433    SYNC frame length 433    SYNC frame length 433

| Guard region #1 | Sector #0 | Sector #1 | . . . . | Sector #31 | Guard region #2 | Sector #32 | Sector #33 | . . . . | Sector #63 | Guard region #3 | . . . . |
|---|---|---|---|---|---|---|---|---|---|---|---|

441  230  231  241  442  242  243  248  443

441

| Guard region #1 | ECC block #1 | Guard region #2 | ECC block #2 | Guard region #3 | ECC block #3 | Guard region #4 | ECC block #4 | . . . | Guard region #8 | ECC block #8 |
|---|---|---|---|---|---|---|---|---|---|---|

411  442  412  443  413  444  414  448  418

(b)

Information recording medium 221

F I G. 40

EP 1 465 165 A2

Comparison between first and second embodiments in read only information recording medium

| Data segment 490 | | SYNC code 433 | SYNC data 434 |
|---|---|---|---|

| 14 data bytes | 67 data bytes | 4 data bytes | 77376 data bytes | 2 data bytes | 4 data bytes | 16 data bytes | 67 data bytes | 4 data bytes |
|---|---|---|---|---|---|---|---|---|
| Buffer region | VFO region | Pre-SYNC region | Data region 470 ‖ ECC block #2 | Postamble region ⇒ "SY1" | Extra region | Buffer region | VFO region | Pre-SYNC region |

474  471  477  412  481  482  475  472  478

441

| Guard region #1 | ECC block #1 | Guard region #2 | ECC block #2 | Guard region #3 | ECC block #3 | Guard region #4 | ECC block #4 | · · · | Guard region #8 | ECC block #8 |
|---|---|---|---|---|---|---|---|---|---|---|

411  442  412  443  413  444  414  448  418

Information recording medium 221

F I G. 41

EP 1 465 165 A2

Structure of extra data

DS: (n+1)0    DS: (n+1)1    2001

| D-S(n-1) | DS : n0 | DS : n1 | DS : n2 | DS : n3 | | |

2002

| CP control data | Parity | 2002 |

F I G. 42

Extra data utilizing example (1)

DS: (n+1)0    DS: (n+1)1    2001

| D-S(n-1) | DS : n0 | DS : n1 | DS : n2 | DS : n3 | | |

2003

(RSV) data of ECC Block

32

| | | | |
| 6 | 6 | 6 | 6 |

24

CP control data

2002

2004 — Decode processing

2005 — Contents encryption key

F I G. 43

Extra data utilizing example (2)

| D−S(n−1) | DS : n0 | DS : n1 | DS : n2 | DS : n3 |

DS: (n+1)0    DS: (n+1)1    2001

RSV of
ECC block
(6×32Byte)

4B

6B

CP control data
& parity

2002

| 6×31 | 6×31 | 6×31 | 6×31 |

31

2003

| 6 | 6 | 6 | 6 |

24

2004 — Decode processing

2005 — Contents encryption key    Encryption processing of
encrypted contents

F I G. 44

SYNC code : SY1    Specific code : 1002

001001000 01000 01000 0100・・・ECC-NO/Segment-NO/CP-CCI

Data
area    Guard region

F I G. 45

SYNC code : SY1    Random code : 1003

00100100 000100 000100 00100・・・・・・・・・・・・・・・・・

Data
area    Guard region

F I G. 46

EP 1 465 165 A2

| 411 | 412 | 413 | 414 | 415 | | 418 |
|---|---|---|---|---|---|---|
| (a) ECC block #1 | ECC block #2 | ECC block #3 | ECC block #4 | ECC block #5 | . . . . | ECC block #8 |

SYNC frame length 433     SYNC frame length 433     SYNC frame length 433

| (b) ECC block #1 | Guard region #2 for read only type | ECC block #2 | Guard region #3 for read only type | ECC block #3 | . . . . | Guard region #8 for read only type | ECC block #8 |
|---|---|---|---|---|---|---|---|
| 411 | 442 | 412 | 443 | 413 | | 448 | 418 |

SYNC frame length 433     SYNC frame length 433     SYNC frame length 433

| (c) ECC block #1 | Guard region #2 for write once type | ECC block #2 | Guard region #3 for write once type | ECC block #3 | . . . . | Guard region #8 for write once type | ECC block #8 |
|---|---|---|---|---|---|---|---|
| 411 | 452 | 412 | 453 | 413 | | 458 | 418 |

SYNC frame length 433     SYNC frame length 433     SYNC frame length 433

| (d) ECC block #1 | Guard region #2 for re-writable type | ECC block #2 | Guard region #3 for re-writable type | ECC block #3 | . . . . | Guard region #8 for re-writable type | ECC block #8 |
|---|---|---|---|---|---|---|---|
| 411 | 462 | 412 | 463 | 413 | | 468 | 418 |

F I G. 47

FIG. 48

Example of gray codes

| Decimal notation | Conventional binary notation | Gray code |
|---|---|---|
| 0 | 0000 | 0000 |
| 1 | 0001 | 0001 |
| 2 | 0010 | 0011 |
| 3 | 0011 | 0010 |
| 4 | 0100 | 0110 |
| 5 | 0101 | 0111 |
| 6 | 0110 | 0101 |
| 7 | 0111 | 0100 |
| 8 | 1000 | 1100 |
| 9 | 1001 | 1101 |
| 10 | 1010 | 1111 |
| 11 | 1011 | 1110 |
| 12 | 1100 | 1010 |
| 13 | 1101 | 1011 |
| 14 | 1110 | 1001 |
| 15 | 1111 | 1000 |

FIG. 51

FIG. 49

Wobble modulation (180 degree phase modulation and NRZ system)

☆ 1 Address bit region 511 (to be expressed by 8 wobbles or 12 wobbles)
☆ Wobble frequency, amplitude, and phase in 1 address bit region=to be constant anywhere
☆ Boundary of 1 address bit region 511 (phase is shifted by 180 degrees or 0 degrees)

FIG. 50

Wobble modulation in L/G recording (Principle of generation of uncertain bit)

Specific track code

| Decimal notation | Conventional binary notation | Specific track code |
|---|---|---|
| 0 | 00000 | 00 ⋯ 00000 |
| 2 | 00010 | 00 ⋯ 00001 |
| 4 | 00100 | 00 ⋯ 00011 |
| 6 | 00110 | 00 ⋯ 00010 |
| 8 | 01000 | 00 ⋯ 00110 |
| 10 | 01010 | 00 ⋯ 00111 |
| 12 | 01100 | 00 ⋯ 00101 |
| 14 | 01110 | 00 ⋯ 00100 |
| 16 | 10000 | 00 ⋯ 01100 |
| 18 | 10010 | 00 ⋯ 01101 |
| 20 | 10100 | 00 ⋯ 01111 |
| 22 | 10110 | 00 ⋯ 01110 |
| 24 | 11000 | 00 ⋯ 01010 |
| 26 | 11010 | 00 ⋯ 01011 |
| 28 | 11100 | 00 ⋯ 01001 |
| 30 | 11110 | 00 ⋯ 01000 |

| Decimal notation | Conventional binary notation | Specific track code |
|---|---|---|
| 1 | 00001 | 10 ⋯ 00000 |
| 3 | 00011 | 10 ⋯ 00001 |
| 5 | 00101 | 10 ⋯ 00011 |
| 7 | 00111 | 10 ⋯ 00010 |
| 9 | 01001 | 10 ⋯ 00110 |
| 11 | 01011 | 10 ⋯ 00111 |
| 13 | 01101 | 10 ⋯ 00101 |
| 15 | 01111 | 10 ⋯ 00100 |
| 17 | 10001 | 10 ⋯ 01100 |
| 19 | 10011 | 10 ⋯ 01101 |
| 21 | 10101 | 10 ⋯ 01111 |
| 23 | 10111 | 10 ⋯ 01110 |
| 25 | 11001 | 10 ⋯ 01010 |
| 27 | 11011 | 10 ⋯ 01011 |
| 29 | 11101 | 10 ⋯ 01001 |
| 31 | 11111 | 10 ⋯ 01000 |

Note : "2n" (n : Integer value) and "2n+1" are different from each other only in the most significant bit, and are all the same in other bits

F I G. 52

EP 1 465 165 A2

Wobble address format on rewritable information recording medium

**(a)** Data segment

| VFO region | Pre-SYNC region | Rewritable data region in ECC block #2 | Postamble region ⇒ "SY1" | Extra region | Buffer region |
|---|---|---|---|---|---|
| 67 data bytes | 4 data bytes | 77376 data bytes | 2 data bytes | 4 data bytes | 16 data bytes |

522 · 523 · 525 · 526 · 524 · 527 · 531

**(b)**

| Physical segment #0 | Physical segment #1 | Physical segment #2 | Physical segment #3 | Physical segment #4 | Physical segment #5 | Physical segment #6 | Physical segment #7 | ⋮ |
|---|---|---|---|---|---|---|---|---|

550 · 551 · 552 · 553 · 554 · 555 · 556 · 557

**(c)**

| Wobble data unit #0 | Wobble data unit #1 | Wobble data unit #2 | ⋯ | Wobble data unit #16 |
|---|---|---|---|---|

560 · 561 · 562 · 576

**(d)**

| Wobble sync region | Non-modulation region | Modulation start mark | Wobble address region | Non-modulation region | Modulation start mark | Wobble address region | ⋮ |
|---|---|---|---|---|---|---|---|
| IPW 6 wobbles | NPW 4 wobbles | IPW 6 wobbles | Continuous NPW 68 wobbles | | IPW 4 wobbles | 3 address bits by 12 wobbles | Continuous NPW 68 wobbles | | IPW 4 wobbles | 3 address bits by 12 wobbles | ⋮ |

580 · 581 · 582 · 586 · 587 · 590 · 591

**(e)** Wobble address information

| Wobble sync region | Reserved region | Segment information | Zone information | Parity information | Groove track information | Land track information | Unity region ⇒ all NPWS |
|---|---|---|---|---|---|---|---|
| 3 address bits | 3 bits | 6 address bits | 5 bits | 1 bits | 12 bits | 12 bits | 9 address bits |

580 · 601 · 604 · 602 · 605 · 606 · 607 · 608 · 610

# F I G. 53

Bit modulation rule

F I G. 54

WAP layout

Sync field

| | Address field | Unity field |
|---|---|---|

| 0 | 1 | 2 | 3 | 4 | 5 | 6 | 7 | 8 | 9 | 10 | 11 | 12 | 13 | 14 | 15 | 16 |
|---|---|---|---|---|---|---|---|---|---|----|----|----|----|----|----|----|

WDU number in physical segment

F I G. 55

Layout of address field in WAP

Segment information

(MSB) | b38 | b36 b35 | b30 b29 | b25 | b24 b23 | b12 b11 | (LSB) b0

| | Segment | Zone | Parity | Groove track | Land track |
|---|---|---|---|---|---|
| 3 | 6 | 5 | 1 | 12 | 12 |

F I G. 56

Binary/gray code conversion

F I G. 57

WDU in sync field

| | IPW | NPW | IPW | NPW |
|---|---|---|---|---|
| SYNC | 6 wobbles | 4 wobbles | 6 wobbles | 68 wobbles |

F I G. 58

WDU in address field

| | IPW | bit 2 | bit 1 | bit 0 | NPW |
|---|---|---|---|---|---|
| Address | 4 wobbles | 4 wobbles | 4 wobbles | 4 wobbles | 68 wobbles |

F I G. 59

WDU in unity field

| | NPW |
|---|---|
| Unity | 84 wobbles |

F I G. 60

WDU of outside mark

| NPW | SCM 1 | NPW | SCM 2 | NPW | NPW |
|---|---|---|---|---|---|
| | | 8 wobbles | | | 68 wobbles |

2 wobbles   2 wobbles       2 wobbles   2 wobbles

F I G. 61

内側マークのWDU

| NPW | SCM 1 | NPW | SCM 2 | NPW | NPW |
|---|---|---|---|---|---|
| | | 4 wobbles | | 6 wobbles | 68 wobbles |

2 wobbles   2 wobbles     2 wobbles

F I G. 62

Signal from SCM1

$I_{SCM1}$

$(I_{ot})_{groove}$

Zero level

Period

F I G. 63

Signal from SCM2

$I_{SCM2}$

$(I_{ot})_{groove}$

Zero level

F I G. 64

Output signal of servo calibration mark

SCM2 of WDU of outside mark

Groove track n
Land track n-1
Groove track n-1

SCM2 of WDU of inside mark

$Ia+Ib+Ic+Id$

liscm     loscm

$(Iot)_{land}$

0

F I G. 65

Measurement value of SCD

FIG. 66

Layout of recording cluster

| Recording cluster | | ~540 |
|---|---|---|
| Data segment × n | Extension guard field | ~528 |
| 77496 × n | 24 | |

FIG. 69

Address information embedding example of
land track by partially changing groove width

*Signal in region in which track width changes

*Groove track

*Laser beam

*Land track

Groove n+2

Land n+1

Groove n+1

*Groove track

FIG. 71

Physical segment layout of first physical segment of track

Outside
↑

| L | Zone=m+1<br>Track=0<br>Segment=m+12 | Zone=m+1<br>Track=0<br>Segment=m+13 | Zone=m+1<br>Track=1<br>Segment=0 | Zone=m+1<br>Track=1<br>Segment=1 | |
|---|---|---|---|---|---|
| G | Zone=m+1<br>Track=0<br>Segment=m+12 | Zone=m+1<br>Track=0<br>Segment=m+13 | Zone=m+1<br>Track=1<br>Segment=0 | Zone=m+1<br>Track=1<br>Segment=1 | |
| L | Zone=m<br>Track=n<br>Segment=m+11 | Zone=m<br>Track=n<br>Segment=m+12 | Zone=m+1<br>Track=0<br>Segment=0 | Zone=m+1<br>Track=0<br>Segment=1 | |
| G | Zone=m<br>Track=n<br>Segment=m+11 | Zone=m<br>Track=n<br>Segment=m+12 | Zone=m+1<br>Track=0<br>Segment=0 | Zone=m+1<br>Track=0<br>Segment=1 | |
| L | Zone=m<br>Track=n-1<br>Segment=m+11 | Zone=m<br>Track=n-1<br>Segment=m+12 | Zone=m<br>Track=n<br>Segment=0 | Zone=m<br>Track=n<br>Segment=1 | |
| G | Zone=m<br>Track=n-1<br>Segment=m+11 | Zone=m<br>Track=n-1<br>Segment=m+12 | Zone=m<br>Track=n<br>Segment=0 | Zone=m<br>Track=n<br>Segment=1 | |

↓
Inside

F I G. 67

EP 1 465 165 A2

Data recording method for data recorded on rewritable information recording medium

(a)

| 410 | SYNC frame length 433 | 411 | SYNC frame length 433 | 412 |
|---|---|---|---|---|
| ECC block #0 | Rewritable guard region #1 | ECC block #1 | Rewritable guard region #2 | ECC block #2 |

461    462

(b) 540 ~ Recording cluster

(c) 529 ~

| 546 | | 544 | 547 | 532 | 533 | 521 | 536 | 534 | 537 | 530 |
|---|---|---|---|---|---|---|---|---|---|---|
| Data segment | | | | | | Data segment | | | | |
| Data region in ECC block #0 | Post-amble region SY1 | Extra region | Buffer region | VFO region | Pre-SYNC region | Data region in ECC block #1 | Post-amble region SY1 | Extra region | Buffer region | |
| 77376 data bytes | 2 data bytes | 4 data bytes | 16 data bytes | 67 data bytes | 4 data bytes | 77376 data bytes | 2 data bytes | 4 data bytes | 16 data bytes | 24 data bytes |

520 ~

Extension guard region ~528

522

523    525

(d)

Duplicate portion during rewriting 541

| VFO region | Pre-SYNC region | Data region in ECC block #2 |
|---|---|---|
| Data segment | | ~531 |

(e)  590

Recording cluster ~541

(f)  Wobble sync region 580 ~

| Non-modulation region | Modulation start mark ~581 |
|---|---|

FIG. 68

F I G. 70

Example wherein land address is formed by partially changing groove width

| Groove track | G-S 1101 | L-S 11X1 | G-S 1101 | L-S 11X1 | |
| Land track | | L-S 1101 | | L-S 1100 | |
| Groove track | G-S 1100 | L-S X100 | G-S 1100 | L-S X100 | |
| Land track | | L-S 0101 | | L-S 0100 | |
| Groove track | G-S 0101 | L-S 010X | G-S 0100 | L-S 010X | |

# F I G. 72

Example wherein odd number or even number of land
track is detected by partially changing groove width

| Groove/land track | Track number | Criterion for determining track number |
|---|---|---|
| Groove : G(n+2) | 1101X | For groove, first 4 bits only are valid |
| Odd land : L(n+1) | 110X0 | Either 11010 or 11000 is valid only in this field in odd land |
| Groove : G(n+1) | 1100X | For groove, first 4 bits only are valid |
| Even land : L(n) | X1001 | Either 11001 or 01001 is valid only in this field in even land |
| Groove : G(n) | 0100X | For groove, first 4 bits only are valid |

# F I G. 73

Another example wherein uncertain bit is allocated in groove region
in land/groove recording

Groove region 501

Land region 503

$\varepsilon$

Groove region 502

Uncertain bit region
in groove 710       $\zeta$

Land region 507

$\eta$

Groove region 505

Land region 714

Groove region 506

# FIG. 74

EP 1 465 165 A2

Rewritable information recording medium
(method for setting track number information)

| Land or groove identification | Track number | Track number information A606 | Track number information B607 |
|---|---|---|---|
| Groove | 2n+3 | 2n+4 | 2n+3 |
| Land | 2n+3 | Uncertain (2n+2 or 2n+3) | 2n+3 |
| Groove | 2n+2 | 2n+2 | 2n+3 |
| Land | 2n+2 | 2n+2 | Uncertain (2n+1 or 2n+3) |
| Groove | 2n+1 | 2n+2 | 2n+1 |
| Land | 2n+1 | Uncertain (2n or 2n+2) | 2n+1 |
| Groove | 2n | 2n | 2n+1 |

# F I G. 75

Wobble detection signal in land track

Groove n+1    1    1    0    *Groove track

                              *Laser beam
                              *Land track
Land n    1    X    0    *Signal in region in which track width changes

Groove n    1    0    0    *Groove track

# F I G. 76

Relationship between address detection
values in land track in grove wobbling

| Track mode | Track number to be detected |
|---|---|
| Groove | n+3 |
| Even land (n+2) | (n+2) or (n+3) |
| Groove | n+2 |
| Even land (n+1) | (n+1) or (n+2) |
| Groove | n+1 |
| Even land (n) | (n) or (n+1) |
| Groove | n |

# F I G. 77

Track number by groove wobbling
and detection data in land track

| Groove/land track | Track number | Criterion for determining track number |
|---|---|---|
| Groove : G(n+2) | 1101 | |
| Odd land : L(n+1) | 110* | 1101 or 1100 is valid only in this field in odd land |
| Groove : G(n+1) | 1100 | |
| Even land : L(n) | *100 | 1100 or 0100 is valid only in this field in even land |
| Groove : G(n) | 0100 | |

# F I G. 78

Example of addressing format in rewritable information recording medium

Data block (8K bytes)

| Groove track | SYNC | Zn · TR-NO(n+2) · Sn | SYNC | Zn · TR-NO(n+2) · Sn+1 | |
| Land track | | Odd-Land Track | | | |
| Groove track | SYNC | Zn · TR-NO(n+1) · Sn | SYNC | Zn · TR-NO(n+1) · Sn+1 | |
| Land track | | | | | |
| Groove track | SYNC | Zn · TR-NO(n) · Sn | SYNC | Zn · TR-NO(n) · Sn+1 | |

Header area      Data area

## F I G. 79

Header area

| Groove track | 10010000 | TNO-n+2 |
| Land track | 001  000 | |
| Groove track | 00011000 | TNO-n+1 |
| Land track | 000  100 | |
| Groove track | 00010001 | TNO-n |

\*Odd or even land is discriminated by level and polarity of Sync

Sync

## F I G. 80

Header area

| Groove track | 10010 | TNO-n+2 |
| Land track | ▨10010 | |
| Groove track | 10010 | TNO-n+1 |
| Land track | 10010 | |
| Groove track | 10010 | TNO-n |

*Odd or even land is discriminated by land (pre-pit) which exists in Sync region

Sync

F I G. 81

Header area

| Groove track | ▨10010 | TNO-n+2 |
| Land track | 10010 | |
| Groove track | 10010 | TNO-n+1 |
| Land track | 10010 | |
| Groove track | ▨10010 | TNO-n |

*Odd or even land is discriminated by land (pre-pit) which exists in Sync region

Sync

F I G. 82

Header

Groove track

Land track

Groove track

Land track

Groove track

*Odd or even on segment and land is discriminated by groove (pre-pit) which exists in Sync region

F I G. 83

Land or groove recording
(method for setting odd or even number identification information on land)

Groove region 501

Land region 503

Groove region 502

Groove cut region 508

Land region 714

Groove region 505

Land region 507

Groove region 506

F I G. 84

Land or groove recording
(method for setting odd or even number identification information on land)

Groove region 501

Land region 503

Groove wobbling region 509

Groove region 502

Land region 714

Groove region 505

Land region 507

Groove region 506

Groove cut region and land pre-pit 500

F I G. 85

Dimensional comparison table between system lead-in area and current DVD-ROM

| Information recording medium | Single layer disk | | Dual layer disk | |
|---|---|---|---|---|
| | Track pitch | Shortest pit length | Track pitch | Shortest pit length |
| Embodiment of the invention | 0.68 $\mu$m | 0.41 $\mu$m | 0.68 $\mu$m | 0.41 $\mu$m |
| Value defined in current DVD-ROM | 0.74 $\mu$m | 0.40 $\mu$m | 0.74 $\mu$m | 0.44 $\mu$m |
| Ratio of the embodiment of the invention to value defined in the current DVD-ROM | 0.92 | 1.03 | 0.96 | 1.07 |
| Allowable upper limit of the present invention (1.3 times as high as value defined in the current DVD-ROM) | 0.96 $\mu$m | 0.52 $\mu$m | 0.96 $\mu$m | 0.57 $\mu$m |
| Allowable lower limit of the present invention (0.7 times as low as value defined in the current DVD-ROM) | 0.52 $\mu$m | 0.28 $\mu$m | 0.52 $\mu$m | 0.31 $\mu$m |

# F I G. 86

Data structure of lead-in area in read only information recording medium

Physical sector number

| | | |
|---|---|---|
| System lead-in area | Initial zone | Lead-in start |
| | | 02 4B00h |
| | Buffer zone | |
| | | 02 4F00h |
| | Control data zone | |
| | | 02 6700h |
| | Buffer zone | |
| | | 02 6AFFh |
| Connection area | Connection zone | |
| | | 02 6B00h |
| Data lead-in area | Reserved | |
| | | 02 FFE0h |
| | Reference code zone | |
| | | 03 0000h |
| Data area | Data zone | |

# F I G. 87

(a) Physical sector number — Single layer SL — Address — 02 6AFFh — 03 00000h — Radius

(b) Physical sector number — Dual layer DL (parallel track path PTP) — Address of both layers — 02 6AFFh — 03 00000h — Radius

(c) Dual layer DL (opposite track path OTP) — Address of layer 1 — Physical sector number — *X̄ — *X — Address of layer 0 — 02 6AFFh — 03 00000h — Radius

: Data area
: System lead-in area
: Connection area
: Data lead-in area
: Middle area
: Data lead-out area
: System lead-out area

F I G. 88

Φ44.6 $^{0.0}_{-0.8}$ mm

Burst cutting area

Φ46.3±0.10mm

Φ46.6 $^{0.0}_{-0.4}$ mm

System lead-in area

Connection area

Information area

Maximum diameter of data area Φ116.0mm

Data area

| SL or PTP | Data lead-in area |
| --- | --- |
| OTP | Data lead-out area |

| SL or PTP | Data lead-out area |
| --- | --- |
| OTP | Middle area |

| Φ47.6 $^{0.0}_{-0.4}$ mm | |
| --- | --- |
| SL or PTP | Data lead-in area start |
| Layer 1 of OTP | Minimum of data lead-out area |

| Outer diameter of information area φ |
| --- |
| less than 68.0→70.0min. |
| 68.0 to (A−1.0)→Φ of Data area+20min |
| (A−1.0) to A→(A+1.0) min. |

A : Maximum outer diameter of data area

Note :
SL : Single layer
PTP : Parallel track path
OPT : Opposite track path

FIG. 89

EP 1 465 165 A2

Recording data density in each region in read only information recording medium

| Parameter | | Single layer | Dual layer |
|---|---|---|---|
| · User data capacity | | 15 Gbytes/side | 30 Gbytes/side |
| · Wavelength of laser diode<br>· Number of openings of objective lens | | 405 nm<br>0.65 | |
| · Data bit length | System lead-in area | 0.306 μm | |
| | Data lead-in area<br>Data area<br>Data lead-out area | 0.153 μm | |
| · Channel bit length | System lead-in area | 0.204 μm | |
| | Data lead-in area<br>Data area<br>Data lead-out area | 0.102 μm | |
| · Minimum mark length | System lead-in area | 0.408 μm | |
| | Data lead-in area<br>Data area<br>Data lead-out area | 0.204 μm | |
| · Maximum mark length | System lead-in area | 2.652 μm | |
| | Data lead-in area<br>Data area<br>Data lead-out area | 1.326 μm | |
| · Track pitch | System lead-in area | 0.68 μm | |
| | Data lead-in area<br>Data area<br>Data lead-out area | 0.40 μm | |
| · Disk diameter<br>· Disk thickness<br>· Cover layer thickness<br>· Center hole diameter<br>· Inner diameter of data area<br>· Diameter of data area | | 120 mm<br>1.20 mm<br>0.6 mm<br>15.0 mm<br>24.1 mm<br>58.0 mm | |
| · User data or sector<br>· Error correction code<br>· ECC restriction sector<br>· Modulation | | 2048 bytes<br>Reed solomon multiplication code<br>RS (208, 192, 17) × RS (182, 172, 11)<br>32 sectors<br>ETM, RLL (1, 10) | |
| · Correctable burst error length | | 7.1 mm | |
| · Reference scan speed | | 6.61 m/s | |
| · Channel bit rate with reference speed | System lead-in area | 32.40 Mbps | |
| | Data lead-in area<br>Data area<br>Data lead-out area | 64.80 Mbps | |
| · User bit rate with reference speed | System lead-in area | 18.28 Mbps | |
| | Data lead-in area<br>Data area<br>Data lead-out area | 36.55 Mbps | |

# F I G. 90

Data lead-in area utilizing example (1)

F I G. 91

EP 1 465 165 A2

Data lead-in area utilizing example (2)

2011 — Device key

2010 — Media key block processing

System lead-in area (control data) (album ID)

Media specific key

2021 — Internet I/O

2017 — Decryption

2018 — ⊕

Time limit device key

2016 — Encryption

2015 — ⊕

Media ID

2014 — Clock

2019 — Media key block processing (2)

Data lead-in area (reserved)

2020 — Select

Media specific key D

2012 — Contents decryption

2013 — Contents decoding

Video signal
Audio signal

Data area (contents)

FIG. 92

Data allocation in control data zone in read only/
write once/rewritable information recording medium

| Physical format information |
| Disk manufacturer information |
| Reserved |

# F I G. 93

Contents of information contained in physical format in
read only information recording medium

| BP | Contents | Number of bytes |
|---|---|---|
| 0 | Book type and part type | 1 byte |
| 1 | Disk size and maximum transfer speed of disk | 1 byte |
| 2 | Disk structure | 1 byte |
| 3 | Recording density | 1 byte |
| 4 to 15 | Data area allocation | 12 bytes |
| 16 | BCA adapter | 1 byte |
| 17 to 2047 | Reserved | 2031 bytes |

# F I G. 94

(BP 0) Book type and part type

| b7 | b6 | b5 | b4 | b3 | b2 | b1 | b0 |
|---|---|---|---|---|---|---|---|

| Book type | Part type |

# F I G. 95

(BP 1) Disk size and maximum transfer speed of disk

| b7 | b6 | b5 | b4 | b3 | b2 | b1 | b0 |
|---|---|---|---|---|---|---|---|

| Disk size | Maximum transfer speed of disk |

# F I G. 96

(BP 2) Disk structure

| b7 | b6 | b5 | b4 | b3 | b2 | b1 | b0 |
|---|---|---|---|---|---|---|---|
| Reserved | Number of layers | | ( | Layer type | | | |

Track path

# F I G. 97

(BP 3) Recording density

| b7 | b6 | b5 | b4 | b3 | b2 | b1 | b0 |
|---|---|---|---|---|---|---|---|
| Linear density | | | | Track density | | | |

# F I G. 98

Contents of data area allocation information contained in read only
/write once/rewritable information recording medium

| BP | SL | PTP | OTP | Number of bytes |
|---|---|---|---|---|
| 4 | 00h | | | 1 byte |
| 5 to 7 | Number of start physical sectors in data area (03 0000h) | | | 3 bytes |
| 8 | 00h | | | 1 byte |
| 9 to 11 | Number of end physical sectors in data area | | | 3 bytes |
| 12 | 00h | | | 1 byte |
| 13 to 15 | 00 0000h | | Number of end physical sectors in layer 0 | 3 bytes |

# F I G. 99

(BP 16) BCA descriptor

| b7 | b6 | b5 | b4 | b3 | b2 | b1 | b0 |
|---|---|---|---|---|---|---|---|
| BCA flag | Reserved | | | | | | |

# F I G. 100

148

EP 1 465 165 A2

Recording data density in each area in rewritable information recording medium

| Parameter | | Single layer |
|---|---|---|
| · User data capacity | | 15 Gbytes/side |
| · Wavelength of laser diode | | 405 nm |
| · Number of openings of objective lens | | 0.65 |
| · Data bit length | System lead-in area | 0.306 $\mu$m |
| | Data lead-in area<br>Data area<br>Data lead-out area | 0.130 to 0.140 $\mu$m |
| · Channel bit length | System lead-in area | 0.204 $\mu$m |
| | Data lead-in area<br>Data area<br>Data lead-out area | 0.087 to 0.093 $\mu$m |
| · Minimum mark length (2T) | System lead-in area | 0.408 $\mu$m |
| | Data lead-in area<br>Data area<br>Data lead-out area | 0.173 to 0.187 $\mu$m |
| · Maximum mark length (13T) | System lead-in area | 2.652 $\mu$m |
| | Data lead-in area<br>Data area<br>Data lead-out area | 1.126 to 1.213 $\mu$m |
| · Track pitch | System lead-in area | 0.68 $\mu$m |
| | Data lead-in area<br>Data area<br>Data lead-out area | 0.34 $\mu$m |
| · Physical address | Data lead-in area<br>Data area<br>Data lead-out area | *WAP<br>*WAP= Wobble Address<br>in Periodic position |
| · Disk diameter<br>· Disk thickness<br>· Center hole diameter<br>· Inner diameter of data area<br>· Diameter of data area | | 120 mm<br>1.20 mm<br>15.0 mm<br>24.1 mm<br>57.89 mm |
| · User data or sector<br>· Error correction code<br>· ECC restriction sector<br>· Modulation | | 2048 bytes<br>Reed solomon multiplication code<br>RS (208, 192, 17)<br>X RS (182, 172, 11)<br>32 sectors<br>ETM, RLL (1, 10) |
| · Correctable burst error length | System lead-in area | 7.1 mm |
| · Reference speed | Data lead-in area<br>Data area<br>Data lead-out area | 6.0 mm |
| | System lead-in area | 6.61 m/s |
| | Data lead-in area<br>Data area<br>Data lead-out area | 5.64 to 6.03 m/s |
| · Channel bit rate with reference speed | System lead-in area | 32.40 Mbps |
| | Data lead-in area<br>Data area<br>Data lead-out area | 64.80 Mbps |
| · User bit rate with reference speed | System lead-in area | 18.28 Mbps |
| | Data lead-in area<br>Data area<br>Data lead-out area | 36.55 Mbps |

FIG. 101

149

Data structure in lead-in area in rewritable
information recording medium

Physical sector number

|  | Land | Groove |
|---|---|---|
| 02 2640h | | |
| Initial zone | | |
| 02 4B00h | | |
| Buffer zone | | |
| 02 4F00h | | |
| Control data zone | | |
| 02 6700h | | |
| Buffer zone | | |
| 02 6AFFh | | |
| Connection zone | | |
| 02 9A00h | | 82 9A00h |
| Guard track zone | | |
| 02 A400h | | 82 A400h |
| Disc test zone | | |
| 02 B400h | | 82 B400h |
| Drive test zone | | |
| 02 CA00h | | 82 CA00h |
| Guard track zone | | |
| 02 CD00h | | 82 CD00h |
| Disc identification zone | | |
| 02 CE00h | | 82 CE00h |
| DMA1 & DMA2 | | |
| 03 0000h | | 83 0000h |
| Data zone | | |

System lead-in area — Initial zone through Buffer zone (02 2640h – 02 6AFFh)

Connection area — Connection zone

Data lead-in area — Guard track zone through DMA1 & DMA2

F I G. 102

Structure in connection zone

| | | |
|---|---|---|
| Zone=0, Track=1, Segment=12 | Zone=0, Track=2, Segment=0 | Zone=0, Track=2, Segment=1 |
| Zone=0, Track=1, Segment=12 | Zone=0, Track=2, Segment=0 | Zone=0, Track=2, Segment=1 |
| Zone=0, Track=0, Segment=12 | Zone=0, Track=1, Segment=0 | Zone=0, Track=1, Segment=1 |
| Zone=0, Track=0, Segment=12 | Zone=0, Track=1, Segment=0 | Zone=0, Track=1, Segment=1 |
| | Zone=0, Track=0, Segment=0 | Zone=0, Track=0, Segment=1 |
| | Zone=0, Track=0, Segment=0 | Zone=0, Track=0, Segment=1 |

Outside

Data lead-in area

Connection area 1.40 μm~20.0 μm

| 026AFEh | 026AFFh | |
|---|---|---|

| 026AE5h | 026AE6h | 026AE7h | 026AE8h | 026AE9h | |
|---|---|---|---|---|---|

| 026ACCh | 026ACDh | 026ACEh | 026ACFh | 026AD0h | |
|---|---|---|---|---|---|

System lead-in area

Inside

F I G. 103

EP 1 465 165 A2

Disk ID zone structure in data lead-in area

Number of physical sectors

| | | | | |
|---|---|---|---|---|
| Drive information 1 | Reserved | 02 CD00h | 82 CD00h | 1block |
| Drive information 2 | Reserved | 02 CD20h | 82 CD20h | 1block |
| Reserved | Reserved | 02 CD40h | 82 CD40h | 1block |
| Reserved | Reserved | 02 CD60h | 82 CD60h | 1block |
| Reserved | Reserved | 02 CD80h | 82 CD80h | 1block |
| Reserved | Reserved | 02 CDA0h | 82 CDA0h | 1block |
| Reserved | Reserved | 02 CDC0h | 82 CDC0h | 1block |
| Reserved | Reserved | 02 CDE0h | 82 CDE0h | 1block |
| Land | Groove | Land | Groove | |

F I G. 104

Structure of drive information block

Relative sector number

| | |
|---|---|
| 0 | Drive description 0 |
| 1 | Drive description 1 |
| ⋮ | ⋮ |
| 31 | Drive description 15 |

F I G. 105

Contents of drive description

| BP | Contents | Number of bytes |
|---|---|---|
| 0 to 47 | Drive manufacturer's name | 48 bytes |
| 48 to 95 | Additional information | 48 bytes |
| 96 to 2047 | Drive state | 1952 bytes |

F I G. 106

Data structure in lead-out area in rewritable information
recording medium

Physical sector number

| Data area | | |
|---|---|---|
| | 4E D740h | CE D740h |
| DMA3 & DMA4 | | |
| | 4F 0940h | CF 0940h |
| Guard track zone | | |
| | 4F 0C40h | CF 0C40h |
| Drive test zone | | |
| | 4F 2240h | CF 2240h |
| Disk test zone | | |
| | 4F 3240h | CF 3240h |
| Guard track zone | | |

Land | Groove

F I G. 107

Data layout in rewritable information recording medium

| | Zone | Normal (mm) | Number of physical segments per track | Number of tracks | System or land | | Groove | |
|---|---|---|---|---|---|---|---|---|
| | | | | | Start physical sector number (hex value) | End physical sector number (hex value) | Start physical sector number (hex value) | End physical sector number (hex value) |
| System lead-in area | Initial zone | | | | 022640 | 024AFF | | |
| | Buffer zone | | | | 024B00 | 024EFF | | |
| | Control data zone | | | | 024F00 | 0266FF | | |
| | Buffer zone | | | | 026700 | 026AFF | | |
| Connection area | Connection zone | 23.78~23.80 | --- | --- | --- | --- | --- | |
| Data lead-in area | Guard track zone | 23.80~24.10 | 13 | 5404 | 029A00 | 02A3FF | 829A00 | 82A3FF |
| | Disk test zone | | | | 02A400 | 02B3FF | 82A400 | 82B3FF |
| | Drive test zone | | | | 02B400 | 02C9FF | 82B400 | 82C9FF |
| | Guard track zone | | | | 02CA00 | 02CCFF | 82CA00 | 82CCFF |
| | Disk ID zone | | | | 02CD00 | 02CDFF | 82CD00 | 82CDFF |
| | DMA1 & DMA2 | | | | 02CE00 | 02FFFF | 82CE00 | 82FFFF |
| Data area | Zone 0 | 24.10~25.64 | 13 | | 030000 | 050D3F | 830000 | 850D3F |
| | Zone 1 | 25.64~27.47 | 14 | 5390 | 050D40 | 07AEFF | 850D40 | 87AEFF |
| | Zone 2 | 27.47~29.30 | 15 | 5390 | 07AF00 | 0A80DF | 87AF00 | 8A80DF |
| | Zone 3 | 29.30~31.14 | 16 | 5390 | 0A80E0 | 0D82DF | 8A80E0 | 8D82DF |
| | Zone 4 | 31.14~32.97 | 17 | 5390 | 0D82E0 | 10B4FF | 8D82E0 | 90B4FF |
| | Zone 5 | 32.97~34.80 | 18 | 5390 | 10B500 | 14173F | 90B500 | 94173F |
| | Zone 6 | 34.80~36.63 | 19 | 5390 | 141740 | 17A99F | 941740 | 97A99F |
| | Zone 7 | 36.63~38.47 | 20 | 5390 | 17A9A0 | 1B6C1F | 97A9A0 | 9B6C1F |
| | Zone 8 | 38.47~40.30 | 21 | 5390 | 1B6C20 | 1F5EBF | 9B6C20 | 9F5EBF |
| | Zone 9 | 40.30~42.13 | 22 | 5390 | 1F5EC0 | 23817F | 9F5EC0 | A3817F |
| | Zone 10 | 42.13~43.97 | 23 | 5390 | 238180 | 27D45F | A38180 | A7D45F |
| | Zone 11 | 43.97~45.80 | 24 | 5390 | 27D460 | 2C575F | A7D460 | AC575F |
| | Zone 12 | 45.80~47.63 | 25 | 5390 | 2C5760 | 310A7F | AC5760 | B10A7F |
| | Zone 13 | 47.63~49.46 | 26 | 5390 | 310A80 | 35EDBF | B10A80 | B5EDBF |
| | Zone 14 | 49.46~51.30 | 27 | 5390 | 35EDC0 | 3B011F | B5EDC0 | BB011F |
| | Zone 15 | 51.30~53.13 | 28 | 5390 | 3B0120 | 40449F | BB0120 | C0449F |
| | Zone 16 | 53.13~54.96 | 29 | 5390 | 4044A0 | 45B83F | C044A0 | C5B83F |
| | Zone 17 | 54.96~56.79 | 30 | 5390 | 45B840 | 4B5BFF | C5B840 | CB5BFF |
| | Zone 18 | 56.79~57.89 | 31 | 3220 | 4B5C00 | 4ED73F | CB5C00 | CED73F |
| Data lead-in area | DM3 & DMA4 | 57.89~58.6 | 31 | 1792 | 4ED740 | 4F093F | CED740 | CF093F |
| | Guard track zone | | | | 4F0940 | 4F0C3F | CF0940 | CF0C3F |
| | Drive test zone | | | | 4F0C40 | 4F223F | CF0C40 | CF223F |
| | Disk test zone | | | | 4F2240 | 4F323F | CF2240 | CF323F |
| | Guard track zone | | | | 4F3240 | 50C73F | CF3240 | D0C73F |

F I G. 108

Address number setting method in data area in rewritable information recording medium

| L/G | Zone | Number of ECC blocks | Start physical sector number | Guard area Physical sector number | | Spare area Physical sector number | | Spare area Number of ECC blocks | Groove User area Physical sector number | | User area Number of ECC blocks | Guard area Physical sector number | | End physical sector number | Start LSN of zone |
|---|---|---|---|---|---|---|---|---|---|---|---|---|---|---|---|
| L | 0 | 4202 | 30000 | | | 30000 | 41F7F | 2300 | 41F80 | 50C7F | 1896 | 50C80 | 50D3F | 50D3F | 0 |
| L | 1 | 5390 | 50D40 | 50D40 | 50DBF | | | 0 | 50DC0 | 7AE3F | 5380 | 7AE40 | 7AEFF | 7AEFF | ED00 |
| L | 2 | 5775 | 7AF00 | 7AF00 | 7AF9F | | | 0 | 7AFA0 | A7FFF | 5763 | A8000 | A80DF | A80DF | 38D80 |
| L | 3 | 6160 | A80E0 | A80E0 | A817F | | | 0 | A8180 | D81FF | 6148 | D8200 | D82DF | D82DF | 65DE0 |
| L | 4 | 6545 | D82E0 | D82E0 | D837F | | | 0 | D8380 | 10B3FF | 6532 | 10B400 | 10B4FF | 10B4FF | 95E60 |
| L | 5 | 6930 | 10B500 | 10B500 | 10B5BF | | | 0 | 10B5C0 | 14163F | 6916 | 141640 | 14173F | 14173F | C8EE0 |
| L | 6 | 7315 | 141740 | 141740 | 1417FF | | | 0 | 141800 | 17A87F | 7300 | 17A880 | 17A99F | 17A99F | FEF60 |
| L | 7 | 7700 | 17A9A0 | 17A9A0 | 17AA5F | | | 0 | 17AA60 | 1B6AFF | 7685 | 1B6B00 | 1B6C1F | 1B6C1F | 137FE0 |
| L | 8 | 8085 | 1B6C20 | 1B6C20 | 1B6CDF | | | 0 | 1B6CE0 | 1F5D9F | 8070 | 1F5DA0 | 1F5EBF | 1F5EBF | 174080 |
| L | 9 | 8470 | 1F5EC0 | 1F5EC0 | 1F5F9F | | | 0 | 1F5FA0 | 23803F | 7453 | 238040 | 23817F | 23817F | 1B3140 |
| L | 10 | 8855 | 238180 | 238180 | 23825F | | | 0 | 238260 | 27D31F | 8838 | 27D320 | 27D45F | 27D45F | 1F51E0 |
| L | 11 | 9240 | 27D460 | 27D460 | 27D53F | | | 0 | 27D540 | 2C55FF | 9222 | 2C5600 | 2C575F | 2C575F | 23A2A0 |
| L | 12 | 9625 | 2C5760 | 2C5760 | 2C585F | | | 0 | 2C5960 | 31091F | 9606 | 310920 | 310A7F | 310A7F | 282360 |
| L | 13 | 10010 | 310A80 | 310A80 | 310B7F | | | 0 | 310B80 | 35EC3F | 9990 | 35EC40 | 35EDBF | 35EDBF | 2CD420 |
| L | 14 | 10395 | 35EDC0 | 35EDC0 | 35EEBF | | | 0 | 35EEC0 | 3AFF9F | 10375 | 3AFFA0 | 3B011F | 3B011F | 318AE0 |
| L | 15 | 10780 | 3B0120 | 3B0120 | 3B021F | | | 0 | 3B0220 | 40431F | 10760 | 404320 | 40449F | 40449F | 36C5C0 |
| L | 16 | 11165 | 4044A0 | 4044A0 | 4045BF | | | 0 | 4045C0 | 45B69F | 11143 | 45B6A0 | 45B83F | 45B83F | 3C06C0 |
| L | 17 | 11550 | 45B840 | 45B840 | 45B95F | | | 0 | 45B960 | 485A5F | 11528 | 485A60 | 485BFF | 485BFF | 4177A0 |
| L | 18 | 7130 | 485C00 | 485C00 | 485D1F | | | 0 | 485D20 | 4ED73F | 7121 | | 4ED73F | 4ED73F | 4718A0 |
| G | 0 | 4202 | 830000 | | | | | 0 | 830000 | 850C7F | 1896 | 850C80 | 850D3F | 850D3F | 4A92C0 |
| G | 1 | 5390 | 850D40 | 850D40 | 850DBF | | | 0 | 850DC0 | 87AE3F | 5380 | 87AE40 | 87AEFF | 87AEFF | 4C9F40 |
| G | 2 | 5775 | 87AF00 | 87AF00 | 87AF9F | | | 0 | 87AFA0 | 8A7FFF | 5763 | 8A8000 | 8A80DF | 8A80DF | 4F3FC0 |
| G | 3 | 6160 | 8A80E0 | 8A80E0 | 8A817F | | | 0 | 8A8180 | 8D81FF | 6148 | 8D8200 | 8D82DF | 8D82DF | 521020 |
| G | 4 | 6545 | 8D82E0 | 8D82E0 | 8D837F | | | 0 | 8D8380 | 90B3FF | 6532 | 90B400 | 90B4FF | 90B4FF | 5510A0 |
| G | 5 | 6930 | 90B500 | 90B500 | 90B5BF | | | 0 | 90B5C0 | 94163F | 6916 | 941640 | 94173F | 94173F | 584120 |
| G | 6 | 7315 | 941740 | 941740 | 9417FF | | | 0 | 941800 | 97A87F | 7300 | 97A880 | 97A99F | 97A99F | 5BA1A0 |
| G | 7 | 7700 | 97A9A0 | 97A9A0 | 97AA5F | | | 0 | 97AA60 | 9B6AFF | 7685 | 9B6B00 | 9B6C1F | 9B6C1F | 5F3220 |
| G | 8 | 8085 | 9B6C20 | 9B6C20 | 9B6CDF | | | 0 | 9B6CE0 | 9F5D9F | 8070 | 9F5DA0 | 9F5EBF | 9F5EBF | 62F2C0 |
| G | 9 | 8470 | 9F5EC0 | 9F5EC0 | 9F5F9F | | | 0 | 9F5FA0 | A3803F | 7453 | A38040 | A3817F | A3817F | 66E380 |
| G | 10 | 8855 | A38180 | A38180 | A3825F | | | 0 | A38260 | A7D31F | 8838 | A7D320 | A7D45F | A7D45F | 6B0420 |
| G | 11 | 9240 | A7D460 | A7D460 | A7D53F | | | 0 | A7D540 | AC55FF | 9222 | AC5600 | AC575F | AC575F | 6F54E0 |
| G | 12 | 9625 | AC5760 | AC5760 | AC585F | | | 0 | AC5860 | B1091F | 9606 | B10920 | B10A7F | B10A7F | 73D5A0 |
| G | 13 | 10010 | B10A80 | B10A80 | B10B7F | | | 0 | B10880 | B5EC3F | 9990 | B5EC40 | B5EDBF | B5EDBF | 788660 |
| G | 14 | 10395 | B5EDC0 | B5EDC0 | B5EEBF | | | 0 | B5EEC0 | BAFF9F | 10375 | BAFFA0 | BB011F | BB011F | 7D6720 |
| G | 15 | 10780 | BB0120 | BB0120 | BB021F | | | 0 | BB0220 | C0431F | 10760 | C04320 | C0449F | C0449F | 827800 |
| G | 16 | 11165 | C044A0 | C044A0 | C045BF | | | 0 | C045C0 | C5B69F | 11143 | C5B6A0 | C5B83F | C5B83F | 878900 |
| G | 17 | 11550 | C5B840 | C5B840 | C5B95F | | | 0 | C5B960 | C85A5F | 11528 | C85A60 | C85BFF | C85BFF | 8D29E0 |
| G | 18 | 7130 | C85C00 | C85C00 | C85D1F | CED740-m | CED73F | M | C85C20 | CED73F-m | 7121-M | CB5C20 | CED73F-m | CED73F | 92CAE0 |
| Total | | | | | | | | 2300+M | | | 307752-M | | | | |

## FIG. 109

155

Data structure in lead-in area of write once information recording medium

| | |
|---|---|
| **System Lead-in Area** | Initial zone |
| | Buffer zone |
| | Control data zone |
| | Buffer zone |
| **Conection Lead-in Area** | Conection zone |
| **Data Lead-in Area** | Disc test zone |
| | Drive test zone |
| | Reference code zone |
| | Buffer zone |
| | Disc identification zone |
| | R-Physical format information zone |
| **Data Area** | Data zone |

# FIG. 110

Data word
B(t) → Code table → Code word X(t) → Code connector → Connection code word → DSV controller → Channel bit stream

State S(t) — State register — Next state S(t+1)

# FIG. 111

Concatenation rule

| Index | Preceding code word | Current code word | Concatenated code work |
|---|---|---|---|
| 1 | ??0101 010101 | 010??? ?????? | ??0100 000000 010??? ?????? |
| 2 | ??0101 010101 | 001??? ?????? | ??0100 000000 001??? ?????? |
| 3 | ??1001 010101 | 010??? ?????? | ??1000 000000 010??? ?????? |
| 4 | ?????0 101010 | 101010 ?????? | ?????0 100000 000010 ?????? |
| 5 | ?????1 001010 | 101010 ?????? | ?????1 000000 000010 ?????? |
| 6 | ?????? ??0101 | 010101 010??? | ?????? ??0100 000000 010??? |
| 7 | ?????? ??0101 | 010101 001??? | ?????? ??0100 000000 001??? |
| 8 | ?????? ??1001 | 010101 010??? | ?????? ??1000 000000 010??? |
| 9 | ?????? ?????1 | 001010 101010 | ?????? ?????1 000000 000010 |

# FIG. 112

Concatenation between code word and sync code

| Index | Preceding code word | Succeeding sync code | Concatenated code |
|---|---|---|---|
| S | ?????0 00000# | SY3 | ?????0 000001+SY3 |

# FIG. 113

Separation rule

| Index | Readout code word | Current code word | Succeeding code word |
|---|---|---|---|
| 1 | ?????? ?00000 0000?? ?????? | ?????? ?01010 | 1010?? ?????? |
| 2 | ?????? ????00 000000 0????? | ?????? ????01 | 010101 0????? |
| 3 | ?????? ?????? 000000 0000?? | ?????? ?????? | 001010 1010?? |

# FIG. 114

Conversion table in modulation system

| Data word | State 0 Code word | Next state | State 1 Code word | Next state | State 2 Code word | Next state |
|---|---|---|---|---|---|---|
| 00 | 100010 00000* | 0 | 010100 01000* | 0 | 010100 01000* | 0 |
| 01 | 100010 00000# | 1 | 010100 010001 | 1 | 010100 010001 | 1 |
| 02 | 100010 000010 | 0 | 010100 010010 | 0 | 010100 010010 | 0 |
| 03 | 100010 000010 | 1 | 010100 010010 | 1 | 010100 010010 | 1 |
| 04 | 100010 10000* | 0 | 010100 01010* | 0 | 010100 01010* | 0 |
| 05 | 100010 10000# | 1 | 010100 010101 | 1 | 010100 010101 | 1 |
| 06 | 100010 100010 | 0 | 010100 010100 | 2 | 010100 010100 | 2 |
| 07 | 100010 100010 | 1 | 010100 010000 | 2 | 010100 010000 | 2 |
| 08 | 100010 10100* | 0 | 010100 00#00* | 0 | 010100 00#00* | 0 |
| 09 | 100010 101001 | 1 | 010100 00#001 | 1 | 010100 00#001 | 1 |
| 0A | 100010 101010 | 0 | 010100 00#010 | 0 | 010100 00#010 | 0 |
| 0B | 100010 101010 | 1 | 010100 00#010 | 1 | 010100 00#010 | 1 |
| 0C | 100010 10010* | 0 | 010100 00010* | 0 | 010100 00010* | 0 |
| 0D | 100010 100101 | 1 | 010100 000101 | 1 | 010100 000101 | 1 |
| 0E | 100010 100100 | 2 | 010100 000100 | 2 | 010100 000100 | 2 |
| 0F | 100010 101000 | 2 | 010100 001000 | 2 | 010100 001000 | 2 |
| 10 | 100010 01000* | 0 | 010000 01000* | 0 | 010000 01000* | 0 |
| 11 | 100010 010001 | 1 | 010000 010001 | 1 | 010000 010001 | 1 |
| 12 | 100010 010010 | 0 | 010000 010010 | 0 | 010000 010010 | 0 |
| 13 | 100010 010010 | 1 | 010000 010010 | 1 | 010000 010010 | 1 |
| 14 | 100010 01010* | 0 | 010000 01010* | 0 | 010000 01010* | 0 |
| 15 | 100010 010101 | 1 | 010000 010101 | 1 | 010000 010101 | 1 |
| 16 | 100010 010100 | 2 | 010000 010100 | 2 | 010000 010100 | 2 |
| 17 | 100010 010000 | 2 | 010000 010000 | 2 | 010000 010000 | 2 |
| 18 | 100010 00100* | 0 | 010000 00100* | 0 | 010000 00100* | 0 |
| 19 | 100010 001001 | 1 | 010000 001001 | 1 | 010000 001001 | 1 |
| 1A | 100010 001010 | 0 | 010000 00#010 | 0 | 010000 00#010 | 0 |
| 1B | 100010 001010 | 1 | 010000 00#010 | 1 | 010000 00#010 | 1 |
| 1C | 100010 00010* | 0 | 010000 00010* | 0 | 010000 00010* | 0 |
| 1D | 100010 000101 | 1 | 010000 000101 | 1 | 010000 000101 | 1 |
| 1E | 100010 000100 | 2 | 010000 000100 | 2 | 010000 000100 | 2 |
| 1F | 100010 001000 | 2 | 010000 001000 | 2 | 010000 001000 | 2 |
| 20 | 100001 00000* | 0 | 010101 00000* | 0 | 010101 00000* | 0 |
| 21 | 100001 00000# | 1 | 010101 00000# | 1 | 010101 00000# | 1 |
| 22 | 100001 000010 | 0 | 010101 000010 | 0 | 010101 000010 | 0 |
| 23 | 100001 000010 | 1 | 010101 000010 | 1 | 010101 000010 | 1 |
| 24 | 100000 10000* | 0 | 010100 10000* | 0 | 010100 10000* | 0 |
| 25 | 100000 10000# | 1 | 010100 10000# | 1 | 010100 10000# | 1 |
| 26 | 100000 100010 | 0 | 010100 100010 | 0 | 010100 100010 | 0 |
| 27 | 100000 100010 | 1 | 010100 100010 | 1 | 010100 100010 | 1 |
| 28 | 100000 10100* | 0 | 010100 10100* | 0 | 010100 10100* | 0 |
| 29 | 100000 101001 | 1 | 010100 101001 | 1 | 010100 101001 | 1 |
| 2A | 100000 101010 | 0 | 010100 101010 | 0 | 010100 101010 | 0 |
| 2B | 100000 101010 | 1 | 010100 101010 | 1 | 010100 101010 | 1 |
| 2C | 100000 10010* | 0 | 010100 10010* | 0 | 010100 10010* | 0 |
| 2D | 100000 100101 | 1 | 010100 100101 | 1 | 010100 100101 | 1 |
| 2E | 100000 100100 | 2 | 010100 100100 | 2 | 010100 100100 | 2 |
| 2F | 100000 101000 | 2 | 010100 101000 | 2 | 010100 101000 | 2 |

FIG. 115

| Data word | State 0 Code word | Next state | State 1 Code word | Next state | State 2 Code word | Next state |
|---|---|---|---|---|---|---|
| 30 | 10000# 01000* | 0 | 010101 01000* | 0 | 010101 01000* | 0 |
| 31 | 10000# 010001 | 1 | 010101 010001 | 1 | 010101 010001 | 1 |
| 32 | 10000# 010010 | 0 | 010101 010010 | 0 | 010101 010010 | 0 |
| 33 | 10000# 010010 | 1 | 010101 010010 | 1 | 010101 010010 | 1 |
| 34 | 10000# 01010* | 0 | 010000 00000* | 0 | 010000 00000* | 0 |
| 35 | 100000 010101 | 1 | 010000 000001 | 1 | 010000 000001 | 1 |
| 36 | 10000# 010100 | 2 | 010101 010100 | 2 | 010101 010100 | 2 |
| 37 | 10000# 010000 | 2 | 010101 010000 | 2 | 010101 010000 | 2 |
| 38 | 10000# 00100* | 0 | 010101 00100* | 0 | 010101 00100* | 0 |
| 39 | 10000# 001001 | 1 | 010101 001001 | 1 | 010101 001001 | 1 |
| 3A | 10000# 001010 | 0 | 010101 001010 | 0 | 010101 001010 | 0 |
| 3B | 10000# 001010 | 1 | 010101 001010 | 1 | 010101 001010 | 1 |
| 3C | 10000# 00010* | 0 | 010101 00010* | 0 | 010101 00010* | 0 |
| 3D | 10000# 000101 | 1 | 010101 000101 | 1 | 010101 000101 | 1 |
| 3E | 10000# 000100 | 2 | 010101 000100 | 2 | 010101 000100 | 2 |
| 3F | 10000# 001000 | 2 | 010101 001000 | 2 | 010101 001000 | 2 |
| 40 | 101010 00000* | 0 | 010010 00000* | 0 | 010010 00000* | 0 |
| 41 | 101010 00000# | 1 | 010010 00000# | 1 | 010010 00000# | 1 |
| 42 | 101010 000010 | 0 | 010010 000010 | 0 | 010010 000010 | 0 |
| 43 | 101010 000010 | 1 | 010010 000010 | 1 | 010010 000010 | 1 |
| 44 | 101010 10000* | 0 | 010010 10000* | 0 | 010010 10000* | 0 |
| 45 | 101010 10000# | 1 | 010010 10000# | 1 | 010010 10000# | 1 |
| 46 | 101010 100010 | 0 | 010010 100010 | 0 | 010010 100010 | 0 |
| 47 | 101010 100010 | 1 | 010010 100010 | 1 | 010010 100010 | 1 |
| 48 | 000000 00100* | 0 | 010010 10100* | 0 | 010010 10100* | 0 |
| 49 | 100000 000001 | 1 | 010010 101001 | 1 | 010010 101001 | 1 |
| 4A | 100000 000010 | 0 | 010010 101010 | 0 | 010010 101010 | 0 |
| 4B | 100000 000010 | 1 | 010010 101010 | 1 | 010010 101010 | 1 |
| 4C | 101010 10010* | 0 | 010010 10010* | 0 | 010010 10010* | 0 |
| 4D | 101010 100101 | 1 | 010010 100101 | 1 | 010010 100101 | 1 |
| 4E | 101010 100100 | 2 | 010010 100100 | 2 | 010010 100100 | 2 |
| 4F | 000000 001000 | 2 | 010010 101000 | 2 | 010010 101000 | 2 |
| 50 | 101010 01000* | 0 | 010010 01000* | 0 | 010010 01000* | 0 |
| 51 | 101010 010001 | 1 | 010010 010001 | 1 | 010010 010001 | 1 |
| 52 | 101010 010010 | 0 | 010010 010010 | 0 | 010010 010010 | 0 |
| 53 | 101010 010010 | 1 | 010010 010010 | 1 | 010010 010010 | 1 |
| 54 | 101010 01010* | 0 | 010010 01010* | 0 | 010010 01010* | 0 |
| 55 | 101010 010101 | 1 | 010010 010101 | 1 | 010010 010101 | 1 |
| 56 | 101010 010100 | 2 | 010010 010100 | 2 | 010010 010100 | 2 |
| 57 | 101010 010000 | 2 | 010010 010000 | 2 | 010010 010000 | 2 |
| 58 | 101010 00100* | 0 | 010010 00100* | 0 | 010010 00100* | 0 |
| 59 | 101010 001001 | 1 | 010010 001001 | 1 | 010010 001001 | 1 |
| 5A | 101010 001010 | 0 | 010010 001010 | 0 | 010010 001010 | 0 |
| 5B | 101010 001010 | 1 | 010010 001010 | 1 | 010010 001010 | 1 |
| 5C | 101010 00010* | 0 | 010010 00010* | 0 | 010010 00010* | 0 |
| 5D | 101010 000101 | 1 | 010010 000101 | 1 | 010010 000101 | 1 |
| 5E | 101010 000100 | 2 | 010010 000100 | 2 | 010010 000100 | 2 |
| 5F | 101010 001000 | 2 | 010010 001000 | 2 | 010010 001000 | 2 |

F I G. 116

| Data word | State 0 | | State 1 | | State 2 | |
|---|---|---|---|---|---|---|
| | Code word | Next state | Code word | Next state | Code word | Next state |
| 60 | 101001 00000* | 0 | 010001 00000* | 0 | 010001 00000* | 0 |
| 61 | 101001 00000# | 1 | 010001 000001 | 1 | 010001 000001 | 1 |
| 62 | 101001 000010 | 0 | 010001 000010 | 0 | 010001 000010 | 0 |
| 63 | 101001 000010 | 1 | 010001 000010 | 1 | 010001 000010 | 1 |
| 64 | 101000 10000* | 0 | 010000 10000* | 0 | 010000 10000* | 0 |
| 65 | 101000 10000# | 1 | 010000 10000# | 1 | 010000 10000# | 1 |
| 66 | 101000 100010 | 0 | 010000 100010 | 0 | 010000 100010 | 0 |
| 67 | 101000 100010 | 1 | 010000 100010 | 1 | 010000 100010 | 1 |
| 68 | 101000 10100* | 0 | 010000 10100* | 0 | 010000 10100* | 0 |
| 69 | 101000 101001 | 1 | 010000 101001 | 1 | 010000 101001 | 1 |
| 6A | 101000 101010 | 0 | 010000 101010 | 0 | 010000 101010 | 0 |
| 6B | 101000 101010 | 1 | 010000 101010 | 1 | 010000 101010 | 1 |
| 6C | 101000 10010* | 0 | 010000 10010* | 0 | 010000 10010* | 0 |
| 6D | 101000 100101 | 1 | 010000 100101 | 1 | 010000 100101 | 1 |
| 6E | 101000 100100 | 2 | 010000 100100 | 2 | 010000 100100 | 2 |
| 6F | 101000 101000 | 2 | 010000 101000 | 2 | 010000 101000 | 2 |
| 70 | 101001 01000* | 0 | 010001 01000* | 0 | 010001 01000* | 0 |
| 71 | 101001 010001 | 1 | 010001 010001 | 1 | 010001 010001 | 1 |
| 72 | 101001 010010 | 0 | 010001 010010 | 0 | 010001 010010 | 0 |
| 73 | 101001 010010 | 1 | 010001 010010 | 1 | 010001 010010 | 1 |
| 74 | 101001 01010* | 0 | 010001 01010* | 0 | 010001 01010* | 0 |
| 75 | 101001 010101 | 1 | 010001 000000 | 1 | 010001 000000 | 1 |
| 76 | 101001 010100 | 2 | 010001 010100 | 2 | 010001 010100 | 2 |
| 77 | 101001 010000 | 2 | 010001 010000 | 2 | 010001 010000 | 2 |
| 78 | 101001 00100* | 0 | 010001 00100* | 0 | 010001 00100* | 0 |
| 79 | 101001 001001 | 1 | 010001 001001 | 1 | 010001 001001 | 1 |
| 7A | 101001 001010 | 0 | 010001 001010 | 0 | 010001 001010 | 0 |
| 7B | 101001 001010 | 1 | 010001 001010 | 1 | 010001 001010 | 1 |
| 7C | 101001 00010* | 0 | 010001 00010* | 0 | 010001 00010* | 0 |
| 7D | 101001 000101 | 1 | 010001 000101 | 1 | 010001 000101 | 1 |
| 7E | 101001 000100 | 2 | 010001 000100 | 2 | 010001 000100 | 2 |
| 7F | 101001 001000 | 2 | 010001 001000 | 2 | 010001 001000 | 2 |
| 80 | 100100 01000* | 0 | 000100 01000* | 0 | 000100 01000* | 0 |
| 81 | 100100 010001 | 1 | 000100 010001 | 1 | 000100 010001 | 1 |
| 82 | 100100 010010 | 0 | 000100 010010 | 0 | 000100 010010 | 0 |
| 83 | 100100 010010 | 1 | 000100 010010 | 1 | 000100 010010 | 1 |
| 84 | 100100 01010* | 0 | 000100 01010* | 0 | 000100 01010* | 0 |
| 85 | 100100 010101 | 1 | 000100 010101 | 1 | 000100 010101 | 1 |
| 86 | 100100 010100 | 2 | 000100 010100 | 2 | 000100 010100 | 2 |
| 87 | 100100 010000 | 2 | 000100 010000 | 2 | 000100 010000 | 2 |
| 88 | 100100 00#00* | 0 | 000100 00#00* | 0 | 000100 00#00* | 0 |
| 89 | 100100 00#001 | 1 | 000100 00#001 | 1 | 000100 00#001 | 1 |
| 8A | 100100 00#010 | 0 | 000100 00#010 | 0 | 000100 00#010 | 0 |
| 8B | 100100 00#010 | 1 | 000100 00#010 | 1 | 000100 00#010 | 1 |
| 8C | 100100 00010* | 0 | 000100 00010* | 0 | 000100 00010* | 0 |
| 8D | 100100 000101 | 1 | 000100 000101 | 1 | 000100 000101 | 1 |
| 8E | 100100 000100 | 2 | 000100 000100 | 2 | 000100 000100 | 2 |
| 8F | 100100 001000 | 2 | 000100 001000 | 2 | 000100 001000 | 2 |

## F I G. 117

| Data word | State 0 Code word | Next state | State 1 Code word | Next state | State 2 Code word | Next state |
|---|---|---|---|---|---|---|
| 90 | 101000 01000* | 0 | 001000 01000* | 0 | 001000 01000* | 0 |
| 91 | 101000 010001 | 1 | 001000 010001 | 1 | 001000 010001 | 1 |
| 92 | 101000 010010 | 0 | 001000 010010 | 0 | 001000 010010 | 0 |
| 93 | 101000 010010 | 1 | 001000 010010 | 1 | 001000 010010 | 1 |
| 94 | 101000 01010* | 0 | 001000 01010* | 0 | 001000 01010* | 0 |
| 95 | 101000 010101 | 1 | 001000 010101 | 1 | 001000 010101 | 1 |
| 96 | 101000 010100 | 2 | 001000 010100 | 2 | 001000 010100 | 2 |
| 97 | 101000 010000 | 2 | 001000 010000 | 2 | 001000 010000 | 2 |
| 98 | 101000 00#00* | 0 | 001000 00#00* | 0 | 001000 00#00* | 0 |
| 99 | 101000 00#001 | 1 | 001000 00#001 | 1 | 001000 00#001 | 1 |
| 9A | 101000 00#010 | 0 | 001000 001010 | 0 | 001000 001010 | 0 |
| 9B | 101000 00#010 | 1 | 001000 00#010 | 1 | 001000 00#010 | 1 |
| 9C | 101000 00010* | 0 | 001000 00010* | 0 | 001000 00010* | 0 |
| 9D | 101000 000101 | 1 | 001000 000101 | 1 | 001000 000101 | 1 |
| 9E | 101000 000100 | 2 | 001000 000100 | 2 | 001000 000100 | 2 |
| 9F | 101000 001000 | 2 | 001000 001000 | 2 | 001000 001000 | 2 |
| A0 | 100101 00000* | 0 | 000101 00000* | 0 | 000101 00000* | 0 |
| A1 | 100101 00000# | 1 | 000101 00000# | 1 | 000101 00000# | 1 |
| A2 | 100101 000010 | 0 | 000101 000010 | 0 | 000101 000010 | 0 |
| A3 | 100101 000010 | 1 | 000101 000010 | 1 | 000101 000010 | 1 |
| A4 | 100100 10000* | 0 | 000100 10000* | 0 | 000100 10000* | 0 |
| A5 | 100100 10000# | 1 | 000100 10000# | 1 | 000100 10000# | 1 |
| A6 | 100100 100010 | 0 | 000100 100010 | 0 | 000100 100010 | 0 |
| A7 | 100100 100010 | 1 | 000100 100010 | 1 | 000100 100010 | 1 |
| A8 | 100100 10100* | 0 | 000100 10100* | 0 | 000100 10100* | 0 |
| A9 | 100100 101001 | 1 | 000100 101001 | 1 | 000100 101001 | 1 |
| AA | 100100 101010 | 0 | 000100 101010 | 0 | 000100 101010 | 0 |
| AB | 100100 101010 | 1 | 000100 101010 | 1 | 000100 101010 | 1 |
| AC | 100100 10010* | 0 | 000100 10010* | 0 | 000100 10010* | 0 |
| AD | 100100 100101 | 1 | 000100 100101 | 1 | 000100 100101 | 1 |
| AE | 100100 100100 | 2 | 000100 100100 | 2 | 000100 100100 | 2 |
| AF | 100100 101000 | 2 | 000100 101000 | 2 | 000100 101000 | 2 |
| B0 | 100101 01000* | 0 | 000101 01000* | 0 | 000101 01000* | 0 |
| B1 | 100101 010001 | 1 | 000101 010001 | 1 | 000101 010001 | 1 |
| B2 | 100101 010010 | 0 | 000101 010010 | 0 | 000101 010010 | 0 |
| B3 | 100101 010010 | 1 | 000101 010010 | 1 | 000101 010010 | 1 |
| B4 | 100101 01010* | 0 | 000101 01010* | 0 | 000101 01010* | 0 |
| B5 | 100101 010101 | 1 | 000101 010101 | 1 | 000101 010101 | 1 |
| B6 | 100101 010100 | 2 | 000101 010100 | 2 | 000101 010100 | 2 |
| B7 | 100101 010000 | 2 | 000101 010000 | 2 | 000101 010000 | 2 |
| B8 | 100101 00100* | 0 | 000101 00100* | 0 | 000101 00100* | 0 |
| B9 | 100101 001001 | 1 | 000101 001001 | 1 | 000101 001001 | 1 |
| BA | 100101 001010 | 0 | 000101 001010 | 0 | 000101 001010 | 0 |
| BB | 100101 001010 | 1 | 000101 001010 | 1 | 000101 001010 | 1 |
| BC | 100101 00010* | 0 | 000101 00010* | 0 | 000101 00010* | 0 |
| BD | 100101 000101 | 1 | 000101 000101 | 1 | 000101 000101 | 1 |
| BE | 100101 000100 | 2 | 000101 000100 | 2 | 000101 000100 | 2 |
| BF | 100101 001000 | 2 | 000101 001000 | 2 | 000101 001000 | 2 |

F I G. 118

| Data word | State 0 | | State 1 | | State 2 | |
|---|---|---|---|---|---|---|
| | Code word | Next state | Code word | Next state | Code word | Next state |
| C0 | 000010 00000* | 0 | 001010 00000* | 0 | 00#010 00000* | 0 |
| C1 | 000010 00000# | 1 | 001010 00000# | 1 | 00#010 00000# | 1 |
| C2 | 000010 000010 | 0 | 001010 000010 | 0 | 00#010 000010 | 0 |
| C3 | 000010 000010 | 1 | 001010 000010 | 1 | 00#010 000010 | 1 |
| C4 | 000010 10000* | 0 | 001010 10000* | 0 | 00#010 10000* | 0 |
| C5 | 000010 10000# | 1 | 001010 10000# | 1 | 00#010 10000# | 1 |
| C6 | 000010 100010 | 0 | 001010 100010 | 0 | 00#010 100010 | 0 |
| C7 | 000010 100010 | 1 | 001010 100010 | 1 | 00#010 100010 | 1 |
| C8 | 000010 10100* | 0 | 001010 10100* | 0 | 00#010 10100* | 0 |
| C9 | 000010 101001 | 1 | 001010 101001 | 1 | 00#010 101001 | 1 |
| CA | 000010 101010 | 0 | 001000 000010 | 0 | 001000 000010 | 0 |
| CB | 000010 101010 | 1 | 001010 101010 | 1 | 00#010 101010 | 1 |
| CC | 000010 10010* | 0 | 001010 10010* | 0 | 00#010 10010* | 0 |
| CD | 000010 100101 | 1 | 001010 100101 | 1 | 00#010 100101 | 1 |
| CE | 000010 100100 | 2 | 001010 100100 | 2 | 00#010 100100 | 2 |
| CF | 000010 101000 | 2 | 001010 101000 | 2 | 00#010 101000 | 2 |
| D0 | 000010 01000* | 0 | 001010 01000* | 0 | 00#010 01000* | 0 |
| D1 | 000010 010001 | 1 | 001010 010001 | 1 | 00#010 010001 | 1 |
| D2 | 000010 010010 | 0 | 001010 010010 | 0 | 00#010 010010 | 0 |
| D3 | 000010 010010 | 1 | 001010 010010 | 1 | 00#010 010010 | 1 |
| D4 | 000010 01010* | 0 | 001010 01010* | 0 | 00#010 01010* | 0 |
| D5 | 000010 010101 | 1 | 001010 010101 | 1 | 00#010 010101 | 1 |
| D6 | 000010 010100 | 2 | 001010 010100 | 2 | 00#010 010100 | 2 |
| D7 | 000010 010000 | 2 | 001010 010000 | 2 | 00#010 010000 | 2 |
| D8 | 000010 00100* | 0 | 001010 00100* | 0 | 00#010 00100* | 0 |
| D9 | 000010 001001 | 1 | 001010 001001 | 1 | 00#010 001001 | 1 |
| DA | 000010 001010 | 0 | 001010 001010 | 0 | 00#010 001010 | 0 |
| DB | 000010 001010 | 1 | 001010 001010 | 1 | 00#010 001010 | 1 |
| DC | 000010 00010* | 0 | 001010 00010* | 0 | 00#010 00010* | 0 |
| DD | 000010 000101 | 1 | 001010 000101 | 1 | 00#010 000101 | 1 |
| DE | 000010 000100 | 2 | 001010 000100 | 2 | 00#010 000100 | 2 |
| DF | 000010 001000 | 2 | 001010 001000 | 2 | 00#010 001000 | 2 |
| E0 | 000001 00000* | 0 | 001001 00000* | 0 | 00#001 00000* | 0 |
| E1 | 000001 00000# | 1 | 001001 00000# | 1 | 00#001 00000# | 1 |
| E2 | 000001 000010 | 0 | 001001 000010 | 0 | 00#001 000010 | 0 |
| E3 | 000001 000010 | 1 | 001001 000010 | 1 | 00#001 000010 | 1 |
| E4 | 000000 10000* | 0 | 001000 10000* | 0 | 00#000 10000* | 0 |
| E5 | 000000 10000# | 1 | 001000 10000# | 1 | 00#000 10000# | 1 |
| E6 | 000000 100010 | 0 | 001000 100010 | 0 | 00#000 100010 | 0 |
| E7 | 000000 100010 | 1 | 001000 100010 | 1 | 00#000 100010 | 1 |
| E8 | 000000 10100* | 0 | 001000 10100* | 0 | 00#000 10100* | 0 |
| E9 | 000000 101001 | 1 | 001000 101001 | 1 | 00#000 101001 | 1 |
| EA | 000000 101010 | 0 | 001000 101010 | 0 | 00#000 101010 | 0 |
| EB | 000000 101010 | 1 | 001000 101010 | 1 | 00#000 101010 | 1 |
| EC | 000000 10010* | 0 | 001000 10010* | 0 | 00#000 10010* | 0 |
| ED | 000000 100101 | 1 | 001000 100101 | 1 | 00#000 100101 | 1 |
| EE | 000000 100100 | 2 | 001000 100100 | 2 | 00#000 100100 | 2 |
| EF | 000000 101000 | 2 | 001000 101000 | 2 | 00#000 101000 | 2 |

F I G. 119

| Data word | State 0 | | | State 1 | | | State 2 | | |
|---|---|---|---|---|---|---|---|---|---|
| | Code word | | Next state | Code word | | Next state | Code word | | Next state |
| F0 | 00000# | 01000* | 0 | 001001 | 01000* | 0 | 00#001 | 01000* | 0 |
| F1 | 00000# | 010001 | 1 | 001001 | 010001 | 1 | 00#001 | 010001 | 1 |
| F2 | 00000# | 010010 | 0 | 001001 | 010010 | 0 | 00#001 | 010010 | 0 |
| F3 | 00000# | 010010 | 1 | 001001 | 010010 | 1 | 00#001 | 010010 | 1 |
| F4 | 00000# | 01010* | 0 | 001001 | 01010* | 0 | 00#001 | 01010* | 0 |
| F5 | 000000 | 010101 | 1 | 001001 | 010101 | 1 | 001001 | 010101 | 1 |
| F6 | 00000# | 010100 | 2 | 001001 | 010100 | 2 | 00#001 | 010100 | 2 |
| F7 | 00000# | 010000 | 2 | 001001 | 010000 | 2 | 00#001 | 010000 | 2 |
| F8 | 000001 | 00100* | 0 | 001001 | 00100* | 0 | 00#001 | 00100* | 0 |
| F9 | 00000# | 001001 | 1 | 001001 | 001001 | 1 | 00#001 | 001001 | 1 |
| FA | 00000# | 001010 | 0 | 001001 | 001010 | 0 | 00#001 | 001010 | 0 |
| FB | 00000# | 001010 | 1 | 001001 | 001010 | 1 | 00#001 | 001010 | 1 |
| FC | 00000# | 00010* | 0 | 001001 | 00010* | 0 | 00#001 | 00010* | 0 |
| FD | 00000# | 000101 | 1 | 001001 | 000101 | 1 | 00#001 | 000101 | 1 |
| FE | 00000# | 000100 | 2 | 001001 | 000100 | 2 | 00#001 | 000100 | 2 |
| FF | 000001 | 001000 | 2 | 001001 | 001000 | 2 | 00#001 | 001000 | 2 |

# FIG. 120

Demodulation table in modulation system

| Current code word | Data word | | |
|---|---|---|---|
| | Case 1 | Case 2 | Case 3 |
| 000000 000100 | FC | FE | FE |
| 000000 000101 | Z | FC | FD |
| 000000 001000 | 48 | 4F | 4F |
| 000000 001001 | Z | 48 | F9 |
| 000000 001010 | FA | FA | FB |
| 000000 010000 | F0 | F7 | F7 |
| 000000 010001 | Z | F0 | F1 |
| 000000 010010 | F2 | F2 | F3 |
| 000000 010100 | F4 | F6 | F6 |
| 000000 010101 | Z | F4 | F5 |
| 000000 100000 | E4 | Z | E5 |
| 000000 100001 | Z | E4 | E5 |
| 000000 100010 | E6 | E6 | E7 |
| 000000 100100 | EC | EE | EE |
| 000000 100101 | Z | EC | ED |
| 000000 101000 | E8 | EF | EF |
| 000000 101001 | Z | E8 | E9 |
| 000000 101010 | EA | EA | EB |
| 000001 000000 | E0 | Z | E1 |
| 000001 000001 | Z | E0 | E1 |
| 000001 000010 | E2 | E2 | E3 |
| 000001 000100 | FC | FE | FE |
| 000001 000101 | Z | FC | FD |
| 000001 001000 | F8 | FF | FF |
| 000001 001001 | Z | F8 | F9 |
| 000001 001010 | FA | FA | FB |
| 000001 010000 | F0 | F7 | F7 |
| 000001 010001 | Z | F0 | F1 |
| 000001 010010 | F2 | F2 | F3 |
| 000001 010100 | F4 | F6 | F6 |
| 000001 010101 | Z | F4 | Z |
| 000010 000000 | C0 | Z | C1 |
| 000010 000001 | Z | C0 | C1 |
| 000010 000010 | C2 | C2 | C3 |
| 000010 000100 | DC | DE | DE |
| 000010 000101 | Z | DC | DD |
| 000010 001000 | D8 | DF | DF |
| 000010 001001 | Z | D8 | D9 |

F I G. 121

| Current code word | Data word | | |
|---|---|---|---|
| | Case 1 | Case 2 | Case 3 |
| 000010 001010 | DA | DA | DB |
| 000010 010000 | D0 | D7 | D7 |
| 000010 010001 | Z | D0 | D1 |
| 000010 010010 | D2 | D2 | D3 |
| 000010 010100 | D4 | D6 | D6 |
| 000010 010101 | Z | D4 | D5 |
| 000010 100000 | C4 | Z | C5 |
| 000010 100001 | Z | C4 | C5 |
| 000010 100010 | C6 | C6 | C7 |
| 000010 100100 | CC | CE | CE |
| 000010 100101 | Z | CC | CD |
| 000010 101000 | C8 | CF | CF |
| 000010 101001 | Z | C8 | C9 |
| 000010 101010 | CA | CA | CB |
| 000100 000000 | 88 | Z | B5 |
| 000100 000001 | Z | 88 | 89 |
| 000100 000010 | 8A | 8A | 8B |
| 000100 000100 | 8C | 8E | 8E |
| 000100 000101 | Z | 8C | 8D |
| 000100 001000 | 88 | 8F | 8F |
| 000100 001001 | Z | 88 | 89 |
| 000100 001010 | 8A | 8A | 8B |
| 000100 010000 | 80 | 87 | 87 |
| 000100 010001 | Z | 80 | 81 |
| 000100 010010 | 82 | 82 | 83 |
| 000100 010100 | 84 | 86 | 86 |
| 000100 010101 | Z | 84 | 85 |
| 000100 100000 | A4 | Z | A5 |
| 000100 100001 | Z | A4 | A5 |
| 000100 100010 | A6 | A6 | A7 |
| 000100 100100 | AC | AE | AE |
| 000100 100101 | Z | AC | AD |
| 000100 101000 | A8 | AF | AF |
| 000100 101001 | Z | A8 | A9 |
| 000100 101010 | AA | AA | AB |
| 000101 000000 | A0 | Z | A1 |
| 000101 000001 | Z | A0 | A1 |
| 000101 000010 | A2 | A2 | A3 |

## F I G. 122

| Current code word | Data word | | |
| --- | --- | --- | --- |
| | Case 1 | Case 2 | Case 3 |
| 000101 000100 | BC | BE | BE |
| 000101 000101 | Z | BC | BD |
| 000101 001000 | B8 | BF | BF |
| 000101 001001 | Z | B8 | B9 |
| 000101 001010 | BA | BA | BB |
| 000101 010000 | B0 | B7 | B7 |
| 000101 010001 | Z | B0 | B1 |
| 000101 010010 | B2 | B2 | B3 |
| 000101 010100 | B4 | B6 | B6 |
| 000101 010101 | Z | B4 | B5 |
| 001000 000000 | 98 | Z | F5 |
| 001000 000001 | Z | 98 | 99 |
| 001000 000010 | CA | CA | 9B |
| 001000 000100 | 9C | 9E | 9E |
| 001000 000101 | Z | 9C | 9D |
| 001000 001000 | 98 | 9F | 9F |
| 001000 001001 | Z | 98 | 99 |
| 001000 001010 | 9A | 9A | 9B |
| 001000 010000 | 90 | 97 | 97 |
| 001000 010001 | Z | 90 | 91 |
| 001000 010010 | 92 | 92 | 93 |
| 001000 010100 | 94 | 96 | 96 |
| 001000 010101 | Z | 94 | 95 |
| 001000 100000 | E4 | Z | E5 |
| 001000 100001 | Z | E4 | E5 |
| 001000 100010 | E6 | E6 | E7 |
| 001000 100100 | EC | EE | EE |
| 001000 100101 | Z | EC | ED |
| 001000 101000 | E8 | EF | EF |
| 001000 101001 | Z | E8 | E9 |
| 001000 101010 | EA | EA | EB |
| 001001 000000 | E0 | Z | E1 |
| 001001 000001 | Z | E0 | E1 |
| 001001 000010 | E2 | E2 | E3 |
| 001001 000100 | FC | FE | FE |
| 001001 000101 | Z | FC | FD |
| 001001 001000 | F8 | FF | FF |
| 001001 001001 | Z | F8 | F9 |

## FIG.123

| Current code word | Data word | | |
|---|---|---|---|
| | Case 1 | Case 2 | Case 3 |
| 001001 001010 | FA | FA | FB |
| 001001 010000 | F0 | F7 | F7 |
| 001001 010001 | Z | F0 | F1 |
| 001001 010010 | F2 | F2 | F3 |
| 001001 010100 | F4 | F6 | F6 |
| 001001 010101 | Z | F4 | F5 |
| 001010 000000 | C0 | Z | C1 |
| 001010 000001 | Z | C0 | C1 |
| 001010 000010 | C2 | C2 | C3 |
| 001010 000100 | DC | DE | DE |
| 001010 000101 | Z | DC | DD |
| 001010 001000 | D8 | DF | DF |
| 001010 001001 | Z | D8 | D9 |
| 001010 001010 | DA | DA | DB |
| 001010 010000 | D0 | D7 | D7 |
| 001010 010001 | Z | D0 | D1 |
| 001010 010010 | D2 | D2 | D3 |
| 001010 010100 | D4 | D6 | D6 |
| 001010 010101 | Z | D4 | D5 |
| 001010 100000 | C4 | Z | C5 |
| 001010 100001 | Z | C4 | C5 |
| 001010 100010 | C6 | C6 | C7 |
| 001010 100100 | CC | CE | CE |
| 001010 100101 | Z | CC | CD |
| 001010 101000 | C8 | CF | CF |
| 001010 101001 | Z | C8 | C9 |
| 001010 101010 | Z | Z | CB |
| 010000 000000 | 34 | Z | Z |
| 010000 000001 | Z | 34 | 35 |
| 010000 000010 | 1A | 1A | 1B |
| 010000 000100 | 1C | 1E | 1E |
| 010000 000101 | Z | 1C | 1D |
| 010000 001000 | 18 | 1F | 1F |
| 010000 001001 | Z | 18 | 19 |
| 010000 001010 | 1A | 1A | 1B |
| 010000 010000 | 10 | 17 | 17 |
| 010000 010001 | Z | 10 | 11 |
| 010000 010010 | 12 | 12 | 13 |

# F I G. 124

| Current code word | Data word | | |
|---|---|---|---|
| | Case 1 | Case 2 | Case 3 |
| 010000 010100 | 14 | 16 | 16 |
| 010000 010101 | Z | 14 | 15 |
| 010000 100000 | 64 | Z | 65 |
| 010000 100001 | Z | 64 | 65 |
| 010000 100010 | 66 | 66 | 67 |
| 010000 100100 | 6C | 6E | 6E |
| 010000 100101 | Z | 6C | 6D |
| 010000 101000 | 68 | 6F | 6F |
| 010000 101001 | Z | 68 | 69 |
| 010000 101010 | 6A | 6A | 6B |
| 010001 000000 | 60 | Z | 75 |
| 010001 000001 | Z | 60 | 61 |
| 010001 000010 | 62 | 62 | 63 |
| 010001 000100 | 7C | 7E | 7E |
| 010001 000101 | Z | 7C | 7D |
| 010001 001000 | 78 | 7F | 7F |
| 010001 001001 | Z | 78 | 79 |
| 010001 001010 | 7A | 7A | 7B |
| 010001 010000 | 70 | 77 | 77 |
| 010001 010001 | Z | 70 | 71 |
| 010001 010010 | 72 | 72 | 73 |
| 010001 010100 | 74 | 76 | 76 |
| 010001 010101 | Z | 74 | Z |
| 010010 000000 | 40 | Z | 41 |
| 010010 000001 | Z | 40 | 41 |
| 010010 000010 | 42 | 42 | 43 |
| 010010 000100 | 5C | 5E | 5E |
| 010010 000101 | Z | 5C | 5D |
| 010010 001000 | 58 | 5F | 5F |
| 010010 001001 | Z | 58 | 59 |
| 010010 001010 | 5A | 5A | 5B |
| 010010 010000 | 50 | 57 | 57 |
| 010010 010001 | Z | 50 | 51 |
| 010010 010010 | 52 | 52 | 53 |
| 010010 010100 | 54 | 56 | 56 |
| 010010 010101 | Z | 54 | 55 |
| 010010 100000 | 44 | Z | 45 |
| 010010 100001 | Z | 44 | 45 |

## F I G. 125

| Current code word | Data word | | |
|---|---|---|---|
| | Case 1 | Case 2 | Case 3 |
| 010010 100010 | 46 | 46 | 47 |
| 010010 100100 | 4C | 4E | 4E |
| 010010 100101 | Z | 4C | 4D |
| 010010 101000 | 48 | 4F | 4F |
| 010010 101001 | Z | 48 | 49 |
| 010010 101010 | 4A | 4A | 4B |
| 010100 000000 | 08 | Z | Z |
| 010100 000001 | Z | 08 | 09 |
| 010100 000010 | 0A | 0A | 0B |
| 010100 000100 | 0C | 0E | 0E |
| 010100 000101 | Z | 0C | 0D |
| 010100 001000 | 08 | 0F | 0F |
| 010100 001001 | Z | 08 | 09 |
| 010100 001010 | 0A | 0A | 0B |
| 010100 010000 | 00 | 07 | 07 |
| 010100 010001 | Z | 00 | 01 |
| 010100 010010 | 02 | 02 | 03 |
| 010100 010100 | 04 | 06 | 06 |
| 010100 010101 | Z | 04 | 05 |
| 010100 100000 | 24 | Z | 25 |
| 010100 100001 | Z | 24 | 25 |
| 010100 100010 | 26 | 26 | 27 |
| 010100 100100 | 2C | 2E | 2E |
| 010100 100101 | Z | 2C | 2D |
| 010100 101000 | 28 | 2F | 2F |
| 010100 101001 | Z | 28 | 29 |
| 010100 101010 | 2A | 2A | 2B |
| 010101 000000 | 20 | Z | 21 |
| 010101 000001 | Z | 20 | 21 |
| 010101 000010 | 22 | 22 | 23 |
| 010101 000100 | 3C | 3E | 3E |
| 010101 000101 | Z | 3C | 3D |
| 010101 001000 | 38 | 3F | 3F |
| 010101 001001 | Z | 38 | 39 |
| 010101 001010 | 3A | 3A | 3B |
| 010101 010000 | 30 | 37 | 37 |
| 010101 010001 | Z | 30 | 31 |
| 010101 010010 | 32 | 32 | 33 |

# F I G. 126

| Current code word | Data word | | |
|---|---|---|---|
| | Case 1 | Case 2 | Case 3 |
| 010101 010100 | Z | 36 | 36 |
| 100000 000001 | Z | Z | 49 |
| 100000 000010 | 4A | 4A | 4B |
| 100000 000100 | 3C | 3E | 3E |
| 100000 000101 | Z | 3C | 3D |
| 100000 001000 | 38 | 3F | 3F |
| 100000 001001 | Z | 38 | 39 |
| 100000 001010 | 3A | 3A | 3B |
| 100000 010000 | 30 | 37 | 37 |
| 100000 010001 | Z | 30 | 31 |
| 100000 010010 | 32 | 32 | 33 |
| 100000 010100 | 34 | 36 | 36 |
| 100000 010101 | Z | 34 | 35 |
| 100000 100000 | 24 | Z | 25 |
| 100000 100001 | Z | 24 | 25 |
| 100000 100010 | 26 | 26 | 27 |
| 100000 100100 | 2C | 2E | 2E |
| 100000 100101 | Z | 2C | 2D |
| 100000 101000 | 28 | 2F | 2F |
| 100000 101001 | Z | 28 | 29 |
| 100000 101010 | 2A | 2A | 2B |
| 100001 000000 | 20 | Z | 21 |
| 100001 000001 | Z | 20 | 21 |
| 100001 000010 | 22 | 22 | 23 |
| 100001 000100 | 3C | 3E | 3E |
| 100001 000101 | Z | 3C | 3D |
| 100001 001000 | 38 | 3F | 3F |
| 100001 001001 | Z | 38 | 39 |
| 100001 001010 | 3A | 3A | 3B |
| 100001 010000 | 30 | 37 | 37 |
| 100001 010001 | Z | 30 | 31 |
| 100001 010010 | 32 | 32 | 33 |
| 100001 010100 | 34 | 36 | 36 |
| 100001 010101 | Z | 34 | Z |
| 100010 000000 | 00 | Z | 01 |
| 100010 000001 | Z | 00 | 01 |
| 100010 000010 | 02 | 02 | 03 |
| 100010 000100 | 1C | 1E | 1E |

## F I G. 127

| Current code word | Data word | | |
|---|---|---|---|
| | Case 1 | Case 2 | Case 3 |
| 100010 000101 | Z | 1C | 1D |
| 100010 001000 | 18 | 1F | 1F |
| 100010 001001 | Z | 18 | 19 |
| 100010 001010 | 1A | 1A | 1B |
| 100010 010000 | 10 | 17 | 17 |
| 100010 010001 | Z | 10 | 11 |
| 100010 010010 | 12 | 12 | 13 |
| 100010 010100 | 14 | 16 | 16 |
| 100010 010101 | Z | 14 | 15 |
| 100010 100000 | 04 | Z | 05 |
| 100010 100001 | Z | 04 | 05 |
| 100010 100010 | 06 | 06 | 07 |
| 100010 100100 | 0C | 0E | 0E |
| 100010 100101 | Z | 0C | 0D |
| 100010 101000 | 08 | 0F | 0F |
| 100010 101001 | Z | 08 | 09 |
| 100010 101010 | 0A | 0A | 0B |
| 100100 000000 | 88 | Z | B5 |
| 100100 000001 | Z | 88 | 89 |
| 100100 000010 | 8A | 8A | 8B |
| 100100 000100 | 8C | 8E | 8E |
| 100100 000101 | Z | 8C | 8D |
| 100100 001000 | 88 | 8F | 8F |
| 100100 001001 | Z | 88 | 89 |
| 100100 001010 | 8A | 8A | 8B |
| 100100 010000 | 80 | 87 | 87 |
| 100100 010001 | Z | 80 | 81 |
| 100100 010010 | 82 | 82 | 83 |
| 100100 010100 | 84 | 86 | 86 |
| 100100 010101 | Z | 84 | 85 |
| 100100 100000 | A4 | Z | A5 |
| 100100 100001 | Z | A4 | A5 |
| 100100 100010 | A6 | A6 | A7 |
| 100100 100100 | AC | AE | AE |
| 100100 100101 | Z | AC | AD |
| 100100 101000 | A8 | AF | AF |
| 100100 101001 | Z | A8 | A9 |
| 100100 101010 | AA | AA | AB |

F I G. 128

| Current code word | Data word | | |
|---|---|---|---|
| | Case 1 | Case 2 | Case 3 |
| 100101 000000 | A0 | Z | A1 |
| 100101 000001 | Z | A0 | A1 |
| 100101 000010 | A2 | A2 | A3 |
| 100101 000100 | BC | BE | BE |
| 100101 000101 | Z | BC | BD |
| 100101 001000 | B8 | BF | BF |
| 100101 001001 | Z | B8 | B9 |
| 100101 001010 | BA | BA | BB |
| 100101 010000 | B0 | B7 | B7 |
| 100101 010001 | Z | B0 | B1 |
| 100101 010010 | B2 | B2 | B3 |
| 100101 010100 | B4 | B6 | B6 |
| 100101 010101 | Z | B4 | B5 |
| 101000 000000 | 98 | Z | 75 |
| 101000 000001 | Z | 98 | 99 |
| 101000 000010 | 9A | 9A | 9B |
| 101000 000100 | 9C | 9E | 9E |
| 101000 000101 | Z | 9C | 9D |
| 101000 001000 | 98 | 9F | 9F |
| 101000 001001 | Z | 98 | 99 |
| 101000 001010 | 9A | 9A | 9B |
| 101000 010000 | 90 | 97 | 97 |
| 101000 010001 | Z | 90 | 91 |
| 101000 010010 | 92 | 92 | 93 |
| 101000 010100 | 94 | 96 | 96 |
| 101000 010101 | Z | 94 | 95 |
| 101000 100000 | 64 | Z | 65 |
| 101000 100001 | Z | 64 | 65 |
| 101000 100010 | 66 | 66 | 67 |
| 101000 100100 | 6C | 6E | 6E |
| 101000 100101 | Z | 6C | 6D |
| 101000 101000 | 68 | 6F | 6F |
| 101000 101001 | Z | 68 | 69 |
| 101000 101010 | 6A | 6A | 6B |
| 101001 000000 | 60 | Z | 61 |
| 101001 000001 | Z | 60 | 61 |
| 101001 000010 | 62 | 62 | 63 |
| 101001 000100 | 7C | 7E | 7E |

# F I G. 129

| Current code word | Data word | | |
| --- | --- | --- | --- |
| | Case 1 | Case 2 | Case 3 |
| 101001 000101 | Z | 7C | 7D |
| 101001 001000 | 78 | 7F | 7F |
| 101001 001001 | Z | 78 | 79 |
| 101001 001010 | 7A | 7A | 7B |
| 101001 010000 | 70 | 77 | 77 |
| 101001 010001 | Z | 70 | 71 |
| 101001 010010 | 72 | 72 | 73 |
| 101001 010100 | 74 | 76 | 76 |
| 101001 010101 | Z | 74 | 75 |
| 101010 000000 | 40 | Z | 41 |
| 101010 000001 | Z | 40 | 41 |
| 101010 000010 | 42 | 42 | 43 |
| 101010 000100 | 5C | 5E | 5E |
| 101010 000101 | Z | 5C | 5D |
| 101010 001000 | 58 | 5F | 5F |
| 101010 001001 | Z | 58 | 59 |
| 101010 001010 | 5A | 5A | 5B |
| 101010 010000 | 50 | 57 | 57 |
| 101010 010001 | Z | 50 | 51 |
| 101010 010010 | 52 | 52 | 53 |
| 101010 010100 | 54 | 56 | 56 |
| 101010 010101 | Z | 54 | 55 |
| 101010 100000 | 44 | Z | 45 |
| 101010 100001 | Z | 44 | 45 |
| 101010 100010 | 46 | 46 | 47 |
| 101010 100100 | 4C | 4E | 4E |
| 101010 100101 | Z | 4C | 4D |

# F I G. 130

Optical head structure used in information reproducing apparatus
or information recording and reproducing apparatus

Disk

Motor

Objective lens

Optical head

$\pi/4$ plate

Photo detector

Polarizing
beam splitter

Convex
lens

RF
amplifier

RF signal

Collimator lens

Laser

Servo
amplifier

Focus error signal

Tracking error signal

Tilt mechanism

FIG. 131

EP 1 465 165 A2

EP 1 465 165 A2

Information reproducing apparatus

Conversion table storage unit ~153

148 DSV value calculator

151 Modulator

161 ECC encoder

157 Scramble circuit

168 Data ID, IED, CPR, MAI, EDC adder unit

Logical sector information 103

146 Sync code generation and addition unit

150~ Temporarily storage of modulated data and modulation associated information

136 Code generator for sync frame position identification

167 CPR_MAI data generator

Memory

175

165 Data ID generator

141 Information recording and reproducing unit

143 Interface ~142

Control unit

Logical sector information 103

130~ PR equalizer

169 AD converter

145 Sync code position sampling unit

171 Data ID and IED sampling unit

172 Data ID error check unit

Logical sector information sampling unit ~173

155 SCHMIDT trigger binarizing circuit

156~ Viterbi decoder

170~ Shift register circuit (for timing shift)

Demodulator

162~ ECC decoder

De-scrambling circuit ~159

174 PLL circuit

160 Reference clock generator

Reference clock 198

154  152 Conversion table recording unit

→ Main information
→ Flow of information
---→ Reference clock
------→ Command instruction

F I G. 132

Detailed structure of periphery of sync code position detector unit

F I G. 133

EP 1 465 165 A2

Method for identifying sync frame position in sector from
arrangement of 3 continuous sync codes

ST51

Transfer output data of Viterbi decoder 156 to sync code position sampling unit 145 (FIG. 5B)

ST52

Use sync position detection code detector 182 to detect position of sync position detection code 121 by pattern matching technique

ST53

Sample sync frame position identification code 123 by code contents identification units 185, 186 for sync frame position identification by utilizing detection timing of ST52, and record sampling history information in memory unit 175 via control unit 143 (FIG. 5C)

ST54

Sample and delay only sync frame data 106 after modulation by utilizing detection timing of ST52, and transfer sync frame data 106 after modulation to shift register circuit 170 in order to adjust timing

ST55

Use control unit 143 to read out history information for sync code 110 recorded in memory unit 175, and identify arrangement order of sync frame position identification codes

ST56

Identify position in physical sector of sync frame data 106 after modulation, the data being transferred from data in arrangement order shown in FIG. 43 or FIG. 44, to shift register circuit 170, with respect to arrangement order of sync frame position identification codes identified in control unit 143

ST57

Transfer to demodulator circuit 152 sync frame data 106 after modulation, the data being transferred to shift register circuit 170 as required, and start demodulation

# F I G. 134

F I G. 135

Method for identifying sync frame position in 1 physical sector from arrangement order of sync frame position identification codes in sync codes

Shift register circuit [for timing shift]

<<Example of identifying sync frame position from arrangement order of sync frame position identification codes>> — example using one embodiment shown in FIG. 41 —

Method for abnormal phenomenon determination and adaptive processing where detection
result of combination pattern of sync codes is different from predicted result

ST1 — Is detection pattern different from predicted pattern as a result of ST66 → NO → ST2 Continue continuous reproduction

↓ YES

ST3 — Is the number of portions at which detection pattern and predicted pattern are different only one? → YES → ST4 Which of detection patterns (1, 1, 2), (1, 2, 1), (1, 2, 2), and (2, 1, 2) is detected?

↓ NO

ST5 — Is coincidence with pattern shifted by ±1 sync frame with respect to predetermined pattern obtained? → NO

↓ YES

ST6 Carry out synchronization again after determining that frame shift occurs

ST7 Carry out auto correction to predicted pattern after determining that incorrect sensing of sync code occurs

ST8 — Is continuity of data ID maintained? → NO

↓ YES

ST9 — Is continuity of wobble address maintained? → NO

↓ YES

ST10 Carry out access control of ST62 after determining that track-off occurs

ST11 — Does continuous reproduction terminate? → YES → End of reproduction — ST12

↓ NO

FIG. 136

EP 1 465 165 A2

Signal detector and signal evaluator circuit (R) used for signal
reproduction in system lead-in area

F I G. 137

Slicer circuit used for signal reproduction in system lead-in region

F I G. 138

Detector circuit (S) used for signal detection in data lead-in region, data region, and data lead-out region

Quadrature photo detector

1a 1b 1c 1d

Pre-amplifier

HF signal

HPF

Pre-equalizer

AGC

ADC

PLL

Interpolator

Offset canceller

Top controller

Equalizer

Viterbi decoder

PRSNR calculator

SbER calculator

ETA demodulator, error corrector, and selector decoder

F I G. 139

Viterbi decoder

F I G. 140

State transition of PR(1,2,2,2,1) channel combined with ETM code

F I G. 141

Path memory

from ACS(select 0--5)

0

Binary data

| Path memory cell | Path memory cell | ----- | Path memory cell |

1

# F I G. 142

I/O of path memory cell

Input 0     select 0   select 1   select 2   select 3   select 4   select 5     Output 0
Input 1   Output 1
Input 2   Output 2
Input 3   Output 3
Input 4   Output 4
Input 5    Path   Output 5
Input 6   memory cell   Output 6
Input 7   Output 7
Input 8   Output 8
Input 9   Output 9

# F I G. 143

Configuration of path memory cell

F I G. 144